(19) Europäisches Patentamt
European Patent Office
Office européen des brevets

(11) **EP 4 535 708 A1**

(12) **EUROPEAN PATENT APPLICATION**

(43) Date of publication:
**09.04.2025 Bulletin 2025/15**

(21) Application number: **24204501.1**

(22) Date of filing: **03.10.2024**

(51) International Patent Classification (IPC):
**H04L 5/00** *(2006.01)*

(52) Cooperative Patent Classification (CPC):
**H04L 5/0051; H04L 5/0094;** H04L 5/0023

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.10.2023 US 202363542099 P**

(71) Applicant: **Comcast Cable Communications LLC Philadelphia, Pennsylvania 19103 (US)**

(72) Inventors:
• **CIRIK, Ali Cagatay**
  **Philadelphia, 19103 (US)**
• **ZHOU, Hua**
  **Philadelphia, 19103 (US)**
• **DINAN, Esmael Hejazi**
  **Philadelphia, 19103 (US)**
• **JEON, Hyoungsuk**
  **Philadelphia, 19103 (US)**

(74) Representative: **V.O.**
**P.O. Box 87930**
**2508 DH Den Haag (NL)**

(54) **ENERGY SAVING FOR PERIODIC TRANSMISSIONS**

(57) A wireless device may communicate with a base station using transmission resources/schemes. A resource/scheme for transmission/reception may be indicated by a field and/or by an absence of a field in a message that schedules transmission/reception. For example, a spatial domain multiplexing (SDM) scheme may be used, for scheduled transmission/reception, based on a value in a transmission configuration indicator selection field and/or based on an absence of such a field in a message.

FIG. 25

**Description**

CROSS-REFERENCE TO RELATED APPLICATIONS

This application claims the benefit of U.S. Provisional Application No. 63/542,099 filed on October 3, 2023 . The above-referenced application is hereby incorporated by reference in its entirety.

BACKGROUND

A wireless device communicates with a base station. The wireless device receives configuration parameters for communicating via a cell. The configuration parameters are used to indicate information for a transmission between the wireless device and the base station.

SUMMARY

The following summary presents a simplified summary of certain features. The summary is not an extensive overview and is not intended to identify key or critical elements.

A wireless device may receive one or more configuration parameters from a base station to configure the wireless device for wireless communications. Transmission/reception may be scheduled by a message that comprises one or more fields and/or parameters. Transmission resources, such as a spatial domain multiplexing (SDM) scheme, may be configured/indicated by a field and/or by an absence of a field. An association between phase-tracking reference signals (PT-RSs) and demodulation reference signal (DM-RS) ports that correspond to transmission configuration indication states (TCI states) may be configured/indicated, for scheduled transmission/reception, based on a value in a transmission configuration indicator selection field and/or based on an absence of such a field in a message. For example, a correspondence between DM-RS ports and TCI states may be configured/indicated, for scheduled transmission/reception, based on a value in a transmission configuration indicator selection field and/or based on an absence of such a field in a message. Additionally or alternatively, a scheduled transmission/reception may be made more effective, for example, by setting within which duration of a discontinuous transmission (DTX) or a discontinuous reception (DRX) to stop scheduled transmission/reception, or by setting to use which TCI state to conduct scheduled transmission/reception, if a particular transmission resource is configured/indicated.

These and other features and advantages are described in greater detail below.

BRIEF DESCRIPTION OF THE DRAWINGS

Examples of several of the various embodiments of the present disclosure are described herein with reference to the drawings.

FIG. 1A and FIG. 1B show example communication networks.

FIG. 2A shows an example user plane.

FIG. 2B shows an example control plane configuration.

FIG. 3 shows example of protocol layers.

FIG. 4A shows an example downlink data flow for a user plane configuration.

FIG. 4B shows an example format of a Medium Access Control (MAC) subheader in a MAC Protocol Data Unit (PDU).

FIG. 5A shows an example mapping for downlink channels.

FIG. 5B shows an example mapping for uplink channels.

FIG. 6 shows example radio resource control (RRC) states and RRC state transitions.

FIG. 7 shows an example configuration of a frame.

FIG. 8 shows an example resource configuration of one or more carriers.

FIG. 9 shows an example configuration of bandwidth parts (BWPs).

FIG. 10A shows example carrier aggregation configurations based on component carriers.

FIG. 10B shows example groups of cells.

FIG. 11A shows an example mapping of one or more synchronization signal/physical broadcast channel (SS/PBCH) blocks.

FIG. 11B shows an example mapping of one or more channel state information reference signals (CSI-RSs).

FIG. 12A shows examples of downlink beam management procedures.

FIG. 12B shows examples of uplink beam management procedures.

FIG. 13A shows an example four-step random access procedure.

FIG. 13B shows an example two-step random access procedure.

FIG. 13C shows an example two-step random access procedure.

FIG. 14A shows an example of control resource set (CORESET) configurations.

FIG. 14B shows an example of a control channel element to resource element group (CCE-to-REG) mapping.

FIG. 15A shows an example of communications between a wireless device and a base station.

FIG. 15B shows example elements of a computing device that may be used to implement any of the various devices described herein

FIG. 16A, FIG. 16B, FIG. 16C, and FIG. 16D show examples of uplink and downlink signal transmission.

FIG. 17 shows example communications for energy saving.

FIG. 18 shows an example of an activation command.

FIG. 19A shows an example of a control command.

FIG. 19B shows an example of a control command.

FIG. 20 shows an example of a discontinuous transmission within active and non-active durations for energy saving.

FIG. 21 shows an example of a discontinuous transmission within active and non-active durations for energy saving.

FIG. 22 shows an example of a discontinuous transmission within active and non-active durations for energy saving.

FIG. 23 shows an example for energy saving.

FIG. 24 shows an example for energy saving.

FIG. 25 shows an example for energy saving.

DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

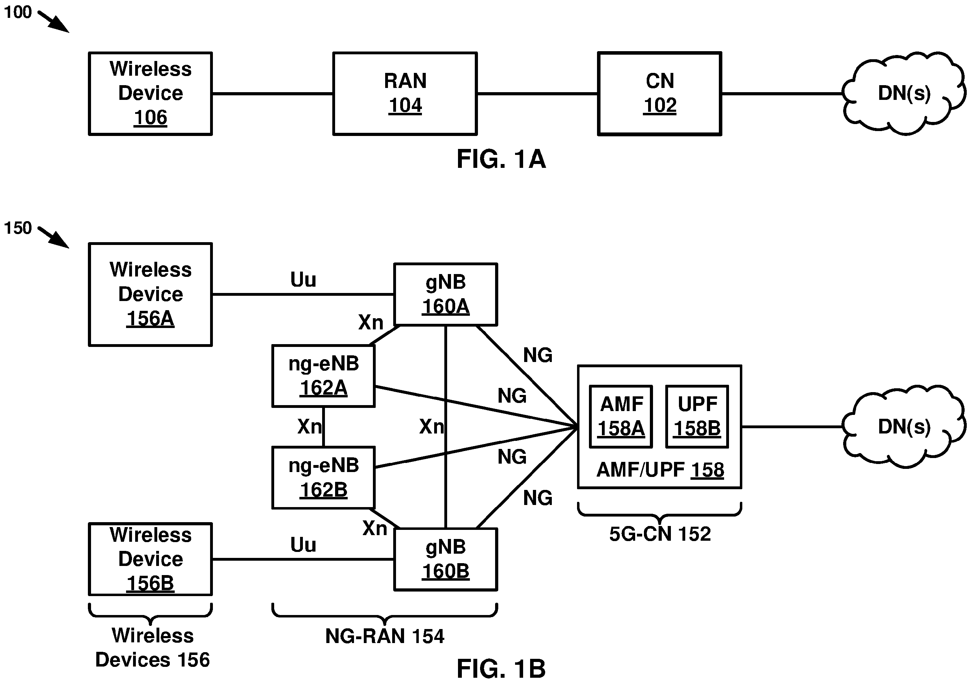

FIG. 1A shows an example communication network 100. The communication network 100 may comprise a mobile communication network). The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (eg, via CN 102), one or more data networks (DN(s)) 108. The wireless device 106 may communicate with one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an access point, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform the substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/UPF device 158. The UPF device 158B may serve as a gateway between a RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-/inter-Radio Access Technology (RAT) mobility, an external protocol (or packet) data unit (PDU) session point of interconnect to the one or more DNs, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode UE reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng eNBs comprising an ng-eNB 162A and an ng-eNB 162B (collectively ng eNBs 162)). The RAN 154 may comprise one or more of any quantity of types of base station. The gNBs 160 and ng eNBs 162 may be referred to as base stations. The base stations (e.g., the gNBs 160 and ng eNBs 162) may comprise one or more sets of antennas for communicating with the wireless device(s) 156 wirelessly (e.g., an over an air interface). One or more base stations (e.g., the gNBs 160 and/or the ng eNBs 162) may comprise multiple sets of antennas to respectively control multiple cells (or sectors). The cells of the base stations (e.g., the gNBs 160 and the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMFIUPF devices, such as the AMFIUPF 158, via one or more interfaces (e.g., NG interfaces). A base station (e.g., the gNB 160A) may be in communication with, and/or connected to, the UPF 158B of the AMF/UPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide Evolved UMTS Terrestrial Radio Access (E UTRA) user plane and control plane protocol terminations towards the wireless device(s) 156 via a Uu interface (e.g., where E UTRA may refer to the 3GPP 4G radio-access technology). A base station (e.g., the ng-eNB 162B) may provide E UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/UPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, internet of things (IoT) devices, hotspots, cellular repeaters, computing devices, and/or, more generally, user equipment (e.g., UE). Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

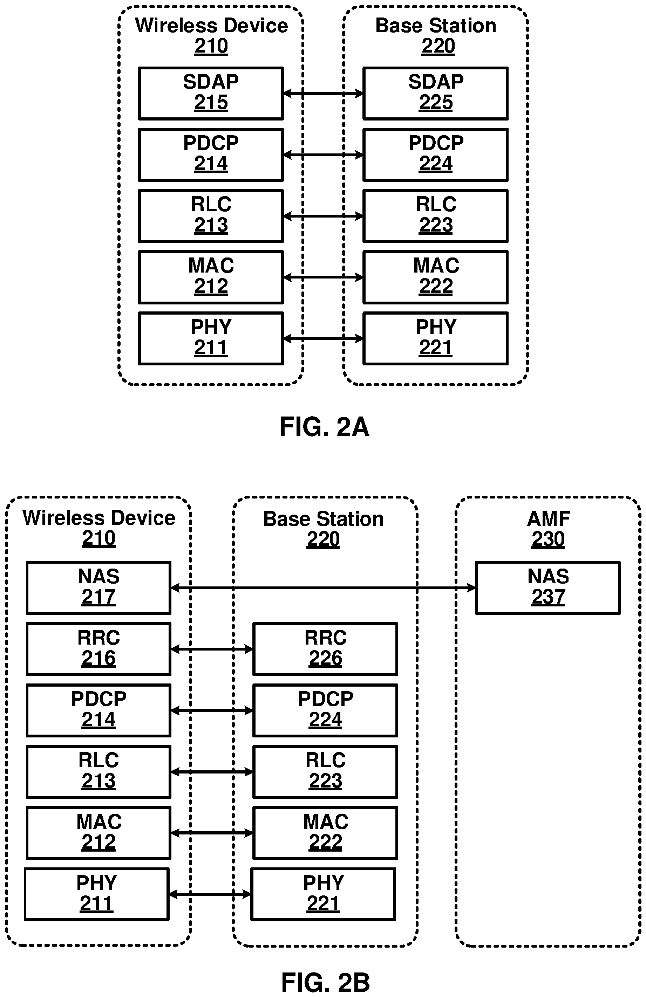

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configuration and/or the control plane configuration may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

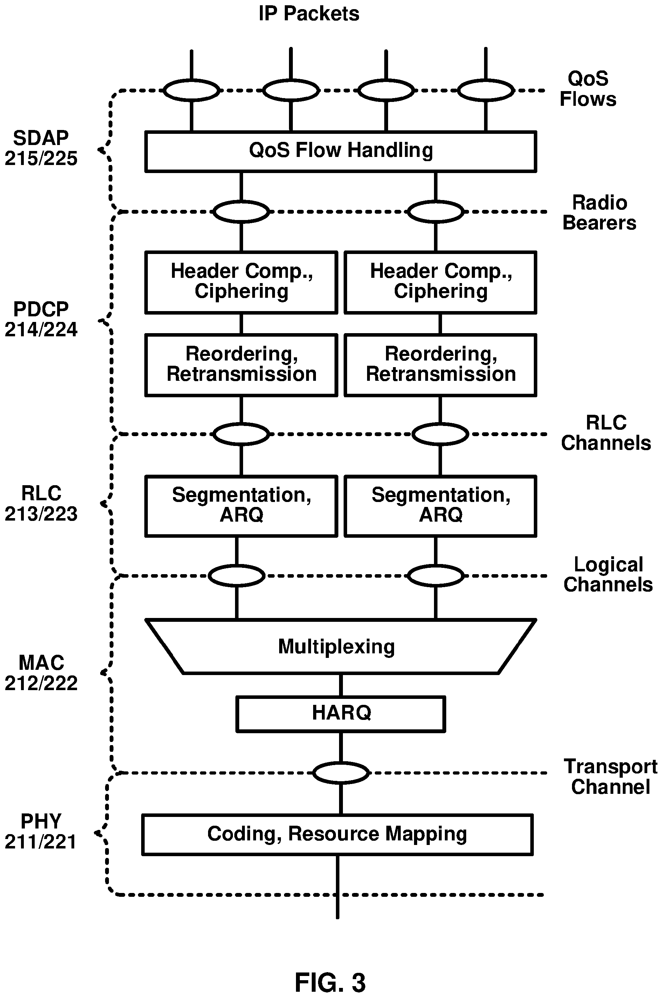

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform Quality of Service (QoS) flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows of the PDU session, for example, based on one or more QoS requirements (e.g., in terms of delay, data rate, error rate, and/or any other quality/service requirement). The SDAPs 215 and 225 may perform mapping/de-mapping between the one or more QoS flows 310 and one or more radio bearers 320 (e.g., data radio bearers). The mapping/de-mapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted (e.g., sent) over the air interface, ciphering/deciphering to prevent unauthorized decoding of data transmitted (e.g., sent) over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)). The RLC layers may perform one or more of the noted functions, for example, based on the transmission mode an RLC layer is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels as a service to the PDCP layers (e.g., PDCPs 214 and 224, respectively), such as shown in FIG. 3.

The MAC layers (e.g., MACs 212 and 222) may perform multiplexing/demultiplexing of logical channels and/or mapping between logical channels and transport channels. The multiplexing/demultiplexing may comprise multiplexing/demultiplexing of data units/data portions, belonging to the one or more logical channels, into/from Transport Blocks (TBs) delivered to/from the PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

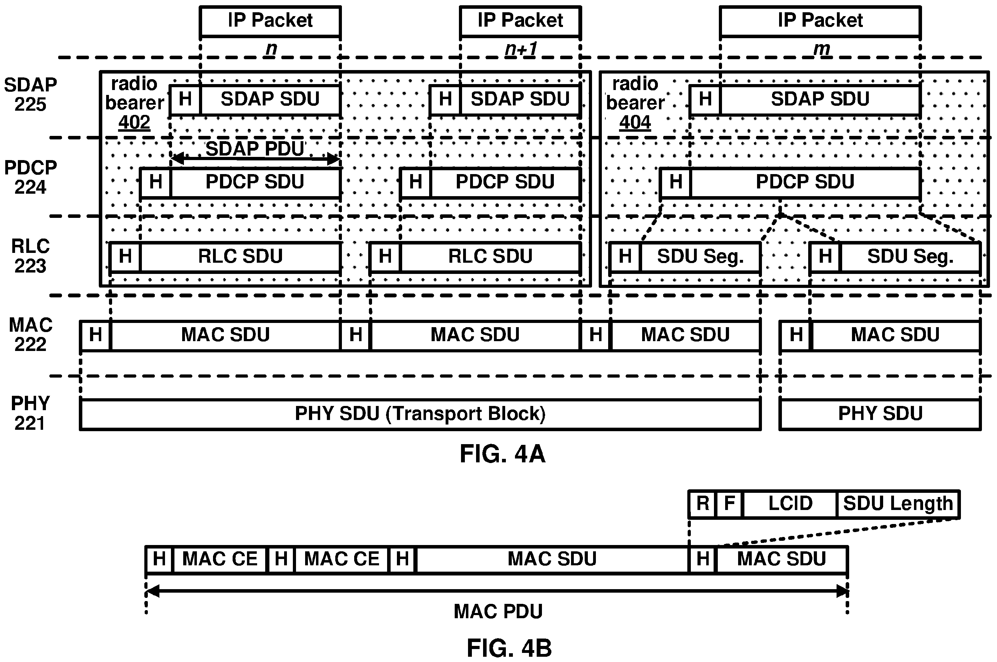

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a quantity/number of RLC PDUs (MAC SDUs). The MAC 222 may attach a MAC subheader to an RLC PDU (MAC SDU) to form a TB.

The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 223 or MAC 222. As shown in FIG. 4B, two MAC CEs may be inserted/added before two MAC PDUs. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

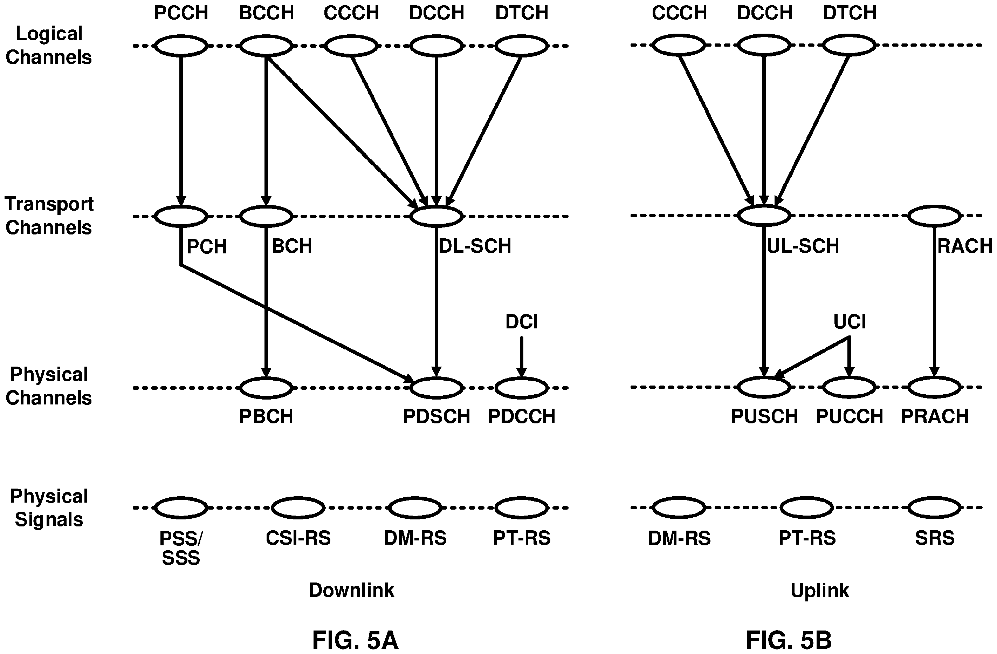

FIG. 5A shows an example mapping for downlink channels. The mapping for uplink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless device).

A logical channel may be defined by the type of information it carries. The set of logical channels (e.g., in an NR configuration) may comprise one or more channels described below. A paging control channel (PCCH) may comprise/-carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may have an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The physical layer may generate physical signals to support the low-level operation of the physical layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), sounding reference signals (SRS), phase-tracking reference signals (PT-RS), and/or any other signals.

One or more of the channels (e.g., logical channels, transport channels, physical channels, etc.) may be used to carry out functions associated with the control plan protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHY 211 and 221, MAC 212 and 222, RLC 213 and 223, and PDCP 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting (e.g., the wireless device measurement reporting) and control of the reporting; detection of and recovery from radio link failure (RLF); and/or NAS message transfer. As part of establishing an RRC connection, RRC layers 216 and 226 may establish an RRC context, which may involve configuring parameters for communication between the wireless device 210 and the RAN (e.g., the base station 220).

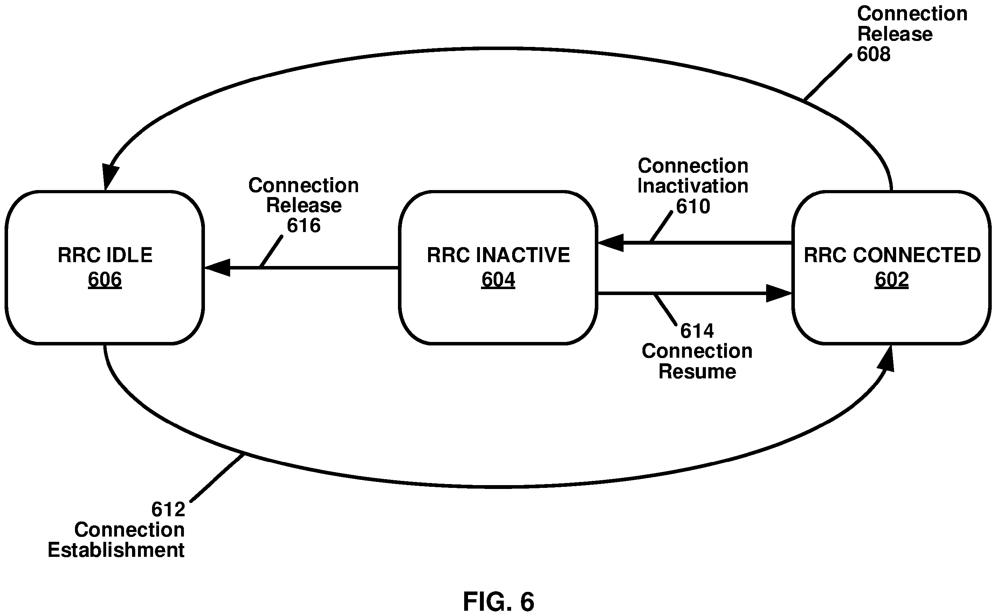

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC_IDLE), and RRC inactive 604 (e.g., RRC_INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104 or the NG RAN 154). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., RRC connected 602) to an RRC idle state (e.g., the RRC idle 606) via a connection release procedure 608. The RRC state may transition from the RRC connected state (e.g., RRC connected 602) to the RRC inactive state (e.g., RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., once in every discontinuous reception (DRX) cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be the same as or similar to connection release procedure 608.

An RRC state may be associated with a mobility management mechanism. During the RRC idle state (e.g., RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC idle state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the 5G CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the UE registration area, for example, if the wireless device moves (e.g., via a cell reselection) to a cell associated with a TAI that may not be included in the list of TAIs associated with the UE registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 604).

A base station (e.g., gNBs 160 in FIG. 1B or any other base station) may be split in two parts: a central unit (e.g., a base station central unit, such as a gNB CU) and one or more distributed units (e.g., a base station distributed unit, such as a gNB DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM is a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbols may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

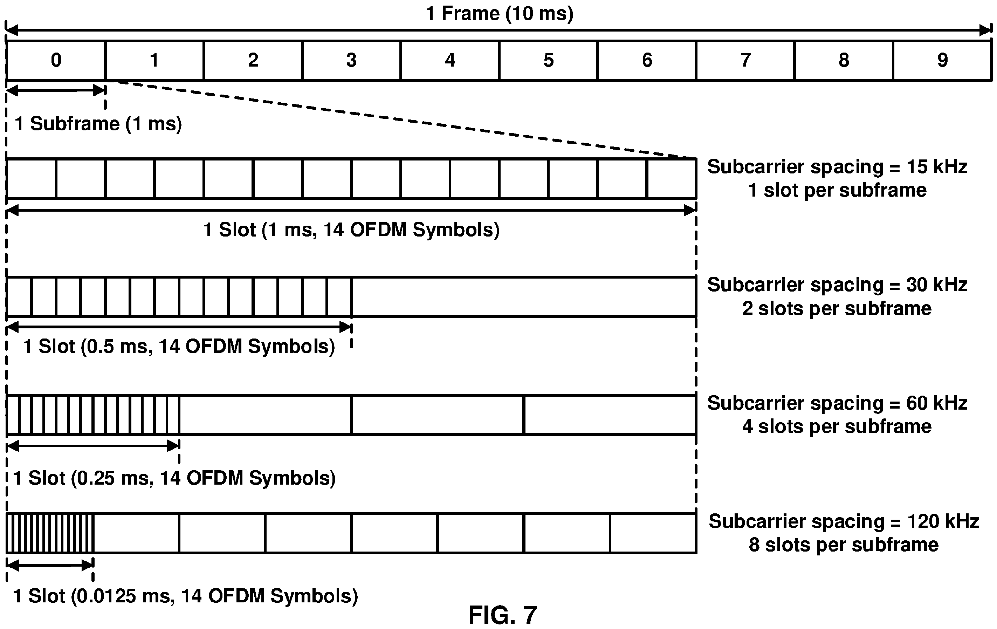

FIG. 7 shows an example configuration of a frame. The frame may comprise, for example, an NR radio frame into which OFDM symbols may be grouped. A frame (e.g., an NR radio frame) may be identified/indicated by a system frame quantity/number (SFN) or any other value. The SFN may repeat with a period of 1024 frames. One NR frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 $\mu$s, for example, for a numerology in an NR configuration or any other radio configurations. Numerologies may be defined with the following subcarrier spacing/cyclic prefix duration combinations: 15 kHz/4.7 $\mu$s; 30 kHz/2.3 $\mu$s; 60 kHz/1.2 $\mu$s; 120 kHz/0.59 $\mu$s; 240 kHz/0.29 $\mu$s, and/or any other subcarrier spacing/cyclic prefix duration combinations.

A slot may have a fixed quantity/number of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

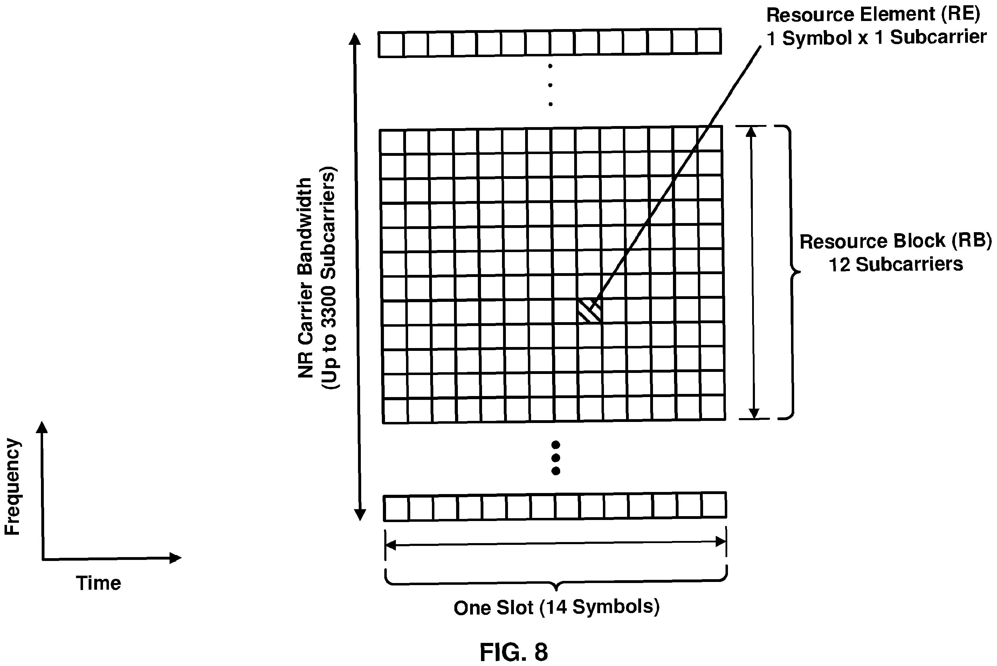

FIG. 8 shows an example resource configuration of one or more carriers. The resource configuration of may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or 275×12 = 3300 subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/-detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, based on (e.g., after or in response to) receiving DCI indicating the second BWP as an active BWP. A wireless device may switch an active BWP from a first BWP to a second BWP, for example, based on (e.g., after or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access.

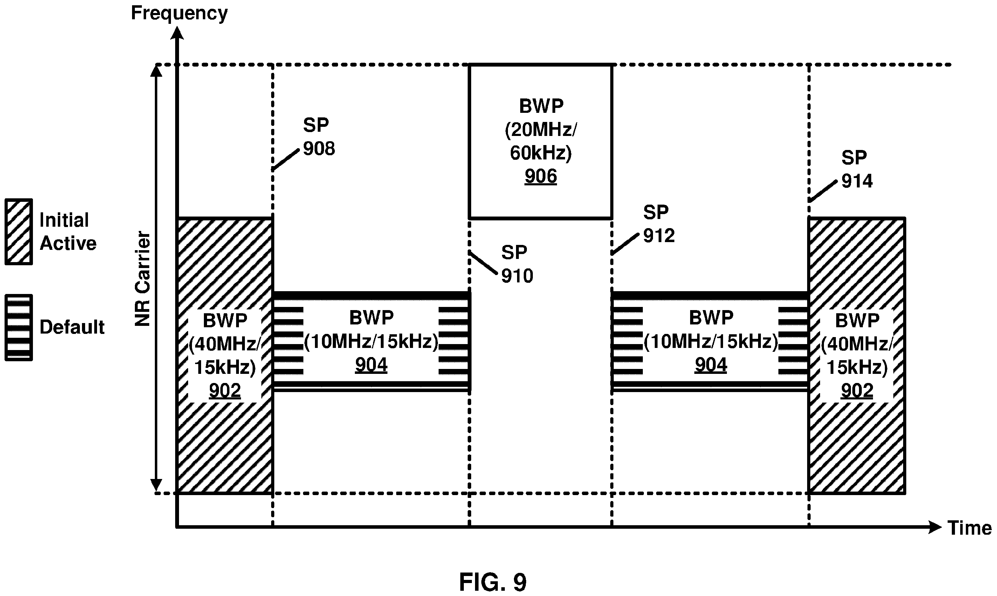

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at a switching point 908 may occur, for example, based on (e.g., after or in response to) an expiry of a BWP inactivity timer (e.g., indicating switching to the default BWP). The switching at the switching point 908 may occur, for example, based on (e.g., after or in response to) receiving DCI indicating BWP 904 as the active BWP. The wireless device may switch at a switching point 910 from an active BWP 904 to the BWP 906, for example, after or in response receiving DCI indicating BWP 906 as a new active BWP. The wireless device may switch at a switching point 912 from an active BWP 906 to the BWP 904, for example, a based on (e.g., after or in response to) an expiry of a BWP inactivity timer. The wireless device may switch at the switching point 912 from an active BWP 906 to the BWP 904, for example, after or in response receiving DCI indicating BWP 904 as a new active BWP. The wireless device may switch at a switching point 914 from an active BWP 904 to the BWP 902, for example, after or in response receiving DCI indicating the BWP 902 as a new active BWP.

Wireless device procedures for switching BWPs on a secondary cell may be the same/similar as those on a primary cell, for example, if the wireless device is configured for a secondary cell with a default downlink BWP in a set of configured downlink BWPs and a timer value. The wireless device may use the timer value and the default downlink BWP for the secondary cell in the same/similar manner as the wireless device uses the timer value and/or default BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a quantity/number of serving cells for the wireless device (e.g., one serving cell for a CC), for example, if CA is configured/used. The CCs may have multiple configurations in the frequency domain.

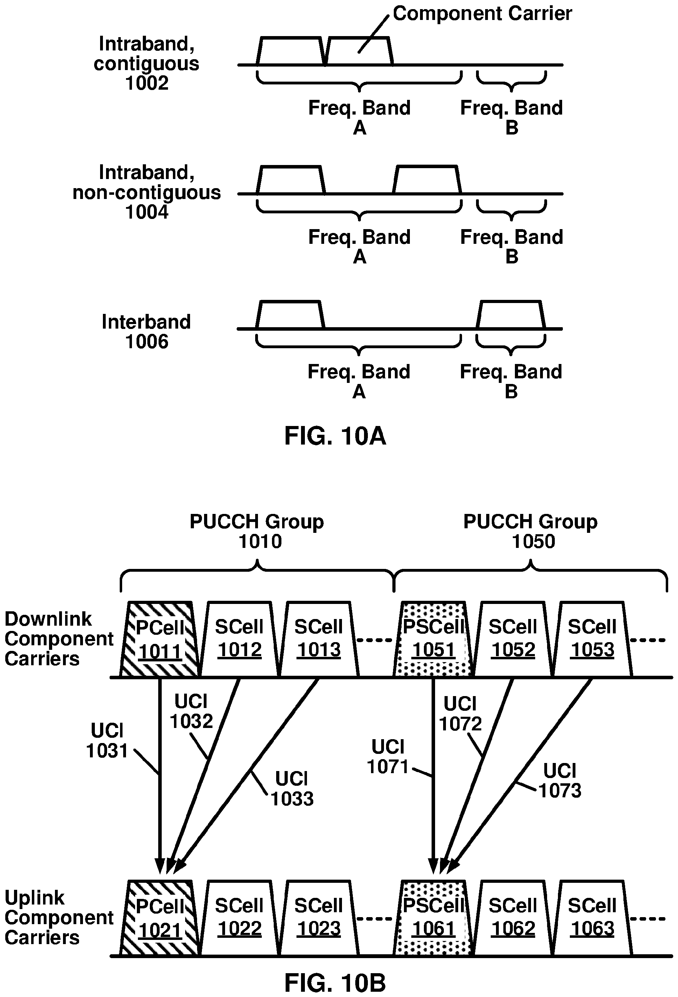

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/-configure the wireless device with NAS mobility information and the security input. Wireless device may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, based on (e.g., after or in response to) an expiration of an SCell deactivation timer (e.g., one SCell deactivation timer per SCell may be configured).

DCI may comprise control information, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. Uplink control information (UCI) may comprise control information, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger quantity/number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (or PSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

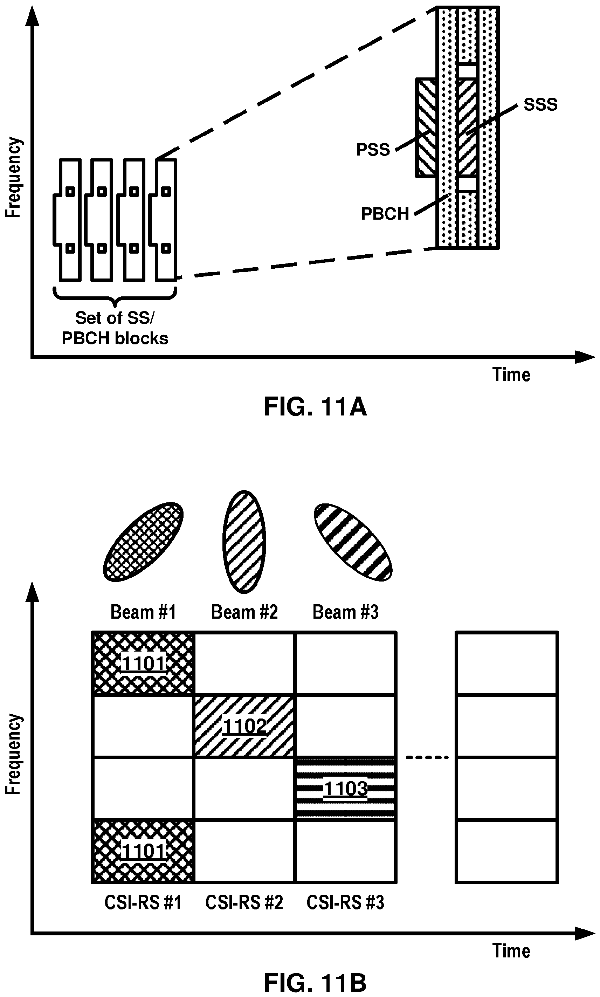

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the quantity/number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame quantity/number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell. The wireless device may use one or more parameters of the MIB to monitor a PDCCH, which may be used to schedule a PDSCH. The PDSCH may comprise the SIB1. The SIB1 may be decoded using parameters provided/comprised in the MIB. The PBCH may indicate an absence of SIB 1 The wireless device may be pointed to a frequency, for example, based on the PBCH indicating the absence of SIB 1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial Rx parameters). The wireless device may not assume QCL for SS/PBCH block transmissions having different SS/PBCH block indices. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same.

The CSI-RS may be sent/transmitted by the base station and used by the wireless device to acquire/obtain/determine channel state information (CSI). The base station may configure the wireless device with one or more CSI-RSs for channel estimation or any other suitable purpose. The base station may configure a wireless device with one or more of the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a quantity/number (e.g. a maximum quantity/number) of front-loaded DM-RS symbols for a PDSCH. A DM-RS configuration may support one or more DM-RS ports. A DM-RS configuration may support up to eight orthogonal downlink DM-RS ports per wireless device (e.g., for single user-MIMO).A DM-RS configuration may support up to 4 orthogonal downlink DM-RS ports per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DM-RSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI. A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a quantity/number (e.g., the maximum quantity/number) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DM-RSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in an SRS resource set of the one or more SRS resource sets (e.g., with the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: an SRS resource configuration identifier; a quantity/number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a quantity/number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as quasi co-located (QCLed), for example, if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a resource block (RB) within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of : a CSI-RS resource configuration identity, a quantity/number of CSI-RS ports, a CSI-RS configuration (e.g., symbol and resource element (RE) locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., *QCL-scramblingidentity, crs-portscount, mbsfn-subframeconfiglist, csi-rs-configZPid, qcl-csi-rs-configNZPid*), and/or other radio resource parameters.

One or more beams may be configured for a wireless device in a wireless device-specific configuration. Three beams are shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure an RSRP of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication/indicator (TCI) states comprising a quantity/number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more sounding reference signal (SRS) resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a precoding matrix indicator (PMI), a channel quality indicator (CQI), and/or a rank indicator (RI).

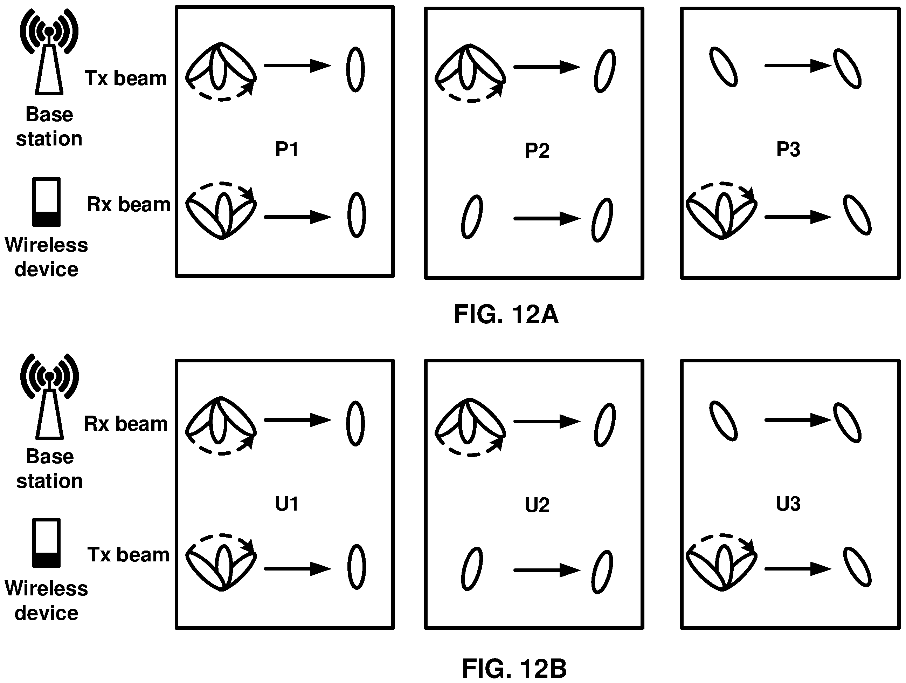

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station (e.g., base station 1210) and the Rx beams of a wireless device (e.g., wireless device 1205) are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure P1. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station (e.g., base station 1210) to perform a measurement on Tx beams of a wireless device (e.g., wireless device 1205) (e.g., to support a selection of one or more Tx beams of the wireless device and/or Rx beams of the base station). The Tx beams of the wireless device and the Rx beams of the base station are shown as ovals in the top row of U1 and bottom row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more reference signals (RSs) comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are similar or the same as the channel characteristics from a transmission via the channel to the wireless device.

A network (e.g., an NR network comprising a gNB and/or an ng-eNB) and/or the wireless device may initiate/start/perform a random access procedure. A wireless device in an RRC idle (e.g., an RRC_IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more system information blocks (SIBs) (e.g., other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

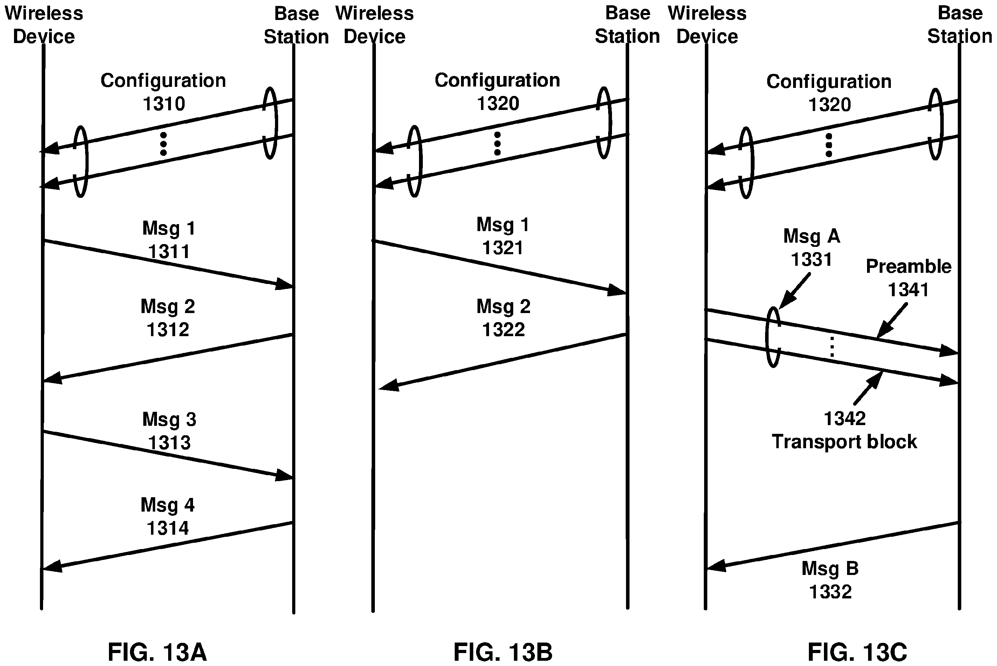

FIG. 13A shows an example four-step random access procedure. The four-step random access procedure may comprise a four-step contention-based random access procedure. A base station (e.g., base station 1302) may send/transmit a configuration message 1310 to a wireless device (e.g., wireless device 1301), for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more random access channel (RACH) parameters to the wireless device. The one or more RACH parameters may comprise at least one of: general parameters for one or more random access procedures (e.g., RACH-*configGeneral*); cell-specific parameters (e.g., RACH-*ConfigCommon*); and/or dedicated parameters (e.g., RACH-*configDedicated*). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC_CONNECTED) state and/or in an RRC inactive (e.g., an RRC_INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more Physical RACH (PRACH) occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., *prach-ConfigIndex*). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., *rsrp-ThresholdSSB* and/or *rsrp-ThresholdCSI-RS*). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e.g., Msg 3 1313). The one or more RACH parameters may indicate: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs).The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., *rα-ssb-OccαsionMskIndex* and/or *rα-OccαsionList*) may indicate an association between the PRACH occasions and the one or more reference signals.

The wireless device may perform a preamble retransmission, for example, if no response is received based on (e.g., after or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., *PREAMBLE_POWER_RAMPING_STEP*) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., *PREAMBLE_TRANSMISSION_COUNTER*). The wireless device may determine that a random access procedure has been completed unsuccessfully, for example, if the quantity/number of preamble transmissions exceeds a threshold configured by the one or more RACH parameters (e.g., *preambleTransMax*) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, based on (e.g., after or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., *ra-ResponseWindow*) to monitor a PDCCH for the second message (e.g., Msg 2 1312), for example, after sending/transmitting the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type1-PDCCH common search space) configured by an RRC message. The wireless device may identify/determine the RAR, for example, based on an RNTI. Radio network temporary identifiers (RNTIs) may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows:

$$RA\text{-}RNTI = 1 + s\_id + 14 \times t\_id + 14 \times 80 \times f\_id + 14 \times 80 \times 8 \times ul\_carrier\_id$$

where s_id may be an index of a first OFDM symbol of the PRACH occasion (e.g., $0 \le s\_id < 14$), t_id may be an index of a first slot of the PRACH occasion in a system frame (e.g., $0 \le t\_id < 80$), f_id may be an index of the PRACH occasion in the frequency domain (e.g., $0 \le f\_id < 8$), and ul_carrier_id may be a UL carrier used for a preamble transmission (e.g., 0 for an NUL carrier, and 1 for an SUL carrier).

The wireless device may send/transmit the third message (e.g., Msg 3 1313), for example, based on (e.g., after or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another the wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, based on (e.g., after or in response to) the sending/transmitting of the third message (e.g., Msg 3 1313). The base station may address the wireless on the PDCCH (e.g., the base station may send the PDCCH to the wireless device) using a C-RNTI, for example, If the C-RNTI was included in the third message (e.g., Msg 3 1313). The random access procedure may be determined to be successfully completed, for example, if the unique C RNTI of the wireless device is detected on the PDCCH (e.g., the PDCCH is scrambled by the C-RNTI). fourth message (e.g., Msg 4 1314) may be received using a DL-SCH associated with a TC RNTI, for example, if the TC RNTI is comprised in the third message (e.g., Msg 3 1313) (e.g., if the wireless device is in an RRC idle (e.g., an RRC_IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., between the Msg 1 1311 and the Msg 3 1313). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station (e.g., base station 1302) may, prior to initiation of the procedure, send/transmit a configuration message 1320 to the wireless device (e.g., wireless device 1301). The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., *ra-PreambleIndex*).

The wireless device may start a time window (e.g., *ra-ResponseWindow*) to monitor a PDCCH for the RAR, for example, based on (e.g., after or in response to) sending/transmitting the preamble. The base station may configure the wireless device with one or more beam failure recovery parameters, such as a separate time window and/or a separate PDCCH in a search space indicated by an RRC message (e.g., *recoverySearchSpaceId*). The base station may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after sending/transmitting the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, based on (e.g., after or in response to) sending/transmitting first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station (e.g., base station 1302) may, prior to initiation of the procedure, send/transmit a configuration message 1330 to the wireless device (e.g., wireless device 1301). The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

Msg A 1320 may be sent/transmitted in an uplink transmission by the wireless device. Msg A 1320 may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, based on (e.g., after or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIGS. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as downlink control information (DCI). The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCIs may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCIs with one or more DCI formats, for example, depending on the purpose and/or content of the DCIs. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a quantity/number of contiguous control channel elements (CCEs), for example, based on a payload size of the DCI and/or a coverage of the base station. The quantity/number of the contiguous CCEs (referred to as aggregation level) may be 1, 2, 4, 8, 16, and/or any other suitable quantity/number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

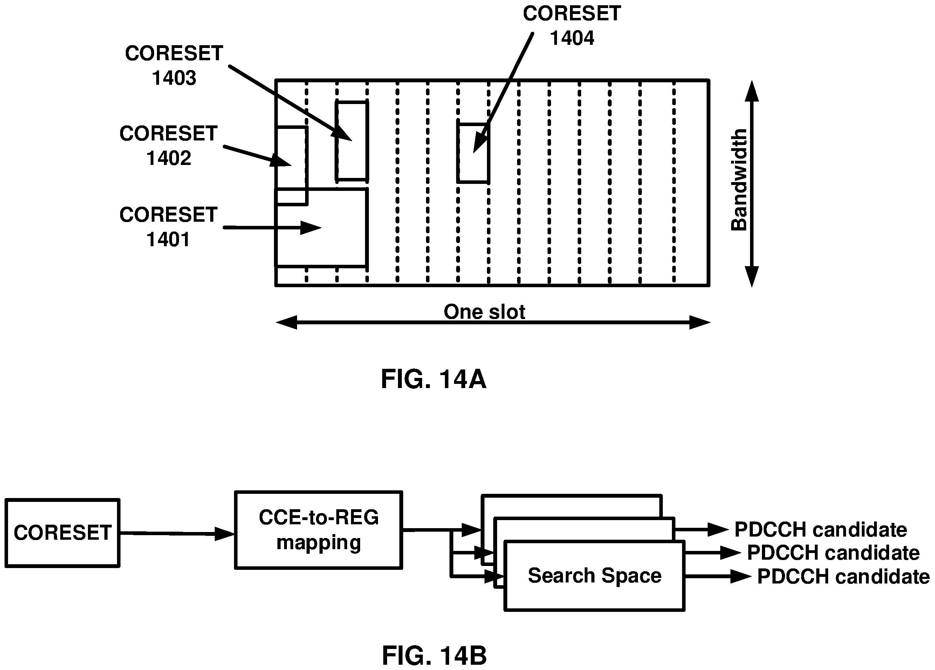

FIG. 14A shows an example of CORESET configurations. The CORESET configurations may be for a bandwidth part or any other frequency bands. The base station may send/transmit DCI via a PDCCH on one or more control resource sets (CORESETs). A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different quantity/number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a quantity/number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a quantity/number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the quantity/number of CCEs, the quantity/number of PDCCH candidates in common search spaces, and/or the quantity/number of PDCCH candidates in the wireless device-specific search spaces) and possible (or configured) DCI formats. The decoding may be referred to as blind decoding. The wireless device may determine DCI as valid for the wireless device, for example, based on (e.g., after or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The may send/transmit uplink control signaling (e.g., UCI) to a base station. The uplink control signaling may comprise HARQ acknowledgements for received DL-SCH transport blocks. The wireless device may send/transmit the HARQ acknowledgements, for example, based on (e.g., after or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise scheduling requests (SR). The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a quantity/number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a quantity/number of OFDM symbols (e.g., between four and fourteen OFDM symbols) and may comprise two or fewer bits. The wireless device may use PUCCH format 1, for example, if the transmission is over/via four or more symbols and the quantity/number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a quantity/number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a quantity/number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (*e.g., pucch-Resourceid*), and/or a quantity/number (e.g. a maximum quantity/number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from the PUCCH resource set for UCI (HARQ-ACK, CSI, and/or SR) transmission, for example, after determining a PUCCH resource set from a plurality of PUCCH resource sets.

The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

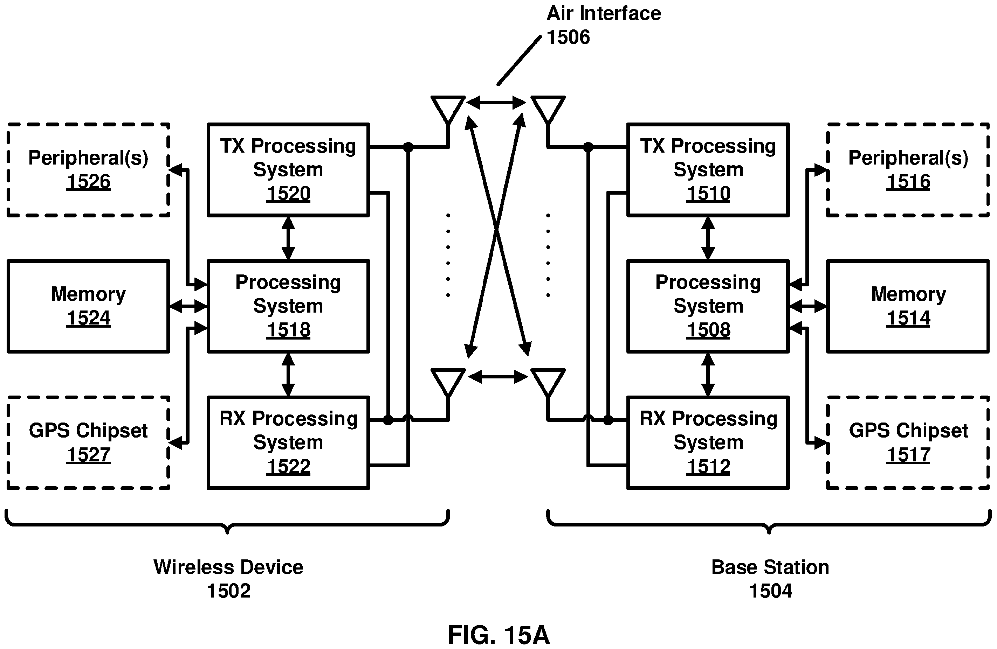

FIG. 15A shows an example communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/-transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

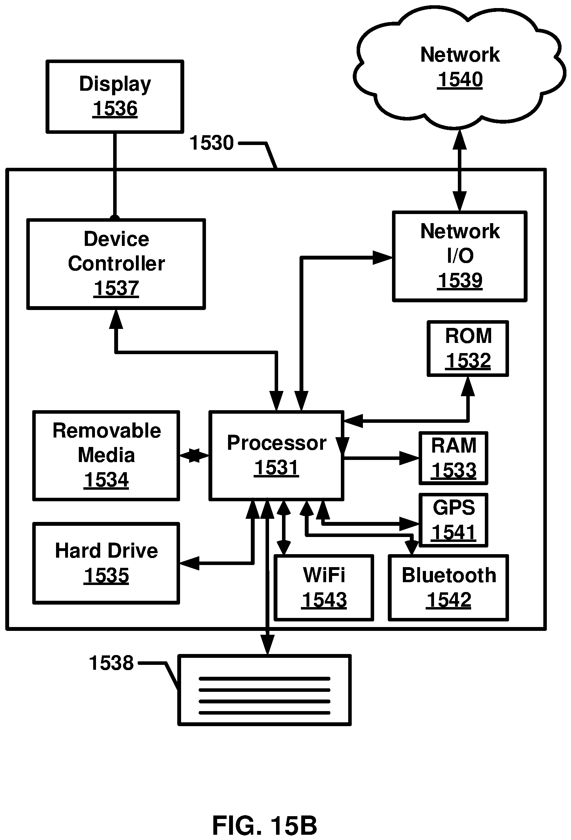

FIG. 15B shows example elements of a computing device that may be used to implement any of the various devices described herein, including, for example, the base station 160A, 160B, 162A, 162B, 220, 1210, 1302, and/or 1710, the wireless device 106, 156A, 156B, 210, 1205, 1301, and/or 1705, the NCR node 1720, 180, and/or 1905, or any other base station, wireless device, AMF, UPF, network device, or computing device described herein. The computing device 1530 may include one or more processors 1531, which may execute instructions stored in the random-access memory (RAM) 1533, the removable media 1534 (such as a Universal Serial Bus (USB) drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a global positioning system (GPS) microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

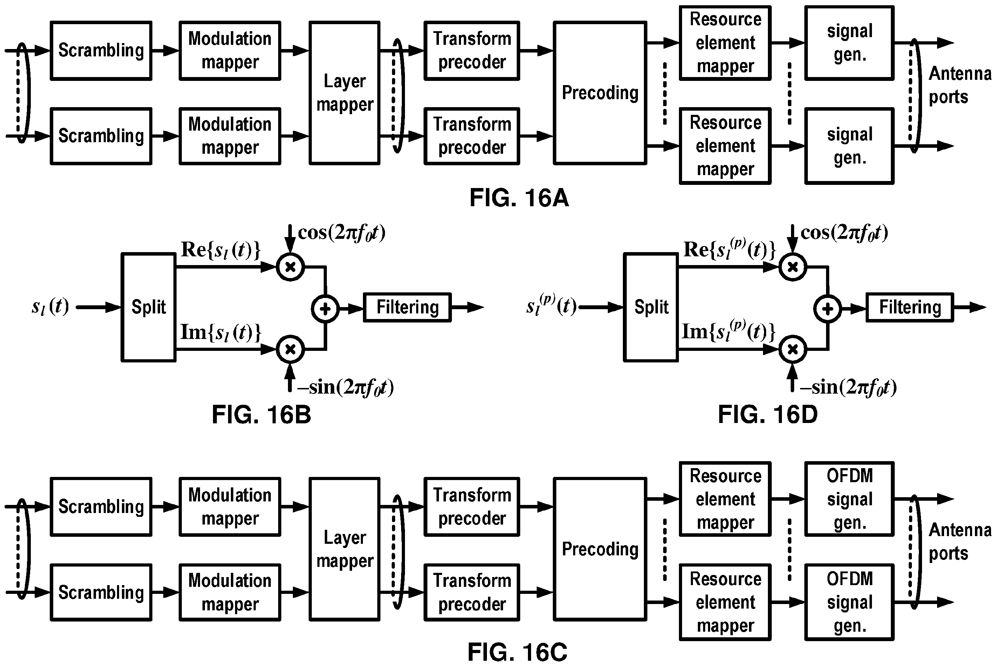

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, after (e.g., as soon as) it is started and continue running until it is stopped or until it expires. A timer may be started, for example, if it is not running or restarted if it is running. A timer may be associated with a value (e.g., the timer may be started or restarted from a value or may be started from zero and expire after (e.g., as soon as) it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

A wireless device may receive (e.g., from a base station) one or more messages. The one or more messages may comprise one or more configuration parameters of a cell. For example, the one or more configuration parameters may include downlink control information (DCI) that may schedule a physical downlink shared channel (PDSCH) reception. The DCI may comprise a transmission configuration indication (TCI) field and an antenna port field.

In some examples, the wireless device may apply a spatial domain multiplexing (SDM) scheme to the PDSCH reception, for example, if the TCI field in the DCI indicates two TCI states for the PDSCH reception and the antenna port field in the DCI indicates demodulation reference signals (DM-RS) ports within two code-division multiplexing (CDM) groups. In the SDM scheme, the following may apply:

(1) The wireless device may receive two phase-tracking reference signals (PT-RSs). A first PT-RS of the two PT-RSs may be associated with a lowest indexed DM-RS port among the first DM-RS port(s) corresponding to the first TCI state. A second PT-RS of the two PT-RSs may be associated with a lowest indexed DM-RS port among the second DM-RS port(s) corresponding to the second TCI state.

(2) First DM-RS port(s) of the DM-RS ports of the PDSCH reception may be associated with a first TCI state of the two TCI states. Second DM-RS port(s) of the DM-RS ports of the PDSCH reception may be associated with a second TCI state of the two TCI states; and

In some examples, a same DCI may both schedule the PDSCH reception and indicate the two TCI states for the PDSCH reception by the TCI field in that DCI.

As described herein, a wireless device may receive first DCI with a TCI field that may indicate two unified TCI states comprising a first unified TCI state and a second unified TCI state. The wireless device may receive second DCI that may schedule a PDSCH reception. The second DCI may comprise a TCI selection field that may indicate to apply: (1) the first unified TCI state; (2) the second unified TCI state; or (3) both of the first unified TCI state and the second unified TCI state, to the PDSCH reception.

The second DCI may also comprise a TCI field. Or, the second DCI may not comprise a TCI field.

The TCI selection field of the second DCI may indicate which TCI state(s) among the indicated two unified TCI states to apply to the PDSCH reception. The TCI field of the first DCI or the second DCI may indicate new unified TCI state(s).

In some examples, the wireless device may apply both of the two unified TCI states, as a default, to the PDSCH reception, for example, if the TCI selection field is absent in DCI that scheduling the PDSCH reception.

A determination of which TCI state(s) or how many TCI state(s) to apply to a PDSCH reception may not be based on the TCI field of DCI, rather may be based on the TCI selection field of DCI, or based on absence of the TCI selection field of DCI. In addition, different DCIs may schedule the PDSCH reception and indicate the two unified TCI states. For example, first DCI may schedule the PDSCH reception (and an antenna port field as well), and second DCI may indicate the two unified TCI states, or vice versa.

As such, a determination of receiving two PT-RSs, or a determination of an association between the TCI states and DM-RS ports of the PDSCH reception based on the number of indicated TCI states by the TCI field in the scheduling DCI may not be sufficient.

Further, the existing spatial domain multiplexing scheme may not work, for example, if the TCI selection field in the scheduling DCI (e.g., rather the TCI field in the scheduling DCI) or absence of the TCI selection field in the scheduling DCI (e.g., rather the TCI field in the scheduling DCI) is used to indicate TCI state(s) that apply to a PDSCH reception.

As described herein, a wireless device may receive DCI scheduling/activating a PDSCH reception in a unified TCI state framework, for example, if the wireless device is configured with *dl-OrJointTCI-StαteList.* A wireless device may receive DCI scheduling/activating a PDSCH reception with an antenna port field indicating DM-RS ports within two CDM groups in the unified TCI state framework, for example, if (1) a value of a TCI selection field in the scheduling DCI indicates to apply two TCI states to the PDSCH reception; or (2) a TCI selection field is absent in the scheduling DCI which indicates to apply two TCI states to the PDSCH reception.

In some examples, a wireless device may receive two PT-RSs. A first PT-RS of the two PT-RSs may be associated with a lowest indexed DM-RS port among the first DM-RS port(s) corresponding to the first TCI state. A second PT-RS of the two PT-RSs may be associated with a lowest indexed DM-RS port among the second DM-RS port(s) corresponding to the second TCI state.

In some examples, first DM-RS port(s) of the DM-RS ports of the PDSCH reception may be associated with a first TCI state of the two TCI states. Second DM-RS port(s) of the DM-RS ports of the PDSCH reception may be associated with a second TCI state of the two TCI states.

As described herein, a wireless device may receive (e.g., from a base station) one or more messages. The one or more messages may comprise one or more configuration parameters of a cell. For example, the one or more configuration parameters may indicate at least two DTXs for energy saving of the cell. The one or more configuration parameters may indicate at least two DRXs for energy saving of the cell.

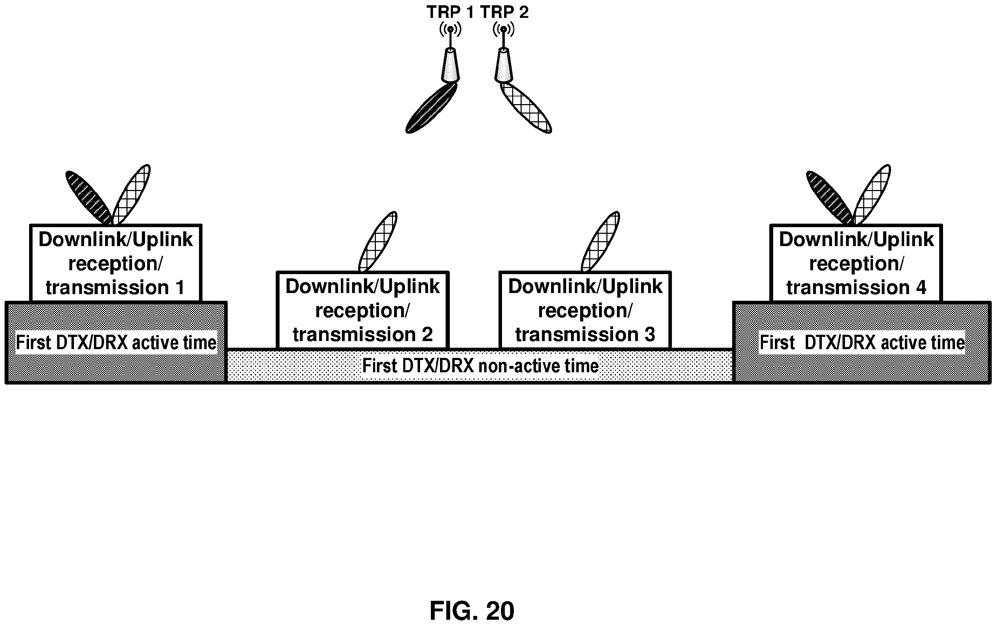

For example, a first DTX of the at least two DTXs may be for a first TRP (e.g., TRP 1 shown in FIG. 20, FIG. 21, and FIG. 22) and a second DTX of the at least two DTXs may be for a second TRP (e.g., TRP 2 shown in FIG. 20, FIG. 21, and FIG. 22).For example, a first DRX of the at least two DRXs may be for a first TRP (e.g., TRP 1 shown in FIG. 20, FIG. 21, and FIG. 22) and a second DRX of the at least two DRXs may be for a second TRP (e.g., TRP 2 shown in FIG. 20, FIG. 21, and FIG. 22).

A wireless device may not transmit an uplink transmission (e.g., PUSCH transmission, PUCCH transmission) during a non-active time/duration/period of a DRX of the cell. This may not be efficient, if an uplink transmission associated with two TCI states overlaps in time (or is/within) a non-active time/period/duration the first DRX (e.g., the first TRP is off), but the uplink transmission overlaps in time (or is/within) an active time/period/duration the second DRX (e.g., the second TRP is on), or vice versa. A wireless device not transmitting the uplink transmission within the non-active time/period/duration the first DRX, within which time the second TRP is on, may not be efficient. As such, latency of data communication may be increased.

As described herein, uplink transmissions associated with at least two TCI states in a non-active time/duration/period of one of the at least two DRXs may be enhanced. For example, a wireless device may transmit an uplink transmission based on one TCI state of the at least two TCI states during/in a non-active time/duration/period of one of the at least two DRXs. For example, the wireless device may transmit the uplink transmission based on a first TCI state of the at least two TCI states during/in a non-active time/duration/period of the second DRX of the at least two DRXs. The wireless device may transmit the uplink transmission based on a second TCI state of the at least two TCI states during/in a non-active time/duration/period of the first DRX of the at least two DRXs. The first TCI state and the second TCI state may be, for example, different. As such, latency of data communication may be reduced.

A spatial separation of different layers (or streams) may not be maintained, for example, if an SDM scheme is indicated for a downlink reception or an uplink transmission, and if one TCI state of the at least two TCI states is used. This may increase error rates. Accordingly, retransmissions and latency may be increased.

A wireless device and/or a base station may not receive a subset of layers of the downlink reception or the uplink transmission, for example, if an SDM scheme is indicated for a downlink reception or an uplink transmission, and if one TCI state of the at least two TCI states is used. This may increase error rates. , Accordingly, retransmissions and latency may be increased.

Downlink receptions and uplink transmissions under the SDM scheme in a non-active time/duration/period of one of the at least two DRXs may be enhanced. For example, a wireless device may not receive, during/in a non-active time/duration/period of one of the at least two DTXs, the downlink reception if the SDM scheme is indicated for the downlink reception. The wireless device may not transmit, during/in a non-active time/duration/period of one of the at least two DRXs, the uplink transmission if the SDM scheme is indicated for the uplink transmission.

In some examples, a wireless device may receive, during/in a non-active time/duration/period of one of the at least two DTXs, the downlink reception based on the at least two TCI states if the SDM scheme is indicated for the downlink reception. The wireless device may not transmit, during/in a non-active time/duration/period of one of the at least two DRXs, the uplink transmission based on the at least two TCI states if the SDM scheme is indicated for the uplink transmission. The uplink transmission and/or the downlink reception with the SDM scheme may not be impacted by the DRX and DTX operation, respectively.

As such, retransmissions and latency may be reduced. Energy saving may be achieved.

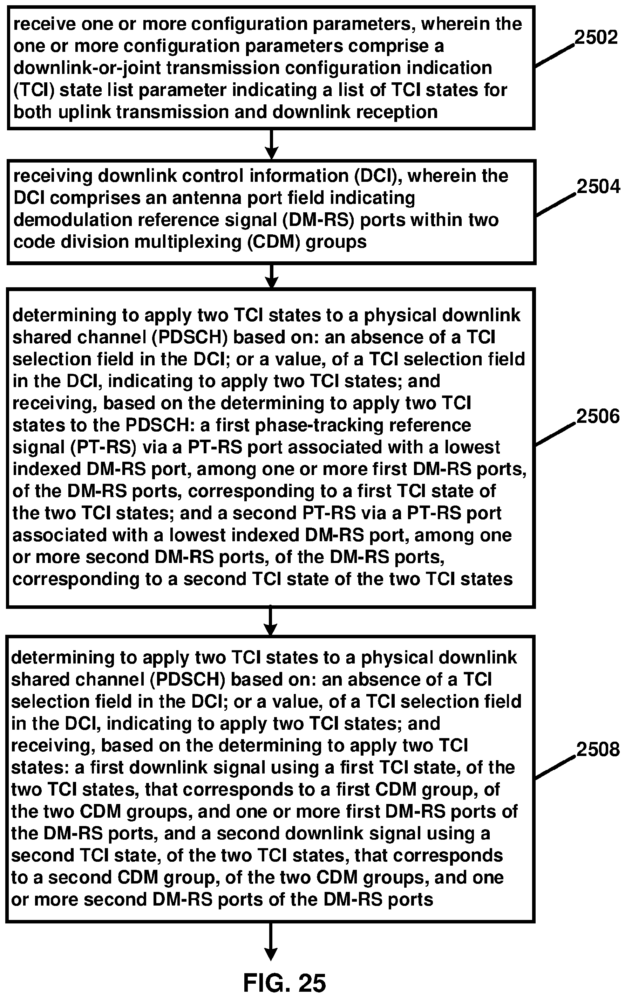

An SDM scheme may be indicated for the downlink reception, for example, if DCI scheduling/activating the downlink reception comprises an antenna ports field indicating DMRS port(s) within two CDM groups, for example, as shown at step 2504 of FIG. 25.

An SDM scheme may be indicated for the uplink transmission, for example, if the one or more configuration parameters comprise a multi-panel scheme parameter set to 'SDMscheme'.

A wireless device may receive (e.g., from a base station (or a network)) one or more messages (e.g., RRC messages, RRC reconfiguration messages) comprising one or more configuration parameters.

The one or more configuration parameters may comprise one or more MAC cell group configuration parameters (e.g., *MAC-CellGroupConfig*) of a cell group comprising a cell.

In some examplesThe one or more MAC cell group configuration parameters may comprise one or more cell discontinuous-transmission (DTX) configuration parameters (e.g., *celldtx-Config*) used to configure/indicate a cell DTX of the cell.

In some examplesThe one or more MAC cell group configuration parameters may comprise one or more cell discontinuous-reception (DRX) configuration parameters (e.g., *celldrx-Config*) used to configure/indicate a cell DRX of the cell.

The one or more configuration parameters may comprise one or more serving cell configuration parameters (e.g., *ServingCellConfig*) of a cell.

In some examplesThe one or more serving cell configuration parameters may comprise one or more cell DTX configuration parameters (e.g., *celldlx-Config*) used to configure/indicate a cell DTX of the cell.

In some examplesThe one or more serving cell configuration parameters may comprise one or more cell DRX configuration parameters (e.g., *celldrx-Config*) used to configure/indicate a cell DRX of the cell.

The Cell DTX may be activated implicitly if configured by the base station, for example, based on sending the one or more cell DTX configuration parameters. The Cell DTX may be activated implicitly by the wireless device if configured by the base station, for example, based on receiving the one or more cell DTX configuration parameters. The one or more cell DTX configuration parameters may indicate an on-duration timer (e.g., *celldtx-onDurationTimer*) for the cell DTX. The one or more cell DTX configuration parameters may indicate an offset for a cycle start of the cell DTX (e.g., *celldtx-CycleStartOffset*). The one or more cell DTX configuration parameters may indicate a slot offset (e.g., *celldtx-SlotOffset*) for the cell DTX. The one or more cell DTX configuration parameters may comprise a joint cell DTX-DRX configuration parameter (e.g., *jointCellDTXDRXconfig*). A wireless device may use the one or more cell DTX configuration parameters to a cell DRX, for example, if the joint cell DTX-DRX configuration parameter is set to true. A wireless device may use a cell DRX configuration with the same parameters as in *CellDTX-Config*, for example, if the joint cell DTX-DRX configuration parameter is set to true.

The Cell DTX may be deactivated by the wireless device, for example, based on releasing the one or more cell DTX configuration parameters.

The Cell DRX may be activated implicitly if configured by the base station, for example, based on sending the one or more cell DRX configuration parameters. The Cell DRX may be activated implicitly by the wireless device if configured by the base station, for example, based on receiving the one or more cell DRX configuration parameters. The one or more cell DRX configuration parameters may indicate an on-duration timer (e.g., *celldrx-onDurationTimer*) for the cell DRX. The one or more cell DRX configuration parameters may indicate an offset for a cycle start of the cell DRX (e.g., *celldrx-CycleStartOffset).* The one or more cell DRX configuration parameters may indicate a slot offset (e.g., *celldrx-SlotOffset)* for the cell DRX.

The Cell DRX may be deactivated by the wireless device, for example, based on releasing the one or more cell DRX configuration parameters.

An offset for a cycle start may be common between the cell DTX and the cell DRX, for example, if the one or more configuration parameters comprise both the one or more cell DTX configuration parameters and the one or more cell DRX configuration parameters. The offset for the cycle start of the cell DRX may be signaled in the one or more cell DTX configuration parameters. The offset for the cycle start of the cell DTX may indicate the offset for the cycle start of the cell DRX, for example, if the joint cell DTX-DRX configuration parameter is set to true. The offset for the cycle start of the cell DTX may be the offset for the cycle start of both the cell DTX and the cell DRX, for example, if the joint cell DTX-DRX configuration parameter is set to true.

An on-duration timer may be common between the cell DTX and the cell DRX, for example, if the one or more configuration parameters comprise both the one or more cell DTX configuration parameters and the one or more cell DRX configuration parameters. The on-duration timer of the cell DRX may be signaled in the one or more cell DTX configuration parameters. The on-duration timer of the cell DTX may indicate the on-duration timer of the cell DRX, for example, if the joint cell DTX-DRX configuration parameter is set to true. The on-duration timer of the cell DTX may be the on-duration timer of both the cell DTX and the cell DRX, for example, if the joint cell DTX-DRX configuration parameter is set to true.

A slot offset may be common between the cell DTX and the cell DRX, for example, if the one or more configuration parameters comprise both the one or more cell DTX configuration parameters and the one or more cell DRX configuration parameters. The slot offset of the cell DRX may be signaled in the one or more cell DTX configuration parameters. The slot offset of the cell DTX may indicate the slot offset of the cell DRX, for example, if the joint cell DTX-DRX configuration parameter is set to true. The slot offset of the cell DTX may be the slot offset of both the cell DTX and the cell DRX, for example, if the joint cell DTX-DRX configuration parameter is set to true.

To facilitate reducing downlink transmission/uplink reception activity time of a base station (gNB), a wireless device may be configured, by the base station, with a cell DTX/DRX of a cell (e.g., by *CellDTX-Config, CellDRX-Config).* The cell DTX/DRX of the cell may have a periodic cell DTX/DRX pattern (i.e., active and non-active periods). The periodic cell DTX/DRX pattern may be common for one or more wireless devices, that are configured with a cell DTX/DRX, in the cell. The periodic cell DTX pattern and the periodic cell DRX pattern may be configured and activated separately. A wireless device may not monitor PDCCH or SPS occasions within a non-active duration of the cell DTX, for example, unless there is a pending retransmission, or unless a random-access timer/window (e.g., *ra-ResponseWindow*, *ra-ContentionResolutionTimer*) is running, or unless an SR is sent and is pending, for example, if the cell DTX is configured and activated for the cell. A wireless device may not send on/via configured grant (CG) resources or may not send an SR within a non-active duration of the cell DRX, for example, if the cell DRX is configured and activated for the cell. A cell DTX/DRX may be only applicable to wireless devices in an RRC_CONNECTED state. The cell DTX/DRX may not impact at least: Random Access procedure, SSB transmission, paging, and system information broadcasting.

The Cell DTX/DRX may be activated/deactivated by RRC signaling or layer 1 (L1) group common signaling (e.g., DCI). In some examplesThe one or more configuration parameters may comprise a parameter indicating whether activation/deactivation of the Cell DTX/DRX is based on the RRC signaling or the L1 group common signaling. For example, if the parameter is set to a first value (e.g., 0, 'RRC'), the base station and/or the wireless device may activate/deactivate the Cell DTX/DRX based on the RRC signaling. The wireless device may activate the Cell DTX/DRX based on receiving the RRC signaling (e.g., *CellDTX-Config, CellDRX-Config).* For example, if the parameter is set to a second value (e.g., 1, 'DCI', or 'L1'), the base station and/or the wireless device may activate/deactivate the Cell DTX/DRX based on the L1 group common signaling. The wireless device may activate the Cell DTX/DRX based on receiving DCI (e.g., DCI format 2_9). A wireless device may not activate the Cell DTX/DRX based on receiving the RRC signaling (e.g., *CellDTX-Config, CellDRX-Config),* for example, if the parameter is set to the second value. A wireless device may not activate the Cell DTX/DRX until receiving the DCI (e.g., DCI format 2_9), for example, if the parameter is set to the second value.

The Cell DTX/DRX may be characterized by the following:

- active duration: Duration that the wireless device may wait for (or may monitor) to receive PDCCHs or SPS occasions and send SR or CG. In the active duration, the transmission/reception of PDCCH, SPS, SR and CG by the base station may not be impacted for the purpose of network energy saving.
- cycle: Specifies the periodic repetition of the active duration followed by a period of non-active duration.

The Active duration and cycle parameters may be common between the cell DTX and the cell DRX, if both cell DTX and the cell DRX are configured.

If the base station recognizes there is an emergency call or public safety related service (e.g., MPS or MCS), the network may ensure that there is no impact to the emergency call or public safety related service (e.g., the base station may release or deactivate the cell DTX/DRX). The base station may ensure that there is at least partial overlapping between an on-duration of a connected mode DRX of the wireless device and an active duration of a cell DTX/DRX (e.g., a periodicity of the connected mode DRX of the wireless device is a multiple of a periodicity of the cell DTX/DRX).

A wireless device may receive the downlink reception regardless of the downlink reception overlapping (or being in) an active duration/time/period or a non-active duration/time/period of the cell DTX, for example, if the wireless device receives DCI scheduling a downlink reception (e.g., PDSCH, aperiodic CSI-RS) within the cell DTX. The DCI may comprise/indicate a dynamic grant for the downlink reception. After the downlink reception, the wireless device may send a HARQ-ACK information feedback of the downlink reception regardless of the transmission of the HARQ-ACK information overlapping (or being in) an active duration/time/period or a non-active duration/time/period of the cell DRX.

A wireless device may send the uplink transmission regardless of the uplink transmission overlapping (or being in) an active duration/time/period or a non-active duration/time/period of the cell DRX, for example, if the wireless device receives DCI scheduling an uplink transmission (e.g., PUSCH, PUCCH, aperiodic SRS) within the cell DRX. The DCI may comprise/indicate a dynamic grant for the uplink transmission. After the uplink transmission, the wireless device may receive a PDCCH reception (e.g., DCI, a response to/of the uplink transmission) from the base station regardless of the transmission of the PDCCH reception overlapping (or being in) an active duration/time/period or a non-active duration/time/period of the cell DTX. After the uplink transmission, the wireless device may monitor PDCCH for DCI (or for a response to/of the uplink transmission) from the base station regardless of the transmission of the PDCCH with the DCI overlapping (or being in) an active duration/time/period or a non-active duration/time/period of the cell DTX.

A non-active period/time/duration of the cell DTX may comprise/include the time outside an active period/time/duration of the cell DTX.

A non-active period/time/duration of the cell DRX may comprise/include the time outside an active period/time/duration of the cell DRX.

A wireless device may receive, from a base station, one or more messages (e.g., RRC message(s)). The one or more messages may configure/indicate a periodic cell DTX and/or a cell DRX pattern (i.e., an active period and a non-active period) for a cell DTX and/or a cell DRX of a cell (e.g., a serving cell, a non-serving cell, a candidate cell, a target cell).

The cell DTX (or a cell DTX functionality) may control monitoring activity of PDCCH and configured downlink assignments (e.g., SPS PDSCH) by the wireless device in an RRC_CONNECTED mode.

For the cell configured and activated with the cell DTX, the wireless device may monitor PDCCH and configured downlink assignments via the cell using the cell DTX (or a cell DTX operation).

For all activated cells (e.g., activated serving cells) configured with a cell DTX, the wireless device may monitor PDCCH and configured downlink assignments using the cell DTX (or a cell DTX operation).

For each activated cell (e.g., each activated serving cell) configured and activated with cell DTX, the wireless device may monitor PDCCH and configured downlink assignments using the cell DTX (or a cell DTX operation).

The cell DRX (or a cell DRX functionality) may control transmission activity of scheduling request (SR) and configured uplink grant by the wireless device in an RRC_CONNECTED.

For the cell configured and activated with the cell DRX, the wireless device may send scheduling request and configured uplink grant via the cell using the cell DRX (or a cell DRX operation).

For all activated cells (e.g., activated serving cells) configured with a cell DRX, the wireless device may send scheduling request and configured uplink grant using the cell DRX (or a cell DRX operation).

For each activated cell (e.g., each activated serving cell) configured and activated with cell DRX, the wireless device may send scheduling request and configured uplink grant using the cell DRX (or a cell DRX operation).

The one or more messages (e.g., the RRC message(s)) may control the cell DTX (or the cell DTX operation) by configuring/indicating/comprising the following parameters in the one or more cell DTX configuration parameters (e.g., *CellDTX-Config*):

- *celldtx-onDurationTimer*: an active duration at the beginning of a cycle of the cell DTX (or a cell DTX cycle);
- *celldtx-StartOffset*: defines the subframe where the cycle of the cell DTX (or the cell DTX cycle) starts;
- *celldtx-SlotOffset*: the delay before starting the on-duration timer of the cell DTX (e.g., *celldtx-onDurationTimer*);
- *celldtx-Cycle*: the period of the cycle of the cell DTX (or a cell DTX cycle period).

The one or more messages (e.g., the RRC message(s)) may control the cell DRX (or the cell DRX operation) by configuring/indicating/comprising the following parameters in the one or more cell DRX configuration parameters (e.g., *CellDRX-Config*):

- *celldrx-onDurationTimer*: an active duration at the beginning of a cycle of the cell DRX (or a cell DRX cycle);
- *celldrx-StartOffset*: defines the subframe where the cycle of the cell DRX (or the cell DRX cycle) starts;
- *celldrx-SlotOffset*: the delay before starting the on-duration timer of the cell DRX (e.g., *celldrx-onDurationTimer*);
- *celldrx-Cycle*: the period of the cycle of the cell DRX (or a cell DRX cycle period).

If the one or more configuration parameters comprise one or more cell DTX configuration parameters (e.g., *CellDTX-Config*) indicating/configuring a cell DTX of a cell (e.g., a serving cell), an active period/time/duration (or a cell DTX active period/time/duration) of the cell DTX may comprise/include the time within which:

- *celldtx-onDurationTimer* is running for the cell; or
- a cell DTX deactivation indication (e.g., DCI format 2_9 or RRC signaling) has been received, by the wireless device, for the cell.

If the one or more configuration parameters comprise one or more cell DRX configuration parameters (e.g., *CellDRX-Config*) indicating/configuring a cell DRX of a cell (e.g., a serving cell), an active period/time/duration (or a cell DRX active period/time/duration) of the cell DRX may comprise/include the time within which:

- *celldrx-onDurationTimer* is running for the cell; or
- a cell DRX deactivation indication (e.g., DCI format 2_9 or RRC signaling) has been received, by the wireless device, for the cell.

Based on receiving a cell DTX activation indication (e.g., by DCI format 2_9 or by RRC signaling) for the cell DTX of the cell, the wireless device may start the on-duration timer (e.g., *celldtx-onDurationTimer*) for the cell after the slot offset (e.g., *celldtx-SlotOffset)* from the beginning of a subframe.

Based on receiving an indication (e.g., by DCI format 2_9 or by RRC signaling) indicating activation of the cell DTX of the cell, the wireless device may start the on-duration timer (e.g., *celldtx-onDurationTimer*) for the cell after the slot offset (e.g., *celldtx-SlotOffset)* from the beginning of a subframe.

Based on receiving a cell DTX deactivation indication (e.g., by DCI format 2_9 or by RRC signaling) for the cell DTX of the cell, the wireless device may stop the on-duration timer (e.g., *celldtx-onDurationTimer*), if running.

Based on receiving an indication (e.g., by DCI format 2_9 or by RRC signaling) indicating deactivation of the cell DTX of the cell, the wireless device may stop the on-duration timer (e.g., *celldtx-onDurationTimer),* if running.

Based on receiving a cell DRX activation indication (e.g., by DCI format 2_9 or by RRC signaling) for the cell DRX of the cell, the wireless device may start the on-duration timer (e.g., *celldrx-onDurationTimer)* for the cell after the slot offset (e.g., *celldrx-SlotOffset*) from the beginning of a subframe.

Based on receiving an indication (e.g., by DCI format 2_9 or by RRC signaling) indicating activation of the cell DRX of the cell, the wireless device may start the on-duration timer (e.g., *celldrx-onDurationTimer)* for the cell after the slot offset (e.g., *celldrx-SlotOffset*) from the beginning of a subframe.

Based on receiving a cell DRX deactivation indication (e.g., by DCI format 2_9 or by RRC signaling) for the cell DRX of the cell, the wireless device may stop the on-duration timer (e.g., *celldrx-onDurationTimer*), if running.

Based on receiving an indication (e.g., by DCI format 2_9 or by RRC signaling) indicating deactivation of the cell DRX of the cell, the wireless device may stop the on-duration timer (e.g., *celldrx-onDurationTimer*), if running.

A MAC layer/entity of the wireless device may not instruct a physical layer/entity of the wireless device to receive a transport block on a DL-SCH according to (or for) a configured downlink assignment (e.g., SPS), for example, if the cell is not in an active duration/time/period of the cell DTX (or if the cell is not in the cell DTX active period or if the cell is in a non-active duration/time/period of the cell DTX).

A MAC layer/entity of the wireless device may instruct a physical layer/entity of the wireless device to receive a transport block on a DL-SCH according to (or for) a configured downlink assignment (e.g., SPS), for example, if the cell is in an active duration/time/period of the cell DTX (or if the cell is in the cell DTX active period or if the cell is not in a non-active duration/time/period of the cell DTX).

A MAC layer/entity of the wireless device may not indicate a presence of any configured downlink assignment and may not deliver a stored HARQ information to a HARQ entity, for example, if the cell is not in an active duration/time/period of the cell DTX (or if the cell is not in the cell DTX active period or if the cell is in a non-active duration/time/period of the cell DTX).

A MAC layer/entity of the wireless device may indicate a presence of a configured downlink assignment and may deliver a stored HARQ information to a HARQ entity, for example, if the cell is in an active duration/time/period of the cell DTX (or if the cell is in the cell DTX active period or if the cell is not in a non-active duration/time/period of the cell DTX).

A wireless device may not monitor PDCCH for an RNTI. The wireless device may not monitor PDCCH for DCI scrambled with the RNTI, for example, if the cell is not in an active duration/time/period of the cell DTX (or if the cell is not in the cell DTX active period or if the cell is in a non-active duration/time/period of the cell DTX).

The RNTI may be/comprise, for example, at least one of: C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, AI-RNTI, SL-RNTI, SLCS-RNTI and SL Semi-Persistent Scheduling V-RNTI.

A wireless device may monitor PDCCH for the RNTI if *drx-RetransmissionTimerDL*, *drx-RetransmissionTimer-UL* or *drx-RetransmissionTimerSL* is running on at least one cell in the DRX group, for example, if the cell in a DRX group is not in an active duration/time/period of the cell DTX (or if the cell is not in the cell DTX active period or if the cell is in a non-active duration/time/period of the cell DTX).

A wireless device may not monitor PDCCH for the RNTI if *drx-RetransmissionTimerDL*, *drx-RetransmissionTimerUL* or *drx-RetransmissionTimerSL* is not running on any cell in the DRX group, for example, if the cell in a DRX group is not in an active duration/time/period of the cell DTX (or if the cell is not in the cell DTX active period or if the cell is in a non-active duration/time/period of the cell DTX).

A wireless device may monitor PDCCH for the RNTI if *ra-ContentionResolutionTimer,* or *ra-Response Window,* or *msgB-ResponseWindow* is running, for example, the cell is not in an active duration/time/period of the cell DTX (or if the cell is not in the cell DTX active period or if the cell is in a non-active duration/time/period of the cell DTX).

A wireless device may not monitor PDCCH for the RNTI if *ra-ContentionResolutionTimer,* and *ra-Response Window,* and *msgB-ResponseWindow* is not running, for example, if the cell is not in an active duration/time/period of the cell DTX (or if the cell is not in the cell DTX active period or if the cell is in a non-active duration/time/period of the cell DTX).

A wireless device may monitor PDCCH for the RNTI based on sending a scheduling request (e.g., on PUCCH) and/or the scheduling request being pending, for example if the cell is not in an active duration/time/period of the cell DTX (or if the cell is not in the cell DTX active period or if the cell is in a non-active duration/time/period of the cell DTX).

A wireless device may monitor PDCCH for the RNTI if a scheduling request is sent (e.g., on PUCCH) by the wireless device and/or the scheduling request is pending, for example, if the cell is not in an active duration/time/period of the cell DTX (or if the cell is not in the cell DTX active period or if the cell is in a non-active duration/time/period of the cell DTX).

A wireless device may not monitor PDCCH for the RNTI based on not sending a scheduling request (e.g., on PUCCH) and/or the scheduling request not being pending, for example, if the cell is not in an active duration/time/period of the cell DTX (or if the cell is not in the cell DTX active period or if the cell is in a non-active duration/time/period of the cell DTX).

A wireless device may not monitor PDCCH for the RNTI if a scheduling request is not sent (e.g., on PUCCH) by the wireless device and/or the scheduling request is not pending, for example, if the cell is not in an active duration/time/period of the cell DTX (or if the cell is not in the cell DTX active period or if the cell is in a non-active duration/time/period of the cell DTX).

A wireless device may monitor PDCCH for the RNTI based on not receiving, after a successful reception of a random-access response of/for a contention-free random-access procedure, DCI indicating a new transmission addressed to the C-RNTI of the wireless device (or the MAC entity of the wireless device), for example, if the cell is not in an active duration/time/period of the cell DTX (or if the cell is not in the cell DTX active period or if the cell is in a non-active duration/time/period of the cell DTX). The wireless device may not select, for the contention-free random-access procedure, a random-access preamble among one or more random-access preambles used/configured for a contention-based random-access procedure.

A wireless device may not monitor PDCCH for the RNTI based on receiving, after a successful reception of a random-access response of/for a contention-free random-access procedure, DCI indicating a new transmission addressed to the C-RNTI of the wireless device (or the MAC entity of the wireless device), for example, if the cell is not in an active duration/time/period of the cell DTX (or if the cell is not in the cell DTX active period or if the cell is in a non-active duration/time/period of the cell DTX). The wireless device may not select, for the contention-free random-access procedure, a random-access preamble among one or more random-access preambles used/configured for a contention-based random-access procedure.

A MAC layer/entity of the wireless device may not instruct a physical layer/entity of the wireless device to send/signal a scheduling request on a PUCCH resource, for example, if the cell is not in an active duration/time/period of the cell DRX (or if the cell is not in the cell DRX active period or if the cell is in a non-active duration/time/period of the cell DRX).

A MAC layer/entity of the wireless device may instruct a physical layer/entity of the wireless device to send/signal a scheduling request on a PUCCH resource, for example, the cell is in an active duration/time/period of the cell DRX (or if the cell is in the cell DRX active period or if the cell is not in a non-active duration/time/period of the cell DRX).

A wireless device may not increment an SR counter for a pending SR, for example, if the cell is not in an active duration/time/period of the cell DRX (or if the cell is not in the cell DRX active period or if the cell is in a non-active duration/time/period of the cell DRX).

A wireless device may increment an SR counter for a pending SR, for example, based on sending an SR, for example, if the cell is in an active duration/time/period of the cell DRX (or if the cell is in the cell DRX active period or if the cell is not in a non-active duration/time/period of the cell DRX).

A wireless device may not start an *sr-ProhibitTimer* for a pending SR, for example, if the cell is not in an active duration/time/period of the cell DRX (or if the cell is not in the cell DRX active period or if the cell is in a non-active duration/time/period of the cell DRX).

A wireless device may start an *sr-ProhibitTimer* for a pending SR, for example, based on sending an SR, for example, if the cell is in an active duration/time/period of the cell DRX (or if the cell is in the cell DRX active period or if the cell is not in a non-active duration/time/period of the cell DRX).

A MAC layer/entity of the wireless device may not deliver any configured uplink grant and an associated HARQ information to a HARQ entity, for example, if the cell is not in an active duration/time/period of the cell DRX (or if the cell is not in the cell DRX active period or if the cell is in a non-active duration/time/period of the cell DRX).

A MAC layer/entity of the wireless device may deliver a configured uplink grant and an associated HARQ information to a HARQ entity, for example, if the cell is in an active duration/time/period of the cell DRX (or if the cell is in the cell DRX active period or if the cell is not in a non-active duration/time/period of the cell DRX).

A MAC layer/entity of the wireless device may not obtain, from a multiplexing and assembly entity, a MAC PDU to send for a configured uplink grant, for example, the cell is not in an active duration/time/period of the cell DRX (or if the cell is not in the cell DRX active period or if the cell is in a non-active duration/time/period of the cell DRX).

A MAC layer/entity of the wireless device may obtain, from a multiplexing and assembly entity, a MAC PDU to send for a configured uplink grant, for example, if the cell is in an active duration/time/period of the cell DRX (or if the cell is in the cell DRX active period or if the cell is not in a non-active duration/time/period of the cell DRX).

A MAC layer/entity of the wireless device may not instruct a HARQ process associated with a configured uplink grant to trigger a new transmission or a retransmission, for example, if the cell is not in an active duration/time/period of the cell DRX (or if the cell is not in the cell DRX active period or if the cell is in a non-active duration/time/period of the cell DRX).

A MAC layer/entity of the wireless device may instruct a HARQ process associated with a configured uplink grant to trigger a new transmission or a retransmission, for example, if the cell is in an active duration/time/period of the cell DRX (or if the cell is in the cell DRX active period or if the cell is not in a non-active duration/time/period of the cell DRX).

A wireless device may not start or restart a *configuredGrantTimer*, if configured, for example, if the cell is not in an active duration/time/period of the cell DRX (or if the cell is not in the cell DRX active period or if the cell is in a non-active duration/time/period of the cell DRX).

A wireless device may start or restart a *configuredGrantTimer,* if configured, for example, if the cell is in an active duration/time/period of the cell DRX (or if the cell is in the cell DRX active period or if the cell is not in a non-active duration/time/period of the cell DRX).

A wireless device may not start or restart a *cg-RetransmissionTimer*, if configured, for example, the cell is not in an active duration/time/period of the cell DRX (or if the cell is not in the cell DRX active period or if the cell is in a non-active duration/time/period of the cell DRX),.

A wireless device may start or restart a *cg-RetransmissionTimer,* if configured, for example, if the cell is in an active duration/time/period of the cell DRX (or if the cell is in the cell DRX active period or if the cell is not in a non-active duration/time/period of the cell DRX).

Within a non-active period/time/duration of the cell DTX, the wireless device configured (e.g., *celldtxConfig*) and activated with the cell DTX may not expect to receive a periodic CSI-RS and/or a semi-persistent CSI-RS configured in a CSI report configuration (e.g., in *CSI-ReportConfig*) associated with a higher layer parameter *reportQuantity* comprising at least rank indicator (RI).

Within a non-active period/time/duration of the cell DTX, the base station may not send, to the wireless device configured (e.g., *celldtx-Config*) and activated with the cell DTX, a periodic CSI-RS and/or a semi-persistent CSI-RS configured in a CSI report configuration (e.g., in *CSI-ReportConfig*) associated with a higher layer parameter *report-Quantity* comprising at least rank indicator (RI).

Within an active period/time/duration of the cell DTX, the wireless device configured (e.g., *celldtx-Config*) and activated with the cell DTX may expect to receive a periodic CSI-RS and/or a semi-persistent CSI-RS configured in a CSI report configuration (e.g., in *CSI-ReportConfig*) associated with a higher layer parameter *reportQuantity* comprising at least rank indicator (RI).

Within an active period/time/duration of the cell DTX, the base station may send, to the wireless device configured (e.g., *celldtx-Config*) and activated with the cell DTX, a periodic CSI-RS and/or a semi-persistent CSI-RS configured in a CSI report configuration (e.g., in *CSI-ReportConfig*) associated with a higher layer parameter *reportQuantity* comprising at least rank indicator (RI).

Within a non-active period/time/duration of the cell DRX, the wireless device configured (e.g., *celldrx-Config*) and activated with the cell DRX may not expect to send a periodic SRS and/or a semi-persistent SRS for channel acquisition. Within a non-active period/time/duration of the cell DRX, the wireless device configured (e.g., *celldrx-Config)* and activated with the cell DRX may send an SRS for positioning. SRS transmission for positioning may not be impacted by the cell DRX (or the cell DRX operation).

Within a non-active period/time/duration of the cell DRX, the base station may not receive, from the wireless device configured (e.g., *celldrx-Config)* and activated with the cell DRX, a periodic SRS or a semi-persistent SRS for channel acquisition. Within a non-active period/time/duration of the cell DRX, the base station may receive, from the wireless device configured (e.g., *celldrx-Config)* and activated with the cell DRX, an SRS for positioning. SRS transmission for positioning may not be impacted by the cell DRX (or the cell DRX operation).

Within an active period/time/duration of the cell DRX, the wireless device configured (e.g., *celldrx-Config)* and activated with the cell DRX may expect to send a periodic SRS and/or a semi-persistent SRS for channel acquisition.

Within an active period/time/duration of the cell DRX, the base station may receive, from the wireless device configured (e.g., *celldrx-Config)* and activated with the cell DRX, a periodic SRS or a semi-persistent SRS for channel acquisition.

A wireless device configured for operation on a cell according to one or both of a cell DTX operation by *cellDTXConfig* and a cell DRX operation by *cellDRXConfig* for the cell may be additionally provided by *dci-Format2-9* a search space set to monitor PDCCH for detection of a DCI format 2_9 according to a common search space, and a location in the DCI format 2_9 by *position-inDCI-NES* of a cell DTX/DRX indicator field for the cell.

The one or more configuration parameters may comprise a parameter (e.g., *dci-Format2-9*) indicating a search space set (e.g., a common search space set) to monitor PDCCH for detection of a DCI format (e.g., a DCI format 2_9). The one or more configuration parameters may comprise a location parameter (e.g., *position-inDCI-NES*) indicating a location of a cell DTX/DRX indicator field for/of the cell in the DCI format (e.g., the DCI format 2_9).

If the wireless device is configured with both the cell DTX operation (e.g., by *cellDTXConfig*) and the cell DRX operation (e.g., by *cellDRXConfig*) for the cell, the cell DTX/DRX indicator field may comprise/include two bits. The first bit of the two bits may indicate the cell DTX operation and the second bit of the two bits may indicate the cell DRX operation.

If the wireless device is configured with only one of the cell DTX operation (e.g., by *cellDTXConfig*) and the cell DRX operation (e.g., by *cellDRXConfig*) for the cell, the cell DTX/DRX indicator field may comprise/include one bit indicating one of the cell DTX operation and the cell DRX operation, respectively, for the cell.

A first value (e.g., '0') for a bit of the cell DTX/DRX indicator field may indicate deactivation of the cell DTX or of the cell DRX.

A second value (e.g., '1') for a bit of the cell DTX/DRX indicator field may indicate activation of the cell DTX or of the cell DRX.

If the cell is configured with an SUL carrier (in addition to an UL carrier (e.g., NUL)), the cell DTX/DRX indicator field indication for activation or deactivation of the cell DRX may use to both the UL carrier and the SUL carrier.

A wireless device may not expect to monitor PDCCH for detection of the DCI format 2_9 on more than one cell (e.g., more than one serving cells).

If a wireless device receives, in slot $m$ on an active downlink BWP of a first cell (e.g., a first serving cell), a PDCCH providing/with a DCI format 2_9 that indicates a change in activation or deactivation of a current cell DTX operation or a current cell DRX operation for a second cell (e.g., a second serving cell), the wireless device may operate on the second cell according to the indicated cell DTX operation or the indicated cell DRX operation starting from a slot on an active downlink BWP or on an active uplink BWP of the second cell, respectively, that is not before the beginning of the slot $m+d$ on the active downlink BWP of the first cell where $d$ is a number of slots determined based on a subcarrier spacing (SCS) of the active downlink BWP of the first cell. For example, if the SCS of the active downlink BWP is 15kHz, the number of slots is equal to 3. If the SCS of the active downlink BWP is 30kHz, the number of slots is equal to 6.

Outside of an active time/period/duration (e.g., a DTX active time/period/duration) within the cell DTX of the cell, the wireless device may not receive on/via the cell:

- PDCCH candidates for search space sets associated with detection of a DCI format (e.g., DCI format 2_0, DCI format 2_1, DCI format 2_2, DCI format 2_3, DCI format 2_4, and DCI format 2_5, DCI format 1_0, DCI format 1_1, DCI format 1_2, DCI format 1_3, DCI format 0_0, DCI format 0_1, DCI format 0_2, DCI format 0_3),
- CSI-RS in resources provided by *CSI-ReportConfig* with *reportQuantity* that includes rank indication.

Outside of an active time/period/duration (e.g., a DRX active time/period/duration) within the cell DRX of the cell, the wireless device may not send on/via the cell:

- periodic or semi-persistent PUCCH or PUSCH (e.g., CSI report, configured uplink grant)
- periodic or semi-persistent SRS except for SRS in resources provided by *SRS-posResourceSet*.

A cell DTX may be (or may be interchangeably used with) a cell DTX operation.

A cell DRX may be (or may be interchangeably used with) a cell DRX operation.

A DCI format 2_9 may be used for activating or deactivating a cell DTX/DRX (or a cell DTX/DRX configuration or a cell DTX/DRX operation) of one or multiple cells (e.g., one or multiple serving cells) for one or more wireless devices.

The following information may be sent by means of the DCI format 2_9 with CRC scrambled by a NES-RNTI:

- block number 1, block number 2,..., block number *N*. A starting position of a block may be determined, by the wireless device and/or the base station, by a position parameter (e.g., *positionInDCI-cellDTRX*). The one or more configuration parameters may comprise the position parameter.

If the wireless device is configured with a DTX/DRX parameter (e.g., NES-RNTI, *cellDTRX-DCI-config*), one or more blocks may be configured for the wireless device, for example, by higher layers, with the following field defined for each block:

- Cell DTX/DRX indication - 2 bits if *cellDTXConfig* and *cellDTXConfig* are both configured for a cell, with the most-significant bit (MSB) corresponding to a cell DTX (or a cell DTX configuration) of the cell and the least significant bit (LSB) corresponding to a cell DRX (or a cell DRX configuration) of the cell; otherwise 1 bit if either *cellDTXConfig* or *cellDTXConfig* is configured for a cell. The one or more configuration parameters may comprise the DTX/DRX parameter.

A size of the DCI format 2_9 may be indicated by a higher layer parameter *sizeDCI-2-9*. The one or more configuration parameters may comprise the higher layer parameter *sizeDCI-2-9*.

A number of information bits in the DCI format 2_9 may be equal to or less than a payload size of the DCI format 2_9. If the number of information bits in the DCI format 2_9 is less than a size of the DCI format 2_9, the remaining bits may be reserved.

A wireless device may be configured with a list of TCI states (e.g., *TCI-State*) within/by a higher layer parameter *PDSCH-Config* to decode PDSCH according to a detected PDCCH with DCI intended for the wireless device and a given cell (e.g., a given serving cell, a given non-serving/candidate/target cell). A number of TCI states in the list may depend on a UE capability parameter *maxNumberConfiguredTCIstatesPerCC*. Each TCI state (e.g., *TCI-State*) may contain/comprise/include/indicate/have respective parameters for configuring a quasi co-location relationship between one or two downlink reference signals and DM-RS port(s) of a PDSCH, a DM-RS port of a PDCCH, or CSI-RS port(s) of a CSI-RS resource. The quasi co-location relationship may be configured by a higher layer parameter *qcl-Type1* for a first downlink reference signal of the one or more downlink reference signals. The quasi co-location relationship may be configured by a higher layer parameter *qcl-Type2* for a second downlink reference signal of the one or more downlink reference signals. If two downlink reference signals comprising a first downlink reference signal and a second downlink reference signal are indicated by a TCI state, QCL types of the two downlink reference signals may not be the same, regardless of whether the first downlink reference signal and the second downlink reference signal are the same or different. A quasi co-location type corresponding to a downlink reference signal of the one or more downlink reference signals may be given by a higher layer parameter *qcl-Type* in a higher layer parameter *QCL-Info* and may take one of the following values:

- 'typeA': {Doppler shift, Doppler spread, average delay, delay spread}
- 'typeB': {Doppler shift, Doppler spread}
- 'typeC': {Doppler shift, average delay}
- 'typeD': {Spatial Rx parameter}

A wireless device may be configured with a list of TCI states (e.g., up to 128 TCI-State configurations) within/by a higher layer parameter *dl-OrJointTCI-StateList* in *PDSCH-Config,* for example, as shown at step 2502 of FIG. 25. A TCI state in the list of TCI states may provide/indicate a reference signal for a quasi co-location for i) DM-RS of a PDSCH, ii) DM-RS of a PDCCH in a BWP/cell, and/or iii) a CSI-RS. A TCI state in the list of TCI states may provide/indicate a reference signals for determining uplink transmission spatial filter for i) a dynamic-grant PUSCH, ii) a configured-grant based PUSCH, iii) a PUCCH resource in a BWP/cell, and/or, iv) an SRS.

A wireless device may receive an activation command (e.g., MAC-CE, DCI) used to map up to a number TCI states and/or pairs of TCI states (e.g., up to 8 TCI states and/or pairs of TCI states), with one TCI state for downlink channels/signals and/or one TCI state for uplink channels/signals, to codepoint(s) of a DCI field 'Transmission Configuration Indication' for one cell or for a set of cells/downlink BWPs, and/or up to a number of sets of TCI states (e.g., up to 8 sets of TCI states). Each set of the number of sets may be comprised of up to a number of TCI state(s) for downlink and uplink signals/channels (e.g., up to two TCI state(s)), or up to a number of TCI state(s) (e.g., up to two TCI state(s)) for downlink channels/signals and up to a number of TCI state(s) (e.g., up to two TCI state(s)) for uplink channels/signals to codepoint(s) of a DCI field *'Transmission Configuration Indication'* for one cell or for a set of cells/downlink BWPs, and if applicable, for one cell or for a set of cells/uplink BWPs. If a set of TCI state IDs are activated, by the activation command, for a set of cells/downlink BWPs and if applicable, for a set of cells/uplink BWPs, where the applicable list of cells may be determined, by the wireless device, by an indicated cell in the activation command, the (same) set of TCI state IDs may be applied by the wireless device to/for all downlink and/or uplink BWPs in the indicated cells (or the applicable list of cells). If the activation command maps *TCI-State(s)* and/or *TCI-UL-State(s)* to only one (or to a single) TCI codepoint, the wireless device may use the (indicated) *TCI-State(s)* and/or *TCI-UL-State(s)* to one cell or to a set of cells/downlink BWPs, and if applicable, to one cell or to a set of cells/uplink BWPs if the indicated mapping for the one single TCI codepoint is used by the wireless device.

If *tci-PresentInDCI* is set as 'enabled' or *tci-PresentDCI-1-2* is configured for a CORESET, a wireless device 1) configured with *dl-OrJointTCI-StateList* by one or more configuration parameters (e.g., RRC messages/parameters) and activated with *TCI-State* by the activation command, or 2) configured with *ul-TCI-StateList* by one or more configuration parameters (e.g., RRC messages/parameters) and activated with *TCI-UL-State* by the activation command may receive a DCI format (e.g., DCI format 1_1/1_2) providing/indicating TCI state(s) (e.g., *TCI-State(s)* and/or *TCI-UL-State(s)*) for a cell or all cells in the same cell list configured by a simultaneous TCI update parameter (e.g., *simultaneousU-TCI-UpdateList1*, *simultaneousU-TCI-UpdateList2*, *simultaneousU-TCI-UpdateList3*, *simultaneousU-TCI - UpdateList4*). The DCI format may be with or without a downlink assignment. The simultaneous TCI update parameter may be a higher layer parameter (e.g., RRC parameter).

If a wireless device configured with *dl-OrJointTCI-StateList* by one or more configuration parameters (e.g., RRC messages/parameters) sends an uplink transmission (e.g., a PUCCH transmission, a PUSCH transmission) with a positive HARQ-ACK corresponding to the DCI format indicating the indicated TCI state(s) (e.g., *TCI-State(s)* and/or *TCI-UL-State(s)*), and if the indicated TCI State(s) is/are different from the previously indicated TCI state(s), the indicated *TCI-State(s)* may be used, by the wireless device, starting from a first/starting/earliest slot that is at least a number of symbols (e.g., *beamAppTime* symbols) after the last symbol of the uplink transmission. The first/starting/earliest slot and the number of symbols may be both determined, by the wireless device, based on an active BWP with the smallest subcarrier spacing among BWP(s) of the cells using the indicated TCI-State(s) that are active at the end of the uplink transmission carrying/with the positive HARQ-ACK. The number of symbols may be indicated/provided to the wireless device by RRC messages (e.g., one or more configuration parameters).

When a wireless device is configured by a higher layer parameter *cjtSchemePDSCH* and *dl-OrJointTCI-StateList,* and is indicated with two TCI states applied for a PDSCH reception and/or reports support for two joint TCI states for PDSCH-CJT:

- if the wireless device is configured with a higher layer parameter *cjtSchemeA,* the wireless device may assume that PDSCH DM-RS port(s) of the PDSCH reception are quasi co-located (QCL-ed) with downlink reference signals of both of the two indicated TCI states with respect to QCL-TypeA.
- if the wireless device is configured with a higher layer parameter *cjtSchemeB,* the wireless device may assume that PDSCH DM-RS port(s) of the PDSCH reception are quasi co-located (QCL-ed) with downlink reference signals of both of the two indicated TCI states with respect to QCL-TypeA except for QCL parameters {Doppler shift, Doppler spread} of a second indicated TCI state (e.g., second joint TCI state) of the two (indicated) TCI states.

When a wireless device is configured with a higher layer parameter dl-OrJointTCI-StateList and is having two indicated TCI states (e.g., two indicated joint/DL TCI states) comprising a first TCI state and a second TCI state:

- Regardless of a time/scheduling offset between reception of a DCI format 1_0/1_1/1_2 and a PDSCH reception scheduled/activated by the DCI format 1_0/1_1/1_2, if the wireless device is in frequency range 1 (FR1), or the wireless device reports a capability of two default beams in frequency range 2 (FR2), or
- If the wireless device does not report a capability of two default beams in FR2 and if a time/scheduling offset between reception of a DCI format 1_0/1_1/1_2 and a PDSCH reception scheduled/activated by the DCI format 1_0/1_1/1_2 is equal to or larger than a threshold (e.g., *timeDurationForQCL*)

  o The wireless device may be configured by a higher layer parameter *applyIndicatedTCIState* to indicate whether the first TCI state, the second TCI state, or both of the two indicated TCI states is/are applied to the PDSCH reception scheduled or activated by the DCI format 1_0. The higher layer parameter *applyIndicatedTCIState* may be one of values = {'first', 'second', 'both'}. The wireless device may be configured with the higher layer parameter *applyIndicatedTCIState* with a value set to *'both'* only when the wireless device is configured with a higher layer parameter *cjtSchemePDSCH* and/or the wireless device reports support for two joint TCI states for PDSCH-CJT, or when the wireless device is configured with a higher layer parameter *sfnSchemePdsch*. When the value of the higher layer parameter *applyIndicatedTCIState* is set to *'both'*, the wireless device may apply both of the two indicated TCI states to the PDSCH reception scheduled or activated by the DCI format 1_0 on a search space set other than Type0/0A/2 CSS set on/of a CORESET with index zero (e.g., CORESET#0). The wireless device may receive the DCI format 1_0 on/via the search space set different from the Type0/0A/2 CSS set associated with the CORESET with index zero.

◦ If the wireless device is not configured with *applyIndicatedTCIState*, the first indicated TCI-state is applied to PDSCH reception scheduled or activated by DCI format 1_0.

o When the wireless device is configured with a higher layer parameter *tciSelection-PresentInDCI* and when the wireless device receives a DCI format 1_1/1_2 that schedules or activates a PDSCH reception in/via PDSCH transmission occasions(s), the wireless device may determine, for the PDSCH reception, indicated TCI state(s) (e.g., indicated joint/DL TCI state(s)) among the two indicated TCI states according to the following:

- If the DCI format 1_1/1_2 indicates codepoint "00" for a TCI selection field, the wireless device may apply the first TCI state of the two indicated TCI states to all PDSCH DM-RS port(s) of the PDSCH transmission occasions(s) of the PDSCH reception scheduled or activated by the DCI format 1_1/1_2.
- If the DCI format 1_1/1_2 indicates codepoint "01" for a TCI selection field, the wireless device may apply the second TCI state of the two indicated TCI states to all PDSCH DM-RS port(s) of the PDSCH transmission occasions(s) of the PDSCH reception scheduled or activated by the DCI format 1_1/1_2.
- If the DCI format 1_1/1_2 indicates codepoint "10" for a TCI selection field, the wireless device may apply both of the two indicated TCI states to the PDSCH reception scheduled or activated by the DCI format 1_1/1_2.

o If the wireless device is not configured with a higher layer parameter *tciSelection-PresentInDCI* and when the wireless device receives a DCI format 1_1/1_2 that schedules/activates a PDSCH reception, the wireless device may apply both of the two indicated TCI states to the PDSCH reception scheduled or activated by the DCI format 1_1/1_2. In some examples, the wireless device may expect to be configured with a higher layer parameter *tciSelection-PresentInDCI* when/if the wireless device does not report/support a capability of using a default beam for SFN (e.g., *sfn-DefaultDL-BeamSetup*) for a DCI format, scheduling a PDSCH reception, without a TCI selection field. In some examples, the base station may transmit, to the wireless device, one or more configuration parameters (e.g., in RRC message(s)) comprising the higher layer parameter *tciSelection-PresentInDCI* when/if the base station does not receive, from the wireless device, a report (e.g., a UE capability message) indicating support/capability of using a default beam for SFN (e.g., *sfn-DefaultDL-BeamSetup*) for a DCI format, scheduling a PDSCH reception, without a TCI selection field. In some examples, the base station may or may not transmit, to the wireless device, one or more configuration parameters (e.g., in RRC message(s)) comprising a higher layer parameter *tciSelection-PresentInDCI* when/if the base station receives, from the wireless device, a report (e.g., a UE capability message) indicating support/capability of using a default beam for SFN (e.g., *sfn-DefaultDL-BeamSetup*) for a DCI format, scheduling a PDSCH reception, without a TCI selection field.

◦ The higher layer parameter *applyIndicatedTCIState* for indicating whether the first TCI state, the second TCI state, or both of the two indicated TCI states is/are applied to a PDSCH reception scheduled/activated by a DCI format 1_0 may be provided/indicated, to the wireless device, per downlink BWP.

A wireless device, having a PUSCH transmission scheduled or activated by a DCI format 0_0, may apply the first indicated TCI state to the PUSCH transmission, for example, if (1) the wireless device is configured/indicated, by a base station, with a higher layer parameter *dl-OrJointTCI-StateList* or a higher layer parameter *TCI-UL-State*, and (2) the wireless device has two indicated TCI states (or two indicated uplink TCI states) comprising a first indicated TCI state and a second indicated TCI state.

A wireless device configured, by the base station, with a PUSCH transmission corresponding to a Type 1 configured grant may be expected to be configured with a higher layer parameter *applyIndicatedTCIState*, for example, if (1) the wireless device is configured/indicated, by a base station, with a higher layer parameter *dl-OrJointTCI-StateList* or a higher layer parameter *TCI-UL-State*, and (2) the wireless device has two indicated TCI states (or two indicated uplink TCI states) comprising a first indicated TCI state and a second indicated TCI state. The wireless device may apply the first indicated TCI state to the PUSCH transmission, for example, if the higher layer parameter *applyIndicatedTCIState* is set to 'first'. The wireless device may apply the first indicated TCI state to each PUSCH transmission occasion of the PUSCH transmission.

A wireless device configured, by the base station, with a PUSCH transmission corresponding to a Type 1 configured grant may be expected to be configured with a higher layer parameter *applyIndicatedTCIState*, for example, if (1) the wireless device is configured/indicated, by a base station, with a higher layer parameter *dl-OrJointTCI-StateList* or a higher layer parameter *TCI-UL-State*, and (2) the wireless device has two indicated TCI states (or two indicated uplink TCI states) comprising a first indicated TCI state and a second indicated TCI state. The wireless device may apply the second indicated TCI state to the PUSCH transmission, for example, if the higher layer parameter *applyIndicatedTCIState* is set to 'second'. The wireless device may apply the second indicated TCI state to each PUSCH transmission occasion of the PUSCH transmission.

A wireless device configured, by the base station, with a PUSCH transmission corresponding to a Type 1 configured grant may be expected to be configured with a higher layer parameter *applyIndicatedTCIState*, for example, if (1) the wireless device is configured/indicated, by a base station, with a higher layer parameter *dl-OrJointTCI-StateList* or a higher layer parameter *TCI-UL-State*, and (2) the wireless device has two indicated TCI states (or two indicated uplink TCI states) comprising a first indicated TCI state and a second indicated TCI state. The wireless device may apply the both of the two indicated TCI states to the PUSCH transmission, for example, if the higher layer parameter *applyIndicatedTCIState* is set to 'both'.

The wireless device may apply the first indicated TCI state to PUSCH transmission occasion(s) or PUSCH antenna port(s), of the PUSCH transmission, associated with a first SRS resource set for codebook/noncodebook transmission, for example, if the higher layer parameter *applyIndicatedTCIState* is set to 'both' (or if both of the two indicated TCI states are indicated to be applied for the PUSCH transmission). The wireless device may apply the second indicated TCI state to PUSCH transmission occasion(s) or PUSCH antenna port(s), of the PUSCH transmission, associated with a second SRS resource set for codebook/non-codebook transmission, for example, if the higher layer parameter *applyIndicatedTCIState* is set to 'both' (or if both of the two indicated TCI states are indicated to be applied for the PUSCH transmission).

A wireless device configured, by the base station, with a PUSCH transmission corresponding to a Type 1 configured grant may be expected to be configured with a higher layer parameter *applyIndicatedTCIState*, for example, if (1) the wireless device is configured/indicated, by a base station, with a higher layer parameter *dl-OrJointTCI-StateList* or a higher layer parameter *TCI-UL-State*, and (2) the wireless device has two indicated TCI states (or two indicated uplink TCI states) comprising a first indicated TCI state and a second indicated TCI state. The first indicated TCI state and the second indicated TCI state may be specific to a higher layer parameter *coresetPoolIndex* with value 0 and a higher layer parameter *coresetPoolIndex* with value 1, respectively, for example, if the wireless device is configured/indicated, by the base station, by a higher layer parameter *PDCCH-Config* that contains/comprises two different values of a higher layer parameter *coresetPoolIndex* in different *ControlResourceSets.* The higher layer parameter *applyIndicatedTCIState* may not be set to 'both' indicating *both* of the two indicated TCI states to be applied for the PUSCH transmission, for example, if the wireless device is configured/indicated, by the base station, by a higher layer parameter *PDCCH-Config* that contains/comprises two different values of a higher layer parameter *coresetPoolIndex* in different *ControlResourceSets.*

Two SRIs and two TPMIs may be given/provided/indicated by two SRS resource indicator fields and two Precoding-information-and-number-of-layers fields for/in a DCI format 0_1 and a DCI format 0_2, for example, if a higher layer parameter *multipanelScheme* is set to 'SDMScheme' and two SRS resource sets are configured/indicated, by a base station, in a higher layer parameter *srs-ResourceSetToAddModList* or a higher layer parameter *srs-ResourceSetToAdd-ModListDCI-0-2* with a higher layer parameter *usage* in a higher layer parameter *SRS-ResourceSet* set to 'codebook'.

A first TPMI of the two TPMIs may indicate a transmission precoder to be applied over layers $\{0... v_1-1\}$, where $v_1$ is a number of layers indicated by the first TPMI, that corresponds to an SRS resource selected by a first SRI of the two SRSs, for example, if codepoint "10" of *SRS Resource Set indicator* is indicated in the DCI format 0_1/0_2, and if multiple SRS resources are configured for a first SRS resource set or if single SRS resource is configured for the first SRS resource set. A second TPMI of the two TPMIs may indicate a transmission precoder to be applied over layers $\{v_1.... v_2+v_1-1\}$, where $v_2$ is a number of layers indicated by the second TPMI, that corresponds to an SRS resource selected by a second SRI of the two SRIs, for example, if codepoint "10" of *SRSResource Set indicator* is indicated in the DCI format 0_1/0_2, and if multiple SRS resources are configured for a second SRS resource set or if single SRS resource is configured for the second SRS resource set, $v_1 \leq$ *maxRankSdm* and $v_2 \leq$ *maxRankSdm* or *maxRankSdmDCI-0-2* and *maxRankSdm* or *maxRankSdmDCI-0-2* may define the maximum number of layers applied over the first SRS resource set and the second SRS resource sets, separately.

The second SRI and second TPMI may be reserved, and the first TPMI may indicate a precoder to be applied over layers $\{0... v-1 \}$, where $v \leq$ *maxRank,* where *maxRank* may define the maximum number of layers, for example, if codepoint "00" or "01" of *SRS Resource Set indicator* is indicated in the DCI format 0_1/0_2.

Codepoint "11" of *SRS Resource Set indicator* in the DCI format 0_1/0_2 may be reserved.

For one or two TPMIs, the transmission precoder may be selected from an uplink codebook that has a number of antenna ports equal to a higher layer parameter *nrofSRS-Ports* in a higher layer parameter *SRS-Config* for the indicated SRI(s).

A wireless device may expect that the number of SRS antenna ports associated with two indicated SRIs is the same, for example, if two SRIs are indicated. The wireless device may be configured/indicated with at least one SRS resource, for example, if the wireless device is configured/indicated with a higher layer parameter *txConfig* set to 'codebook'. Each of the indicated one or two SRIs in slot *n* may be associated with the most recent transmission of an SRS resource, in associated SRS resource set, identified by an SRI of the two SRIs, where the SRS resource is prior to a PDCCH reception with the DCI format 0_1/0_2 carrying the SRI. The wireless device may not be expected to be configured with a different number of SRS resources in the two SRS resource sets, for example, if two SRS resource sets are configured/indicated in a higher layer parameter *srs-ResourceSetToAddModList* or a higher layer parameter *srs-*

*ResourceSetToAddModListDCI-0-2* with a higher layer parameter *usage* in a higher layer parameter *SRS-ResourceSet* set to 'codebook'.

Two SRIs and two TPMIs may be given/provided/indicated by two SRS resource indicator fields and two Precoding-information-and-number-of-layers fields for/in a DCI format 0_1 and a DCI format 0_2, for example, if a higher layer parameter *multipanelScheme* is set to 'SFNScheme' and two SRS resource sets are configured/indicated, by a base station, in a higher layer parameter *srs-ResourceSetToAddModList* or a higher layer parameter *srs-ResourceSetToAddModListDCI-0-2* with a higher layer parameter *usage* in a higher layer parameter *SRS-ResourceSet* set to 'codebook'.

A first TPMI of the two TPMIs may indicate a transmission precoder to be applied over layers {0... v-1}, and a second TPMI of the two TPMIs may indicate a transmission precoder to be applied over layers {0... v-1}, where v $\leq$ *maxRankSfn* or *maxRankSfnDCI-0-2* and *maxRankSfn* or *maxRankSfnDCI-0-2* may define the maximum number of layers applied over the first SRS resource set and the second SRS resource sets, separately, for example, if codepoint "10" of *SRS Resource Set indicator* is indicated in the DCI format 0_1/0_2.

The second SRI and second TPMI may be reserved, and the first TPMI may indicate a precoder to be applied over layers {0... v-1 }, where v $\leq$ *maxRank,* where *maxRank* may define the maximum number of layers, for example, if codepoint "00" or "01" of *SRS Resource Set indicator* is indicated in the DCI format 0_1/0_2.

Codepoint "11" of *SRS Resource Set indicator* in the DCI format 0_1/0_2 may be reserved.

For one or two TPMIs, the transmission precoder may be selected from an uplink codebook that has a number of antenna ports equal to a higher layer parameter *nrofSRS-Ports* in a higher layer parameter *SRS-Config* for the indicated SRI(s).

The wireless device may expect that the number of SRS antenna ports associated with two indicated SRIs is the same, for example, if two SRIs are indicated. The wireless device may be configured/indicated with at least one SRS resource, for example, if the wireless device is configured/indicated with a higher layer parameter *txConfig* set to 'codebook'. Each of the indicated one or two SRIs in slot *n* may be associated with the most recent transmission of an SRS resource, in associated SRS resource set, identified by an SRI of the two SRIs, where the SRS resource is prior to a PDCCH reception with the DCI format 0_1/0_2 carrying the SRI. The wireless device may not be expected to be configured with a different number of SRS resources in the two SRS resource sets, for example, if two SRS resource sets are configured/indicated in a higher layer parameter *srs-ResourceSetToAddModList* or a higher layer parameter *srs-ResourceSetToAddModListDCI-0-2* with a higher layer parameter *usage* in a higher layer parameter *SRS-ResourceSet* set to 'codebook'.

Two SRIs may be given/provided/indicated by two SRS resource indicator fields for/in a DCI format 0_1 and a DCI format 0_2, for example, if a higher layer parameter *multipanelScheme* is set to 'SDMScheme' and two SRS resource sets are configured/indicated, by a base station, in a higher layer parameter *srs-ResourceSetToAddModList* or a higher layer parameter *srs-ResourceSetToAddModListDCI-0-2* with a higher layer parameter *usage* in a higher layer parameter *SRS-ResourceSet* set to 'nonCodebook'.

A first SRI of the two SRIs may indicate resource(s) to be associated with layers {0... $v_1$-1}, where $v_1$ is a number of layers indicated by the first SRI and a second SRI of the two SRIs may indicate resource(s) to be associated with layers {$v_1$.... $v_2$+$v_1$-1}, $v_1 \leq L_{max}$ and $v_2 \leq L_{max}$, for example, if codepoint "10" of *SRS Resource Set indicator* is indicated in the DCI format 0_1/0_2.

The second SRI may be reserved, and the first SRI may indicate resource(s) associated with layers {0... v-1}, where v $\leq L_{max}$, if codepoint "00" or "01" of *SRS Resource Set indicator* is indicated in the DCI format 0_1/0_2.

Two SRIs may be given/provided/indicated by two SRS resource indicator fields for/in a DCI format 0_1 and a DCI format 0_2, for example, if a higher layer parameter *multipanelScheme* is set to 'SFNScheme' and two SRS resource sets are configured/indicated, by a base station, in a higher layer parameter *srs-ResourceSetToAddModList* or a higher layer parameter *srs-ResourceSetToAddModListDCI-0-2* with a higher layer parameter *usage* in a higher layer parameter *SRS-ResourceSet* set to 'nonCodebook'.

A first SRI of the two SRIs may indicate resource(s) to be associated with layers {0... v-1} and a second SRI of the two SRIs may indicate resource(s) to be associated with layers {0... v-1}, v $\leq L_{max}$, for example, if codepoint "10" of *SRS Resource Set indicator* is indicated in the DCI format 0_1/0_2.

The second SRI may be reserved, and the first SRI may indicate resource(s) associated with layers {0... v-1}, where v $\leq L_{max}$, for example, if codepoint "00" or "01" of *SRS Resource Set indicator* is indicated in the DCI format 0_1/0_2. The wireless device may expect that the number of SRS antenna ports associated with two indicated SRIs to be the same, for example, if two SRIs are indicated.

The wireless device may be configured/indicated with at least one SRS resource, for example, if the wireless device is configured/indicated with a higher layer parameter *txConfig* set to 'nonCodebook'. Each of the indicated one or two SRIs in slot *n* may be associated with the most recent transmission of an SRS resource, in associated SRS resource set, identified by an SRI of the two SRIs, where the SRS resource is prior to a PDCCH reception with the DCI format 0_1/0_2 carrying the SRI. The wireless device may not be expected to be configured with a different number of SRS resources in the two SRS resource sets, for example, if two SRS resource sets are configured/indicated in a higher layer parameter *srs-ResourceSetToAddModList* or a higher layer parameter *srs-ResourceSetToAddModListDCI-0-2* with a higher layer parameter *usage* in a higher layer parameter *SRS-ResourceSet* set to 'nonCodebook'.

The first indicated TCI state or second indicated TCI state may be applied, by the wireless device, to all PUSCH transmission occasions, respectively, for example, if a wireless device is configured/indicated, by a base station, with a higher layer parameter *dl-OrJointTCI-StateList* or a higher layer parameter *TCI-UL-State* and is having two indicated TCI states (or two indicated joint/uplink TCI states) comprising a first indicated TCI state and a second indicated TCI state, and two SRS resource sets are configured/indicated, by the base station, in a higher layer parameter *srs-ResourceSet-ToAddModList* or a higher layer parameter *srs-ResourceSetToAddModListDCI-0-2* with a higher layer parameter *usage* in a higher layer parameter *SRS-ResourceSet* set to 'codebook' or 'nonCodebook', for a PUSCH repetition Type A or Type B, or for a PUSCH transmission if the higher layer parameter *multipanelScheme* is set to 'SDMscheme' or 'SFNscheme', and if a DCI format 0_1 or a DCI format 0_2 indicates codepoint "00" or "01" for an *SRS resource set indicator.*

The first indicated TCI state may be applied, by the wireless device, to PUSCH transmission occasion(s) associated with a first SRS resource set of the two SRS resource sets and the second indicated TCI state may be applied to PUSCH transmission occasion(s) associated with a second SRS resource set of the SRS resource sets, where the association of PUSCH transmission occasions to the two SRS resource sets may be determined based on whether a higher layer parameter *cyclicMapping* or a higher layer parameter *sequentialMapping* in a higher layer parameter *P USCH-Config* is enabled, for example, if a wireless device is configured/indicated, by a base station, with a higher layer parameter *dl-OrJointTCI-StateList* or a higher layer parameter *TCI-UL-State* and is having two indicated TCI states (or two indicated joint/uplink TCI states) comprising a first indicated TCI state and a second indicated TCI state, and two SRS resource sets are configured/indicated, by the base station, in a higher layer parameter *srs-ResourceSetToAddModList* or a higher layer parameter *srs-ResourceSetToAddModListDCI-0-2* with a higher layer parameter *usage* in a higher layer parameter *SRS-ResourceSet* set to 'codebook' or 'nonCodebook', for a PUSCH repetition Type A or Type B, or for a PUSCH transmission if the higher layer parameter *multipanelScheme* is set to 'SDMscheme' or 'SFNscheme', and if a DCI format 0_1 or a DCI format 0_2 indicates codepoint "10" or "11" for an *SRS resource set indicator,* and the higher layer parameter *multipanelScheme* is not configured.

The first indicated TCI state may be applied, by the wireless device, to first PUSCH antenna port(s), of a PUSCH transmission occasion, associated with the first SRS resource set, and the second indicated TCI state may be applied, by the wireless device, to second PUSCH antenna port(s), of the PUSCH transmission occasion, associated with the second SRS resource set, for example, if a wireless device is configured/indicated, by a base station, with a higher layer parameter *dl-OrJointTCI-StateList* or a higher layer parameter *TCI-UL-State* and is having two indicated TCI states (or two indicated joint/uplink TCI states) comprising a first indicated TCI state and a second indicated TCI state, and two SRS resource sets are configured/indicated, by the base station, in a higher layer parameter *srs-ResourceSetToAddModList* or a higher layer parameter *srs-ResourceSetToAddModListDCI-0-2* with a higher layer parameter *usage* in a higher layer parameter *SRS-ResourceSet* set to 'codebook' or 'nonCodebook', for a PUSCH repetition Type A or Type B, or for a PUSCH transmission if the higher layer parameter *multipanelScheme* is set to 'SDMscheme' or 'SFNscheme', and if a DCI format 0_1 or a DCI format 0_2 indicates codepoint "10" for an *SRS resource set indicator* and the higher layer parameters *multipanelScheme* is configured and set to 'SDMscheme' or 'SFNscheme'. The first PUSCH antenna port(s) and the second PUSCH antenna port(s) may be the same or different.

A wireless device may be configured/indicated/provided by/with a higher layer parameter *applyIndicatedTCIState*, to the SRS resource set, to indicate whether the wireless device applies the first indicated TCI state or the second indicated TCI state to the SRS resource set, for example, if the wireless device is configured/indicated/provided with a higher layer parameter *dl-OrJointTCI-StateList* or a higher layer parameter *TCI-UL-State* and is having two indicated TCI states (or two indicated uplink TCI states) comprising a first indicated TCI state and a second indicated TCI state, for a periodic, semi-persistent or aperiodic SRS resource set with a higher layer parameter *usage,* in *SRS-ResourceSet,* set to *'codebook', 'nonCodebook'* or *'antennaSwitching'* or for an aperiodic SRS resource set with a higher layer parameter *usage,* in *SRS-ResourceSet,* set to *'beamManagement'.* The first indicated TCI state and second indicated TCI state may correspond to the indicated TCI states (or uplink TCI states) specific to a higher layer parameter *coresetPoolIndex* with value 0 and a higher layer parameter *coresetPoolIndex* with value 1, respectively, for example, if a wireless device is configured/indicated/provided by a higher layer parameter *PDCCH-Config* that contains two different values of a higher layer parameter *coresetPoolIndex* in a higher layer parameter *ControlResourceSet.*

A wireless device may apply, to the aperiodic SRS resource set, an indicated TCI state (or uplink TCI state) specific to the *coresetPoolIndex* value, for example, if the wireless device is configured/indicated/provided with a higher layer parameter *dl-OrJointTCI-StateList* or a higher layer parameter *TCI-UL-State* and is having two indicated TCI states (or two indicated uplink TCI states) comprising a first indicated TCI state and a second indicated TCI state, for a periodic, semi-persistent or aperiodic SRS resource set with a higher layer parameter *usage,* in *SRS-ResourceSet,* set to *'codebook', 'nonCodebook'* or *'antennaSwitching'* or for an aperiodic SRS resource set with a higher layer parameter *usage,* in *SRS-ResourceSet,* set to *'beamManagement',* and if the wireless device is configured/indicated/provided by/with a higher layer parameter *PDCCH-Config* that contains/comprises two different values of a higher layer parameter *coresetPoolIndex* in a higher layer parameter *ControlResourceSet,* and is not configured/indicated/provided with a higher layer parameter *applyIndicatedTCIState* for an aperiodic SRS resource set, if the aperiodic SRS resource set is triggered by PDCCH on a CORESET associated with a *coresetPoolIndex* value.

A wireless device may not expect that the first indicated TCI state is applied to the second SRS resource set and that the second indicated TCI state is applied to the first SRS resource set, for example, if the wireless device is configured/indicated/provided with a higher layer parameter *dl-OrJointTCI-StateList* or a higher layer parameter *TCI-UL-State* and is having two indicated TCI states (or two indicated uplink TCI states) comprising a first indicated TCI state and a second indicated TCI state, for a periodic, semi-persistent or aperiodic SRS resource set with a higher layer parameter *usage,* in *SRS-ResourceSet,* set to *'codebook', 'nonCodebook'* or *'antennaSwitching'* or for an aperiodic SRS resource set with a higher layer parameter *usage,* in *SRS-ResourceSet,* set to *'beamManagement',* and if two SRS resource sets comprising a first SRS resource set and a second SRS resource with a higher layer parameter *usage* in a higher layer parameter *SRS-ResourceSet* set to 'codebook' or 'nonCodebook' are configured/indicated/provided.

A wireless device may be configured/indicated/provided by/with a higher layer parameter *applyIndicatedTCIState*, to a PUCCH resource, to indicate whether the wireless device applies the first indicated TCI state or the second indicated TCI state or both of the two indicated TCI states to the PUCCH resource. The higher layer parameter *applyIndicatedTCIState* may be an indication for applying one or both of the two indicated TCI states to the PUCCH resource. The wireless device may transmit, via the PUCCH resource, a PUCCH transmission with/using a spatial domain filter corresponding to the first indicated TCI state, for example, if the higher layer parameter *applyIndicatedTCIState* is set to 'first'. The wireless device may transmit, via the PUCCH resource, a PUCCH transmission with/using a spatial domain filter corresponding to the second indicated TCI state, for example, if the higher layer parameter *applyIndicatedTCIState* is set to 'second'. The wireless device may transmit, via the PUCCH resource, a PUCCH transmission with/using a spatial domain filter corresponding to the first indicated TCI state and a spatial domain filter corresponding to the second indicated TCI state, for example, if the higher layer parameter *applyIndicatedTCIState* is set to 'both'.

The first indicated TCI state and the second indicated TCI state may be specific to the first CORESETs (or to the higher layer parameter *coresetPoolIndex* with a value of 0) and the second CORESETs (or to the higher layer parameter *coresetPoolIndex* with a value of 1), respectively, for example, if the wireless device is not provided with a higher layer parameter *coresetPoolIndex* or is provided with a higher layer parameter *coresetPoolIndex* with a value of 0 for first CORESETs on an active downlink BWP of a cell, and if the wireless device is provided with a higher layer parameter *coresetPoolIndex* with a value of 1 for second CORESETs on the active downlink BWP of the cell.

A wireless device may be indicated, by a base station, to transmit a PUCCH transmmisison over a number of slots (e.g., $N_{\mathrm{PUCCH}}^{\mathrm{repeat}}$ slots) using/via a PUCCH resource. The number of slots may be indicated by the higher layer parameter *pucch-RepetitionNrofSlots,* for example, if the PUCCH resource is indicated by a DCI format and the PUCCH resource includes (or is configured with) a higher layer parameter *pucch-RepetitionNrofSlots.* The number of slots may be indicated by a higher layer parameter *nrofSlots,* for example, if the PUCCH resource is not indicated by a DCI format or the PUCCH resource does not include (or is not configured with) a higher layer parameter *pucch-RepetitionNrofSlots.*

A wireless device may use the first indicated TCI state and the second indicated TCI state for first and second repetitions of the PUCCH transmission, respectively, for example, if a PUCCH resource used for repetitions of a PUCCH transmission by the wireless device includes a first TCI state and a second TCI state (e.g., *applyIndicatedTCIState* = 'both') and the wireless device is not provided a higher layer parameter *multipanelSfnScheme,* and if the number of slots (e.g., $N_{\mathrm{PUCCH}}^{\mathrm{repeat}}$ slots) is equal to two.

A wireless device may alternate between the first indicated TCI state and the second indicated TCI state per $N_{\mathrm{PUCCH}}^{\mathrm{switch}}$ repetitions of the PUCCH transmission, for example, if a PUCCH resource used for repetitions of a PUCCH transmission by the wireless device includes a first TCI state and a second TCI state (e.g., *applyIndicatedTCIState* = 'both') and the wireless device is not provided a higher layer parameter *multipanelSfnScheme,* where $N_{\mathrm{PUCCH}}^{\mathrm{switch}} = 1$ if a higher layer parameter *mappingPattern* = 'cyclicMapping'; else (e.g., if a higher layer parameter *mappingPattern* = *'sequentialMapping'*), $N_{\mathrm{PUCCH}}^{\mathrm{switch}} = 2$.

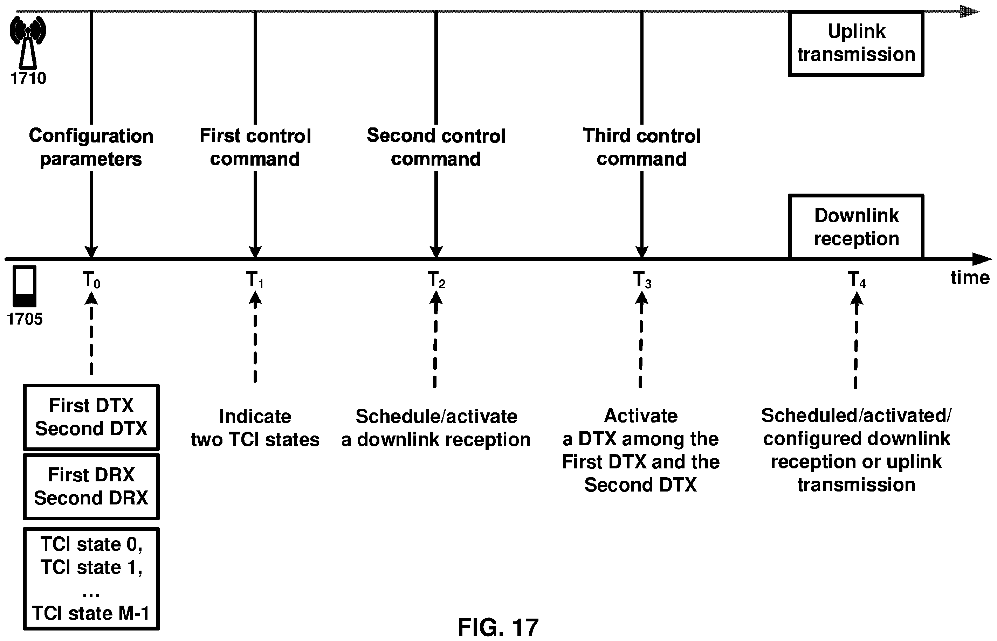

FIG. 17 shows an example for energy saving.

In some examples a wireless device may receive one or more messages. In some examples the wireless device may receive the one or more messages from a base station. The base station may send the one or more messages. In some examples the wireless device may receive the one or more messages from a relay node. In some examples the wireless device may receive the one or more messages from another wireless device (e.g., TRP, vehicle, remote radio head, and the like). The one or more messages may comprise one or more configuration parameters (e.g., Configuration parameters at time T0 in FIG. 17).

In some examples the one or more configuration parameters may be one or more RRC configuration parameters. In some examples the one or more configuration parameters may be one or more RRC reconfiguration parameters (e.g., *RRCReconfiguration, reconfigurationWithSync*).

In some examples the one or more messages may be one or more RRC messages. In some examples the one or more messages may be one or more RRC reconfiguration messages (e.g., *RRCReconfiguration, reconfigurationWith-Sync).*

In some examplesT the one or more configuration parameters may be for a cell.

The cell may be, for example, a serving cell. In some examples, at least one configuration parameter of the one or more configuration parameters may be for the cell. In some examples, the cell may be a primary cell (PCell). In some examples, the cell may be a primary secondary cell (PSCell). In some examples, the cell may be a secondary cell (SCell). The cell may be a secondary cell configured with PUCCH (e.g., PUCCH SCell).

In some examples, the cell may be a special Cell (SpCell). For dual connectivity (DC) operation, the SpCell may refer to (or indicate) the PCell of the MCG or the PSCell of the SCG, otherwise the SpCell may refer to (or indicate) the PCell.

In some examples, the cell may be a primary SCG cell (PSCell). For dual connectivity operation, the wireless device may, for example, perform a random-access procedure via the PSCell if performing the Reconfiguration with Sync procedure.

In some examples, the cell may be an unlicensed cell, e.g., operating in an unlicensed band. In some examples, the cell may be a licensed cell, e.g., operating in a licensed band. In some examples, the cell may operate in a first frequency range (FR1). The FR1 may, for example, comprise frequency bands below 6 GHz. In some examples, the cell may operate in a second frequency range (FR2). The FR2 may, for example, comprise frequency bands from 24 GHz to 52.6 GHz. In some examples, the cell may operate in a third frequency range (FR3). The FR3 may, for example, comprise frequency bands from 52.6 GHz to 71 GHz. The FR3 may, for example, comprise frequency bands starting from (or above) 52.6 GHz.

In some examples, the wireless device may perform uplink transmissions (e.g., PUSCH, PUCCH, PUCCH) via/of the cell in a first time and in a first frequency. The wireless device may perform downlink receptions (e.g., PDCCH, PDSCH) via/of the cell in a second time and in a second frequency. In some examples, the cell may operate in a time-division duplex (TDD) mode. In the TDD mode, the first frequency and the second frequency may be the same. In the TDD mode, the first time and the second time may be different. In some examples, the cell may operate in a frequency-division duplex (FDD) mode. In the FDD mode, the first frequency and the second frequency may be different. In the FDD mode, the first time and the second time may be the same.

In some examples, the wireless device may be in an RRC connected mode/state. In some examples, the wireless device may be in an RRC idle mode/state. In some examples, the wireless device may be in an RRC inactive mode/state.

In some examples, the cell may comprise a plurality of BWPs. The one or more configuration parameters may indicate, for the cell, the plurality of BWPs. The plurality of BWPs may comprise one or more uplink BWPs comprising an uplink BWP of the cell. The plurality of BWPs may comprise one or more downlink BWPs comprising a downlink BWP of the cell.

In some examples, a BWP of the plurality of BWPs may be in one of an active state and an inactive state (or in a deactivated state). In some examples, in the active state of a downlink BWP of the one or more downlink BWPs, the wireless device may monitor a downlink channel/signal (e.g., PDCCH, DCI, CSI-RS, PDSCH) on/for/via the downlink BWP. In some examples, in the active state of a downlink BWP of the one or more downlink BWPs, the wireless device may receive a PDSCH on/via/for the downlink BWP. In some examples, in the inactive state of a downlink BWP of the one or more downlink BWPs, the wireless device may not monitor a downlink channel/signal (e.g., PDCCH, DCI, CSI-RS, PDSCH) on/via/for the downlink BWP. In the inactive state of a downlink BWP of the one or more downlink BWPs, the wireless device may stop monitoring (or receiving) a downlink channel/signal (e.g., PDCCH, DCI, CSI-RS, PDSCH) on/via/for the downlink BWP. In some examples, in the inactive state of a downlink BWP of the one or more downlink BWPs, the wireless device may not receive a PDSCH on/via/for the downlink BWP. In the inactive state of a downlink BWP of the one or more downlink BWPs, the wireless device may stop receiving a PDSCH on/via/for the downlink BWP.

In some examples, in the active state of an uplink BWP of the one or more uplink BWPs, the wireless device may send an uplink signal/channel (e.g., PUCCH, preamble, PUSCH, PRACH, PUCCH, etc.) on/via the uplink BWP. In some examples, in the inactive state of an uplink BWP of the one or more uplink BWPs, the wireless device may not send an uplink signal/channel (e.g., PUCCH, preamble, PUSCH, PRACH, PUCCH, etc.) on/via the uplink BWP.

In some examples, the wireless device may activate the downlink BWP of the one or more downlink BWPs of the cell. In some examples, the activating the downlink BWP may comprise setting (or switching to) the downlink BWP as an active downlink BWP of the cell. In some examples, the activating the downlink BWP may comprise setting the downlink BWP in the active state. In some examples, the activating the downlink BWP may comprise switching the downlink BWP from the inactive state to the active state.

In some examples, the wireless device may activate the uplink BWP of the one or more uplink BWPs of the cell. In some examples, the activating the uplink BWP may comprise that the wireless device sets (or switches to) the uplink BWP as an active uplink BWP of the cell. In some examples, the activating the uplink BWP may comprise setting the uplink BWP in the active state. In some examples, the activating the uplink BWP may comprise switching the uplink BWP from the inactive state to the active state.

In some examples, the one or more configuration parameters may be for the (active) downlink BWP of the cell. In some examples, at least one configuration parameter of the one or more configuration parameters may be for the downlink BWP of the cell.

In some examples, the one or more configuration parameters may be for the (active) uplink BWP of the cell. In some examples, at least one configuration parameter of the one or more configuration parameters may be for the uplink BWP of the cell.

The one or more configuration parameters may indicate a plurality of TCI states. The one or more configuration parameter may comprise a TCI state list parameter (e.g., provided by a higher layer (e.g., RRC) parameter *dl-OrJoint-TCIStateList*) indicating a TCI state list, for example, as shown at step 2502 of FIG. 25. The TCI state list may comprise the plurality of TCI states. The one or more configuration parameters may comprise one or more PDSCH configuration parameters (e.g., *PDSCH-Config*), for example, comprising the TCI state list parameter that indicates the plurality of TCI states. For example, in FIG. 17, the plurality of TCI states are TCI state 0, TCI state 1, ..., and TCI state M-1.

The one or more configuration parameters may indicate, for the plurality of TCI states, a plurality of TCI state indexes/identifiers/identities (e.g., *TCI-StateId*). The one or more configuration parameters may indicate, for each TCI state of the plurality of TCI states, a respective TCI state index of the plurality of TCI state indexes. Each TCI state of the plurality of TCI states may be indicated/identified by a respective TCI state index of the plurality of TCI state indexes. For example, the one or more configuration parameters may indicate, for a first TCI state of the plurality of TCI states, a first TCI state index of the plurality of TCI state indexes. The one or more configuration parameters may indicate, for a second TCI state of the plurality of TCI states, a second TCI state index of the plurality of TCI state indexes.

The one or more configuration parameters may indicate the plurality of TCI states that indicate a unified TCI state for the cell.

The one or more configuration parameters may comprise the one or more PDSCH configuration parameters, for example, for/of the downlink BWP of the cell. The one or more configuration parameters indicate the plurality of TCI states for the downlink BWP of the cell.

The one or more configuration parameters may comprise the one or more PDSCH configuration parameters, for example, for a second downlink BWP of a second cell. The one or more configuration parameters indicate the plurality of TCI states for the second downlink BWP of the second cell. The one or more configuration parameters may comprise, for/of the downlink BWP of the cell, a reference unified TCI state list parameter (e.g., *unifiedTCI-StateRef*) indicating the second downlink BWP of the second cell. The reference unified TCI state list parameter may comprise a BWP index (e.g., BWP-Id) identifying/indicating the second downlink BWP. The reference unified TCI state list parameter may comprise a cell index (e.g., *ServCellIndex)* identifying/indicating the second cell. The second downlink BWP of the second cell may be a reference BWP of a reference cell for the downlink BWP of the cell. The downlink BWP of the cell may be a target BWP of a target cell. The one or more PDSCH configuration parameters of the downlink BWP of the cell may not comprise a higher layer (e.g., RRC) parameter *dl-OrJoint-TCIStateList*, for example, based on the one or more configuration parameters comprising, for the downlink BWP of the cell, the reference unified TCI state list parameter.

The one or more configuration parameters may comprise a unified-TCI-state-type parameter (e.g., *unifiedtci-StateType*). The one or more configuration parameters may comprise one or more serving cell parameters (e.g., *ServingCellConfig*) comprising the unified-TCI-state-type parameter. The unified-TCI-state-type parameter may indicate the unified TCI state type of the cell.

For example, unified-TCI-state-type parameter may be set to "Joint". The wireless device may use the plurality of TCI states (e.g., provided/indicated by *dl-OrJoint-TCIStateList*) for both uplink transmissions (e.g., PUSCH/PUCCH/SRS transmissions) of/via the cell and downlink receptions (e.g., PDCCH/PDSCH/CSI-RS receptions) of/via the cell, for example, based on the one or more configuration parameters comprising the unified-TCI-state-type parameter set to "Joint". The plurality of TCI states may be, for example, a plurality of joint TCI states.

For example, unified-TCI-state-type parameter may be set to "Separate". The wireless device may use the plurality of TCI states (e.g., provided/indicated by a higher layer parameter *dl-OrJoint-TCIStateList*) for downlink receptions (e.g., PDCCH/PDSCH/CSI-RS receptions) of/via the cell, for example, based on the one or more configuration parameters comprising the unified-TCI-state-type parameter set to "Separate". The wireless device may not use the plurality of TCI states for uplink transmissions (e.g., PUSCH/PUCCH/SRS transmissions) of/via the cell, for example, based on the one or more configuration parameters comprising the unified-TCI-state-type parameter set to "Separate". The plurality of TCI states may be, for example, a plurality of downlink TCI states.

The one or more configuration parameters may indicate a second plurality of TCI states. The one or more configuration parameters may comprise an uplink TCI state list parameter (e.g., provided/indicated by a higher layer parameter *ul-TCI-StateList*) indicating an uplink TCI state list. The uplink TCI state list may comprise the second plurality of TCI states. The one or more configuration parameters may comprise one or more uplink BWP configuration parameters comprising the uplink TCI state list parameter that indicates the second plurality of TCI states. For example, in FIG. 17, the second plurality of TCI states are TCI state 0, TCI state 1,..., and TCI state M-1.

The one or more configuration parameters may comprise the one or more uplink BWP configuration parameters, for example, for the uplink BWP of the cell. The one or more configuration parameters indicate the second plurality of TCI states for the uplink BWP of the cell.

The one or more configuration parameters may comprise the one or more uplink BWP configuration parameters, for example, for a second uplink BWP of a second cell. The one or more configuration parameters indicate the second plurality of TCI states for the second uplink BWP of the second cell. The one or more configuration parameters may comprise, for the uplink BWP of the cell, a reference unified TCI state list parameter (e.g., *unifiedtci-StateType*) indicating the second uplink BWP of the second cell. The reference unified TCI state list parameter may comprise a BWP index (e.g., BWP-Id) identifying/indicating the second uplink BWP. The reference unified TCI state list parameter may comprise a cell index (e.g., *ServCellIndex*) identifying/indicating the second cell. The second uplink BWP of the second cell may be a reference BWP of a reference cell for the uplink BWP of the cell. The uplink BWP of the cell may be a target BWP of a target cell. The one or more uplink BWP configuration parameters of the uplink BWP of the cell may not comprise a higher layer (e.g., RRC) parameter *ul-TCI-StateList*, for example, based on the one or more configuration parameters comprising, for the uplink BWP of the cell, the reference unified TCI state list parameter.

The wireless device may use the second plurality of TCI states for uplink transmissions (e.g., PUSCH/-PUCCH/SRS transmissions) of/via the cell, for example, based on the one or more configuration parameters comprising the unified-TCI-state-type parameter set to "Separate". The wireless device may not use the second plurality of TCI states for downlink receptions (e.g., PDCCH/PDSCH/CSI-RS receptions) of/via the cell, for example, based on the one or more configuration parameters comprising the unified-TCI-state-type parameter set to "Separate". The second plurality of TCI states may be, for example, a plurality of uplink TCI states.

In some examples, the wireless device may use, for downlink receptions via the downlink BWP of the cell, the plurality of TCI states, for example based on the one or more configuration parameters indicating the plurality of TCI states for the downlink BWP of the cell.

In some examples, the wireless device may use, for uplink transmissions receptions via the uplink BWP of the cell, the plurality of TCI states, for example based on the one or more configuration parameters indicating the plurality of TCI states for the downlink BWP of the cell.

In some examples, the wireless device may use, for downlink receptions via the downlink BWP of the cell, the plurality of TCI states of the second downlink BWP of the second cell, for example, based on the reference unified TCI state list parameter indicating, for the downlink BWP of the cell, the second downlink BWP of the second cell.

In some examples, the wireless device may use, for uplink transmissions receptions via the uplink BWP of the cell, the plurality of TCI states of the second downlink BWP of the second cell, for example, based on the reference unified TCI state list parameter indicating, for the downlink BWP of the cell, the second downlink BWP of the second cell.

In some examples, the wireless device may use, for uplink transmissions receptions via the uplink BWP of the cell, the second plurality of TCI states, for example based on the one or more configuration parameters indicating the second plurality of TCI states for the uplink BWP of the cell.

In some examples, the wireless device may use, for uplink transmissions receptions via the uplink BWP of the cell, the second plurality of TCI states of the second uplink BWP of the second cell, for example, based on the reference unified TCI state list parameter indicating, for the uplink BWP of the cell, the second uplink BWP of the second cell.

The wireless device may receive an activation command (e.g., MAC-CE, DCI, RRC, control command, downlink control command/message, control command/message, Unified TCI States Activation/Deactivation MAC CE, Enhanced Unified TCI States Activation/Deactivation MAC CE, and the like).

For example, the activation command may indicate activation of a subset of TCI states of the plurality of TCI states (e.g., *DLorJoint-TCIStateList*). The subset of TCI states may be, for example, a subset of joint TCI states of the plurality of joint TCI states. The subset of TCI states may be, for example, a subset of downlink TCI states of the plurality of downlink TCI states.

For example, the activation command may indicate activation of a subset of TCI states of the second plurality of TCI states (e.g., *ul-TCI-StateList*). The subset of TCI states may be, for example, a subset of uplink TCI states of the plurality of uplink TCI states.

The base station may activate and/or deactivate the subset of TCI states, for example, by sending/sending the activation command.

The wireless device may map the subset of TCI states to one or more TCI codepoints. The activation command may indicate mapping of the subset of TCI states to the one or more TCI codepoints. The wireless device may map respective TCI state(s) of the subset of TCI states to a respective TCI codepoint of the one or more TCI codepoints. The one or more TCI codepoints may indicate/comprise the subset of TCI states. Each TCI codepoint of the one or more TCI codepoints may indicate (or may be mapped to) respective TCI state(s) of the subset of TCI states. Each TCI codepoint of the one or more TCI codepoints may indicate/comprise (or be mapped to) one or more TCI states.

In some examples, the subset of TCI states may be TCI state 4, TCI state 5, TCI state 8, TCI state 26, and TCI state 61. The one or more TCI codepoints may/be comprise a first TCI codepoint (e.g., TCI codepoint 000), a second TCI codepoint (e.g., TCI codepoint 001), a third TCI codepoint (e.g., TCI codepoint 010), and a fourth TCI codepoint (e.g., TCI codepoint 011). The first TCI codepoint (e.g., TCI codepoint 000) may comprise/indicate the TCI state 4. The second TCI codepoint (e.g., TCI codepoint 001) may comprise/indicate the TCI state 5 and the TCI state 8. The third TCI codepoint (e.g., TCI codepoint 010) may comprise/indicate the TCI state 26 and TCI state 61. The fourth TCI codepoint (e.g., TCI codepoint 011) may comprise/indicate the TCI state 26. For example, the first TCI codepoint (e.g., TCI codepoint 000) and the fourth TCI codepoint (e.g., TCI codepoint 011) indicate a single TCI state. The second TCI codepoint (e.g., TCI codepoint 001) and the third TCI codepoint (e.g., TCI codepoint 010) indicate two TCI states (e.g., two joint TCI states, two uplink TCI states, two downlink TCI states, and the like).

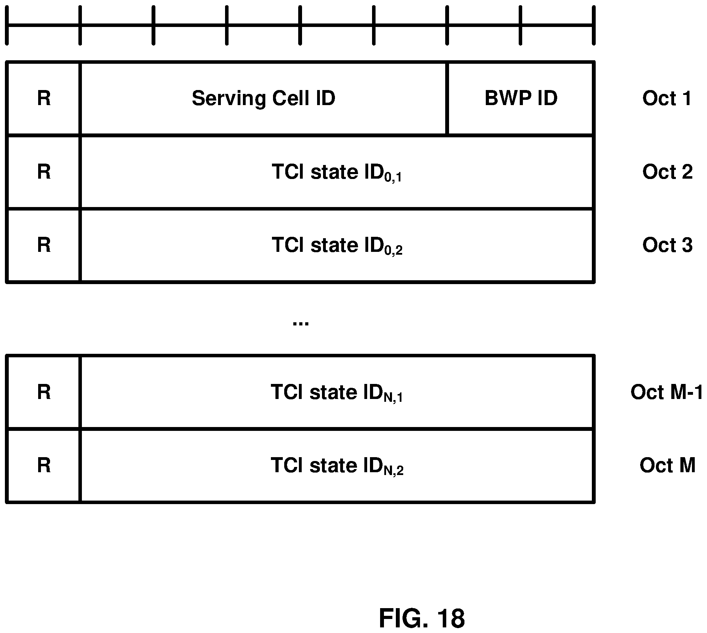

FIG. 18 shows an example of an activation command.

The activation command may comprise a plurality of fields.

A first field (e.g., Serving Cell ID in FIG. 18) of the plurality of fields may comprise a serving cell index/identity/identifier indicating/identifying the cell. The first field may comprise the serving cell index/identity/identifier indicating/identifying the cell for which the activation command uses. If the one or more configuration parameters indicate/configure the cell in (or as a part of) a simultaneous TCI update cell list (e.g., *simultaneousTCI-UpdateList1, simultaneousTCI-UpdateList2*), the activation command may use to each cell in the simultaneous TCI update cell list.

A second field (e.g., BWP ID in FIG. 18) of the plurality of fields may comprise a BWP index/identity/identifier indicating/identifying the downlink BWP of the cell. The second field may comprise/indicate the BWP index/identity/identifier indicating/identifying the downlink BWP of the cell for which the activation command uses as a codepoint of a bandwidth part indicator field in DCI

A third field (e.g., TCI state $ID_{i,j}$ in FIG. 18) of the plurality of fields may comprise a TCI state index/identifier/identity (e.g., *TCI-StateId*) identifying a TCI state of the plurality of TCI states. The plurality of TCI state indexes may comprise the TCI state index. In TCI state $ID_{i,j}$, i may be an index of a codepoint of a *Transmission configuration indication* (TCI) field in DCI. TCI state $ID_{i,j}$ may denote/be the $j^{th}$ TCI state indicated for the $i^{th}$ codepoint in/of a *Transmission Configuration Indication* field in DCI. For example, TCI state $ID_{0,1}$ may denote the first TCI state (e.g., $1^{st}$ TCI state) indicated for a TCI codepoint 000. TCI state $ID_{0,2}$ may denote the second TCI state (e.g., $2^{nd}$ TCI state) indicated for the TCI codepoint 000. For example, TCI state $ID_{1,1}$ may denote the first TCI state (e.g., $1^{st}$ TCI state) indicated for a TCI codepoint 001. TCI state $ID_{1,2}$ may denote the second TCI state (e.g., $2^{nd}$ TCI state) indicated for the TCI codepoint 001. For example, TCI state $ID_{N,1}$ may denote the first TCI state (e.g., $1^{st}$ TCI state) indicated for a TCI codepoint 111, for example, if N in FIG. 18 is equal to 8. TCI state $ID_{N,2}$ may denote the second TCI state (e.g., $2^{nd}$ TCI state) indicated for the TCI codepoint 111. For a TCI codepoint i, TCI state $ID_{i,1}$ may denote/be the first TCI state (e.g., $1^{st}$ TCI state) and TCI state $ID_{i,2}$ may denote/be the second TCI state (e.g., $2^{nd}$ TCI state)

A TCI codepoint to which TCI state(s) are mapped may be determined, by the wireless device and/or the base station, by an ordinal position of the TCI codepoint among ordinal position(s) of TCI codepoint(s), i.e. the first TCI codepoint with TCI state $ID_{0,1}$ and TCI state $ID_{0,2}$ may be mapped to the codepoint value 0 (e.g., TCI codepoint 000), the second TCI codepoint with TCI state $ID_{1,1}$ and TCI state $ID_{1,2}$ may be mapped to the codepoint value 1 (e.g., TCI codepoint 001) and so on.

The second TCI codepoint (e.g., TCI codepoint 001) may comprise/indicate the TCI state 5 and the TCI state 8. The TCI state 5 and the TCI state 8 may be mapped to the second TCI codepoint (e.g., TCI codepoint 001).

In some examples, the activation command may comprise a TCI state index/identifier/identity (e.g., TCI state $ID_{1,1}$) of the TCI state 5 and a TCI state index/identifier/identity (e.g., TCI state $ID_{1,2}$) of the TCI state 8. The TCI state 5 may be the first TCI state and the TCI state 8 may be the second TCI state, for example, based on the TCI state index/identifier/identity (e.g., TCI state $ID_{1,1}$) of the TCI state 5 occurring/being/positioning in a lower octet in the activation command than the TCI state index/identifier/identity (e.g., TCI state $ID_{1,2}$) of the TCI state 8. For example, Octet 4 of the activation command may comprise the TCI state index/identifier/identity (e.g., TCI state $ID_{1,1}$) of the TCI state 5 and Octet 5 of the activation command may comprise the TCI state index/identifier/identity (e.g., TCI state $ID_{1,2}$) of the TCI state 8.

In some examples, the activation command may comprise a TCI state index/identifier/identity (e.g., TCI state $ID_{1,1}$) of the TCI state 8 and a TCI state index/identifier/identity (e.g., TCI state $ID_{1,2}$) of the TCI state 5. The TCI state 8 may be the first TCI state and the TCI state 5 may be the second TCI state, for example, based on the TCI state index/identifier/identity (e.g., TCI state $ID_{1,1}$) of the TCI state 8 occurring/being/positioning in a lower octet in the activation command than the TCI state index/identifier/identity (e.g., TCI state $ID_{1,2}$) of the TCI state 5. For example, Octet 4 of the activation command may comprise the TCI state index/identifier/identity (e.g., TCI state $ID_{1,1}$) of the TCI state 8 and Octet 5 of the activation command may comprise the TCI state index/identifier/identity (e.g., TCI state $ID_{1,2}$) of the TCI state 5.

The third TCI codepoint (e.g., TCI codepoint 010) may comprise/indicate the TCI state 26 and TCI state 61. The TCI state 26 and the TCI state 61 may be mapped to the third TCI codepoint (e.g., TCI codepoint 010).

In some examples, the activation command may comprise a TCI state index/identifier/identity (e.g., TCI state

$ID_{2,1}$) of the TCI state 26 and a TCI state index/identifier/identity (e.g., TCI state $ID_{2,2}$) of the TCI state 61. The TCI state 26 may be the first TCI state and the TCI state 61 may be the second TCI state, for example, based on the TCI state index/identifier/identity (e.g., TCI state $ID_{2,1}$) of the TCI state 26 occurring/being/positioning in a lower octet in the activation command than the TCI state index/identifier/identity (e.g., TCI state $ID_{2,2}$) of the TCI state 61. For example, Octet 6 of the activation command may comprise the TCI state index/identifier/identity (e.g., TCI state $ID_{2,1}$) of the TCI state 26 and Octet 7 of the activation command may comprise the TCI state index/identifier/identity (e.g., TCI state $ID_{2,2}$) of the TCI state 61.

In some examples, the activation command may comprise a TCI state index/identifier/identity (e.g., TCI state $ID_{2,1}$) of the TCI state 61 and a TCI state index/identifier/identity (e.g., TCI state $ID_{2,2}$) of the TCI state 26. The TCI state 61 may be the first TCI state and the TCI state 26 may be the second TCI state, for example, based on the TCI state index/identifier/identity (e.g., TCI state $ID_{2,1}$) of the TCI state 61 occurring/being/positioning in a lower octet in the activation command than the TCI state index/identifier/identity (e.g., TCI state $ID_{2,2}$) of the TCI state 26. For example, Octet 6 of the activation command may comprise the TCI state index/identifier/identity (e.g., TCI state $ID_{2,1}$) of the TCI state 61 and Octet 7 of the activation command may comprise the TCI state index/identifier/identity (e.g., TCI state $ID_{2,2}$) of the TCI state 26.

A fourth field (e.g., R in FIG. 18) of the plurality of fields may be a reserved bit. The reserved bit may be set to, for example, zero.

The wireless device may receive a control command (e.g., a first control command at time T1 in FIG. 17). The control command may be, for example, a MAC-CE. The control command may be, for example, DCI (e.g., DCI format 1_1, DCI format 1_2). The control command may be, for example, a downlink control command (e.g., activation command).

The control command may indicate at least two TCI states of the subset of TCI states.

In some examples, a number of the one or more TCI codepoints may be equal to one (e.g., a single TCI codepoint). The single TCI codepoint may indicate the at least two TCI states. The control command indicating the at least two TCI states may be the activation command activating the subset of TCI states based on the number of the one or more TCI codepoints being equal to one. The at least two TCI states may be the subset of TCI states based on the number of the one or more TCI codepoints being equal to one. The activation command may indicate the at least two TCI states based on the number of the one or more TCI codepoints being equal to one.

In some examples, a number of the one or more TCI codepoints may be more than one. The control command indicating the at least two TCI states may be different from the activation command activating the subset of TCI states based on the number of the one or more TCI codepoints being more than one. The wireless device may receive the control command after receiving the activation command. The control command (e.g., DCI) may comprise a TCI field indicating the at least two TCI states. A value of the TCI field may be equal to a TCI codepoint, of the one or more TCI codepoints, indicating the at least two TCI states. The at least two TCI states may be mapped to the TCI codepoint.

The at least two TCI states may be, for example, at least two joint TCI states. The at least two TCI states may be, for example, at least two downlink TCI states.

The at least two TCI states may be, for example, at least two uplink TCI states.

The at least two TCI states may comprise a first TCI state and a second TCI state.

The first TCI state may comprise/indicate a first reference signal (e.g., CSI-RS, SSB/PBCH block, DM-RS, SRS, and the like). The first TCI state may comprise/indicate a first quasi co-location type (e.g., QCL TypeA, QCL TypeB, QCL TypeC, QCL TypeD).

The second TCI state may comprise/indicate a second reference signal (e.g., CSI-RS, SSB/PBCH block, DM-RS, SRS, and the like). The second TCI state may comprise/indicate a second quasi co-location type (e.g., QCL TypeA, QCL TypeB, QCL TypeC, QCL TypeD).

The wireless device may receive a control command (e.g., Second control command at time T2 in FIG. 17). The control command may be, for example, a DCI (e.g., a DCI format 1_0, a DCI format 1_1, a DCI format 1_2, a DCI format 1_3, and the like).

The control command (e.g., Second control command at time T2 in FIG. 17) may, for example, schedule a downlink reception (e.g., Downlink reception at time T4 in FIG. 17).

The control command may schedule the downlink reception, for example, based on the control command indicating the resources for the downlink reception. The control command may schedule the downlink reception, for example, based on the control command comprising one or more fields (e.g., TDRA field, MCS field, FDRA field, BWP index, HARQ process index, and the like) used by the wireless device for the downlink reception.

The control command (e.g., Second control command at time T2 in FIG. 17) may, for example, activate a downlink reception of an SPS configuration.

The one or more configuration parameters may comprise one or more semi-persistent scheduling (SPS) configuration parameters of the SPS configuration. The control command may indicate activation of the SPS configuration. The control command may comprise one or more fields (e.g., RV, HARQ process, MCS, and the like) set to predefined values (e.g., 0, 1) that indicate activation of the SPS configuration. The wireless device may validate the control command based on the one or more fields (e.g., RV, HARQ process, MCS, and the like) being set to the predefined values. The wireless device may activate the SPS configuration based on the validating the control command.

The downlink reception may be/comprise, for example, a PDSCH reception. The PDSCH reception may comprise one or more transport blocks (e.g., downlink data). The control command may comprise one or more fields (e.g., TDRA field, FDRA field) indicating resources for the downlink reception. The downlink BWP of the cell may comprise the resources.

In some examples, the control command (e.g., Second control command at time T2 in FIG. 17) may comprise a TCI selection field with a value (e.g., '10') indicating to apply the at least two TCI states to/for the downlink reception. The control command may indicate the value (e.g., '10') for a codepoint of the TCI selection field. The control command indicating the value (e.g., '10') for the codepoint of the TCI selection field may indicate to apply the at least two TCI states (e.g., both/each of the at least two TCI states) to/for the downlink reception. The control command may comprise the TCI selection field, for example, based on the one or more configuration parameters comprising a higher layer parameter *tciSelection-PresentInDCI.* The control command may be, for example, a DCI format 1_1. The control command may be, for example, a DCI format 1_2.

In some examples, the control command (e.g., Second control command at time T2 in FIG. 17) may not comprise a TCI selection field. The control command may be, for example, a DCI format 1_1. The control command may be, for example, a DCI format 1_2. The control command may not comprise a TCI selection field, for example, based on the one or more configuration parameters not comprising a higher layer parameter *tciSelection-PresentInDCI.* The control command not comprising the TCI selection field may indicate to apply the at least two TCI states (e.g., both/each of the at least two TCI states) to/for the downlink reception. The TCI selection field may be absent in the control command.

The control command may be, for example, a DCI format 1_0. The one or more configuration parameters may comprise an apply-indicated-TCI-state parameter (e.g., *applyIndicatedTCIState*) set to 'both' indicating to apply the at least two TCI states (e.g., both/each of the at least two TCI states) to/for the downlink reception scheduled/activated by the DCI format 1_0.

The apply-indicated-TCI-state parameter (e.g., *applyIndicatedTCIState*) may be set to 'both', for example, based on (or when) the one or more configuration parameters comprising a coherent-joint-transmission (CJT) scheme parameter (e.g., *cjtSchemePDSCH*) for PDSCH receptions. The apply-indicated-TCI-state parameter (e.g., *applyIndicatedTCIState*) may be set to 'both', for example, based on (or when) transmitting, to the base station, a capability message (e.g., a UE capability message) indicating support of two TCI states (e.g., two joint TCI states) for CJT-based PDSCH receptions.

The apply-indicated-TCI-state parameter (e.g., *applyIndicatedTCIState*) may be set to 'both', for example, based on (or when) the one or more configuration parameters comprising a single-frequency-network (SFN) parameter for PDSCH receptions (e.g., *sfnSchemePdsch*).

The one or more configuration parameters may indicate at least two DTXs for the cell.

The at least two DTXs of the cell may be (or may be interchangeably used with) at least two DTX configurations of the cell.

The at least two DTXs of the cell may be (or may be interchangeably used with) at least two DTX operations of the cell.

The one or more configuration parameters may comprise one or more first DTX configuration parameters (e.g., *TRP-DTX-Config, TRP-DTX-Config1 TRP1-DTX Config, DTX-Config, DTX-Config1,* and the like) indicating a first DTX of the cell (e.g., First DTX in FIG. 17). The at least two DTXs of the cell may comprise the first DTX of the cell.

The first DTX of the cell may be (or may be interchangeably used with) a first DTX configuration of the cell.

The first DTX of the cell may be (or may be interchangeably used with) a first DTX operation of the cell.

The first DTX may be associated with a first TRP (e.g., TRP 1). The one or more configuration parameters may indicate the first DTX for an energy saving of the first TRP.

The one or more configuration parameters may comprise one or more second DTX configuration parameters (e.g., *TRP-DTX-Config2, TRP2-DTX-Config, DTX-Config2,* and the like) indicating a second DTX of the cell (e.g., Second DTX in FIG. 17). The at least two DTXs of the cell may comprise the second DTX of the cell.

The second DTX of the cell may be (or may be interchangeably used with) a second DTX configuration of the cell.

The second DTX of the cell may be (or may be interchangeably used with) a second DTX operation of the cell.

The second DTX may be associated with a second TRP (e.g., TRP 2). The one or more configuration parameters may indicate the second DTX for an energy saving of the second TRP.

The wireless device may send/report a capability message (e.g., a UE capability message) indicating support/capability (e.g., *twoDTXcapability*) of two DTX configurations for/per a cell. The one or more configuration parameters may comprise the one or more second DTX configuration parameters indicating the second DTX, for example, based on sending/reporting the capability message indicating support/capability (e.g., *twoDTXcapability*) of two DTX configurations for/per the cell. The base station may send, to the wireless device, the one or more second DTX configuration parameters indicating the second DTX, for example, based on receiving the capability message indicating support/capability (e.g., *twoDTXcapability*) of two DTX configurations for/per the cell. The base station may send, to the wireless device, the one or more configuration parameters indicating at most two DTXs (e.g., no DTX configuration, the first DTX only, the second DTX only, both the first DTX and the second DTX) for the cell, for example, based on receiving the capability message indicating support/capability (e.g., *twoDTXcapability*) of two DTX configurations for/per the cell.

The wireless device may not send/report a capability message (e.g., a UE capability message) indicating support/capability (e.g., *twoDTXcapability*) of two DTX configurations for/per a cell. The one or more configuration parameters may not comprise one or more second DTX configuration parameters indicating a second DTX, for example, based on not sending/reporting the capability message indicating support/capability (e.g., *twoDTXcapability*) of two DTX configurations for/per the cell. The base station may not send, to the wireless device, the one or more second DTX configuration parameters indicating the second DTX, for example, based on not receiving the capability message indicating support/capability (e.g., *twoDTXcapability*) of two DTX configurations for/per the cell. The base station may send, to the wireless device, the one or more first DTX configuration parameters indicating the first DTX, for example, based on not receiving the capability message indicating support/capability (e.g., *twoDTXcapability*) of two DTX configurations for/per the cell. The base station may send, to the wireless device, the one or more configuration parameters indicating at most one DTX (e.g., the first DTX only or no DTX configuration) for the cell, for example, based on not receiving the capability message indicating support/capability (e.g., *twoDTXcapability*) of two DTX configurations for/per the cell.

The one or more configuration parameters may indicate at least two DRXs for the cell.

The at least two DRXs of the cell may be (or may be interchangeably used with) at least two DRX configurations of the cell.

The at least two DRXs of the cell may be (or may be interchangeably used with) at least two DRX operations of the cell.

The one or more configuration parameters may comprise one or more first DRX configuration parameters (e.g., *TRP-DRX Config, TRP-DRX-Config1 TRPI-DRX-Config, DRX-Config, DRX-Config1,* and the like) indicating a first DRX of the cell (e.g., First DRX in FIG. 17). The at least two DRXs of the cell may comprise the first DRX of the cell.

The first DRX of the cell may be (or may be interchangeably used with) a first DRX configuration of the cell.

The first DRX of the cell may be (or may be interchangeably used with) a first DRX operation of the cell.

The first DRX may be associated with a first TRP (e.g., TRP 1). The one or more configuration parameters may indicate the first DRX for an energy saving of the first TRP.

The one or more configuration parameters may comprise one or more second DRX configuration parameters (e.g., *TRP-DRX-Config2, TRP2-DRX-Config, DRX-Config2,* and the like) indicating a second DRX of the cell (e.g., Second DRX in FIG. 17). The at least two DRXs of the cell may comprise the second DRX of the cell.

The second DRX of the cell may be (or may be interchangeably used with) a second DRX configuration of the cell.

The second DRX of the cell may be (or may be interchangeably used with) a second DRX operation of the cell.

The second DRX may be associated with a second TRP (e.g., TRP 2). The one or more configuration parameters may indicate the second DRX for an energy saving of the second TRP.

The wireless device may transmit/report a capability message (e.g., a UE capability message) indicating support/capability (e.g., *twoDRXcapability*) of two DRX configurations for/per a cell. The one or more configuration parameters may comprise the one or more second DRX configuration parameters indicating the second DRX, for example, based on transmitting/reporting the capability message indicating support/capability (e.g., *twoDRXcapability*) of two DRX configurations for/per the cell. The base station may transmit, to the wireless device, the one or more second DRX configuration parameters indicating the second DRX, for example, based on receiving the capability message indicating support/capability (e.g., *twoDRXcapability*) of two DRX configurations for/per the cell. The base station may transmit, to the wireless device, the one or more configuration parameters indicating at most two DRXs (e.g., no DRX configuration, the first DRX only, the second DRX only, both the first DRX and the second DRX) for the cell, for example, based on receiving the capability message indicating support/capability (e.g., *twoDRXcapability*) of two DRX configurations for/per the cell.

The wireless device may not transmit/report a capability message (e.g., a UE capability message) indicating support/capability (e.g., *twoDRXcapability*) of two DRX configurations for/per a cell. The one or more configuration parameters may not comprise one or more second DRX configuration parameters indicating a second DRX, for example, based on not transmitting/reporting the capability message indicating support/capability (e.g., *twoDRXcapability*) of two DRX configurations for/per the cell. The base station may not transmit, to the wireless device, the one or more second DRX configuration parameters indicating the second DRX, for example, based on not receiving the capability message indicating support/capability (e.g., *twoDRXcapability*) of two DRX configurations for/per the cell. The base station may transmit, to the wireless device, the one or more first DRX configuration parameters indicating the first DRX, for example, based on not receiving the capability message indicating support/capability (e.g., *twoDRXcapability*) of two DRX configurations for/per the cell. The base station may transmit, to the wireless device, the one or more configuration parameters indicating at most one DRX (e.g., the first DRX only or no DRX configuration) for the cell, for example, based on not receiving the capability message indicating support/capability (e.g., *twoDRXcapability*) of two DRX configurations for/per the cell.

The wireless device may receive a control command (e.g., Third control command at time T3 in FIG. 17). The control command may be, for example, DCI (e.g., DCI format 2_9, DCI format 2_10, and the like). The control command may indicate activation of a DTX of the at least two DTXs of the cell. The control command may comprise a DTX/DRX indicator field (e.g., TRP DTX/DRX indicator field) with a value (e.g., 1) indicating activation of the DTX of the cell. The DTX/DRX indicator field may be associated with (or correspond to) the DTX of the cell. The wireless device may activate the DTX of the cell based on receiving the control command.

A value (e.g., '1') for/of a bit of the DTX/DRX indicator field in a block of the one or more blocks may indicate activation of the DTX of the cell. The block may be associated with the cell. The one or more configuration parameters may indicate, for the cell, a starting position of the block or a starting position of the DTX. The bit may be associated with (or may correspond to) the DTX of the cell.

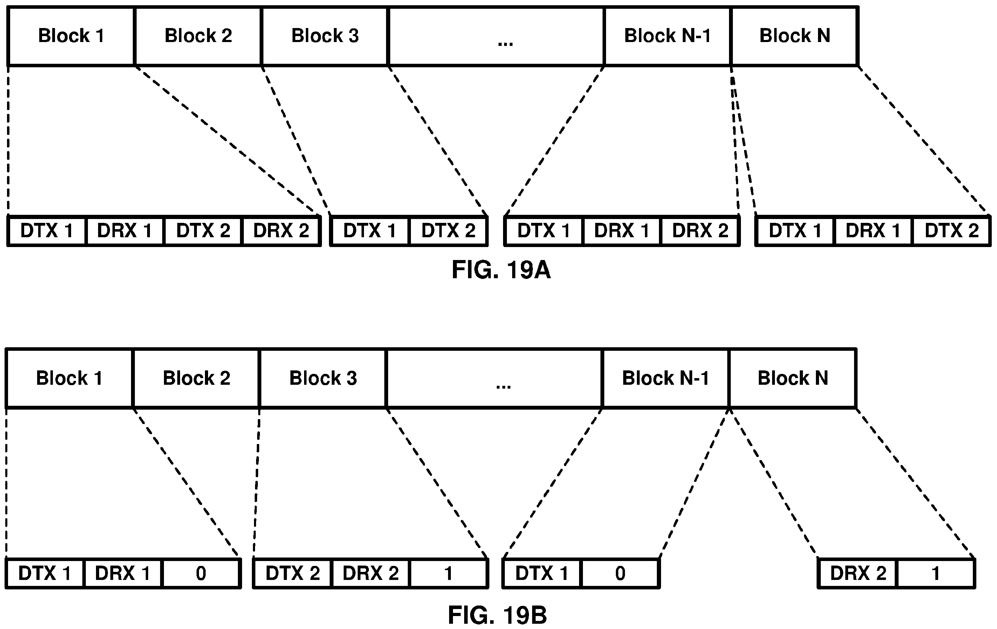

The DTX may be, for example, the first DTX. The DTX may be, for example, the second DTX. FIG. 19A shows an example of a control command. FIG. 19B shows an example of a control command.

The DTX of the cell may be (or may be interchangeably used with) a DTX configuration of the cell.

The DTX of the cell may be (or may be interchangeably used with) a DTX operation of the cell.

The control command (e.g., Third control command at time T3 in FIG. 17) may comprise one or more blocks (e.g., Block 1, Block 2, Block 3, ..., Block N-1, Block N in FIG. 19A and FIG. 19B).

A size/length of each block of the one or more blocks may be one or more bits (e.g., 1 bit, 2 bits, 3 bits, 4 bits). Each block may comprise/indicate respective DTX/DRX indicator field (e.g., TRP DTX/DRX indicator field). Each bit of a DTX/DRX indicator field (e.g., TRP DTX/DRX indicator field) in a block of the one or more blocks may indicate activation or deactivation of one of: the first DTX, the second DTX, the first DRX, and the second DRX. A first value (e.g., '0') for a bit of the DTX/DRX indicator field may indicate deactivation of a DTX or of a DRX among the first DTX, the second DTX, the first DRX, and the second DRX, where the bit corresponds to (or is associated with) the DTX or the DRX. A second value (e.g., '1') for a bit of the DTX/DRX indicator field may indicate activation of a DTX or of a DRX among the first DTX, the second DTX, the first DRX, and the second DRX, where the bit corresponds to (or is associated with) the DTX or the DRX.

For example, a block (e.g., Block 1 in FIG. 19A or a DTX/DRX indicator field in Block 1) of the one or more blocks may be 4 bits if the first DTX, the second DTX, the first DRX, and the second DRX are configured/indicated, by the one or more configuration parameters, for the cell. The most-significant bit (MSB) of the 4 bits of the block may correspond to the first DTX (e.g., DTX 1 in FIG. 19A). The second MSB of the 4 bits of the block may correspond to the first DRX (e.g., DRX 1 in FIG. 19A). The least-significant bit (LSB) of the 4 bits of the block may correspond to the second DRX (e.g., DRX 2 in FIG. 19A). The third MSB or the second LSB of the 4 bits of the block may correspond to the second DTX (e.g., DTX 2 in FIG. 19A). The block may comprise a DTX/DRX indicator field (e.g., 4 bits).

A first value (e.g., '0') for the MSB of the DTX/DRX indicator field may indicate deactivation of the first DTX. A second value (e.g., '1') for the MSB of the DTX/DRX indicator field may indicate activation of the first DTX.

A first value (e.g., '0') for the second MSB of the DTX/DRX indicator field may indicate deactivation of the first DRX. A second value (e.g., '1') for the second MSB of the DTX/DRX indicator field may indicate activation of the first DRX.

A first value (e.g., '0') for the LSB of the DTX/DRX indicator field may indicate deactivation of the second DRX. A second value (e.g., '1') for the LSB of the DTX/DRX indicator field may indicate activation of the second DRX.

A first value (e.g., '0') for the second LSB of the DTX/DRX indicator field may indicate deactivation of the second DTX. A second value (e.g., '1') for the second LSB of the DTX/DRX indicator field may indicate activation of the second DTX.

For example, a block (e.g., Block 3 in FIG. 19A or a DTX/DRX indicator field in Block 3) of the one or more blocks may be 2 bits if the first DTX and the second DTX are configured/indicated, by the one or more configuration parameters, for the cell. The MSB of the 2 bits of the block may correspond to the first DTX (e.g., DTX 1 in FIG. 19A). The LSB of the 2 bits of the block may correspond to the second DTX (e.g., DTX 2 in FIG. 19A). The first DRX and the second DRX may not be configured/indicated, by the one or more configuration parameters, for the cell. The block may comprise a DTX/DRX indicator field (e.g., 2 bits).

A first value (e.g., '0') for the MSB of the DTX/DRX indicator field may indicate deactivation of the first DTX. A second value (e.g., '1') for the MSB of the DTX/DRX indicator field may indicate activation of the first DTX.

A first value (e.g., '0') for the LSB of the DTX/DRX indicator field may indicate deactivation of the second DTX. A second value (e.g., '1') for the LSB of the DTX/DRX indicator field may indicate activation of the second DTX.

For example, a block of the one or more blocks may be 2 bits if the first DRX and the second DRX are configured/indicated, by the one or more configuration parameters, for the cell. The MSB of the 2 bits of the block may correspond to the first DRX. The LSB of the 2 bits of the block may correspond to the second DRX. The first DTX and the second DTX may not be configured/indicated, by the one or more configuration parameters, for the cell.

For example, a block of the one or more blocks may be 2 bits if the first DTX and the second DRX are configured/indicated, by the one or more configuration parameters, for the cell. The MSB of the 2 bits of the block may correspond to the first DTX. The LSB of the 2 bits of the block may correspond to the second DRX. The second DTX and the first DRX may not be configured/indicated, by the one or more configuration parameters, for the cell.

For example, a block of the one or more blocks may be 2 bits if two of: the first DTX, the second DTX, the first DRX, and the second DRX are configured/indicated, by the one or more configuration parameters, for the cell. For example, the block may be/comprise one of {[DTX 1, DRX 1], [DTX 1, DRX 2], [DTX 1, DTX 2], [DRX 1, DRX 2], [DRX 1, DTX 2], [DTX 2, DRX 2]}.

For example, a block (e.g., Block N-1 in FIG. 19A or a DTX/DRX indicator field in Block N-1) of the one or more blocks may be 3 bits if the first DTX, the first DRX, and the second DRX are configured/indicated, by the one or more configuration parameters, for the cell. The MSB of the 3 bits of the block may correspond to the first DTX (e.g., DTX 1 in FIG. 19A). The second MSB of the 3 bits of the block may correspond to the first DRX (e.g., DRX 1 in FIG. 19A). The LSB of the 3 bits of the block may correspond to the second DRX (e.g., DRX 2 in FIG. 19A). The second DTX may not be configured/indicated, by the one or more configuration parameters, for the cell.

For example, a block (e.g., Block N in FIG. 19A or a DTX/DRX indicator field in Block N) of the one or more blocks may be 3 bits if the first DTX, the first DRX, and the second DTX are configured/indicated, by the one or more configuration parameters, for the cell. The MSB of the 3 bits of the block may correspond to the first DTX (e.g., DTX 1 in FIG. 19A). The second MSB of the 3 bits of the block may correspond to the first DRX (e.g., DRX 1 in FIG. 19A). The LSB of the 3 bits of the block may correspond to the second DTX (e.g., DTX 2 in FIG. 19A). The second DRX may not be configured/indicated, by the one or more configuration parameters, for the cell.

For example, a block of the one or more blocks may be 3 bits if three of: the first DTX, the second DTX, the first DRX, and the second DRX are configured/indicated, by the one or more configuration parameters, for the cell. For example, the block may be/comprise one of {[DTX 1, DRX 1, DTX 2], [DTX 1, DRX 1, DRX 2], [DTX 1, DTX 2, DRX 2], [DRX 1, DTX 2, DRX 2]}.

For example, a block of the one or more blocks may be 1 bit if one of: the first DTX, the second DTX, the first DRX, and the second DRX are configured/indicated, by the one or more configuration parameters, for the cell. For example, the block may be/comprise one of {[DTX 1], [DRX 1], [DTX 2], [DRX 2]}.

A starting position of a DTX/DRX (or a DTX/DRX indicator field) of a TRP in a block of the one or more blocks may be determined, by the wireless device and/or the base station, by a position parameter (e.g., *positionInDCI-TRPDTRX*). The one or more configuration parameters may comprise the position parameter. For example, a wireless device configured with (or served by) both the first TRP and the second TRP may be indicated by a starting position of the block (e.g., starting position of DTX 1 in Block 1 in FIG. 19A). The position parameter may indicate the starting position of the block. For example, a wireless device configured with (or served by) the first TRP only may be indicated by a starting position of the block (e.g., starting position of DTX 1 in Block 1 in FIG. 19A). The position parameter may indicate the starting position of the block. The wireless discards/ignores DTX 2 and DRX 2, in the block, associated with the second TRP. For example, a wireless device configured with (or served by) the second TRP only may be indicated by a starting position of the DTX/DRX (or a DTX/DRX indicator field in the block) associated with the second TRP (e.g., starting position of DTX 2 in Block 1 in FIG. 19A). The position parameter may indicate the starting position of the DTX/DRX, in the block, associated with the second TRP. The wireless discards/ignores DTX 1 and DRX 1, in the block, associated with the first TRP.

A size/length of each block of the one or more blocks may be at least two bits (e.g., 2 bits, 3 bits). Each block may comprise/indicate a respective DTX/DRX indicator field (e.g., DTX/DRX indicator field) and a respective index/indicator field (e.g., TRP index/indicator, CORESET pool index, SRS resource set index/indicator, antenna panel index/indicator, physical cell index/identifier, and the like). An index/indicator field in a block of the one or more blocks may be 1 bit. A respective index/indicator field in each block of the one or more blocks may be 1 bit.

Each bit of a DTX/DRX indicator field (e.g., DTX/DRX indicator field) in the block may indicate activation or deactivation of one of: the first DTX and the first DRX, for example, if a value of an index/indicator field in a block of the one or more blocks is equal/set to a first value (e.g., 0). A first value (e.g., '0') for a bit of the DTX/DRX indicator field in the block may indicate deactivation of the first DTX or the first DRX, where the bit corresponds to (or is associated with) the first DTX or the first DRX, respectively. A second value (e.g., '1') for a bit of the DTX/DRX indicator field in the block may indicate activation of the first DTX and the first DRX, where the bit corresponds to (or is associated with) the first DTX or the first DRX, respectively.

Each bit of a DTX/DRX indicator field (e.g., DTX/DRX indicator field) in the block may indicate activation or deactivation of one of: the second DTX and the second DRX, for example, if a value of an index/indicator field in a block of the one or more blocks is equal/set to a second value (e.g., 1). A first value (e.g., '0') for a bit of the DTX/DRX indicator field may indicate deactivation of the second DTX or the second DRX, where the bit corresponds to (or is associated with) the second DTX or the second DRX, respectively. A second value (e.g., '1') for a bit of the DTX/DRX indicator field may indicate activation of the second DTX and the second DRX, where the bit corresponds to (or is associated with) the second DTX or the second DRX, respectively.

The index/indicator field in the block may be located/positioned after the DTX/DRX indicator field in the block. The index/indicator field in the block may not be located/positioned before the DTX/DRX indicator field in the block.

For example, the block may be 3 bits if the first DTX and the first DRX are configured/indicated, by the one or more configuration parameters, for the cell, if an index/indicator field in a block (e.g., Block 1 in FIG. 19B) of the one or more blocks is equal/set to a first value (e.g., 0). The most-significant bit (MSB) of the 3 bits of the block may correspond to the first DTX (e.g., DTX 1 in FIG. 19B). The second MSB of the 3 bits of the block may correspond to the first DRX (e.g., DRX 1 in FIG. 19B). The least-significant bit (LSB) of the 3 bits of the block may correspond to the index/indicator field (e.g., 0 in Block 1 in FIG. 19B). The block may comprise the index/indicator field (e.g., 1 bit) and a DTX/DRX indicator field (e.g., 2 bits).

A first value (e.g., '0') for the MSB of the DTX/DRX indicator field may indicate deactivation of the first DTX. A second value (e.g., '1') for the MSB of the DTX/DRX indicator field may indicate activation of the first DTX.

A first value (e.g., '0') for the second MSB of the DTX/DRX indicator field may indicate deactivation of the first DRX. A second value (e.g., '1') for the second MSB of the DTX/DRX indicator field may indicate activation of the first DRX.

For example, the block may be 3 bits if the second DTX and the second DRX are configured/indicated, by the one or more configuration parameters, for the cell, if an index/indicator field in a block (e.g., Block 3 in FIG. 19B) of the one or more blocks is equal/set to a second value (e.g., 1). The most-significant bit (MSB) of the 3 bits of the block may correspond to the second DTX (e.g., DTX 2 in FIG. 19B). The second MSB of the 3 bits of the block may correspond to the second DRX (e.g., DRX 2 in FIG. 19B). The least-significant bit (LSB) of the 3 bits of the block may correspond to the index/indicator field (e.g., 1 in Block 3 in FIG. 19B). The block may comprise the index/indicator field (e.g., 1 bit) and a DTX/DRX indicator field (e.g., 2 bits).

A first value (e.g., '0') for the MSB of the DTX/DRX indicator field may indicate deactivation of the second DTX. A second value (e.g., '1') for the MSB of the DTX/DRX indicator field may indicate activation of the second DTX.

A first value (e.g., '0') for the second MSB of the DTX/DRX indicator field may indicate deactivation of the second DRX. A second value (e.g., '1') for the second MSB of the DTX/DRX indicator field may indicate activation of the second DRX.

For example, the block may be 2 bits if either the first DTX or the first DRX (e.g., only one of the first DTX and the first DRX) is configured/indicated, by the one or more configuration parameters, for the cell, if an index/indicator field in a block (e.g., Block N-1 in FIG. 19B) of the one or more blocks is equal/set to a first value (e.g., 0). The most-significant bit (MSB) of the 2 bits of the block may correspond to the first DTX (e.g., DTX 1 in FIG. 19B) or the first DRX. The least-significant bit (LSB) of the 2 bits of the block may correspond to the index/indicator field (e.g., 0 in Block N-1 in FIG. 19B). The block may comprise the index/indicator field (e.g., 1 bit) and a DTX/DRX indicator field (e.g., 1 bit).

A first value (e.g., '0') for the MSB of the DTX/DRX indicator field may indicate deactivation of the first DTX or the first DRX. A second value (e.g., '1') for the MSB of the DTX/DRX indicator field may indicate activation of the first DTX or the first DRX.

For example, the block may be 2 bits if either the second DTX or the second DRX (e.g., only one of the second DTX and the second DRX) is configured/indicated, by the one or more configuration parameters, for the cell, if an index/indicator field in a block (e.g., Block N in FIG. 19B) of the one or more blocks is equal/set to a second value (e.g., 1). The most-significant bit (MSB) of the 2 bits of the block may correspond to the second DTX or the second DRX (e.g., DRX 2 in FIG. 19B). The least-significant bit (LSB) of the 2 bits of the block may correspond to the index/indicator field (e.g., 1 in Block N in FIG. 19B). The block may comprise the index/indicator field (e.g., 1 bit) and a DTX/DRX indicator field (e.g., 1 bit).

A first value (e.g., '0') for the MSB of the DTX/DRX indicator field may indicate deactivation of the second DTX or the second DRX. A second value (e.g., ') for the MSB of the DTX/DRX indicator field may indicate activation of the second DTX or the second DRX.

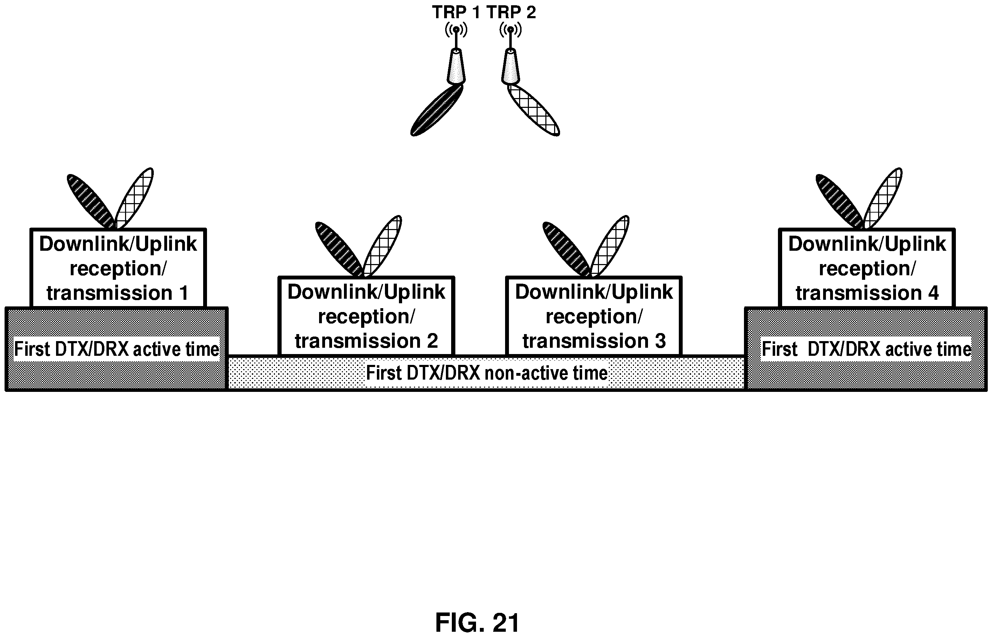

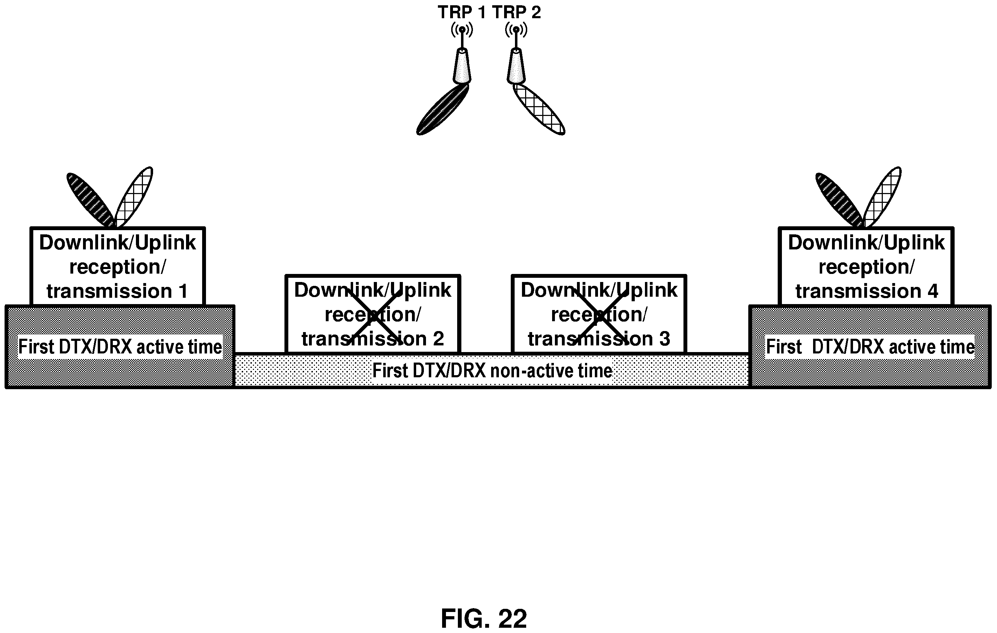

FIG. 20 shows an example of a discontinuous transmission within active and non-active durations for energy saving. FIG. 21 shows an example of a discontinuous transmission within active and non-active durations for energy saving. FIG. 22 shows an example of a discontinuous transmission within active and non-active durations for energy saving.

In some examples shown in FIG. 20, FIG. 21, and FIG. 22, Downlink reception 1, Downlink reception 2, Downlink reception 3, and Downlink reception 4 may be, for example, PDSCH receptions. The downlink reception scheduled by the control command may be, for example, Downlink reception 1. The downlink reception scheduled by the control command may be, for example, Downlink reception 2. The downlink reception scheduled by the control command may be, for example, Downlink reception 3. The downlink reception scheduled by the control command may be, for example, Downlink reception 4.

In some examples shown in FIG. 20, FIG. 21, and FIG. 22, Downlink reception 1, Downlink reception 2, Downlink reception 3, and Downlink reception 4 may be, for example, PDSCH receptions of the SPS configuration. The downlink reception activated by the control command may be, for example, Downlink reception 1. The downlink reception activated by the control command may be, for example, Downlink reception 2. The downlink reception activated by the control command may be, for example, Downlink reception 3. The downlink reception activated by the control command may be, for example, Downlink reception 4.

In some examples shown, FIG. 20, FIG. 21, and FIG. 22, Downlink reception 1 and Downlink reception 4 may be in an active time/duration/period of the first DTX (e.g., First DTX active time). Downlink reception 2 and Downlink reception 3 may be in a non-active time/duration/period of the first DTX (e.g., First DTX non-active time).

The wireless device may receive the downlink reception (e.g., at time T4 in FIG. 17). The wireless device may receive, via the downlink BWP of the cell, the downlink reception.

The wireless device may receive the downlink reception (e.g., Downlink reception 1 and Downlink reception 4 during/in First DTX active time in FIG. 20, FIG. 21, and FIG. 22, and Downlink reception 2 and Downlink reception 3 during/in First DTX non-active time in FIG. 21), for example, based on the at least two TCI states.

The wireless device may receive the downlink reception based on the at least two TCI states, for example, based on the control command (e.g., Second control command at time T2 in FIG. 17) comprising the TCI selection field with the value (e.g., '10').

The wireless device may receive the downlink reception based on the at least two TCI states, for example, based on the control command (e.g., Second control command at time T2 in FIG. 17) not comprising a TCI selection field.

The wireless device may receive the downlink reception based on the at least two TCI states, for example, based on the one or more configuration parameters comprising the apply-indicated-TCI-state parameter (e.g., *applyIndicatedTCIState*) set to 'both'.

The control command scheduling/activating the downlink reception may comprise an antenna ports field.

In some examples, the one or more configuration parameters may comprise a repetition scheme parameter (e.g., *repetitionScheme)* indicating a repetition scheme. The repetition scheme may be a frequency domain repetition scheme (e.g., 'fdmSchemeA', 'fdmSchemeB'). The repetition scheme may be a time domain repetition scheme (e.g., 'tdmSchemeA'). The antenna ports field may indicate at least one DM-RS port within one code-division-multiplexing (CDM) group. The antenna ports field may indicate DM-RS port(s) within one CDM group.

The wireless device may receive repetitions of the downlink reception based on the at least two TCI states, for example, based on the one or more configuration parameters comprising the repetition scheme parameter (e.g., *repetitionScheme)* that indicates the repetition scheme.

In some examples, the control command scheduling/activating the downlink reception may comprise a TDRA field indicating an entry, in an TDRA table (e.g., *PDSCH-TimeDomainResourceAllocation*), that comprises a number of repetitions (e.g., *repetitionNumber).* The wireless device may receive repetitions of the downlink reception based on the at least two TCI states, for example, based on the control command comprising the TDRA field indicating the number of repetitions. A number of the repetitions of the downlink reception may be equal to the number of repetitions in the entry. The antenna ports field may indicate at least one DM-RS port within one code-division-multiplexing (CDM) group. The antenna ports field may indicate DM-RS port(s) within one CDM group.

In some examples, the wireless device may receive one or more first repetitions of the downlink reception based on the first TCI state. The wireless device may receive one or more second repetitions of the downlink reception based on the second TCI state. At least one DM-RS antenna port of the downlink reception may be quasi co-located with the first reference signal indicated by the first TCI state, for example, in the one or more first repetitions (or one or more first transmission occasions of the one or more first repetitions). The at least one DM-RS antenna port of the downlink reception may be quasi co-located with the first reference signal with respect to the first quasi co-location type indicated by the first TCI state. The at least one DM-RS antenna port of the downlink reception may be quasi co-located with the second reference signal indicated by the second TCI state, for example, in the one or more second repetitions (or one or more second transmission occasions of the one or more second repetitions). The at least one DM-RS antenna port of the downlink reception may be quasi co-located with the second reference signal with respect to the second quasi co-location type indicated by the second TCI state.

The repetitions of the downlink reception may comprise the one or more first repetitions of the downlink reception and the one or more second repetitions of the downlink reception.

In some examples, the one or more configuration parameters may comprise an SFN parameter (e.g., *sfnSchemePdsch)* indicating a SFN scheme for PDSCH receptions. At least one DM-RS antenna port of the downlink reception may be quasi co-located with the first reference signal indicated by the first TCI state. The at least one DM-RS antenna port of the downlink reception may be quasi co-located with the first reference signal with respect to the first quasi co-location type indicated by the first TCI state. The at least one DM-RS antenna port of the downlink reception may be quasi co-located with the second reference signal indicated by the second TCI state. The at least one DM-RS antenna port of the downlink reception may be quasi co-located with the second reference signal with respect to the second quasi co-location type indicated by the second TCI state. At least one DM-RS antenna port of the downlink reception may be quasi co-located with both the first reference signal indicated by the first TCI state and the second reference signal indicated by the second TCI state.

In some examples, the one or more configuration parameters may not comprise an SFN parameter (e.g., *sfnSchemePdsch*) indicating an SFN scheme for PDSCH receptions. The TDRA field may not indicate an entry, in an TDRA table (e.g., *PDSCH-TimeDomainResourceAllocatiori*), that comprises a number of repetitions (e.g., *repetition-*

*Number).* In some examples, the antenna ports field may indicate at least one DM-RS port within two CDM groups. The antenna ports field may indicate DM-RS port(s) within two CDM groups. The wireless device may receive one or more first layers (or data streams) of the downlink reception based on the first TCI state. The wireless device may receive one or more second layers (or data streams) of the downlink reception based on the second TCI state. At least one first DM-RS antenna port of the downlink reception may be quasi co-located with the first reference signal indicated by the first TCI state. The at least one first DM-RS antenna port of the downlink reception may be quasi co-located with the first reference signal with respect to the first quasi co-location type indicated by the first TCI state. At least one second DM-RS antenna port of the downlink reception may be quasi co-located with the second reference signal indicated by the second TCI state. The at least one second DM-RS antenna port of the downlink reception may be quasi co-located with the second reference signal with respect to the second quasi co-location type indicated by the second TCI state. The at least one first DM-RS antenna port and the at least one second DM-RS antenna port may be, for example, different. The first TCI state may correspond to a first CDM group of the two CDM groups. The second TCI state may correspond to a second CDM group of the two CDM groups.

The one or more configuration parameters may comprise a CJT scheme parameter (e.g., *cjtSchemePDSCH*) indicating/configuring a CJT transmission/reception scheme for PDSCH receptions.

The first quasi co-location type of the first TCI state may comprise one or more first QCL parameters. The one or more first QCL parameters may comprise a first doppler shift, a first doppler spread, a first average delay, and a first delay spread.

The second quasi co-location type of the second TCI state may comprise one or more second QCL parameters. The one or more second QCL parameters may comprise a second doppler shift, a second doppler spread, a second average delay, and a second delay spread.

In some examples, the CJT scheme parameter may be set to a first CJT scheme (e.g., *cjtSchemeA*).

In the first CJT scheme, at least one DM-RS port of the downlink reception may be quasi co-located with the first reference signal with respect to the first quasi co-location type (e.g., QCL Type A). The at least one DM-RS port of the downlink reception may be quasi co-located with the second reference signal with respect to the second quasi co-location type (e.g., QCL Type A).

In the first CJT scheme, at least one DM-RS port of the downlink reception may be quasi co-located with the first reference signal with respect to the first quasi co-location type (e.g., QCL Type A) that comprises/indicates the first doppler shift, the first doppler spread, the first average delay, and the first delay spread. The at least one DM-RS port of the downlink reception may be quasi co-located with the second reference signal with respect to the second quasi co-location type (e.g., QCL Type A) that comprises/indicates the second doppler shift, the second doppler spread, the second average delay, and the second delay spread.

In the first CJT scheme, at least one DM-RS port of the downlink reception may be quasi co-located with the first reference signal with respect to the one or more first QCL parameters. The at least one DM-RS port of the downlink reception may be quasi co-located with the second reference signal with respect to the one or more second QCL parameters.

In some examples, the CJT scheme parameter may be set to a second CJT scheme (e.g., *cjtSchemeB*).

In the second CJT scheme, at least one DM-RS port of the downlink reception may be quasi co-located with the first reference signal with respect to the first quasi co-location type (e.g., QCL Type A). The at least one DM-RS port of the downlink reception may be quasi co-located with the second reference signal with respect to the second quasi co-location type (e.g., QCL Type A) except the second doppler shift and the second doppler spread of the second TCI state.

In the second CJT scheme, at least one DM-RS port of the downlink reception may be quasi co-located with the first reference signal with respect to the first quasi co-location type (e.g., QCL Type A) that comprises/indicates the first doppler shift, the first doppler spread, the first average delay, and the first delay spread. The at least one DM-RS port of the downlink reception may be quasi co-located with the second reference signal with respect to the second average delay and the second delay spread of the second TCI state. The at least one DM-RS port of the downlink reception may not be quasi co-located with the second reference signal with respect to the second doppler shift and the second doppler spread.

In the second CJT scheme, at least one DM-RS port of the downlink reception may be quasi co-located with the first reference signal with respect to the one or more first QCL parameters. The at least one DM-RS port of the downlink reception may be quasi co-located with the second reference signal with respect to the one or more second QCL parameters except the second doppler shift and the second doppler spread.

In some examples, the one or more configuration parameters may comprise the one or more first DTX configuration parameters of the first DTX of the cell and the one or more second DTX configuration parameters of the second DTX of the cell (e.g., both the first DTX and the second DTX are configured). In some examples, the control command (e.g., Third control command in FIG. 17) or a different control command (e.g., DCI format 2_9, DCI format 2_10, and the like) may indicate activation of the first DTX. In some examples, the control command (e.g., Third control command in FIG. 17) or a different control command (e.g., DCI format 2_9, DCI format 2_10, and the like) may indicate activation of the second DTX.

The wireless device may receive the downlink reception based on the at least two TCI states, for example, during an active time/duration/period of the first DTX (e.g., First DTX active time in FIG. 20, FIG. 21, and FIG. 22) and an active time/duration/period of the second DTX. The wireless device may receive the downlink reception based on the at least two TCI states, for example, based on the downlink reception overlapping in time with the active time/duration/period of the first DTX and the active time/duration/period of the second DTX. In some examples, the downlink reception may overlap in at least one symbol with the active time/duration/period of the first DTX. The downlink reception may overlap in at least one symbol with the active time/duration/period of the second DTX. In some examples, each symbol of the downlink reception may overlap in time with the active time/duration/period of the first DTX. Each symbol of the downlink reception may overlap in time with the active time/duration/period of the second DTX.

The wireless device may receive the control command scheduling/activation the downlink reception, for example, during the active time/duration/period of the first DTX. The wireless device may receive the downlink reception based on the at least two TCI states, for example, based on receiving the control command scheduling/activation the downlink reception during the active time/duration/period of the first DTX.

The wireless device may receive the control command scheduling/activation the downlink reception, for example, during the active time/duration/period of the second DTX. The wireless device may receive the downlink reception based on the at least two TCI states, for example, based on receiving the control command scheduling/activation the downlink reception during the active time/duration/period of the second DTX.

The wireless device may receive the control command scheduling/activation the downlink reception, for example, during the active time/duration/period of the first DTX and the active time/duration/period of the second DTX. The wireless device may receive the downlink reception based on the at least two TCI states, for example, based on receiving the control command scheduling/activation the downlink reception during the active time/duration/period of the first DTX and the active time/duration/period of the second DTX.

The wireless device may receive the downlink reception based on the at least two TCI states, for example, based on the downlink reception being in the active time/duration/period of the first DTX and the active time/duration/period of the second DTX. In some examples, at least one symbol of the downlink reception may be in the active time/duration/period of the first DTX. The at least one symbol of the downlink reception may be in the active time/duration/period of the second DTX. In some examples, each symbol of the downlink reception may be in the active time/duration/period of the first DTX.

In some examples, the one or more configuration parameters may comprise the one or more first DTX configuration parameters of the first DTX of the cell (e.g., the first DTX is configured). The one or more configuration parameters may not comprise one or more second DTX configuration parameters of a second DTX of the cell (e.g., the second DTX is not configured). In some examples, the control command (e.g., Third control command in FIG. 17) may indicate activation of the first DTX.

The wireless device may receive the downlink reception based on the at least two TCI states, for example, during an active time/duration/period of the first DTX, for example, if the one or more configuration parameters do not comprise one or more second DTX configuration parameters of a second DTX of the cell (e.g., the second DTX is not configured). The wireless device may receive the downlink reception based on the at least two TCI states, for example, based on the downlink reception overlapping in time with the active time/duration/period of the first DTX, for example, if the one or more configuration parameters do not comprise one or more second DTX configuration parameters of a second DTX of the cell (e.g., the second DTX is not configured). The wireless device may receive the downlink reception based on the at least two TCI states, for example, based on the downlink reception being in the active time/duration/period of the first DTX, for example, if the one or more configuration parameters do not comprise one or more second DTX configuration parameters of a second DTX of the cell (e.g., the second DTX is not configured).

In some examples, the one or more configuration parameters may comprise the one or more second DTX configuration parameters of the second DTX of the cell (e.g., the second DTX is configured). The one or more configuration parameters may not comprise one or more first DTX configuration parameters of a first DTX of the cell (e.g., the first DTX is not configured). In some examples, the control command (e.g., Third control command in FIG. 17) may indicate activation of the second DTX.

The wireless device may receive the downlink reception based on the at least two TCI states, for example, during an active time/duration/period of the second DTX, for example, if the one or more configuration parameters do not comprise one or more first DTX configuration parameters of a first DTX of the cell (e.g., the first DTX is not configured). The wireless device may receive the downlink reception based on the at least two TCI states, for example, based on the downlink reception overlapping in time with the active time/duration/period of the second DTX, for example, if the one or more configuration parameters do not comprise one or more first DTX configuration parameters of a first DTX of the cell (e.g., the first DTX is not configured). The wireless device may receive the downlink reception based on the at least two TCI states, for example, based on the downlink reception being in the active time/duration/period of the second DTX, for example, if the one or more configuration parameters do not comprise one or more first DTX configuration parameters of a first DTX of the cell (e.g., the first DTX is not configured).

In some examples, the one or more configuration parameters may comprise the one or more first DTX configuration parameters of the first DTX of the cell. The one or more configuration parameters may comprise the one or more second DTX configuration parameters of the second DTX of the cell. In some examples, the control command (e.g., Third control command in FIG. 17) may indicate activation of the first DTX. The second DTX may not be activated by the wireless device and/or the base station. The wireless device may not receive a control command (e.g., DCI format 2_9, DCI format 2_10, and the like) indicating activation of the second DTX.

The wireless device may receive the downlink reception based on the at least two TCI states, for example, during an active time/duration/period of the first DTX, for example, the second DTX of the cell is not activated. The wireless device may receive the downlink reception based on the at least two TCI states, for example, based on the downlink reception overlapping in time with the active time/duration/period of the first DTX, for example, if the second DTX of the cell is not activated. The wireless device may receive the downlink reception based on the at least two TCI states, for example, based on the downlink reception being in the active time/duration/period of the first DTX, for example, if the second DTX of the cell is not activated.

In some examples, the one or more configuration parameters may comprise the one or more first DTX configuration parameters of the first DTX of the cell. The one or more configuration parameters may comprise the one or more second DTX configuration parameters of the second DTX of the cell. In some examples, the control command (e.g., Third control command in FIG. 17) may indicate activation of the second DTX. The first DTX may not be activated by the wireless device and/or the base station. The wireless device may not receive a control command (e.g., DCI format 2_9, DCI format 2_10, and the like) indicating activation of the first DTX.

The wireless device may receive the downlink reception based on the at least two TCI states, for example, during an active time/duration/period of the second DTX, for example, if the first DTX of the cell is not activated. The wireless device may receive the downlink reception based on the at least two TCI states, for example, based on the downlink reception overlapping in time with the active time/duration/period of the second DTX, for example, if the first DTX of the cell is not activated. The wireless device may receive the downlink reception based on the at least two TCI states, for example, based on the downlink reception being in the active time/duration/period of the second DTX, for example, if the first DTX of the cell is not activated.

A wireless device may receive, from a base station, one or more messages (e.g., RRC messages, RRC reconfiguration messages) comprising one or more configuration parameters. The base station may transmit the one or more messages. The one or more configuration parameters may indicate/provide/comprise, by a first DTX higher layer parameter (e.g., *TRP-DTX-Config*) of the one or more configuration parameters, a first DTX configuration of a cell (e.g., a serving cell, a non-serving cell, a candidate/target/neighbor cell). If the wireless device transmits/provides/reports a capability of two DTX per/for cell (e.g., *twoDTXcapability*), the one or more configuration parameters may indicate/provide/comprise, by a second DTX higher layer parameter (e.g., *TRP-DTX Config2*) of the one or more configuration parameters, a second DTX configuration of the cell.

The wireless device may apply two indicated TCI states (or both indicated TCI states or each TCI state of the two indicated TCI states) to a scheduled/activated PDSCH reception if:

- the first DRX configuration and the second DRX configuration are not configured by the one or more messages (or the one or more configuration parameters), or
- the first DRX configuration is not configured or activated, and the second DRX configuration is not configured or activated, or
- the first DRX configuration is not configured or activated, and the scheduled/activated PDSCH reception overlaps with (or is in) an active time/period/duration of the second DRX configuration, or
- the second DRX configuration is not configured or activated, and the scheduled/activated PDSCH reception overlaps with (or is in) an active time/period/duration of the first DRX configuration, or
- the scheduled/activated PDSCH reception overlaps with (or is in) an active time/period/duration of the first DRX configuration and an active time/period/duration of the second DRX configuration.

Applying a TCI state to a downlink reception may comprise receiving the downlink reception based on a reference signal indicated by the TCI state. At least one DM-RS port (or at least one DM-RS antenna port) of the downlink reception may be quasi co-located with the reference signal. The wireless device may receive the downlink reception with/using a spatial domain reception/receiving filter/beam that is the same as (or substantially same as) a spatial domain reception/receiving filter/beam of the reference signal.

Applying a TCI state to a downlink reception may comprise measuring a radio link quality (e.g., RSRP, SINR, SNR) of the downlink reception based on a reference signal indicated by the TCI state. At least one CSI-RS port (or at least one CSI-RS antenna port) of the downlink reception may be quasi co-located with the reference signal. The wireless device may measure the downlink reception with/using a spatial domain reception/receiving filter/beam that is the same as (or substantially same as) a spatial domain reception/receiving filter/beam of the reference signal.

A wireless device may be provided/indicated, by a first DTX higher layer parameter (e.g., *TRP-DTX-Config, DTX*

*Config1*), a first DTX configuration of a cell, and, if the wireless device provides a capability of two DTXs per cell (e.g., *twoDTXcapability*), the wireless device may be provided, by a second DTX higher layer parameter (e.g., *TRP2-DTX-Config, DTX-Config2*), a second DTX configuration of the cell.

The wireless device may apply both of the two indicated TCI states to a scheduled or an activated PDSCH reception if the first DTX configuration and/or the second DTX configuration are not configured and/or activated, or the scheduled/activated PDSCH reception overlaps with (or is in) an active time/period/duration of the first DTX configuration and an active time/period/duration of the second DTX configuration.

The wireless device may receive the downlink reception (e.g., Downlink reception 2 and Downlink reception 3 during/in First DTX non-active time in FIG. 20), for example, based on a TCI state (a single TCI state) of the at least two TCI states. The wireless device may use the TCI state for the downlink reception. The wireless device may apply the TCI state to/for the downlink reception. The TCI state may be, for example, the first TCI state of the at least two TCI states. The TCI state may be, for example, the second TCI state of the at least two TCI states.

The wireless device may fall back to the TCI state for the downlink reception associated/indicated with the at least two TCI states. The wireless device may fall back to the TCI state from the at least two TCI states for the downlink reception associated/indicated with the at least two TCI states. The wireless device may fall back to using/applying the TCI state for/to the downlink reception associated/indicated with the at least two TCI states.

The wireless device may receive the downlink reception based on the TCI state, for example, during a non-active time of the DTX of the cell. The wireless device may use/apply the TCI state to/for the downlink reception, for example, during the non-active time of the DTX. The wireless device may fall back to the TCI state for the downlink reception, for example, during the non-active time of the DTX.

The TCI state may be, for example, the first TCI state. The at least two TCI states may comprise the first TCI state. The TCI state may be, for example, the second TCI state. The at least two TCI states may comprise the second TCI state.

In some examples, the DTX of the cell activated by the control command (e.g., Third control command in FIG. 17) may be the first DTX of the cell. The TCI state used for the downlink reception may be the second TCI state of the at least two TCI states.

The wireless device may receive the downlink reception (e.g., Downlink reception 2 and Downlink reception 3 during First DTX non-active time in FIG. 20) based on the second TCI state of the at least two TCI states, for example, during a non-active time/duration/period of the first DTX (e.g., First DTX non-active time in FIG. 20). The wireless device may not receive the downlink reception based on the first TCI state of the at least two TCI states, for example, during the non-active time/duration/period of the first DTX. The wireless device may apply the second TCI state to/for the downlink reception during the non-active time/duration/period of the first DTX. The wireless device may use the second TCI state for the downlink reception during the non-active time/duration/period of the first DTX.

During the non-active time/duration/period of the first DTX, the wireless device may fall back to the second TCI state from the at least two TCI states for the downlink reception associated/indicated with the at least two TCI states.

The wireless device may receive the control command scheduling/activation the downlink reception, for example, during the non-active time/duration/period of the first DTX. The wireless device may receive the downlink reception based on the second TCI state, for example, based on receiving the control command scheduling/activation the downlink reception during the non-active time/duration/period of the first DTX.

The wireless device may receive the control command scheduling/activation the downlink reception, for example, during the active time/duration/period of the second DTX. The wireless device may receive the downlink reception based on the second TCI state, for example, based on receiving the control command scheduling/activation the downlink reception during the active time/duration/period of the second DTX.

The wireless device may receive the downlink reception based on the second TCI state of the at least two TCI states, for example, based on the downlink reception overlapping in time with the non-active time/duration/period of the first DTX. The wireless device may receive the downlink reception based on the second TCI state of the at least two TCI states, for example, based on the downlink reception being in the non-active time/duration/period of the first DTX. In some examples, the downlink reception may overlap in at least one symbol with the non-active time/duration/period of the first DTX. In some examples, each symbol of the downlink reception may overlap in time with the non-active time/duration/period of the first DTX.

The wireless device may not receive the downlink reception based on the first TCI state of the at least two TCI states, for example, based on the downlink reception overlapping in time with the non-active time/duration/period of the first DTX. The wireless device may not receive the downlink reception based on the first TCI state of the at least two TCI states, for example, based on the downlink reception being in the non-active time/duration/period of the first DTX.

In some examples, the one or more configuration parameters may comprise the one or more second DTX configuration parameters of the second DTX of the cell. The control command (e.g., Third control command in FIG. 17) or a different control command (e.g., DCI format 2_9, DCI format 2_10, and the like) may indicate activation of the second DTX. The wireless device may receive the downlink reception based on the second TCI state of the at least two TCI states, for example, during an active time/duration/period of the second DTX. The wireless device may receive the downlink reception based on the second TCI state of the at least two TCI states, for example, based on the downlink reception overlapping in time with the active time/duration/period of the second DTX. The wireless device may receive the downlink reception based on the second TCI state of the at least two TCI states, for example, based on the downlink reception being in the active time/duration/period of the second DTX.

In some examples, the downlink reception may overlap in at least one symbol with the active time/duration/period of the second DTX. In some examples, each symbol of the downlink reception may overlap in time with the active time/duration/period of the second DTX.

In some examples, the one or more configuration parameters may not comprise one or more second DTX configuration parameters of a second DTX of the cell (e.g., the second DTX is not configured). The wireless device may receive the downlink reception based on the second TCI state of the at least two TCI states, for example, based on the one or more configuration parameters not comprising the one or more second DTX configuration parameters of the second DTX of the cell.

In some examples, the one or more configuration parameters may comprise the one or more second DTX configuration parameters of a second DTX of the cell (e.g., the second DTX is configured). The second DTX may not be activated by the wireless device and/or the base station. The wireless device may not receive a control command (e.g., DCI format 2_9, DCI format 2_10, and the like) indicating activation of the second DTX. The wireless device may receive the downlink reception based on the second TCI state of the at least two TCI states, for example, based on not receiving a control command (e.g., Third control command in FIG. 17, DCI format 2_9, DCI format 2_10, and the like) indicating activation of the second DTX of the cell.

In some examples, the DTX of the cell activated by the control command (e.g., Third control command in FIG. 17) may be the second DTX of the cell. The TCI state used for the downlink reception may be the first TCI state of the at least two TCI states.

The wireless device may receive the downlink reception based on the first TCI state of the at least two TCI states, for example, during a non-active time/duration/period of the second DTX. The wireless device may not receive the downlink reception based on the second TCI state of the at least two TCI states, for example, during the non-active time/duration/period of the second DTX. The wireless device may apply the first TCI state to/for the downlink reception during the non-active time/duration/period of the second DTX. The wireless device may use the first TCI state for the downlink reception during the non-active time/duration/period of the second DTX.

During the non-active time/duration/period of the second DTX, the wireless device may fall back to the first TCI state from the at least two TCI states for the downlink reception associated/indicated with the at least two TCI states.

The wireless device may receive the control command scheduling/activation the downlink reception, for example, during the non-active time/duration/period of the second DTX. The wireless device may receive the downlink reception based on the first TCI state, for example, based on receiving the control command scheduling/activation the downlink reception during the non-active time/duration/period of the second DTX.

The wireless device may receive the control command scheduling/activation the downlink reception, for example, during the active time/duration/period of the first DTX. The wireless device may receive the downlink reception based on the first TCI state, for example, based on receiving the control command scheduling/activation the downlink reception during the active time/duration/period of the first DTX.

The wireless device may receive the downlink reception based on the first TCI state of the at least two TCI states, for example, based on the downlink reception overlapping in time with the non-active time/duration/period of the second DTX. The wireless device may receive the downlink reception based on the first TCI state of the at least two TCI states, for example, based on the downlink reception being in the non-active time/duration/period of the second DTX.

In some examples, the downlink reception may overlap in at least one symbol with the non-active time/duration/period of the second DTX. In some examples, each symbol of the downlink reception may overlap in time with the non-active time/duration/period of the second DTX.

The wireless device may not receive the downlink reception based on the second TCI state of the at least two TCI states, for example, based on the downlink reception overlapping in time with the non-active time/duration/period of the second DTX. The wireless device may not receive the downlink reception based on the second TCI state of the at least two TCI states, for example, based on the downlink reception being in the non-active time/duration/period of the second DTX.

In some examples, the one or more configuration parameters may comprise the one or more first DTX configuration parameters of the first DTX of the cell. The control command (e.g., Third control command in FIG. 17) or a different control command (e.g., DCI format 2_9, DCI format 2_10, and the like) may indicate activation of the first DTX. The wireless device may receive the downlink reception based on the first TCI state of the at least two TCI states, for example, during an active time/duration/period of the first DTX. The wireless device may receive the downlink reception based on the first TCI state of the at least two TCI states, for example, based on the downlink reception overlapping in time with the active time/duration/period of the first DTX. The wireless device may receive the downlink reception based on the first TCI state of the at least two TCI states, for example, based on the downlink reception being in the active time/duration/period of the first DTX.

In some examples, the downlink reception may overlap in at least one symbol with the active time/duration/period of the first DTX. In some examples, each symbol of the downlink reception may overlap in time with the active time/duration/period of the first DTX.

In some examples, the one or more configuration parameters may not comprise one or more first DTX configuration parameters of a first DTX of the cell (e.g., the first DTX is not configured). The wireless device may receive the downlink reception based on the first TCI state of the at least two TCI states, for example, based on the one or more configuration parameters not comprising the one or more first DTX configuration parameters of the first DTX of the cell.

In some examples, the one or more configuration parameters may comprise the one or more first DTX configuration parameters of a first DTX of the cell (e.g., the first DTX is configured). The first DTX may not be activated by the wireless device and/or the base station. The wireless device may not receive a control command (e.g., Third control command in FIG. 17, DCI format 2_9, DCI format 2_10, and the like) indicating activation of the first DTX. The wireless device may receive the downlink reception based on the first TCI state of the at least two TCI states, for example, based on not receiving a control command (e.g., DCI format 2_9, DCI format 2_10, and the like) indicating activation of the first DTX of the cell.

When a wireless device would (or is supposed/configured/indicated/scheduled to) apply two indicated TCI states to a scheduled or an activated PDSCH reception (e.g., when a TCI selection field of a DCI format 1_1/1_2 scheduling/activating the PDSCH reception is set/equal to '10', or when the wireless device is not configured/indicated/provided with a higher layer parameter *tciSelection-PresentInDCI,* or when the wireless device is configured/indicated/provided with a higher layer parameter *applyIndicatedTCIState* set to 'both'), the wireless device may apply only:

- the first indicated TCI state of the two indicated TCI states to the scheduled or activated PDSCH reception:

    o if the PDSCH reception overlaps with (or is in) a non-active time/period/duration of the second DTX configuration, and
    o if the first DTX configuration is not configured/indicated/provided or activated, or if the PDSCH reception overlaps with (or is in) an active time/period/duration of the first DTX configuration, or

- the second indicated TCI state of the two indicated TCI states to the scheduled or activated PDSCH reception:

    o if the PDSCH reception overlaps with (or is in) a non-active time/period/duration of the first DTX configuration, and
    o if the second DTX configuration is not configured/indicated/provided or activated, or if the PDSCH reception overlaps with (or is in) an active time/period/duration of the second DTX configuration. If the wireless device is configured/indicated/provided with a higher layer parameter *cjtSchemeB,* the wireless device may assume that PDSCH DM-RS port(s) of the PDSCH reception are quasi co-located (QCLed) with downlink reference signal(s) of the second indicated TCI state with respect to QCL-TypeA {Doppler shift, Doppler spread, average delay, delay spread}.

When a base station indicates, to a wireless device, to apply two indicated TCI states to a scheduled or an activated PDSCH reception (e.g., when a TCI selection field of a DCI format 1_1/1_2 scheduling/activating the PDSCH reception is set/equal to '10', or when the base station configures/indicates/provides the wireless device with a higher layer parameter *tciSelection-PresentInDCI,* or when the base station configures/indicates/provides the wireless device with a higher layer parameter *applyIndicatedTCIState* set to 'both'), the base station may apply only:

- the first indicated TCI state of the two indicated TCI states to the scheduled or activated PDSCH reception:

    o if the PDSCH reception overlaps with (or is in) a non-active time/period/duration of the second DTX configuration, and
    o if the first DTX configuration is not configured/indicated/provided or activated, or if the PDSCH reception overlaps with (or is in) an active time/period/duration of the first DTX configuration, or

- the second indicated TCI state of the two indicated TCI states to the scheduled or activated PDSCH reception:

    o if the PDSCH reception overlaps with (or is in) a non-active time/period/duration of the first DTX configuration, and
    o if the second DTX configuration is not configured/indicated/provided or activated, or if the PDSCH reception overlaps with (or is in) an active time/period/duration of the second DTX configuration. If the base station configures/indicates/provides the wireless device with a higher layer parameter *cjtSchemeB,* the wireless device and/or the base station may assume that PDSCH DM-RS port(s) of the PDSCH reception are quasi co-located (QCLed) with downlink reference signal(s) of the second indicated TCI state with respect to QCL-TypeA {Doppler shift, Doppler spread, average delay, delay spread}.

Applying, by a base station, a TCI state to a downlink reception by a wireless device may comprise transmitting, to the wireless device, the downlink reception based on a reference signal indicated by the TCI state. In some examples, the base station may transmit, to the wireless device, the downlink reception with/using a spatial domain transmission/transmit filter/beam that is determined, by the base station, based on a spatial domain reception/receiving filter/beam used by the wireless device to receive the reference signal. In some examples, the base station may transmit, to the wireless device, the downlink reception with/using a spatial domain transmission/transmit filter/beam that is same (or substantially same) as a spatial domain transmission/transmit filter/beam used to transmit the reference signal to the wireless device.

Transmitting, by a base station to a wireless device, a downlink reception based on a TCI state may comprise transmitting, to the wireless device, the downlink reception based on a reference signal indicated by the TCI state. In some examples, the base station may transmit, to the wireless device, the downlink reception with/using a spatial domain transmission/transmit filter/beam that is determined, by the base station, based on a spatial domain reception/receiving filter/beam used by the wireless device to receive the reference signal. In some examples, the base station may transmit, to the wireless device, the downlink reception with/using a spatial domain transmission/transmit filter/beam that is same (or substantially same) as a spatial domain transmission/transmit filter/beam used to transmit the reference signal to the wireless device.

The wireless device may receive the downlink reception (e.g., Downlink reception 2 and Downlink reception 3 in FIG. 20) based on the TCI state of the at least two TCI states. The wireless device may receive, during the non-active time of the DTX of the cell, the downlink reception based on the TCI state of the at least two TCI states.

The wireless device may receive, during the non-active time of the DTX of the cell, the downlink reception based on the TCI state, for example, based on the one or more configuration parameters comprising the repetition scheme parameter (e.g., *repetitionScheme)* set to one of: 'fdmSchemeA', 'fdmSchemeB', 'tdmSchemeA'. The repetition scheme may be one of: 'fdmSchemeA', 'fdmSchemeB', 'tdmSchemeA'.

The wireless device may receive, during the non-active time of the DTX of the cell, the downlink reception based on the TCI state, for example, based on the TDRA field in the control command indicating an entry, in the TDRA table (e.g., *PDSCH-TimeDomainResourceAllocation*), that comprises a number of repetitions (e.g., *repetitionNumber)* for the downlink reception. The wireless device may receive, during the non-active time of the DTX of the cell, the downlink reception based on the TCI state, for example, based on the one or more configuration parameters comprising a repetition number parameter (e.g., *repetitionNumber)* in a higher layer parameter *PDSCH-TimeDomainResourceAllocation.*

The wireless device may receive, during the non-active time of the DTX of the cell, the downlink reception based on the TCI state, for example, based on the one or more configuration parameters comprising the SFN parameter (e.g., *sfnSchemePdsch*) indicating the SFN scheme for PDSCH receptions.

The wireless device may receive, during the non-active time of the DTX of the cell, the downlink reception based on the TCI state, for example, based on the antenna ports field indicating the at least one DM-RS port within one CDM group. The wireless device may receive, during the non-active time of the DTX of the cell, the downlink reception based on the TCI state, for example, based on the antenna ports field indicating the DM-RS port(s) within one CDM group. The wireless device may receive, during the non-active time of the DTX of the cell, the downlink reception based on the TCI state, for example, based on the antenna ports field not indicating DM-RS port(s) within two CDM groups.

The wireless device may fall back to the TCI state for the downlink reception during the non-active time of the DTX.

The wireless device may fall back to the TCI state for the downlink reception during the non-active time of the DTX, for example, based on the one or more configuration parameters comprising the repetition scheme parameter (e.g., *repetitionScheme)* set to one of: 'fdmSchemeA', 'fdmSchemeB', 'tdmSchemeA'.

The wireless device may fall back to the TCI state for the downlink reception during the non-active time of the DTX, for example, based on the TDRA field in the control command indicating an entry, in the TDRA table (e.g., *PDSCH-TimeDomainResourceAllocation*), that comprises a number of repetitions (e.g., *repetitionNumber)* for the downlink reception. The wireless device may fall back to the TCI state for the downlink reception during the non-active time of the DTX, for example, based on the one or more configuration parameters comprising a repetition number parameter (e.g., *repetitionNumber)* in a higher layer parameter *PDSCH-TimeDomainResourceAllocation.*

The wireless device may fall back to the TCI state for the downlink reception during the non-active time of the DTX, for example, based on the one or more configuration parameters comprising the SFN parameter (e.g., *sfnSchemePdsch)* indicating the SFN scheme for PDSCH receptions.

The wireless device may fall back to the TCI state for the downlink reception during the non-active time of the DTX, for example, based on the antenna ports field indicating the at least one DM-RS port within one CDM group. The wireless device may fall back to the TCI state for the downlink reception during the non-active time of the DTX, for example, based on the antenna ports field indicating the DM-RS port(s) within one CDM group. The wireless device may fall back to the TCI state for the downlink reception during the non-active time of the DTX, for example, based on the antenna ports field not indicating DM-RS port(s) within two CDM groups.

Falling back to the TCI state for the downlink reception may comprise switching to the TCI state for the downlink reception. The wireless device may not receive, during the non-active time of the DTX, the downlink reception based on a different TCI state from/than the TCI state. The wireless device may not receive, during the non-active time of the DTX, the downlink reception based on a different TCI state from/than the TCI state, for example, after falling back to the TCI state for the downlink reception.

The wireless device may receive, during the non-active time/duration/period of the first DTX, the downlink reception based on the second TCI state of the at least two TCI states.

The wireless device may receive, during the non-active time of the first DTX of the cell, the downlink reception based on the second TCI state, for example, based on the one or more configuration parameters comprising the repetition scheme parameter (e.g., *repetitionScheme*) set to one of: 'fdmSchemeA', 'fdmSchemeB', 'tdmSchemeA'. The repetition scheme may be one of: 'fdmSchemeA', 'fdmSchemeB', 'tdmSchemeA'.

The wireless device may receive, during the non-active time of the first DTX of the cell, the downlink reception based on the second TCI state, for example, based on the TDRA field in the control command indicating an entry, in the TDRA table (e.g., *PDSCH-TimeDomainResourceAllocation*), that comprises a number of repetitions (e.g., *repetition-Number)* for the downlink reception. The wireless device may receive, during the non-active time of the first DTX of the cell, the downlink reception based on the second TCI state, for example, based on the one or more configuration parameters comprising a repetition number parameter (e.g., *repetitionNumber)* in a higher layer parameter *PDSCH-TimeDomain-ResourceAllocation.*

The wireless device may receive, during the non-active time of the first DTX of the cell, the downlink reception based on the second TCI state, for example, based on the one or more configuration parameters comprising the SFN parameter (e.g., *sfnSchemePdsch*) indicating the SFN scheme for PDSCH receptions.

The wireless device may receive, during the non-active time of the first DTX of the cell, the downlink reception based on the second TCI state, for example, based on the antenna ports field indicating the at least one DM-RS port within one CDM group. The wireless device may receive, during the non-active time of the first DTX of the cell, the downlink reception based on the second TCI state, for example, based on the antenna ports field indicating the DM-RS port(s) within one CDM group. The wireless device may receive, during the non-active time of the first DTX of the cell, the downlink reception based on the second TCI state, for example, based on the antenna ports field not indicating DM-RS port(s) within two CDM groups.

In some examples, the downlink reception may overlap in time with the active time/duration/period of the second DTX (that is configured and activated). In some examples, the one or more configuration parameters may not comprise one or more second DTX configuration parameters of a second DTX of the cell (e.g., the second DTX is not configured). In some examples, the wireless device may not receive a control command (e.g., DCI format 2_9, DCI format 2_10, and the like) indicating activation of the second DTX of the cell (e.g., the second DTX is not activated).

The wireless device may receive, during the non-active time/duration/period of the second DTX, the downlink reception based on the first TCI state of the at least two TCI states.

The wireless device may receive, during the non-active time of the second DTX of the cell, the downlink reception based on the first TCI state, for example, based on the one or more configuration parameters comprising the repetition scheme parameter (e.g., *repetitionScheme*) set to one of: 'fdmSchemeA', 'fdmSchemeB', 'tdmSchemeA'. The repetition scheme may be one of: 'fdmSchemeA', 'fdmSchemeB', 'tdmSchemeA'.

The wireless device may receive, during the non-active time of the second DTX of the cell, the downlink reception based on the first TCI state, for example, based on the TDRA field in the control command indicating an entry, in the TDRA table (e.g., *PDSCH-TimeDomainResourceAllocation*), that comprises a number of repetitions (e.g., *repetitionNumber)* for the downlink reception. The wireless device may receive, during the non-active time of the second DTX of the cell, the downlink reception based on the first TCI state, for example, based on the one or more configuration parameters comprising a repetition number parameter (e.g., *repetitionNumber)* in a higher layer parameter *PDSCH-TimeDomain-ResourceAllocation.*

The wireless device may receive, during the non-active time of the second DTX of the cell, the downlink reception based on the first TCI state, for example, based on the one or more configuration parameters comprising the SFN parameter (e.g., *sfnSchemePdsch*) indicating the SFN scheme for PDSCH receptions.

The wireless device may receive, during the non-active time of the second DTX of the cell, the downlink reception based on the first TCI state, for example, based on the antenna ports field indicating the at least one DM-RS port within one CDM group. The wireless device may receive, during the non-active time of the second DTX of the cell, the downlink reception based on the first TCI state, for example, based on the antenna ports field indicating the DM-RS port(s) within one CDM group. The wireless device may receive, during the non-active time of the second DTX of the cell, the downlink reception based on the first TCI state, for example, based on the antenna ports field not indicating DM-RS port(s) within two CDM groups.

In some examples, the one or more configuration parameters may comprise one or more first DTX configuration parameters of the first DTX of the cell (e.g., the first DTX is configured). In some examples, the wireless device may receive a control command (e.g., Third control command in FIG. 17, DCI format 2_9, DCI format 2_10, and the like) indicating activation of the first DTX of the cell (The first DTX is configured and activated). The downlink reception may overlap in time with the active time/duration/period of the first DTX (that is configured and activated).

In some examples, the one or more configuration parameters may not comprise one or more first DTX configuration parameters of a first DTX of the cell (e.g., the first DTX is not configured). In some examples, the wireless device may not receive a control command (e.g., DCI format 2_9, DCI format 2_10, and the like) indicating activation of the first DTX of the cell (e.g., the first DTX is not activated).

A wireless device may apply only the first indicated TCI state of the two indicated TCI states to the scheduled/activated PDSCH reception, for example, if the wireless device would (or is supposed/configured/indicated/scheduled to) apply two indicated TCI states to a PDSCH reception (e.g., if a TCI selection field of a DCI format 1_1/1_2 scheduling/activating the PDSCH reception is set/equal to '10', or if the wireless device is not configured/indicated/provided with a higher layer parameter *tciSelection-PresentInDCI,* or if the wireless device is configured/indicated/provided with a higher layer parameter *applyIndicatedTCIState* set to 'both') scheduled/activated by a DCI with *'Antenna Port(s)'* field indicating DM-RS port(s) within one CDM group (or not indicating DM-RS port(s) within two CDM groups), and if the PDSCH reception overlaps with (or is in) a non-active time/period/duration of the second DTX configuration.

A wireless device may apply only the first indicated TCI state of the two indicated TCI states to the scheduled/activated PDSCH reception, for example, if the wireless device would (or is supposed/configured/indicated/scheduled to) apply two indicated TCI states to a PDSCH reception (e.g., if a TCI selection field of a DCI format 1_1/1_2 scheduling/activating the PDSCH reception is set/equal to '10', or if the wireless device is not configured/indicated/provided with a higher layer parameter *tciSelection-PresentInDCI,* or if the wireless device is configured/indicated/provided with a higher layer parameter *applyIndicatedTCIState* set to 'both') scheduled/activated by a DCI with *'Antenna Port(s)'* field indicating DM-RS port(s) within one CDM group (or not indicating DM-RS port(s) within two CDM groups), and if the first DTX configuration is not configured/indicated/provided/activated or if the PDSCH reception overlaps with (or is in) an active time/period/duration of the first DTX configuration.

A wireless device may apply only the second indicated TCI state of the two indicated TCI states to the scheduled/activated PDSCH reception, for example, if the wireless device would (or is supposed/configured/indicated/scheduled to) apply two indicated TCI states to a PDSCH reception (e.g., if a TCI selection field of a DCI format 1_1/1_2 scheduling/activating the PDSCH reception is set/equal to '10', or if the wireless device is not configured/indicated/provided with a higher layer parameter *tciSelection-PresentInDCI,* or if the wireless device is configured/indicated/provided with a higher layer parameter *applyIndicatedTCIState* set to 'both') scheduled/activated by a DCI with *'Antenna Port(s)'* field indicating DM-RS port(s) within one CDM group (or not indicating DM-RS port(s) within two CDM groups), and if the PDSCH reception overlaps with (or is in) a non-active time/period/duration of the first DTX configuration.

A wireless device may apply only the second indicated TCI state of the two indicated TCI states to the scheduled/activated PDSCH reception, for example, if the wireless device would (or is supposed/configured/indicated/scheduled to) apply two indicated TCI states to a PDSCH reception (e.g., if a TCI selection field of a DCI format 1_1/1_2 scheduling/activating the PDSCH reception is set/equal to '10', or if the wireless device is not configured/indicated/provided with a higher layer parameter *tciSelection-PresentInDCI,* or if the wireless device is configured/indicated/provided with a higher layer parameter *applyIndicatedTCIState* set to 'both') scheduled/activated by a DCI with *'Antenna Port(s)'* field indicating DM-RS port(s) within one CDM group (or not indicating DM-RS port(s) within two CDM groups), and if the second DTX configuration is not configured/indicated/provided/activated or if the PDSCH reception overlaps with (or is in) an active time/period/duration of the second DTX configuration. The wireless device may assume that PDSCH DM-RS port(s) of the PDSCH reception are quasi co-located (QCLed) with downlink reference signal(s) of the second indicated TCI state with respect to QCL-TypeA {Doppler shift, Doppler spread, average delay, delay spread}, for example, if the wireless device is configured/indicated/provided with a higher layer parameter *cjtSchemeB.*

A base station may apply only the first indicated TCI state of the two indicated TCI states to the scheduled/activated PDSCH reception, for example, if the base station indicates, to a wireless device, to apply two indicated TCI states to a PDSCH reception (e.g., if a TCI selection field of a DCI format 1_1/1_2 scheduling/activating the PDSCH reception is set/equal to '10', or if the base station configures/indicates/provides the wireless device with a higher layer parameter *tciSelection-PresentInDCI,* or if the base station configures/indicates/provides the wireless device with a higher layer parameter *applyIndicatedTCIState* set to 'both'), and if the base station transmits a DCI scheduling/activating the PDSCH reception, where *'Antenna Port(s)'* field in the DCI indicates DM-RS port(s) within one CDM group (or does not indicate DM-RS port(s) within two CDM groups), and if the PDSCH reception overlaps with (or is in) a non-active time/period/duration of the second DTX configuration.

A base station may apply only the first indicated TCI state of the two indicated TCI states to the scheduled/activated PDSCH reception, for example, if the base station indicates, to a wireless device, to apply two indicated TCI states to a PDSCH reception (e.g., if a TCI selection field of a DCI format 1_1/1_2 scheduling/activating the PDSCH reception is set/equal to '10', or if the base station configures/indicates/provides the wireless device with a higher layer parameter *tciSelection-PresentInDCI,* or if the base station configures/indicates/provides the wireless device with a higher layer parameter *applyIndicatedTCIState* set to 'both'), and if the base station transmits a DCI scheduling/activating the PDSCH reception, where *'Antenna Port(s)'* field in the DCI indicates DM-RS port(s) within one CDM group (or does not indicate DM-RS port(s) within two CDM groups), and if the first DTX configuration is not configured/indicated/provided/activated or if the PDSCH reception overlaps with (or is in) an active time/period/duration of the first DTX configuration.

A base station may apply only the second indicated TCI state of the two indicated TCI states to the scheduled/activated PDSCH reception, for example, if if the base station indicates, to a wireless device, to apply two indicated TCI states to a PDSCH reception (e.g., if a TCI selection field of a DCI format 1_1/1_2 scheduling/activating the PDSCH reception is set/equal to '10', or if the base station configures/indicates/provides the wireless device with a higher layer parameter *tciSelection-PresentInDCI,* or if the base station configures/indicates/provides the wireless device with a higher layer parameter *applyIndicatedTCIState* set to 'both'), and if the base station transmits a DCI scheduling/activating the PDSCH reception, where *'Antenna Port(s)'* field in the DCI indicates DM-RS port(s) within one CDM group (or does not indicate DM-RS port(s) within two CDM groups), and if the PDSCH reception overlaps with (or is in) a non-active time/period/duration of the first DTX configuration.

A base station may apply only the second indicated TCI state of the two indicated TCI states to the scheduled/activated PDSCH reception, for example, if if the base station indicates, to a wireless device, to apply two indicated TCI states to a PDSCH reception (e.g., if a TCI selection field of a DCI format 1_1/1_2 scheduling/activating the PDSCH reception is set/equal to '10', or if the base station configures/indicates/provides the wireless device with a higher layer parameter *tciSelection-PresentInDCI,* or if the base station configures/indicates/provides the wireless device with a higher layer parameter *applyIndicatedTCIState* set to 'both'), and if the base station transmits a DCI scheduling/activating the PDSCH reception, where *'Antenna Port(s)'* field in the DCI indicates DM-RS port(s) within one CDM group (or does not indicate DM-RS port(s) within two CDM groups), and if the second DTX configuration is not configured/indicated/provided/activated or if the PDSCH reception overlaps with (or is in) an active time/period/duration of the second DTX configuration. The wireless device and/or the base station may assume that PDSCH DM-RS port(s) of the PDSCH reception are quasi co-located (QCLed) with downlink reference signal(s) of the second indicated TCI state with respect to QCL-TypeA {Doppler shift, Doppler spread, average delay, delay spread}, for example, if the base station configures/indicates/provides the wireless device with a higher layer parameter *cjtSchemeB.*

A wireless device may apply only the first indicated TCI state of the two indicated TCI states to the scheduled/activated PDSCH reception, for example, if the wireless device is configured by a higher layer parameter *repetitionScheme* set to one of 'fdmSchemeA', 'fdmSchemeB', 'tdmSchemeA', or is configured with a higher layer parameter *sfnSchemePdsch,* or is indicated, by/in a *'Time domain resource assignment'* field in a DCI that schedules/activates a PDSCH reception, an entry which contains/comprises a higher layer parameter *repetitionNumber* in a higher layer parameter *PDSCH-TimeDomainResourceAllocation,* is not indicated with DM-RS port(s) within two CDM groups DCI (or is indicated with DM-RS port(s) within one CDM group) in/by an *'Antenna Port(s)'* field in the DCI, and if the wireless device would (or is supposed/configured/indicated/scheduled to) apply two indicated TCI states to a PDSCH reception (e.g., if a TCI selection field of a DCI format 1_1/1_2 scheduling/activating the PDSCH reception is set/equal to '10', or if the wireless device is not configured/indicated/provided with a higher layer parameter *tciSelection-PresentInDCI,* or if the wireless device is configured/indicated/provided with a higher layer parameter *applyIndicatedTCIState* set to 'both'), and if the PDSCH reception overlaps with (or is in) a non-active time/period/duration of the second DTX configuration.

A wireless device may apply only the first indicated TCI state of the two indicated TCI states to the scheduled/activated PDSCH reception, for example, if the wireless device is configured by a higher layer parameter *repetitionScheme* set to one of 'fdmSchemeA', 'fdmSchemeB', 'tdmSchemeA', or is configured with a higher layer parameter *sfnSchemePdsch,* or is indicated, by/in a *'Time domain resource assignment'* field in a DCI that schedules/activates a PDSCH reception, an entry which contains/comprises a higher layer parameter *repetitionNumber* in a higher layer parameter *PDSCH-TimeDomainResourceAllocation,* is not indicated with DM-RS port(s) within two CDM groups DCI (or is indicated with DM-RS port(s) within one CDM group) in/by an *'Antenna Port(s)'* field in the DCI, and if the wireless device would (or is supposed/configured/indicated/scheduled to) apply two indicated TCI states to a PDSCH reception (e.g., if a TCI selection field of a DCI format 1_1/1_2 scheduling/activating the PDSCH reception is set/equal to '10', or if the wireless device is not configured/indicated/provided with a higher layer parameter *tciSelection-PresentInDCI,* or if the wireless device is configured/indicated/provided with a higher layer parameter *applyIndicatedTCIState* set to 'both'), and if the first DTX configuration is not configured/indicated/provided/activated or if the PDSCH reception overlaps with (or is in) an active time/period/duration of the first DTX configuration.

A wireless device may apply only the second indicated TCI state of the two indicated TCI states to the scheduled/activated PDSCH reception, for example, if the wireless device is configured by a higher layer parameter *repetitionScheme* set to one of 'fdmSchemeA', 'fdmSchemeB', 'tdmSchemeA', or is configured with a higher layer parameter *sfnSchemePdsch,* or is indicated, by/in a *'Time domain resource assignment'* field in a DCI that schedules/activates a PDSCH reception, an entry which contains/comprises a higher layer parameter *repetitionNumber* in a higher layer parameter *PDSCH-TimeDomainResourceAllocation,* is not indicated with DM-RS port(s) within two CDM groups DCI (or is indicated with DM-RS port(s) within one CDM group) in/by an *'Antenna Port(s)'* field in the DCI, and if the wireless device would (or is supposed/configured/indicated/scheduled to) apply two indicated TCI states to a PDSCH reception (e.g., if a TCI selection field of a DCI format 1_1/1_2 scheduling/activating the PDSCH reception is set/equal to '10', or if the wireless device is not configured/indicated/provided with a higher layer parameter *tciSelection-PresentInDCI,* or if the wireless device is configured/indicated/provided with a higher layer parameter *applyIndicatedTCIState* set to 'both'), and if the PDSCH reception overlaps with (or is in) a non-active time/period/duration of the first DTX configuration.

A wireless device may apply only the second indicated TCI state of the two indicated TCI states to the scheduled/activated PDSCH reception, for example, if the wireless device is configured by a higher layer parameter *repetitionScheme* set to one of 'fdmSchemeA', 'fdmSchemeB', 'tdmSchemeA', or is configured with a higher layer parameter *sfnSchemePdsch,* or is indicated, by/in a *'Time domain resource assignment'* field in a DCI that schedules/activates a PDSCH reception, an entry which contains/comprises a higher layer parameter *repetitionNumber* in a higher layer parameter *PDSCH-TimeDomainResourceAllocation,* is not indicated with DM-RS port(s) within two CDM groups DCI (or is indicated with DM-RS port(s) within one CDM group) in/by an *'Antenna Port(s)'* field in the DCI, and if the wireless device would (or is supposed/configured/indicated/scheduled to) apply two indicated TCI states to a PDSCH reception (e.g., if a TCI selection field of a DCI format 1_1/1_2 scheduling/activating the PDSCH reception is set/equal to '10', or if the wireless device is not configured/indicated/provided with a higher layer parameter *tciSelection-PresentInDCI,* or if the wireless device is configured/indicated/provided with a higher layer parameter *applyIndicatedTCIState* set to 'both'), and if the second DTX configuration is not configured/indicated/provided/activated or if the PDSCH reception overlaps with (or is in) an active time/period/duration of the second DTX configuration. A the wireless device may assume that PDSCH DM-RS port(s) of the PDSCH reception are quasi co-located (QCLed) with downlink reference signal(s) of the second indicated TCI state with respect to QCL-TypeA {Doppler shift, Doppler spread, average delay, delay spread}, for example, if the wireless device is configured/indicated/provided with a higher layer parameter *cjtSchemeB.*

A wireless device may apply only the first indicated TCI state of the two indicated TCI states to the scheduled/activated PDSCH reception, for example, if the wireless device would (or is supposed/configured/indicated/scheduled to) apply two indicated TCI states to a PDSCH reception (e.g., if a TCI selection field of a DCI format 1_1/1_2 scheduling/activating the PDSCH reception is set/equal to '10', or if the wireless device is not configured/indicated/provided with a higher layer parameter *tciSelection-PresentInDCI,* or if the wireless device is configured/indicated/provided with a higher layer parameter *applyIndicatedTCIState* set to 'both'), if the wireless device is configured by a higher layer parameter *repetitionScheme* set to one of 'fdmSchemeA', 'fdmSchemeB', 'tdmSchemeA', or is configured with a higher layer parameter *sfnSchemePdsch,* or is indicated, by/in a *'Time domain resource assignment'* field in a DCI that schedules/activates the PDSCH reception, an entry which contains/comprises a higher layer parameter *repetitionNumber* in a higher layer parameter *PDSCH-TimeDomainResourceAllocation,* or is not indicated with DM-RS port(s) within two CDM groups DCI (or is indicated with DM-RS port(s) within one CDM group) in/by an *'Antenna Port(s)'* field in the DCI, and if the PDSCH reception overlaps with (or is in) a non-active time/period/duration of the second DTX configuration.

A wireless device may apply only the first indicated TCI state of the two indicated TCI states to the scheduled/activated PDSCH reception, for example, if the wireless device would (or is supposed/configured/indicated/scheduled to) apply two indicated TCI states to a PDSCH reception (e.g., if a TCI selection field of a DCI format 1_1/1_2 scheduling/activating the PDSCH reception is set/equal to '10', or if the wireless device is not configured/indicated/provided with a higher layer parameter *tciSelection-PresentInDCI,* or if the wireless device is configured/indicated/provided with a higher layer parameter *applyIndicatedTCIState* set to 'both'), if the wireless device is configured by a higher layer parameter *repetitionScheme* set to one of 'fdmSchemeA', 'fdmSchemeB', 'tdmSchemeA', or is configured with a higher layer parameter *sfnSchemePdsch,* or is indicated, by/in a *'Time domain resource assignment'* field in a DCI that schedules/activates the PDSCH reception, an entry which contains/comprises a higher layer parameter *repetitionNumber* in a higher layer parameter *PDSCH-TimeDomainResourceAllocation,* or is not indicated with DM-RS port(s) within two CDM groups DCI (or is indicated with DM-RS port(s) within one CDM group) in/by an *'Antenna Port(s)'* field in the DCI, and if the first DTX configuration is not configured/indicated/provided/activated or if the PDSCH reception overlaps with (or is in) an active time/period/duration of the first DTX configuration.

A wireless device may apply only the second indicated TCI state of the two indicated TCI states to the scheduled/activated PDSCH reception, for example, if the wireless device would (or is supposed/configured/indicated/scheduled to) apply two indicated TCI states to a PDSCH reception (e.g., if a TCI selection field of a DCI format 1_1/1_2 scheduling/activating the PDSCH reception is set/equal to '10', or if the wireless device is not configured/indicated/provided with a higher layer parameter *tciSelection-PresentInDCI,* or if the wireless device is configured/indicated/provided with a higher layer parameter *applyIndicatedTCIState* set to 'both'), if the wireless device is configured by a higher layer parameter *repetitionScheme* set to one of 'fdmSchemeA', 'fdmSchemeB', 'tdmSchemeA', or is configured with a higher layer parameter *sfnSchemePdsch,* or is indicated, by/in a *'Time domain resource assignment'* field in a DCI that schedules/activates the PDSCH reception, an entry which contains/comprises a higher layer parameter *repetitionNumber* in a higher layer parameter *PDSCH-TimeDomainResourceAllocation,* or is not indicated with DM-RS port(s) within two CDM groups DCI (or is indicated with DM-RS port(s) within one CDM group) in/by an *'Antenna Port(s)'* field in the DCI, and if the PDSCH reception overlaps with (or is in) a non-active time/period/duration of the first DTX configuration.

A wireless device may apply only the second indicated TCI state of the two indicated TCI states to the scheduled/activated PDSCH reception, for example, if the wireless device would (or is supposed/configured/indicated/scheduled to) apply two indicated TCI states to a PDSCH reception (e.g., if a TCI selection field of a DCI format 1_1/1_2 scheduling/activating the PDSCH reception is set/equal to '10', or if the wireless device is not configured/indicated/provided with a higher layer parameter *tciSelection-PresentInDCI,* or if the wireless device is configured/indicated/provided with a higher layer parameter *applyIndicatedTCIState* set to 'both'), if the wireless device is configured by a higher layer parameter *repetitionScheme* set to one of 'fdmSchemeA', 'fdmSchemeB', 'tdmSchemeA', or is configured with a higher layer parameter *sfnSchemePdsch,* or is indicated, by/in a *'Time domain resource assignment'* field in a DCI that schedules/activates the PDSCH reception, an entry which contains/comprises a higher layer parameter *repetitionNumber* in a higher layer parameter *PDSCH-TimeDomainResourceAllocation,* or is not indicated with DM-RS port(s) within two CDM groups DCI (or is indicated with DM-RS port(s) within one CDM group) in/by an *'Antenna Port(s)'* field in the DCI, and if the second DTX configuration is not configured/indicated/provided/activated or if the PDSCH reception overlaps with (or is in) an active time/period/duration of the second DTX configuration. The wireless device may assume that PDSCH DM-RS port(s) of the PDSCH reception are quasi co-located (QCLed) with downlink reference signal(s) of the second indicated TCI state with respect to QCL-TypeA {Doppler shift, Doppler spread, average delay, delay spread}, for example, if the wireless device is configured/indicated/provided with a higher layer parameter *cjtSchemeB.*

The wireless device may receive the downlink reception (e.g., Downlink reception 2 and Downlink reception 3 in FIG. 21) based on the at least two TCI states. The wireless device may receive, during the non-active time of the DTX of the cell, the downlink reception based on the at least two TCI states.

The wireless device may receive, during the non-active time of the DTX of the cell, the downlink reception based on the at least two TCI states, for example, based on the one or more configuration parameters not comprising a repetition scheme parameter (e.g., *repetitionScheme).* The wireless device may receive, during the non-active time of the DTX of the cell, the downlink reception based on the at least two TCI states, for example, based on the one or more configuration parameters not comprising a repetition scheme parameter (e.g., *repetitionScheme)* set to one of: 'fdmSchemeA', 'fdmSchemeB', 'tdmSchemeA'.

The wireless device may receive, during the non-active time of the DTX of the cell, the downlink reception based on the at least two TCI states, for example, based on the TDRA field in the control command not indicating an entry, in the TDRA table (e.g., *PDSCH-TimeDomainResourceAllocation),* that comprises a number of repetitions (e.g., *repetitionNumber)* for the downlink reception. The wireless device may receive, during the non-active time of the DTX of the cell, the downlink reception based on the at least two TCI states, for example, based on the TDRA field in the control command indicating an entry, in the TDRA table (e.g., *PDSCH-TimeDomainResourceAllocation),* that does not comprise a number of repetitions (e.g., *repetitionNumber)* for the downlink reception. The wireless device may receive, during the non-active time of the DTX of the cell, the downlink reception based on the at least two TCI states, for example, based on the one or more configuration parameters not comprising a repetition number parameter (e.g., *repetitionNumber)* in a higher layer parameter *PDSCH-TimeDomainResourceAllocation.*

The wireless device may receive, during the non-active time of the DTX of the cell, the downlink reception based on the at least two TCI states, for example, based on the one or more configuration parameters not comprising an SFN parameter (e.g., *sfnSchemePdsch*) indicating an SFN scheme for PDSCH receptions.

The wireless device may receive, during the non-active time of the DTX of the cell, the downlink reception based on the at least two TCI states, for example, based on the antenna ports field not indicating at least one DM-RS port within one CDM group. The wireless device may receive, during the non-active time of the DTX of the cell, the downlink reception based on the at least two TCI states, for example, based on the antenna ports field not indicating DM-RS port(s) within one CDM group. The wireless device may receive, during the non-active time of the DTX of the cell, the downlink reception based on the at least two TCI states, for example, based on the antenna ports field indicating DM-RS port(s) within two CDM groups. The wireless device may receive, during the non-active time of the DTX of the cell, the downlink reception based on the at least two TCI states, for example, based on the antenna ports field indicating the at least one DM-RS port within two CDM groups.

The wireless device may not fall back to a TCI state (or to a single TCI state) of the at least two TCI states for the downlink reception during the non-active time of the DTX.

The wireless device may not fall back, during the non-active time of the DTX, to a TCI state (or to a single TCI state) of the at least two TCI states for the downlink reception, for example, based on the one or more configuration parameters not comprising a repetition scheme parameter (e.g., *repetitionScheme).* The wireless device may not fall back, during the non-active time of the DTX, to a TCI state (or to a single TCI state) of the at least two TCI states for the downlink reception, for example, based on the one or more configuration parameters not comprising a repetition scheme parameter (e.g., *repetitionScheme)* set to one of: 'fdmSchemeA', 'fdmSchemeB', 'tdmSchemeA'.

The wireless device may not fall back, during the non-active time of the DTX, to a TCI state (or to a single TCI state) of the at least two TCI states for the downlink reception, for example, based on the TDRA field in the control command not indicating an entry, in the TDRA table (e.g., *PDSCH-TimeDomainResourceAllocation*), that comprises a number of repetitions (e.g., *repetitionNumber)* for the downlink reception. The wireless device may not fall back, during the non-active time of the DTX, to a TCI state (or to a single TCI state) of the at least two TCI states for the downlink reception, for example, based on the TDRA field in the control command indicating an entry, in the TDRA table (e.g., *PDSCH-TimeDomainResourceAllocation*), that does not comprise a number of repetitions (e.g., *repetitionNumber)* for the downlink reception. The wireless device may not fall back, during the non-active time of the DTX, to a TCI state (or to a single TCI state) of the at least two TCI states for the downlink reception, for example, based on the one or more configuration parameters not comprising a repetition number parameter (e.g., *repetitionNumber)* in a higher layer parameter *PDSCH-TimeDomainResourceAllocation.*

The wireless device may not fall back, during the non-active time of the DTX, to a TCI state (or to a single TCI state) of the at least two TCI states for the downlink reception, for example, based on the one or more configuration parameters not comprising an SFN parameter (e.g., *sfnSchemePdsch*) indicating an SFN scheme for PDSCH receptions.

The wireless device may not fall back, during the non-active time of the DTX, to a TCI state (or to a single TCI state) of the at least two TCI states for the downlink reception, for example, based on the antenna ports field not indicating at least one DM-RS port within one CDM group. The wireless device may not fall back, during the non-active time of the DTX, to a TCI state (or to a single TCI state) of the at least two TCI states for the downlink reception, for example, based on the antenna ports field not indicating DM-RS port(s) within one CDM group. The wireless device may not fall back, during the non-active time of the DTX, to a TCI state (or to a single TCI state) of the at least two TCI states for the downlink reception, for example, based on the antenna ports field indicating DM-RS port(s) within two CDM groups. The wireless device may not fall back, during the non-active time of the DTX, to a TCI state (or to a single TCI state) of the at least two TCI states for the downlink reception, for example, based on the antenna ports field indicating the at least one DM-RS port within two CDM groups.

In some examples, the DTX of the cell may the first DTX of the cell. The wireless device may receive, during the non-active time/duration/period of the first DTX, the downlink reception (e.g., Downlink reception 2 and Downlink reception 3 in FIG. 21) based on the at least two TCI states.

In some examples, the downlink reception may overlap in time with the active time/duration/period of the second DTX (e.g., that is configured and activated). In some examples, the one or more configuration parameters may not comprise one or more second DTX configuration parameters of a second DTX of the cell (e.g., the second DTX is not configured). In some examples, the wireless device may not receive a control command (e.g., DCI format 2_9, DCI format 2_10, and the like) indicating activation of the second DTX of the cell (e.g., the second DTX is not activated).

In some examples, the DTX of the cell may the second DTX of the cell. The wireless device may receive, during the non-active time/duration/period of the second DTX, the downlink reception based on the at least two TCI states.

In some examples, the downlink reception may overlap in time with the active time/duration/period of the first DTX (e.g., that is configured and activated). In some examples, the one or more configuration parameters may not comprise one or more first DTX configuration parameters of a first DTX of the cell (e.g., the first DTX is not configured). In some examples, the wireless device may not receive a control command (e.g., DCI format 2_9, DCI format 2_10, and the like) indicating activation of the first DTX of the cell (e.g., the first DTX is not activated).

Throughout the specification, "in response to" may be interchangeably used with 'when'. For example, if "a wireless device performs A in response B not being configured", this may mean that "the wireless device performs A when B is not configured".

Throughout the specification, "in response to" may be interchangeably used with 'if'. For example, if "a wireless device performs A in response B not being configured", this may mean that "the wireless device performs A if B is not configured".

Throughout the specification, "when" may be interchangeably used with 'if'. For example, if "a wireless device performs A when B is configured", this may mean that "the wireless device performs A if B is not configured".

The PDSCH reception may not be impacted by the first DTX configuration or the second DTX configuration, for example, if a wireless device is not indicated with a *'Time domain resource assignment'* field, in a DCI scheduling/activating a PDSCH reception indicated/associated with two indicated TCI states, indicating an entry which contains/comprises a higher layer parameter *repetitionNumber* in a higher layer parameter *PDSCH-TimeDomainResourceAllocation,* and the wireless device is not configured with a higher layer parameter *sfnSchemePdsch,* and the wireless device is indicated with DM-RS port(s) within two CDM groups in/by *'Antenna Port(s)'* field in the DCI. The wireless device may receive the scheduled/activated PDSCH reception based on the two indicated TCI states (or both/each of the two indicated TCI states). The wireless device may receive, during the non-active time/duration/period of the first DTX configuration or the non-active time/duration/period of the second DTX configuration, the scheduled/activated PDSCH reception based on the two indicated TCI states (or both/each of the two indicated TCI states).

In some examples, the PDSCH reception may be without a corresponding PDCCH. For example, the DCI may activate an SPS configuration. A starting/initial/first PDSCH reception of the SPS configuration may be with a corresponding PDCCH (e.g., the DCI activating the SPS configuration). The subsequent PDSCH receptions of the SPS configuration (e.g., the second PDSCH reception, the third PDSCH reception that occurs after the starting/initial/first PDSCH reception) may be without the corresponding PDCCH.

In some examples, the PDSCH reception may not be a retransmission.

The PDSCH reception may not be impacted by the first DTX configuration or the second DTX configuration, for example, if a wireless device is not configured with a higher layer parameter *sfnSchemePdsch,* and not indicated, by/in a *'Time domain resource assignment'* field in a DCI that schedules/activates a PDSCH reception indicated/associated with two indicated TCI states, an entry which contains/comprises a higher layer parameter *repetitionNumber* in a higher layer parameter *PDSCH-TimeDomainResourceAllocation,* and is indicated with DM-RS port(s) within two CDM groups (or is not indicated with DM-RS port(s) within one CDM group) in/by an *'Antenna Port(s)'* field in the DCI. The wireless device may receive the scheduled/activated PDSCH reception based on the two indicated TCI states (or both/each of the two indicated TCI states). The wireless device may receive, during the non-active time/duration/period of the first DTX configuration or the non-active time/duration/period of the second DTX configuration, the scheduled/activated PDSCH reception based on the two indicated TCI states (or both/each of the two indicated TCI states).

The PDSCH reception may not be impacted by the first DTX configuration or the second DTX configuration, for example, if a base station does not transmit, to a wireless device, a higher layer parameter *sfnSchemePdsch,* and does not indicate, by/in a *'Time domain resource assignment'* field in a DCI that schedules/activates a PDSCH reception indicated/associated with two indicated TCI states, an entry which contains/comprises a higher layer parameter *repetitionNumber* in a higher layer parameter *PDSCH-TimeDomainResourceAllocation,* and indicates DM-RS port(s) within two CDM groups (or does not indicate DM-RS port(s) within one CDM group) in/by an *'Antenna Port(s)'* field in the DCI. The base station may transmit, to the wireless device, the scheduled/activated PDSCH reception based on the two indicated TCI states (or both/each of the two indicated TCI states). The base station may transmit, during the non-active time/duration/period of the first DTX configuration or the non-active time/duration/period of the second DTX configuration, the scheduled/activated PDSCH reception based on the two indicated TCI states (or both/each of the two indicated TCI states).

The wireless device may not receive the downlink reception (e.g., Downlink reception 2 and Downlink reception 3 in FIG. 22). The wireless device may not receive, during the non-active time of the DTX of the cell, the downlink reception.

Not receiving the downlink reception may comprise, for example, ignoring the downlink reception. The wireless device may ignore the downlink reception by not receiving the downlink reception.

Not receiving the downlink reception may comprise, for example, not monitoring the downlink reception. The wireless device may not monitor the downlink reception.

Not receiving the downlink reception may comprise, for example, discarding the downlink reception. The wireless device may discard the downlink reception by not receiving the downlink reception.

Not receiving the downlink reception may comprise, for example, cancelling the downlink reception. The wireless device may cancel the downlink reception by not receiving the downlink reception.

The wireless device may not receive, during the non-active time of the DTX of the cell, the downlink reception, for example, based on the one or more configuration parameters not comprising a repetition scheme parameter (e.g., *repetitionScheme).* The wireless device may not receive, during the non-active time of the DTX of the cell, the downlink reception, for example, based on the one or more configuration parameters not comprising a repetition scheme parameter (e.g., *repetitionScheme)* set to one of: 'fdmSchemeA', 'fdmSchemeB', 'tdmSchemeA'.

The wireless device may not receive, during the non-active time of the DTX of the cell, the downlink reception, for example, based on the TDRA field in the control command not indicating an entry, in the TDRA table (e.g., *PDSCH-TimeDomainResourceAllocation),* that comprises a number of repetitions (e.g., *repetitionNumber)* for the downlink reception. The wireless device may not receive, during the non-active time of the DTX of the cell, the downlink reception, for example, based on the TDRA field in the control command indicating an entry, in the TDRA table (e.g., *PDSCH-TimeDomainResourceAllocation),* that does not comprise a number of repetitions (e.g., *repetitionNumber)* for the downlink reception. The wireless device may not receive, during the non-active time of the DTX of the cell, the downlink reception, for example, based on the one or more configuration parameters not comprising a repetition number parameter (e.g., *repetitionNumber)* in a higher layer parameter *PDSCH-TimeDomainResourceAllocation.*

The wireless device may not receive, during the non-active time of the DTX of the cell, the downlink reception, for example, based on the one or more configuration parameters not comprising an SFN parameter (e.g., *sfnSchemePdsch)* indicating an SFN scheme for PDSCH receptions.

The wireless device may not receive, during the non-active time of the DTX of the cell, the downlink reception, for example, based on the antenna ports field not indicating at least one DM-RS port within one CDM group. The wireless device may not receive, during the non-active time of the DTX of the cell, the downlink reception, for example, based on the antenna ports field not indicating DM-RS port(s) within one CDM group. The wireless device may not receive, during the non-active time of the DTX of the cell, the downlink reception, for example, based on the antenna ports field indicating DM-RS port(s) within two CDM groups. The wireless device may not receive, during the non-active time of the DTX of the cell, the downlink reception, for example, based on the antenna ports field indicating the at least one DM-RS port within two CDM groups.

The wireless device may not use/apply, during the non-active time of the DTX, at least one TCI state of the at least two TCI states to/for the downlink reception, for example, based on the one or more configuration parameters not comprising a repetition scheme parameter (e.g., *repetitionScheme).* The wireless device may not use/apply, during the non-active time of the DTX, at least one TCI state of the at least two TCI states to/for the downlink reception, for example, based on the one or more configuration parameters not comprising a repetition scheme parameter (e.g., *repetitionScheme)* set to one of: 'fdmSchemeA', 'fdmSchemeB', 'tdmSchemeA'.

The wireless device may not use/apply, during the non-active time of the DTX, at least one TCI state of the at least two TCI states to/for the downlink reception, for example, based on the TDRA field in the control command not indicating an entry, in the TDRA table (e.g., *PDSCH-TimeDomainResourceAllocation),* that comprises a number of repetitions (e.g., *repetitionNumber)* for the downlink reception. The wireless device may not use/apply, during the non-active time of the DTX, at least one TCI state of the at least two TCI states to/for the downlink reception, for example, based on the TDRA field in the control command indicating an entry, in the TDRA table (e.g., *PDSCH-TimeDomainResourceAllocation),* that does not comprise a number of repetitions (e.g., *repetitionNumber)* for the downlink reception. The wireless device may not use/apply, during the non-active time of the DTX, at least one TCI state of the at least two TCI states to/for the downlink reception, for example, based on the one or more configuration parameters not comprising a repetition number parameter (e.g., *repetitionNumber*) in a higher layer parameter *PDSCH-TimeDomainResourceAllocation.*

The wireless device may not use/apply, during the non-active time of the DTX, at least one TCI state of the at least two TCI states to/for the downlink reception, for example, based on the one or more configuration parameters not comprising an SFN parameter (e.g., *sfnSchemePdsch)* indicating an SFN scheme for PDSCH receptions.

The wireless device may not use/apply, during the non-active time of the DTX, at least one TCI state of the at least two TCI states to/for the downlink reception, for example, based on the antenna ports field not indicating at least one DM-RS port within one CDM group. The wireless device may not use/apply, during the non-active time of the DTX, at least one TCI state of the at least two TCI states to/for the downlink reception, for example, based on the antenna ports field not indicating DM-RS port(s) within one CDM group. The wireless device may not use/apply, during the non-active time of the DTX, at least one TCI state of the at least two TCI states to/for the downlink reception, for example, based on the antenna ports field indicating DM-RS port(s) within two CDM groups. The wireless device may not use/apply, during the non-active time of the DTX, at least one TCI state of the at least two TCI states to/for the downlink reception, for example, based on the antenna ports field indicating the at least one DM-RS port within two CDM groups.

In some examples, the DTX of the cell may the first DTX of the cell. The wireless device may not receive, during the non-active time/duration/period of the first DTX, the downlink reception (e.g., Downlink reception 2 and Downlink reception 3 in FIG. 22). The wireless device may not use/apply, during the non-active time of the first DTX, at least one TCI state of the at least two TCI states to/for the downlink reception (e.g., Downlink reception 2 and Downlink reception 3 in FIG. 22). In some examples, the downlink reception may overlap in time with the active time/duration/period of the second DTX (e.g., that is configured and activated). In some examples, the one or more configuration parameters may not comprise one or more second DTX configuration parameters of a second DTX of the cell (e.g., the second DTX is not configured). In some examples, the wireless device may not receive a control command (e.g., DCI format 2_9, DCI format 2_10, and the like) indicating activation of the second DTX of the cell (e.g., the second DTX is not activated).

In some examples, the DTX of the cell may the second DTX of the cell. The wireless device may not receive, during the non-active time/duration/period of the second DTX, the downlink reception. The wireless device may not use/apply, during the non-active time of the second DTX, at least one TCI state of the at least two TCI states to/for the downlink reception. In some examples, the downlink reception may overlap in time with the active time/duration/period of the first DTX (e.g., that is configured and activated). In some examples, the one or more configuration parameters may not comprise one or more first DTX configuration parameters of a first DTX of the cell (e.g., the first DTX is not configured). In some examples, the wireless device may not receive a control command (e.g., DCI format 2_9, DCI format 2_10, and the like) indicating activation of the first DTX of the cell (e.g., the first DTX is not activated).

The wireless device may not receive, during the non-active time/duration/period of the first DTX and the non-active time/duration/period of the second DTX, the downlink reception.

A wireless device configured and activated with the first DTX configuration or the second DTX configuration may not expect to receive, during non-active time/period/duration of the first DTX configuration or the second DTX configuration, the scheduled/activated PDSCH reception, respectively, for example, if the wireless device is not indicated with a *'Time domain resource assignment'* field, in a DCI scheduling/activating a PDSCH reception, indicating an entry which contains/comprises a higher layer parameter *repetitionNumber* in a higher layer parameter *PDSCH-TimeDomainResourceAllocation,* and the wireless device is not configured with a higher layer parameter *sfnSchemePdsch,* and the wireless device is indicated with DM-RS port(s) within two CDM groups in/by *'Antenna Port(s)'* field in the DCI, and if the wireless device would (or is configured/scheduled/indicate to) apply two indicated TCI states to the scheduled/activated PDSCH reception. The wireless device may not receive, during the non-active time/duration/period of the first DTX configuration, the scheduled/activated PDSCH reception. The wireless device may not receive, during the non-active time/duration/period of the second DTX configuration, the scheduled/activated PDSCH reception.

A wireless device configured and activated with the first DTX configuration or the second DTX configuration may not expect to receive, during non-active time/period/duration of the first DTX configuration or the second DTX configuration, the scheduled/activated PDSCH reception, respectively, for example, if the wireless device would (or is supposed/configured/indicated/scheduled to) apply two indicated TCI states to a PDSCH reception (e.g., if a TCI selection field of a DCI format 1_1/1_2 scheduling/activating the PDSCH reception is set/equal to '10', or if the wireless device is not configured/indicated/provided with a higher layer parameter *tciSelection-PresentInDCI,* or if the wireless device is configured/indicated/provided with a higher layer parameter *applyIndicatedTCIState* set to 'both'), and if the wireless device is not configured with a higher layer parameter *sfnSchemePdsch,* and is not indicated, by/in a *'Time domain resource assignment'* field in a DCI that schedules/activates the PDSCH reception, an entry which contains/comprises a higher layer parameter *repetitionNumber* in a higher layer parameter *PDSCH-TimeDomainResourceAllocation,* and indicated with DM-RS port(s) within two CDM groups (or is not indicated with DM-RS port(s) within one CDM group) in/by an *'Antenna Port(s)'* field in the DCI. The wireless device may not receive, during the non-active time/duration/period of the first DTX configuration, the scheduled/activated PDSCH reception. The wireless device may not receive, during the non-active time/duration/period of the second DTX configuration, the scheduled/activated PDSCH reception.

In some examples, the PDSCH reception may be without a corresponding PDCCH. For example, the DCI may activate an SPS configuration. A starting/initial/first PDSCH reception of the SPS configuration may be with a corresponding PDCCH (e.g., the DCI activating the SPS configuration). The subsequent PDSCH reception of the SPS configuration (e.g., the second PDSCH reception, the third PDSCH reception that occurs after the starting/initial/first PDSCH reception) may be without the corresponding PDCCH.

In some examples, the PDSCH reception may not be a retransmission.

A base station may not transmit, to the wireless device configured and activated with the first DTX configuration or the second DTX configuration and during a non-active time/period/duration of the first DTX configuration or the second DTX configuration, the scheduled/activated PDSCH reception, respectively, for example, if the base station configures/schedules/indicates, to a wireless device, to apply two indicated TCI states to a scheduled or an activated PDSCH reception/transmission, and if the base station does not configure/indicate, the wireless device, with a higher layer parameter *sfnSchemePdsch,* and does not indicate, by/in a *'Time domain resource assignment'* field in a DCI that schedules/activates the PDSCH reception, an entry which contains/comprises a higher layer parameter *repetitionNumber* in a higher layer parameter *PDSCH-TimeDomainResourceAllocation,* and indicates DM-RS port(s) within two CDM groups (or does not indicate DM-RS port(s) within one CDM group) in/by an *'Antenna Port(s)'* field in the DCI.

The one or more configuration parameters may indicate, for the uplink BWP of the cell, at least two SRS resource sets. The one or more configuration parameters may comprise an SRS resource set list parameter (e.g., *srs-Resource-SetToAddModList* or *srs-ResourceSetToAddModListDCI-O-2*) indicating the at least two SRS resource sets. The at least two SRS resource sets may comprise a first SRS resource set and a second SRS resource set.

The one or more configuration parameters may comprise, for each SRS resource set of the at least two SRS resource sets, a respective usage parameter.

For example, the usage parameter may be set to 'codebook'. The usage parameter of each SRS resource set of the at least two SRS resource sets may be set to 'codebook'. The one or more configuration parameters may indicate codebook, for example, for each SRS resource set of the at least two SRS resource sets. The one or more configuration parameters may indicate, for the first SRS resource set, 'codebook' (or a usage parameter set to 'codebook'). The one or more configuration parameters may indicate, for the second SRS resource set, 'codebook' (or a usage parameter set to 'codebook').

For example, the usage parameter may be set to 'non-codebook'. The usage parameter of each SRS resource set of the at least two SRS resource sets may be set to 'non-codebook'. The one or more configuration parameters may indicate 'non-codebook', for example, for each SRS resource set of the at least two SRS resource sets. The one or more configuration parameters may indicate, for the first SRS resource set, 'noncodebook' (or a usage parameter set to 'non-codebook'). The one or more configuration parameters may indicate, for the second SRS resource set, 'non-codebook' (or a usage parameter set to 'non-codebook').

The one or more configuration parameters may indicate, for the at least two SRS resource sets, at least two SRS resource set indexes. The one or more configuration parameters may indicate, for each SRS resource set of the at least two SRS resource sets, a respective SRS resource set index of the at least two SRS resource set indexes. Each SRS resource set of the at least two SRS resource sets may be identified/indicated by a respective SRS resource set index of the at least two SRS resource set indexes. The first SRS resource set of the at least two SRS resource sets may be identified/indicated by a first SRS resource set index of the at least two SRS resource set indexes. The second SRS resource set of the at least two SRS resource sets may be identified/indicated by a second SRS resource set index of the at least two SRS resource set indexes.

In some examples, the first SRS resource set index of the first SRS resource set may be lower/less than the second SRS resource set index of the second SRS resource set.

The wireless device may be configured/scheduled/triggered/activated/indicated to transmit an uplink transmission (e.g., Uplink transmission at time T4 in FIG. 17).

The wireless device may be configured/scheduled/triggered/activated/indicated to transmit the uplink transmission via an uplink resource. The uplink BWP may comprise the uplink resource.

The uplink transmission may be/comprise, for example, a PUSCH transmission. The PUSCH transmission may comprise, for example, one or more transport blocks (e.g., uplink data). The PUSCH transmission may comprise, for example, one or more CSI reports (e.g., aperiodic CSI report, semi-persistent CSI report). The uplink resource may be a PUSCH resource.

The uplink transmission may be, for example, a PUCCH transmission. The PUCCH transmission may comprise, for example, uplink control information (UCI). The UCI may comprise, for example, HARQ-ACK. The UCI may comprise, for example, CSI report (e.g., periodic CSI report, semi-persistent CSI report). The UCI may comprise, for example, an SR. The uplink resource may be a PUCCH resource.

The wireless device may receive a control command (e.g., Second control command at time T2 in FIG. 17). The control command may be, for example, a DCI (e.g., a DCI format 0_0, a DCI format 0_1, a DCI format 0_2, a DCI format 0_3, and the like).

In some examples, the control command (e.g., Second control command at time T2 in FIG. 17) may, for example, schedule/activate the uplink transmission.

The control command may schedule/activate the uplink transmission, for example, based on the control command indicating the resources for the uplink transmission. The control command may schedule/activate the uplink transmission, for example, based on the control command comprising one or more fields (e.g., TDRA field, MCS field, FDRA field, BWP index, HARQ process index, and the like) used by the wireless device for the uplink transmission.

The control command may comprise one or more fields (e.g., TDRA field, FDRA field) indicating the uplink resource for the uplink transmission. The uplink BWP of the cell may comprise the uplink resource.

The control command (e.g., Second control command at time T2 in FIG. 17) may, for example, activate a Type 2 configured uplink grant. The uplink transmission may be for/of the Type 2 configured uplink grant. The control command may activate the uplink transmission may be for/of the Type 2 configured uplink grant.

The one or more configuration parameters may comprise one or more configured grant configuration parameters (e.g., *ConfiguredGrantConfig*) of the Type 2 configured uplink grant. The control command may indicate activation of the Type 2 configured uplink grant. The control command may comprise one or more fields (e.g., RV, HARQ process, MCS, and the like) set to predefined values (e.g., 0, 1) that indicate activation of the Type 2 configured uplink grant. The wireless device may validate the control command based on the one or more fields (e.g., RV, HARQ process, MCS, and the like) being set to the predefined values. The wireless device may activate the Type 2 configured uplink grant based on the validating the control command.

The control command (e.g., Second control command at time T2 in FIG. 17) may comprise an SRS resource set indicator field.

In some examples, the control command (e.g., Second control command at time T2 in FIG. 17) may comprise the SRS resource set indicator field with a value (e.g., '10' or '11') indicating to apply the at least two TCI states to/for the uplink transmission. The control command may indicate the value (e.g., '10', '11') for a codepoint of the SRS resource set indicator field. The control command indicating the value (e.g., '10' or '11') for the codepoint of the SRS resource set indicator field may indicate to apply the at least two TCI states (e.g., both/each of the at least two TCI states) to/for the uplink transmission. The control command may comprise the SRS resource set indicator field, for example, based on the one or more configuration parameters comprising the SRS resource set list parameter (e.g., *srs-ResourceSetToAddModList* or *srs-ResourceSetToAddModListDCI-0-2*) indicating the at least two SRS resource sets with the usage parameter both set to 'codebook' or 'nonCodebook'. The control command may be, for example, a DCI format 0_1. The control command may be, for example, a DCI format 0_2.

In some examples, the one or more configuration parameters may comprise one or more configured grant configuration parameters (e.g., *rrc-ConfiguredUplinkGrant*) of a Type 1 configured uplink grant. The wireless device may activate the Type 1 configured uplink grant, for example, based on receiving the one or more configured grant configuration parameters (e.g., *rrc-ConfiguredUplinkGrant*) of the Type 1 configured uplink grant. The wireless device may not need to receive/detect/validate a DCI to activate the Type 1 configured uplink grant. The uplink transmission may be for/of the Type 1 configured uplink grant.

The one or more configured grant configuration parameters (e.g., *rrc-ConfiguredUplinkGrant*) of the Type 1 configured uplink grant may comprise an apply-indicated-TCI-state parameter (e.g., *applyIndicatedTCIState*).

The apply-indicated-TCI-state parameter of the Type 1 configured uplink grant may be set to 'both' indicating to apply the at least two TCI states (e.g., both/each of the at least two TCI states) to/for uplink transmissions of the Type 1 configured uplink grant.

The one or more configuration parameters may comprise an apply-indicated-TCI-state parameter (e.g., *applyIndicatedTCIState*) for the uplink resource (e.g., PUCCH resource) of the uplink transmission.

The apply-indicated-TCI-state parameter of the uplink resource may be set to 'both' indicating to apply the at least two TCI states (e.g., both/each of the at least two TCI states) to/for uplink transmissions via the uplink resource.

In FIG. 20, FIG. 21, and FIG. 22 Uplink transmission 1, Uplink transmission 2, Uplink transmission 3, and Uplink transmission 4 may be, for example, PUSCH transmissions of the Type 1 configured uplink grant. The uplink transmission may be, for example, Uplink transmission 1. The uplink transmission may be, for example, Uplink transmission 2. The uplink transmission may be, for example, Uplink transmission 3. The uplink transmission may be, for example, Uplink transmission 4.

In FIG. 20, FIG. 21, and FIG. 22 Uplink transmission 1, Uplink transmission 2, Uplink transmission 3, and Uplink transmission 4 may be, for example, PUSCH transmissions of the Type 2 configured uplink grant. The uplink transmission activated by the control command may be, for example, Uplink transmission 1. The uplink transmission activated by the control command may be, for example, Uplink transmission 2. The uplink transmission activated by the control command may be, for example, Uplink transmission 3. The uplink transmission activated by the control command may be, for example, Uplink transmission 4.

In FIG. 20, FIG. 21, and FIG. 22 Uplink transmission 1, Uplink transmission 2, Uplink transmission 3, and Uplink transmission 4 may be, for example, PUSCH transmissions. The uplink transmission scheduled by the control command may be, for example, Uplink transmission 1. The uplink transmission scheduled by the control command may be, for example, Uplink transmission 2. The uplink transmission scheduled by the control command may be, for example, Uplink transmission 3. The uplink transmission scheduled by the control command may be, for example, Uplink transmission 4.

In FIG. 20, FIG. 21, and FIG. 22 Uplink transmission 1, Uplink transmission 2, Uplink transmission 3, and Uplink transmission 4 may be, for example, PUCCH transmissions. The uplink transmission scheduled/triggered by the control command may be, for example, Uplink transmission 1. The uplink transmission configured/indicated by the one or more configuration parameters may be, for example, Uplink transmission 1. The uplink transmission scheduled/triggered by the control command may be, for example, Uplink transmission 2. The uplink transmission configured/indicated by the one or more configuration parameters may be, for example, Uplink transmission 2. The uplink transmission scheduled/triggered by the control command may be, for example, Uplink transmission 3. The uplink transmission configured/indicated by the one or more configuration parameters may be, for example, Uplink transmission 3. The uplink transmission scheduled/-triggered by the control command may be, for example, Uplink transmission 4. The uplink transmission configured/indicated by the one or more configuration parameters may be, for example, Uplink transmission 4.

In FIG. 20, FIG. 21, and FIG. 22, Uplink transmission 1 and Uplink transmission 4 may be in an active time/duration/period of the first DRX (e.g., First DRX active time). Uplink transmission 2 and Uplink transmission 3 may be in a non-active time/duration/period of the first DRX (e.g., First DRX non-active time).

The wireless device may transmit the uplink transmission (e.g., at time T4 in FIG. 17). The wireless device may transmit, via the uplink resource of the uplink BWP of the cell, the uplink transmission.

The wireless device may transmit the uplink transmission based on one or more TCI states of the at least two TCI states.

In some examples, the one or more TCI states may be the first TCI state of the at least two TCI states.

In some examples, the one or more TCI states may be the second TCI state of the at least two TCI states.

In some examples, the one or more TCI states may be the at least two TCI states.

In an example, the wireless device may transmit the uplink transmission based on the at least two TCI states.

The wireless device may transmit the uplink transmission (e.g., Uplink transmission 1 and Uplink transmission 4 during/in First DRX active time in FIG. 20, FIG. 21, and FIG. 22, and Uplink transmission 2 and Uplink transmission 3 during/in First DRX non-active time in FIG. 21), for example, based on the at least two TCI states.

The wireless device may transmit the uplink transmission based on the at least two TCI states, for example, based on the control command (e.g., Second control command at time T2 in FIG. 17) comprising the SRS resource set indicator field with the value (e.g., '10' or '1 1').

The wireless device may transmit the uplink transmission based on the at least two TCI states, for example, based on the apply-indicated-TCI-state parameter (e.g., *applyIndicatedTCIState*) of the Type 1 configured uplink grant being set to 'both'.

The wireless device may transmit, via the uplink resource, the uplink transmission based on the at least two TCI states, for example, based on the apply-indicated-TCI-state parameter (e.g., *applyIndicatedTCIState*) of the uplink resource being set to 'both'.

In some examples, the one or more configuration parameters may not comprise a multi-panel scheme parameter (e.g., *multipanelScheme*). In some examples, the multi-panel scheme parameter may indicate/configure a multiple panel simultaneous uplink transmission using an SDM scheme or an SFN scheme for PUSCH transmissions.

The wireless device may transmit repetitions of the uplink transmission based on the at least two TCI states. The wireless device may transmit the repetitions of the uplink transmission based on the at least two TCI states, for example,

based on the one or more configuration parameters not comprising the multi-panel scheme parameter (e.g., *multipanelScheme*).

In some examples, the control command scheduling/activating the uplink transmission may comprise a TDRA field indicating an entry, in an TDRA table (e.g., *PUSCH-TimeDomainResourceAllocation*), that comprises a number of repetitions (e.g., *repetitionNumber, numberOfRepetitions*) for the uplink transmission.

In some examples, the one or more configuration parameters may indicate, for the uplink transmission, a number of repetitions (*e.g., pusch-AggregationFactor*).

In some examples, the wireless device may transmit one or more first repetitions of the uplink transmission based on the first TCI state. The wireless device may transmit, in one or more first uplink transmission occasions (e.g., PUSCH transmission occasions), the one or more first repetitions of the uplink transmission. The wireless device may transmit, in each uplink transmission occasion of the one or more first uplink transmission occasions, a respective repetition of the one or more first repetitions of the uplink transmission. The wireless device may transmit, in the one or more first uplink transmission occasions, the one or more first repetitions of the uplink transmission based on the first SRS resource set of the at least two SRS resource sets. The wireless device may apply the first TCI state to the one or more first uplink transmission occasions associated with the first SRS resource set.

In some examples, the wireless device may transmit one or more second repetitions of the uplink transmission based on the second TCI state. The wireless device may transmit, in one or more second uplink transmission occasions (e.g., PUSCH transmission occasions), the one or more second repetitions of the uplink transmission. The wireless device may transmit, in each uplink transmission occasion of the one or more second uplink transmission occasions, a respective repetition of the one or more second repetitions of the uplink transmission. The wireless device may transmit, in the one or more second uplink transmission occasions, the one or more second repetitions of the uplink transmission based on the second SRS resource set of the at least two SRS resource sets. The wireless device may apply the second TCI state to the one or more second uplink transmission occasions associated with the second SRS resource set.

The repetitions of the uplink transmission may comprise the one or more first repetitions of the uplink transmission and the one or more second repetitions of the uplink transmission.

In some examples, the one or more configuration parameters may comprise a multi-panel scheme parameter (e.g., *multipanelScheme*). In some examples, the multi-panel scheme parameter may be set to a spatial domain multiplexing (SDM) scheme for PUSCH transmissions (e.g., 'SDMscheme').

In the SDM scheme, the wireless device may transmit one or more first layers (or data streams) of the uplink transmission based on the first TCI state. The wireless device may transmit, in an uplink transmission occasion (e.g., PUSCH transmission occasion), the one or more first layers of the uplink transmission. The wireless device may transmit, in the uplink transmission occasion, the one or more first layers of the uplink transmission based on the first SRS resource set of the at least two SRS resource sets. The wireless device may apply the first TCI state to one or more first PUSCH antenna ports associated with the first SRS resource set. The wireless device may transmit the uplink transmission using the one or more first PUSCH antenna ports.

In the SDM scheme, the wireless device may transmit one or more second layers (or data streams) of the uplink transmission based on the second TCI state. The wireless device may transmit, in the uplink transmission occasion (e.g., PUSCH transmission occasion), the one or more second layers of the uplink transmission. The wireless device may transmit, in the uplink transmission occasion, the one or more second layers of the uplink transmission based on the second SRS resource set of the at least two SRS resource sets. The wireless device may apply the second TCI state to one or more second PUSCH antenna ports associated with the second SRS resource set. The wireless device may transmit the uplink transmission using the one or more second PUSCH antenna ports.

The one or more first layers and the one or more second layers may be, for example, different. The one or more first layers and the one or more second layers may not share a layer.

The one or more first PUSCH antenna ports and the one or more second PUSCH antenna ports may be, for example, separately precoded.

For example, the wireless device may apply a first transmission precoder indicated by a first TPMI to the one or more first PUSCH antenna ports and a second transmission precoder indicated by a second TPMI to the one or more second PUSCH antenna ports (e.g., for example for codebook based PUSCH transmissions). In some examples, the control command (e.g., Second control command in FIG. 17) may comprise/indicate the first TPMI and the second TPMI. In some examples, the one or more configuration parameters may indicate, for the Type 1 configured uplink grant, the first TPMI and the second TPMI.

For example, the wireless device may apply a first transmission precoder indicated by a first SRI to the one or more first PUSCH antenna ports and a second transmission precoder indicated by a second SRI to the one or more second PUSCH antenna ports (e.g., for example for non-codebook based PUSCH transmissions). In some examples, the control command (e.g., Second control command in FIG. 17) may comprise/indicate the first SRI and the second SRI. In some examples, the one or more configuration parameters may indicate, for the Type 1 configured uplink grant, the first SRI and the second SRI.

In some examples, the one or more configuration parameters may comprise a multi-panel scheme parameter (e.g., *multipanelScheme*). In some examples, the multi-panel scheme parameter may be set to singlefrequency network (SFN) scheme for PUSCH transmissions (e.g., 'SFNscheme').

In the SFN scheme, the wireless device may transmit the uplink transmission based on the first TCI state and the second TCI state. The wireless device may transmit each layer (or data streams) of the uplink transmission based on the first TCI state and the second TCI state. The wireless device may transmit, in an uplink transmission occasion (e.g., PUSCH transmission occasion), the uplink transmission. The wireless device may transmit, in the uplink transmission occasion, the uplink transmission based on both the first SRS resource set and the second SRS resource set. The wireless device may apply both the first TCI state and the second TCI state to one or more PUSCH antenna ports. The one or more PUSCH antenna ports may be associated with both the first SRS resource set and the second SRS resource set. The wireless device may transmit, based on the first TCI state, the uplink transmission using the one or more PUSCH antenna ports associated with the first SRS resource set. The wireless device may transmit, based on the second TCI state, the uplink transmission using the one or more PUSCH antenna ports associated with the second SRS resource set.

For example, the wireless device may apply a first transmission precoder indicated by a first TPMI to the one or more PUSCH antenna ports and a second transmission precoder indicated by a second TPMI to the one or more PUSCH antenna ports (e.g., for example for codebook based PUSCH transmissions). In some examples, the control command (e.g., Second control command in FIG. 17) may comprise/indicate the first TPMI and the second TPMI. In some examples, the one or more configuration parameters may indicate, for the Type 1 configured uplink grant, the first TPMI and the second TPMI.

For example, the wireless device may apply a first transmission precoder indicated by a first SRI to the one or more PUSCH antenna ports and a second transmission precoder indicated by a second SRI to the one or more PUSCH antenna ports (e.g., for example for non-codebook based PUSCH transmissions). In some examples, the control command (e.g., Second control command in FIG. 17) may comprise/indicate the first SRI and the second SRI. In some examples, the one or more configuration parameters may indicate, for the Type 1 configured uplink grant, the first SRI and the second SRI.

Applying, by a wireless device, a TCI state to an uplink transmission may comprise transmitting the uplink transmission based on the TCI state. In some examples, the wireless device may transmit the uplink transmission with/using a spatial domain transmission/transmit filter that is determined based on a reference signal indicated by the TCI state. The wireless device may transmit the uplink transmission with/using the spatial domain transmission/transmit filter/beam that is the same (or substantially same) as a spatial domain reception/receiving filter/beam used to receive the reference signal. In some examples, the wireless device may transmit the uplink transmission with/using a transmission power that is determined based on the TCI state. The wireless device may determine/calculate the transmission power based on one or more power control parameters (e.g., pathloss reference signal, pathloss compensation factor, target received power, closed-loop index) associated with (or mapped to or included in or indicated by) the TCI state. The one or more configuration parameters may indicate/map the one or more power control parameters for/to the TCI state.

Transmitting, by a wireless device, an uplink transmission based on a TCI state may comprise transmitting the uplink transmission with/using a spatial domain transmission/transmit filter that is determined based on a reference signal indicated by the TCI state. The wireless device may transmit the uplink transmission with/using the spatial domain transmission/transmit filter/beam that is the same (or substantially same) as a spatial domain reception/receiving filter/beam used to receive the reference signal.

Transmitting, by a wireless device, an uplink transmission based on a TCI state may comprise transmitting the uplink transmission with/using a transmission power that is determined based on the TCI state. The wireless device may determine/calculate the transmission power based on one or more power control parameters (e.g., pathloss reference signal, pathloss compensation factor, target received power, closed-loop index) associated with (or mapped to or included in or indicated by) the TCI state. The one or more configuration parameters may indicate/map the one or more power control parameters for/to the TCI state.

Applying, by a base station, a TCI state to an uplink transmission of a wireless device may comprise receiving, from the wireless device, the uplink transmission based on the TCI state. In some examples, the base station may receive, from the wireless device, the uplink transmission with/using a spatial domain reception/receiving filter/beam that is determined based on a reference signal indicated by the TCI state. In some examples, the base station may receive, from the wireless device, the uplink transmission with/using a spatial domain reception/receiving filter/beam that is the same (or substantially same) as a spatial domain transmission/transmit filter/beam used to transmit the reference signal to the wireless device. In some examples, the base station may receive, from the wireless device, the uplink transmission with/using a spatial domain reception/receiving filter/beam that is determined based on as a spatial domain reception/-receiving filter/beam used, by the wireless device, to receive the reference signal.

Receiving, by a base station and from a wireless device, an uplink transmission based on a TCI state may comprise receiving, from the wireless device, the uplink transmission with/using a spatial domain reception/receiving filter/beam that is determined based on a reference signal indicated by the TCI state. In some examples, the base station may receive, from the wireless device, the uplink transmission with/using a spatial domain reception/receiving filter/beam that is the same (or substantially same) as a spatial domain transmission/transmit filter/beam used to transmit the reference signal to the wireless device. In some examples, the base station may receive, from the wireless device, the uplink transmission with/using a spatial domain reception/receiving filter/beam that is determined based on as a spatial domain reception/receiving filter/beam used, by the wireless device, to receive the reference signal.

In some examples, the one or more configuration parameters may comprise the one or more first DRX configuration parameters of the first DRX of the cell and the one or more second DRX configuration parameters of the second DRX of the cell (e.g., both the first DRX and the second DRX are configured). In some examples, the control command (e.g., Third control command in FIG. 17) or a different control command (e.g., DCI format 2_9, DCI format 2_10, and the like) may indicate activation of the first DRX. In some examples, the control command (e.g., Third control command in FIG. 17) or a different control command (e.g., DCI format 2_9, DCI format 2_10, and the like) may indicate activation of the second DRX.

The wireless device may transmit the uplink transmission based on the at least two TCI states, for example, during an active time/duration/period of the first DRX (e.g., First DRX active time in FIG. 20, FIG. 21, and FIG. 22) and an active time/duration/period of the second DRX. The wireless device may transmit the uplink transmission based on the at least two TCI states, for example, based on the uplink transmission overlapping in time with the active time/duration/period of the first DRX and the active time/duration/period of the second DRX. In some examples, the uplink transmission may overlap in at least one symbol with the active time/duration/period of the first DRX. The uplink transmission may overlap in at least one symbol with the active time/duration/period of the second DRX. In some examples, each symbol of the uplink transmission may overlap in time with the active time/duration/period of the first DRX. Each symbol of the uplink transmission may overlap in time with the active time/duration/period of the second DRX.

The wireless device may receive the control command scheduling/activating the uplink transmission, for example, during the active time/duration/period of the first DRX. The wireless device may transmit the uplink transmission based on the at least two TCI states, for example, based on receiving the control command scheduling/activation the uplink transmission during the active time/duration/period of the first DRX.

The wireless device may receive the control command scheduling/activating the uplink transmission, for example, during the active time/duration/period of the second DRX. The wireless device may transmit the uplink transmission based on the at least two TCI states, for example, based on receiving the control command scheduling/activation the uplink transmission during the active time/duration/period of the second DRX.

The wireless device may receive the control command scheduling/activating the uplink transmission, for example, during the active time/duration/period of the first DRX and the active time/duration/period of the second DRX. The wireless device may transmit the uplink transmission based on the at least two TCI states, for example, based on receiving the control command scheduling/activating the uplink transmission during the active time/duration/period of the first DRX and the active time/duration/period of the second DRX.

The wireless device may transmit the uplink transmission based on the at least two TCI states, for example, based on the uplink transmission being in the active time/duration/period of the first DRX and the active time/duration/period of the second DRX. In some examples, at least one symbol of the uplink transmission may be in the active time/duration/period of the first DRX. The at least one symbol of the uplink transmission may be in the active time/duration/period of the second DRX. In some examples, each symbol of the uplink transmission may be in the active time/duration/period of the first DRX.

In some examples, the one or more configuration parameters may comprise the one or more first DRX configuration parameters of the first DRX of the cell (e.g., the first DRX is configured). The one or more configuration parameters may not comprise one or more second DRX configuration parameters of a second DRX of the cell (e.g., the second DRX is not configured). In some examples, the control command (e.g., Third control command in FIG. 17) may indicate activation of the first DRX.

A wireless device may transmit the uplink transmission based on the at least two TCI states, for example, during an active time/duration/period of the first DRX, for example, if the one or more configuration parameters do not comprise one or more second DRX configuration parameters of a second DRX of the cell (e.g., the second DRX is not configured). A wireless device may transmit the uplink transmission based on the at least two TCI states, for example, based on the uplink transmission overlapping in time with the active time/duration/period of the first DRX, for example, if the one or more configuration parameters do not comprise one or more second DRX configuration parameters of a second DRX of the cell (e.g., the second DRX is not configured). A wireless device may transmit the uplink transmission based on the at least two TCI states, for example, based on the uplink transmission being in the active time/duration/period of the first DRX, for example, if the one or more configuration parameters do not comprise one or more second DRX configuration parameters of a second DRX of the cell (e.g., the second DRX is not configured).

In some examples, the one or more configuration parameters may comprise the one or more second DRX configuration parameters of the second DRX of the cell (e.g., the second DRX is configured). The one or more configuration parameters may not comprise one or more first DRX configuration parameters of a first DRX of the cell (e.g., the first DRX is not configured). In some examples, the control command (e.g., Third control command in FIG. 17) may indicate activation of the second DRX.

A wireless device may transmit the uplink transmission based on the at least two TCI states, for example, during an active time/duration/period of the second DRX, for example, if the one or more configuration parameters do not comprise one or more first DRX configuration parameters of a first DRX of the cell (e.g., the first DRX is not configured). A wireless device may transmit the uplink transmission based on the at least two TCI states, for example, based on the uplink transmission overlapping in time with the active time/duration/period of the second DRX, for example, if the one or more configuration parameters do not comprise one or more first DRX configuration parameters of a first DRX of the cell (e.g., the first DRX is not configured). A wireless device may transmit the uplink transmission based on the at least two TCI states, for example, based on the uplink transmission being in the active time/duration/period of the second DRX, for example, if the one or more configuration parameters do not comprise one or more first DRX configuration parameters of a first DRX of the cell (e.g., the first DRX is not configured).

In some examples, the one or more configuration parameters may comprise the one or more first DRX configuration parameters of the first DRX of the cell. The one or more configuration parameters may comprise the one or more second DRX configuration parameters of the second DRX of the cell. In some examples, the control command (e.g., Third control command in FIG. 17) may indicate activation of the first DRX. The second DRX may not be activated by the wireless device and/or the base station. The wireless device may not receive a control command (e.g., DCI format 2_9, DCI format 2_10, and the like) indicating activation of the second DRX.

A wireless device may transmit the uplink transmission based on the at least two TCI states, for example, during an active time/duration/period of the first DRX, for example, if the second DRX of the cell is not activated. A wireless device may transmit the uplink transmission based on the at least two TCI states, for example, based on the uplink transmission overlapping in time with the active time/duration/period of the first DRX, for example, if the second DRX of the cell is not activated. A wireless device may transmit the uplink transmission based on the at least two TCI states, for example, based on the uplink transmission being in the active time/duration/period of the first DRX, for example, if the second DRX of the cell is not activated.

In some examples, the one or more configuration parameters may comprise the one or more first DRX configuration parameters of the first DRX of the cell. The one or more configuration parameters may comprise the one or more second DRX configuration parameters of the second DRX of the cell. In some examples, the control command (e.g., Third control command in FIG. 17) may indicate activation of the second DRX. The first DRX may not be activated by the wireless device and/or the base station. The wireless device may not receive a control command (e.g., DCI format 2_9, DCI format 2_10, and the like) indicating activation of the first DRX.

A wireless device may transmit the uplink transmission based on the at least two TCI states, for example, during an active time/duration/period of the second DRX, for example, if the first DRX of the cell is not activated. A wireless device may transmit the uplink transmission based on the at least two TCI states, for example, based on the uplink transmission overlapping in time with the active time/duration/period of the second DRX, for example, if the first DRX of the cell is not activated. A wireless device may transmit the uplink transmission based on the at least two TCI states, for example, based on the uplink transmission being in the active time/duration/period of the second DRX, for example, if the first DRX of the cell is not activated.

A wireless device may receive, from a base station, one or more messages (e.g., RRC messages, RRC reconfiguration messages) comprising one or more configuration parameters. The base station may transmit the one or more messages. The one or more configuration parameters may indicate/provide/comprise, by a first DRX higher layer parameter (e.g., *TRP-DRX-Config*) of the one or more configuration parameters, a first DRX configuration of a cell (e.g., a serving cell, a non-serving cell, a candidate/target/neighbor cell). If the wireless device transmits/provides/reports a capability of two DRX per/for cell (e.g., *twoDRXcapability*), the one or more configuration parameters may indicate/provide/comprise, by a second DRX higher layer parameter (e.g., *TRP-DRX-Config2*) of the one or more configuration parameters, a second DRX configuration of the cell.

The wireless device may apply two indicated TCI states (or both indicated TCI states or each TCI state of the two indicated TCI states) to an uplink transmission (e.g., a PUSCH transmission, a PUCCH transmission via a PUCCH resource, a PUSCH transmission corresponding to a Type 1 configured grant, a scheduled/activated PUSCH transmission, and the like) (e.g., if an SRS resource set indicator field of a DCI format 1_1/1_2 scheduling/activating the PUSCH transmission is set/equal to '10' or '11', or if the wireless device is configured/indicated/provided, for the Type 1 configured uplink grant or the PUCCH resource, with a higher layer parameter *applyIndicatedTCIState* set to 'both'), if:

- the first DRX configuration and the second DRX configuration are not configured by the one or more messages (or the one or more configuration parameters), or
- the first DRX configuration is not configured or activated, and the second DRX configuration is not configured or activated, or
- the first DRX configuration is not configured or activated, and the uplink transmission overlaps with (or is in) an active time/period/duration of the second DRX configuration, or

- the second DRX configuration is not configured or activated, and the uplink transmission overlaps with (or is in) an active time/period/duration of the first DRX configuration, or

- the uplink transmission overlaps with (or is in) an active time/period/duration of the first DRX configuration and an active time/period/duration of the second DRX configuration.

A wireless device may be provided/indicated, by a first DRX higher layer parameter (e.g., *TRP-DRX Config, DRX-Config1*), a first DRX configuration of a cell, and, if the wireless device provides a capability of two DRXs per cell (e.g., *twoDRXcapability*), the wireless device may be provided, by a second DRX higher layer parameter (e.g., *TRP2-DRX-Config, DRX-Config2*), a second DRX configuration of the cell.

The wireless device may apply both of the two indicated TCI states to an uplink transmission (e.g., PUSCH transmission, a PUCCH transmission, a PUSCH transmission corresponding to a Type 1 configured grant, scheduled/activated PUSCH transmission, and the like) if the first DRX configuration and/or the second DRX configuration are not configured and/or activated, or the uplink transmission overlaps with (or is in) an active time/period/duration of the first DRX configuration and an active time/period/duration of the second DRX configuration.

The wireless device may transmit the uplink transmission (e.g., Uplink transmission 2 and Uplink transmission 3 during/in First DRX non-active time in FIG. 20), for example, based on a TCI state (a single TCI state) of the at least two TCI states. The wireless device may use the TCI state for the uplink transmission. The wireless device may apply the TCI state to/for the uplink transmission. The TCI state may be, for example, the first TCI state of the at least two TCI states. The TCI state may be, for example, the second TCI state of the at least two TCI states.

The wireless device may fall back to the TCI state for the uplink transmission associated/indicated with the at least two TCI states. The wireless device may fall back to the TCI state from the at least two TCI states for the uplink transmission associated/indicated with the at least two TCI states. The wireless device may fall back to using/applying the TCI state for/to the uplink transmission associated/indicated with the at least two TCI states.

The wireless device may transmit the uplink transmission based on the TCI state, for example, during a non-active time of the DRX of the cell. The wireless device may use/apply the TCI state to/for the uplink transmission, for example, during the non-active time of the DRX. The wireless device may fall back to the TCI state for the uplink transmission, for example, during the non-active time of the DRX.

The TCI state may be, for example, the first TCI state. The at least two TCI states may comprise the first TCI state. The TCI state may be, for example, the second TCI state. The at least two TCI states may comprise the second TCI state.

In an example, the DRX of the cell activated by the control command (e.g., Third control command in FIG. 17) may be the first DRX of the cell. The TCI state used for the uplink transmission may be the second TCI state of the at least two TCI states.

The wireless device may transmit the uplink transmission (e.g., Uplink transmission 2 and Uplink transmission 3 during First DRX non-active time in FIG. 20) based on the second TCI state of the at least two TCI states, for example, during a non-active time/duration/period of the first DRX (e.g., First DRX non-active time in FIG. 20). The wireless device may not transmit the uplink transmission based on the first TCI state of the at least two TCI states, for example, during the non-active time/duration/period of the first DRX. The wireless device may apply the second TCI state to/for the uplink transmission during the non-active time/duration/period of the first DRX. The wireless device may use the second TCI state for the uplink transmission during the non-active time/duration/period of the first DRX.

During the non-active time/duration/period of the first DRX, the wireless device may fall back to the second TCI state from the at least two TCI states for the uplink transmission associated/indicated with the at least two TCI states.

The wireless device may receive the control command scheduling/activation the uplink transmission, for example, during the non-active time/duration/period of the first DRX. The wireless device may transmit the uplink transmission based on the second TCI state, for example, based on receiving the control command scheduling/activation the uplink transmission during the non-active time/duration/period of the first DRX.

The wireless device may receive the control command scheduling/activation the uplink transmission, for example, during the active time/duration/period of the second DRX. The wireless device may transmit the uplink transmission based on the second TCI state, for example, based on receiving the control command scheduling/activation the uplink transmission during the active time/duration/period of the second DRX.

The wireless device may transmit the uplink transmission based on the second TCI state of the at least two TCI states, for example, based on the uplink transmission overlapping in time with the non-active time/duration/period of the first DRX. The wireless device may transmit the uplink transmission based on the second TCI state of the at least two TCI states, for example, based on the uplink transmission being in the non-active time/duration/period of the first DRX. In some examples, the uplink transmission may overlap in at least one symbol with the non-active time/duration/period of the first DRX. In some examples, each symbol of the uplink transmission may overlap in time with the non-active time/duration/period of the first DRX.

The wireless device may not transmit the uplink transmission based on the first TCI state of the at least two TCI states, for example, based on the uplink transmission overlapping in time with the non-active time/duration/period of the first DRX. The wireless device may not transmit the uplink transmission based on the first TCI state of the at least two TCI states, for example, based on the uplink transmission being in the non-active time/duration/period of the first DRX.

In some examples, the one or more configuration parameters may comprise the one or more second DRX configuration parameters of the second DRX of the cell. The control command (e.g., Third control command in FIG. 17) or a different control command (e.g., DCI format 2_9, DCI format 2_10, and the like) may indicate activation of the second DRX. The wireless device may transmit the uplink transmission based on the second TCI state of the at least two TCI states, for example, during an active time/duration/period of the second DRX. The wireless device may transmit the uplink transmission based on the second TCI state of the at least two TCI states, for example, based on the uplink transmission overlapping in time with the active time/duration/period of the second DRX. The wireless device may transmit the uplink transmission based on the second TCI state of the at least two TCI states, for example, based on the uplink transmission being in the active time/duration/period of the second DRX.

In some examples, the uplink transmission may overlap in at least one symbol with the active time/duration/period of the second DRX. In some examples, each symbol of the uplink transmission may overlap in time with the active time/duration/period of the second DRX.

In some examples, the one or more configuration parameters may not comprise one or more second DRX configuration parameters of a second DRX of the cell (e.g., the second DRX is not configured). The wireless device may transmit the uplink transmission based on the second TCI state of the at least two TCI states, for example, based on the one or more configuration parameters not comprising the one or more second DRX configuration parameters of the second DRX of the cell.

In some examples, the one or more configuration parameters may comprise the one or more second DRX configuration parameters of a second DRX of the cell (e.g., the second DRX is configured). The second DRX may not be activated by the wireless device and/or the base station. The wireless device may not receive a control command (e.g., DCI format 2_9, DCI format 2_10, and the like) indicating activation of the second DRX. The wireless device may transmit the uplink transmission based on the second TCI state of the at least two TCI states, for example, based on not receiving a control command (e.g., Third control command in FIG. 17, DCI format 2_9, DCI format 2_10, and the like) indicating activation of the second DRX of the cell.

In an example, the DRX of the cell activated by the control command (e.g., Third control command in FIG. 17) may be the second DRX of the cell. The TCI state used for the uplink transmission may be the first TCI state of the at least two TCI states.

The wireless device may transmit the uplink transmission based on the first TCI state of the at least two TCI states, for example, during a non-active time/duration/period of the second DRX. The wireless device may not transmit the uplink transmission based on the second TCI state of the at least two TCI states, for example, during the non-active time/duration/period of the second DRX. The wireless device may apply the first TCI state to/for the uplink transmission during the non-active time/duration/period of the second DRX. The wireless device may use the first TCI state for the uplink transmission during the non-active time/duration/period of the second DRX.

During the non-active time/duration/period of the second DRX, the wireless device may fall back to the first TCI state from the at least two TCI states for the uplink transmission associated/indicated with the at least two TCI states.

The wireless device may receive the control command scheduling/activation the uplink transmission, for example, during the non-active time/duration/period of the second DRX. The wireless device may transmit the uplink transmission based on the first TCI state, for example, based on receiving the control command scheduling/activation the uplink transmission during the non-active time/duration/period of the second DRX.

The wireless device may receive the control command scheduling/activation the uplink transmission, for example, during the active time/duration/period of the first DRX. The wireless device may transmit the uplink transmission based on the first TCI state, for example, based on receiving the control command scheduling/activation the uplink transmission during the active time/duration/period of the first DRX.

The wireless device may transmit the uplink transmission based on the first TCI state of the at least two TCI states, for example, based on the uplink transmission overlapping in time with the non-active time/duration/period of the second DRX. The wireless device may transmit the uplink transmission based on the first TCI state of the at least two TCI states, for example, based on the uplink transmission being in the non-active time/duration/period of the second DRX.

In some examples, the uplink transmission may overlap in at least one symbol with the non-active time/duration/period of the second DRX. In some examples, each symbol of the uplink transmission may overlap in time with the non-active time/duration/period of the second DRX.

The wireless device may not transmit the uplink transmission based on the second TCI state of the at least two TCI states, for example, based on the uplink transmission overlapping in time with the non-active time/duration/period of the second DRX. The wireless device may not transmit the uplink transmission based on the second TCI state of the at least two TCI states, for example, based on the uplink transmission being in the non-active time/duration/period of the second DRX.

In some examples, the one or more configuration parameters may comprise the one or more first DRX configuration parameters of the first DRX of the cell. The control command (e.g., Third control command in FIG. 17) or a different control command (e.g., DCI format 2_9, DCI format 2_10, and the like) may indicate activation of the first DRX. The wireless device may transmit the uplink transmission based on the first TCI state of the at least two TCI states, for example, during an active time/duration/period of the first DRX. The wireless device may transmit the uplink transmission based on the first TCI state of the at least two TCI states, for example, based on the uplink transmission overlapping in time with the active time/duration/period of the first DRX. The wireless device may transmit the uplink transmission based on the first TCI state of the at least two TCI states, for example, based on the uplink transmission being in the active time/duration/period of the first DRX.

In some examples, the uplink transmission may overlap in at least one symbol with the active time/duration/period of the first DRX. In some examples, each symbol of the uplink transmission may overlap in time with the active time/duration/period of the first DRX.

In some examples, the one or more configuration parameters may not comprise one or more first DRX configuration parameters of a first DRX of the cell (e.g., the first DRX is not configured). The wireless device may transmit the uplink transmission based on the first TCI state of the at least two TCI states, for example, based on the one or more configuration parameters not comprising the one or more first DRX configuration parameters of the first DRX of the cell.

In some examples, the one or more configuration parameters may comprise the one or more first DRX configuration parameters of a first DRX of the cell (e.g., the first DRX is configured). The first DRX may not be activated by the wireless device and/or the base station. The wireless device may not receive a control command (e.g., Third control command in FIG. 17, DCI format 2_9, DCI format 2_10, and the like) indicating activation of the first DRX. The wireless device may transmit the uplink transmission based on the first TCI state of the at least two TCI states, for example, based on not receiving a control command (e.g., DCI format 2_9, DCI format 2_10, and the like) indicating activation of the first DRX of the cell.

A wireless device may apply only the first indicated TCI state of the two indicated TCI states to the uplink transmission, for example, if the wireless device would (or is supposed/configured/indicated/scheduled to) apply two indicated TCI states to an uplink transmission (e.g., a PUSCH transmission, a PUCCH transmission via a PUCCH resource, a PUSCH transmission corresponding to a Type 1 configured grant, a scheduled/activated PUSCH transmission, and the like) (e.g., if an SRS resource set indicator field of a DCI format 1_1/1_2 scheduling/activating the PUSCH transmission is set/equal to '10' or '11', or if the wireless device is configured/indicated/provided, for the Type 1 configured uplink grant or the PUCCH resource, with a higher layer parameter *applyIndicatedTCIState* set to 'both'), and if the uplink transmission overlaps with (or is in) a non-active time/period/duration of the second DRX configuration.

A wireless device may apply only the first indicated TCI state of the two indicated TCI states to the uplink transmission, for example, if the wireless device would (or is supposed/configured/indicated/scheduled to) apply two indicated TCI states to an uplink transmission (e.g., a PUSCH transmission, a PUCCH transmission via a PUCCH resource, a PUSCH transmission corresponding to a Type 1 configured grant, a scheduled/activated PUSCH transmission, and the like) (e.g., if an SRS resource set indicator field of a DCI format 1_1/1_2 scheduling/activating the PUSCH transmission is set/equal to '10' or '11', or if the wireless device is configured/indicated/provided, for the Type 1 configured uplink grant or the PUCCH resource, with a higher layer parameter *applyIndicatedTCIState* set to 'both'), and if the first DRX configuration is not configured/indicated/provided and/or activated, or if the uplink transmission overlaps with (or is in) an active time/period/duration of the first DRX configuration.

A wireless device may apply only the second indicated TCI state of the two indicated TCI states to the uplink transmission, for example, if the wireless device would (or is supposed/configured/indicated/scheduled to) apply two indicated TCI states to an uplink transmission (e.g., a PUSCH transmission, a PUCCH transmission via a PUCCH resource, a PUSCH transmission corresponding to a Type 1 configured grant, a scheduled/activated PUSCH transmission, and the like) (e.g., if an SRS resource set indicator field of a DCI format 1_1/1_2 scheduling/activating the PUSCH transmission is set/equal to '10' or '11', or if the wireless device is configured/indicated/provided, for the Type 1 configured uplink grant or the PUCCH resource, with a higher layer parameter *applyIndicatedTCIState* set to 'both'), and if the uplink transmission overlaps with (or is in) a non-active time/period/duration of the first DRX configuration.

A wireless device may apply only the second indicated TCI state of the two indicated TCI states to the uplink transmission, for example, if the wireless device would (or is supposed/configured/indicated/scheduled to) apply two indicated TCI states to an uplink transmission (e.g., a PUSCH transmission, a PUCCH transmission via a PUCCH resource, a PUSCH transmission corresponding to a Type 1 configured grant, a scheduled/activated PUSCH transmission, and the like) (e.g., if an SRS resource set indicator field of a DCI format 1_1/1_2 scheduling/activating the PUSCH transmission is set/equal to '10' or '11', or if the wireless device is configured/indicated/provided, for the Type 1 configured uplink grant or the PUCCH resource, with a higher layer parameter *applyIndicatedTCIState* set to 'both'), and if the second DRX configuration is not configured/indicated/provided and/or activated, or if the uplink transmission overlaps with (or is in) an active time/period/duration of the second DRX configuration.

A base station may apply only the first indicated TCI state of the two indicated TCI states to the uplink transmission, for example, if the base station indicates, to a wireless device, to apply two indicated TCI states to the uplink transmission (e.g., if the SRS resource set indicator field of the DCI format 1_1/1_2, transmitted by the base station, scheduling/activating the PUSCH transmission is set/equal to '10' or '11', or if the base station configures/indicates/provides, for the Type 1 configured uplink grant or the PUCCH resource, the higher layer parameter *applyIndicatedTCIState* set to 'both'), and if the uplink transmission overlaps with (or is in) a non-active time/period/duration of the second DRX configuration.

A base station may apply only the first indicated TCI state of the two indicated TCI states to the uplink transmission, for example, if the base station indicates, to a wireless device, to apply two indicated TCI states to the uplink transmission (e.g., if the SRS resource set indicator field of the DCI format 1_1/1_2, transmitted by the base station, scheduling/activating the PUSCH transmission is set/equal to '10' or '11', or if the base station configures/indicates/provides, for the Type 1 configured uplink grant or the PUCCH resource, the higher layer parameter *applyIndicatedTCIState* set to 'both'), and if the first DRX configuration is not configured/indicated/provided and/or activated, or if the uplink transmission overlaps with (or is in) an active time/period/duration of the first DRX configuration.

A base station may apply only the second indicated TCI state of the two indicated TCI states to the uplink transmission, for example, if the base station indicates, to a wireless device, to apply two indicated TCI states to the uplink transmission (e.g., if the SRS resource set indicator field of the DCI format 1_1/1_2, transmitted by the base station, scheduling/activating the PUSCH transmission is set/equal to '10' or '11', or if the base station configures/indicates/provides, for the Type 1 configured uplink grant or the PUCCH resource, the higher layer parameter *applyIndicatedTCIState* set to 'both'), and if the uplink transmission overlaps with (or is in) a non-active time/period/duration of the first DRX configuration.

A base station may apply only the second indicated TCI state of the two indicated TCI states to the uplink transmission, for example, if the base station indicates, to a wireless device, to apply two indicated TCI states to the uplink transmission (e.g., if the SRS resource set indicator field of the DCI format 1_1/1_2, transmitted by the base station, scheduling/activating the PUSCH transmission is set/equal to '10' or '11', or if the base station configures/indicates/provides, for the Type 1 configured uplink grant or the PUCCH resource, the higher layer parameter *applyIndicatedTCIState* set to 'both'), and if the second DRX configuration is not configured/indicated/provided and/or activated, or if the uplink transmission overlaps with (or is in) an active time/period/duration of the second DRX configuration.

The wireless device may transmit the uplink transmission (e.g., Uplink transmission 2 and Uplink transmission 3 in FIG. 20) based on the TCI state of the at least two TCI states. The wireless device may transmit, during the non-active time of the DRX of the cell, the uplink transmission based on the TCI state of the at least two TCI states.

The wireless device may transmit, during the non-active time of the DRX of the cell, the uplink transmission based on the TCI state, for example, based on the one or more configuration parameters not comprising a multi-panel scheme parameter (e.g., *multipαnelScheme*). The multi-panel scheme parameter may be absent (or not present) in the one or more configuration parameters.

The wireless device may transmit, during the non-active time of the DRX of the cell, the uplink transmission based on the TCI state, for example, based on the one or more configuration parameters comprising a multi-panel scheme parameter (e.g., *multipanelScheme*) set to the SFN scheme (e.g., 'SFNscheme'). The multi-panel scheme parameter may not be set to an SDM scheme (e.g., 'SDMscheme').

The wireless device may transmit, during the non-active time of the DRX of the cell, the uplink transmission based on the TCI state, for example, based on the one or more configuration parameters not comprising a multi-panel scheme parameter (e.g., *multipanelScheme*) set to the SDM scheme (e.g., 'SDMscheme'). The multi-panel scheme parameter may be set to an SFN scheme (e.g., 'SFNscheme').

The wireless device may transmit, during the non-active time of the DRX of the cell, the uplink transmission based on the TCI state, for example, based on the multi-panel scheme parameter (e.g., *multipanelScheme*) not being set to the SDM scheme (e.g., 'SDMscheme'). The wireless device may transmit, during the non-active time of the DRX of the cell, the uplink transmission based on the TCI state, for example, based on the multi-panel scheme parameter (e.g., *multipanelScheme*) being set to the SFN scheme (e.g., 'SFNscheme').

The wireless device may fall back to the TCI state for the uplink transmission during the non-active time of the DRX.

The wireless device may fall back to the TCI state for the uplink transmission during the non-active time of the DRX, for example, based on (e.g., in response to) the one or more configuration parameters not comprising a multi-panel scheme parameter (e.g., *multipanelScheme*).

The wireless device may fall back to the TCI state for the uplink transmission during the non-active time of the DRX, for example, based on (e.g., in response to) the one or more configuration parameters comprising a multi-panel scheme parameter (e.g., *multipanelScheme*) set to the SFN scheme (e.g., 'SFNscheme').

The wireless device may fall back to the TCI state for the uplink transmission during the non-active time of the DRX, for example, based on (e.g., in response to) the one or more configuration parameters not comprising a multi-panel scheme parameter (e.g., *multipanelScheme*) set to the SDM scheme (e.g., 'SDMscheme').

The wireless device may fall back to the TCI state for the uplink transmission during the non-active time of the DRX, for example, based on (e.g., in response to) the multi-panel scheme parameter (e.g., *multipanelScheme*) not being set to the SDM scheme (e.g., 'SDMscheme').

Falling back to the TCI state for the uplink transmission may comprise switching to the TCI state for the uplink transmission. The wireless device may not transmit, during the non-active time of the DRX, the uplink transmission based on a different TCI state from/than the TCI state. The wireless device may not transmit, during the non-active time of the DRX, the uplink transmission based on a different TCI state from/than the TCI state, for example, after falling back to the TCI state for the uplink transmission.

In some examples, the wireless device may transmit, during the non-active time of the first DRX of the cell, the uplink transmission based on the second TCI state of the at least two TCI states.

The wireless device may transmit, during the non-active time of the first DRX of the cell, the uplink transmission based on the second TCI state, for example, based on (e.g., in response to) the one or more configuration parameters not comprising a multi-panel scheme parameter (e.g., *multipanelScheme*).

The wireless device may transmit, during the non-active time of the first DRX of the cell, the uplink transmission based on the second TCI state, for example, based on (e.g., in response to) the one or more configuration parameters comprising a multi-panel scheme parameter (e.g., *multipanelScheme*) set to the SFN scheme (e.g., 'SFNscheme').

The wireless device may transmit, during the non-active time of the first DRX of the cell, the uplink transmission based on the second TCI state, for example, based on (e.g., in response to) the one or more configuration parameters not comprising a multi-panel scheme parameter (e.g., *multipanelScheme*) set to the SDM scheme (e.g., 'SDMscheme').

The wireless device may transmit, during the non-active time of the first DRX of the cell, the uplink transmission based on the second TCI state, for example, based on (e.g., in response to) the multi-panel scheme parameter (e.g., *multipanelScheme*) not being set to the SDM scheme (e.g., 'SDMscheme').

In some examples, the uplink transmission may overlap in time with the active time/duration/period of the second DRX (that is configured and activated). In some examples, the one or more configuration parameters may not comprise one or more second DRX configuration parameters of a second DRX of the cell (e.g., the second DRX is not configured). In some examples, the wireless device may not receive a control command (e.g., DCI format 2_9, DCI format 2_10, and the like) indicating activation of the second DRX of the cell (e.g., the second DRX is not activated).

In some examples, the wireless device may transmit, during the non-active time of the second DRX of the cell, the uplink transmission based on the first TCI state of the at least two TCI states.

The wireless device may transmit, during the non-active time of the second DRX of the cell, the uplink transmission based on the first TCI state, for example, based on (e.g., in response to) the one or more configuration parameters not comprising a multi-panel scheme parameter (e.g., *multipanelScheme*).

The wireless device may transmit, during the non-active time of the second DRX of the cell, the uplink transmission based on the first TCI state, for example, based on (e.g., in response to) the one or more configuration parameters comprising a multi-panel scheme parameter (e.g., *multipanelScheme*) set to the SFN scheme (e.g., 'SFNscheme').

The wireless device may transmit, during the non-active time of the second DRX of the cell, the uplink transmission based on the first TCI state, for example, based on (e.g., in response to) the one or more configuration parameters not comprising a multi-panel scheme parameter (e.g., *multipanelScheme*) set to the SDM scheme (e.g., 'SDMscheme').

The wireless device may transmit, during the non-active time of the second DRX of the cell, the uplink transmission based on the first TCI state, for example, based on (e.g., in response to) the multi-panel scheme parameter (e.g., *multipanelScheme*) not being set to the SDM scheme (e.g., 'SDMscheme').

In some examples, the uplink transmission may overlap in time with the active time/duration/period of the first DRX (that is configured and activated). In some examples, the one or more configuration parameters may not comprise one or more first DRX configuration parameters of a first DRX of the cell (e.g., the first DRX is not configured). In some examples, the wireless device may not receive a control command (e.g., DCI format 2_9, DCI format 2_10, and the like) indicating activation of the first DRX of the cell (e.g., the first DRX is not activated).

A wireless device may apply only the first indicated TCI state of the two indicated TCI states to the uplink transmission, for example, if the wireless device would (or is supposed/configured/indicated/scheduled to) apply two indicated TCI states to an uplink transmission (e.g., a PUSCH transmission, a PUCCH transmission via a PUCCH resource, a PUSCH transmission corresponding to a Type 1 configured grant, a scheduled/activated PUSCH transmission, and the like) (e.g., if an SRS resource set indicator field of a DCI format 1_1/1_2 scheduling/activating the PUSCH transmission is set/equal to '10' or '11', or if the wireless device is configured/indicated/provided, for the Type 1 configured uplink grant or the PUCCH resource, with a higher layer parameter *applyIndicatedTCIState* set to 'both'), if a higher layer parameter *multipanelScheme* is not configured or a higher layer parameter *multipanelScheme* is configured and set to 'SFNscheme' (or is not set to 'SDMscheme'), and if the uplink transmission overlaps with (or is in) a non-active time/period/duration of the second DRX configuration.

A wireless device may apply only the first indicated TCI state of the two indicated TCI states to the uplink transmission, for example, if the wireless device would (or is supposed/configured/indicated/scheduled to) apply two indicated TCI states to an uplink transmission (e.g., a PUSCH transmission, a PUCCH transmission via a PUCCH resource, a PUSCH transmission corresponding to a Type 1 configured grant, a scheduled/activated PUSCH transmission, and the like) (e.g., if an SRS resource set indicator field of a DCI format 1_1/1_2 scheduling/activating the PUSCH transmission is set/equal to '10' or '11', or if the wireless device is configured/indicated/provided, for the Type 1 configured uplink grant or the PUCCH resource, with a higher layer parameter *applyIndicatedTCIState* set to 'both'), if a higher layer parameter *multipanelScheme* is not configured or a higher layer parameter *multipanelScheme* is configured and set to 'SFNscheme' (or is not set to 'SDMscheme'), and if the first DRX configuration is not configured/indicated/provided and/or activated, or if the uplink transmission overlaps with (or is in) an active time/period/duration of the first DRX configuration.

A wireless device may apply only the second indicated TCI state of the two indicated TCI states to the uplink transmission, for example, if the wireless device would (or is supposed/configured/indicated/scheduled to) apply two indicated TCI states to an uplink transmission (e.g., a PUSCH transmission, a PUCCH transmission via a PUCCH resource, a PUSCH transmission corresponding to a Type 1 configured grant, a scheduled/activated PUSCH transmission, and the like) (e.g., if an SRS resource set indicator field of a DCI format 1_1/1_2 scheduling/activating the PUSCH transmission is set/equal to '10' or '11', or if the wireless device is configured/indicated/provided, for the Type 1 configured uplink grant or the PUCCH resource, with a higher layer parameter *applyIndicatedTCIState* set to 'both'), if a higher layer parameter *multipanelScheme* is not configured or a higher layer parameter *multipanelScheme* is configured and set to 'SFNscheme' (or is not set to 'SDMscheme'), and if the uplink transmission overlaps with (or is in) a non-active time/period/duration of the first DRX configuration.

A wireless device may apply only the second indicated TCI state of the two indicated TCI states to the uplink transmission, for example, if the wireless device would (or is supposed/configured/indicated/scheduled to) apply two indicated TCI states to an uplink transmission (e.g., a PUSCH transmission, a PUCCH transmission via a PUCCH resource, a PUSCH transmission corresponding to a Type 1 configured grant, a scheduled/activated PUSCH transmission, and the like) (e.g., if an SRS resource set indicator field of a DCI format 1_1/1_2 scheduling/activating the PUSCH transmission is set/equal to '10' or '11', or if the wireless device is configured/indicated/provided, for the Type 1 configured uplink grant or the PUCCH resource, with a higher layer parameter *applyIndicatedTCIState* set to 'both'), if a higher layer parameter *multipanelScheme* is not configured or a higher layer parameter *multipanelScheme* is configured and set to 'SFNscheme' (or is not set to 'SDMscheme'), and if the second DRX configuration is not configured/indicated/provided and/or activated, or if the uplink transmission overlaps with (or is in) an active time/period/duration of the second DRX configuration.

A base station may apply only the first indicated TCI state of the two indicated TCI states to the uplink transmission, for example, if the base station indicates, to a wireless device, to apply two indicated TCI states to the uplink transmission (e.g., if the SRS resource set indicator field of the DCI format 1_1/1_2, transmitted by the base station, scheduling/activating the PUSCH transmission is set/equal to '10' or '11', or if the base station configures/indicates/provides, for the Type 1 configured uplink grant or the PUCCH resource, the higher layer parameter *applyIndicatedTCIState* set to 'both'), if the base station does not transmit/indicate/configure, to the wireless device, a higher layer parameter *multipanelScheme,* or transmits/indicates/configures, to the wireless device, a higher layer parameter *multipanelScheme* set to 'SFNscheme' (or not set to 'SDMscheme'), and if the uplink transmission overlaps with (or is in) a non-active time/period/duration of the second DRX configuration.

A base station may apply only the first indicated TCI state of the two indicated TCI states to the uplink transmission, for example, if the base station indicates, to a wireless device, to apply two indicated TCI states to the uplink transmission (e.g., if the SRS resource set indicator field of the DCI format 1_1/1_2, transmitted by the base station, scheduling/activating the PUSCH transmission is set/equal to '10' or '11', or if the base station configures/indicates/provides, for the Type 1 configured uplink grant or the PUCCH resource, the higher layer parameter *applyIndicatedTCIState* set to 'both'), if the base station does not transmit/indicate/configure, to the wireless device, a higher layer parameter *multipanelScheme,* or transmits/indicates/configures, to the wireless device, a higher layer parameter *multipanelScheme* set to 'SFNscheme' (or not set to 'SDMscheme'), and if the first DRX configuration is not configured/indicated/provided and/or activated, or if the uplink transmission overlaps with (or is in) an active time/period/duration of the first DRX configuration.

A base station may apply only the second indicated TCI state of the two indicated TCI states to the uplink transmission, for example, if the base station indicates, to a wireless device, to apply two indicated TCI states to the uplink transmission (e.g., if the SRS resource set indicator field of the DCI format 1_1/1_2, transmitted by the base station, scheduling/activating the PUSCH transmission is set/equal to '10' or '11', or if the base station configures/indicates/provides, for the Type 1 configured uplink grant or the PUCCH resource, the higher layer parameter *applyIndicatedTCIState* set to 'both'), if the base station does not transmit/indicate/configure, to the wireless device, a higher layer parameter *multipanelScheme,* or transmits/indicates/configures, to the wireless device, a higher layer parameter *multi-*

*panelScheme* set to 'SFNscheme' (or not set to 'SDMscheme'), and if the uplink transmission overlaps with (or is in) a non-active time/period/duration of the first DRX configuration.

A base station may apply only the second indicated TCI state of the two indicated TCI states to the uplink transmission, for example, if the base station indicates, to a wireless device, to apply two indicated TCI states to the uplink transmission (e.g., if the SRS resource set indicator field of the DCI format 1_1/1_2, transmitted by the base station, scheduling/activating the PUSCH transmission is set/equal to '10' or '11', or if the base station configures/indicates/provides, for the Type 1 configured uplink grant or the PUCCH resource, the higher layer parameter *applyIndicatedTCIState* set to 'both'), if the base station does not transmit/indicate/configure, to the wireless device, a higher layer parameter *multipanelScheme,* or transmits/indicates/configures, to the wireless device, a higher layer parameter *multipanelScheme* set to 'SFNscheme' (or not set to 'SDMscheme'), and if the second DRX configuration is not configured/indicated/provided and/or activated, or if the uplink transmission overlaps with (or is in) an active time/period/duration of the second DRX configuration.

A wireless device may apply only the first indicated TCI state of the two indicated TCI states to the uplink transmission, for example, if the wireless device is not configured with a higher layer parameter *multipanelScheme,* or is configured with a higher layer parameter *multipanelScheme* set to 'SFNscheme' (or not set to 'SDMscheme'), and if the wireless device would (or is supposed/configured/indicated/scheduled to) apply two indicated TCI states to an uplink transmission (e.g., a PUSCH transmission, a PUCCH transmission via a PUCCH resource, a PUSCH transmission corresponding to a Type 1 configured grant, a scheduled/activated PUSCH transmission, and the like) (e.g., if an SRS resource set indicator field of a DCI format 1_1/1_2 scheduling/activating the PUSCH transmission is set/equal to '10' or '11', or if the wireless device is configured/indicated/provided, for the Type 1 configured uplink grant or the PUCCH resource, with a higher layer parameter *applyIndicatedTCIState* set to 'both'), and if the uplink transmission overlaps with (or is in) a non-active time/period/duration of the second DRX configuration.

A wireless device may apply only the first indicated TCI state of the two indicated TCI states to the uplink transmission, for example, if the wireless device is not configured with a higher layer parameter *multipanelScheme,* or is configured with a higher layer parameter *multipanelScheme* set to 'SFNscheme' (or not set to 'SDMscheme'), and if the wireless device would (or is supposed/configured/indicated/scheduled to) apply two indicated TCI states to an uplink transmission (e.g., a PUSCH transmission, a PUCCH transmission via a PUCCH resource, a PUSCH transmission corresponding to a Type 1 configured grant, a scheduled/activated PUSCH transmission, and the like) (e.g., if an SRS resource set indicator field of a DCI format 1_1/1_2 scheduling/activating the PUSCH transmission is set/equal to '10' or '11', or if the wireless device is configured/indicated/provided, for the Type 1 configured uplink grant or the PUCCH resource, with a higher layer parameter *applyIndicatedTCIState* set to 'both'), and if the first DRX configuration is not configured/indicated/provided and/or activated, or if the uplink transmission overlaps with (or is in) an active time/period/duration of the first DRX configuration.

A wireless device may apply only the second indicated TCI state of the two indicated TCI states to the uplink transmission, for example, if the wireless device is not configured with a higher layer parameter *multipanelScheme,* or is configured with a higher layer parameter *multipanelScheme* set to 'SFNscheme' (or not set to 'SDMscheme'), and if the wireless device would (or is supposed/configured/indicated/scheduled to) apply two indicated TCI states to an uplink transmission (e.g., a PUSCH transmission, a PUCCH transmission via a PUCCH resource, a PUSCH transmission corresponding to a Type 1 configured grant, a scheduled/activated PUSCH transmission, and the like) (e.g., if an SRS resource set indicator field of a DCI format 1_1/1_2 scheduling/activating the PUSCH transmission is set/equal to '10' or '11', or if the wireless device is configured/indicated/provided, for the Type 1 configured uplink grant or the PUCCH resource, with a higher layer parameter *applyIndicatedTCIState* set to 'both'), and if the uplink transmission overlaps with (or is in) a non-active time/period/duration of the first DRX configuration.

A wireless device may apply only the second indicated TCI state of the two indicated TCI states to the uplink transmission, for example, if the wireless device is not configured with a higher layer parameter *multipanelScheme,* or is configured with a higher layer parameter *multipanelScheme* set to 'SFNscheme' (or not set to 'SDMscheme'), and if the wireless device would (or is supposed/configured/indicated/scheduled to) apply two indicated TCI states to an uplink transmission (e.g., a PUSCH transmission, a PUCCH transmission via a PUCCH resource, a PUSCH transmission corresponding to a Type 1 configured grant, a scheduled/activated PUSCH transmission, and the like) (e.g., if an SRS resource set indicator field of a DCI format 1_1/1_2 scheduling/activating the PUSCH transmission is set/equal to '10' or '11', or if the wireless device is configured/indicated/provided, for the Type 1 configured uplink grant or the PUCCH resource, with a higher layer parameter *applyIndicatedTCIState* set to 'both'), and if the second DRX configuration is not configured/indicated/provided and/or activated, or if the uplink transmission overlaps with (or is in) an active time/period/duration of the second DRX configuration.

The wireless device may transmit the uplink transmission (e.g., Uplink transmission 2 and Uplink transmission 3 in FIG. 21) based on the at least two TCI states. The wireless device may transmit, during the non-active time of the DRX of the cell, uplink transmission based on the at least two TCI states.

The wireless device may transmit, during the non-active time of the DRX of the cell, the uplink transmission based on the at least two TCI states, for example, based on the one or more configuration parameters comprising the multi-panel scheme parameter (e.g., *multipanelScheme*) set to the SDM scheme (e.g., 'SDMscheme'). The multi-panel scheme parameter (e.g., *multipanelScheme*) may not be set to an SFN scheme (e.g., 'SFNscheme').

The wireless device may not fall back to a TCI state (or to a single TCI state) of the at least two TCI states for the uplink transmission during the non-active time of the DRX.

The wireless device may not fall back, during the non-active time of the DRX, to a TCI state (or to a single TCI state) of the at least two TCI states for the uplink transmission, for example, based on the one or more configuration parameters comprising the multi-panel scheme parameter (e.g., *multipanelScheme*) set to the SDM scheme (e.g., 'SDMscheme').

In some examples, the DRX of the cell may the first DRX of the cell. The wireless device may transmit, during the non-active time/duration/period of the first DRX, the uplink transmission (e.g., Uplink transmission 2 and Uplink transmission 3 in FIG. 21) based on the at least two TCI states.

In some examples, the uplink transmission may overlap in time with the active time/duration/period of the second DRX (e.g., that is configured and activated). In some examples, the one or more configuration parameters may not comprise one or more second DRX configuration parameters of a second DRX of the cell (e.g., the second DRX is not configured). In some examples, the wireless device may not receive a control command (e.g., DCI format 2_9, DCI format 2_10, and the like) indicating activation of the second DRX of the cell (e.g., the second DRX is not activated).

In some examples, the DRX of the cell may the second DRX of the cell. The wireless device may transmit, during the non-active time/duration/period of the second DRX, the uplink transmission based on the at least two TCI states.

In some examples, the uplink transmission may overlap in time with the active time/duration/period of the first DRX (e.g., that is configured and activated). In some examples, the one or more configuration parameters may not comprise one or more first DRX configuration parameters of a first DRX of the cell (e.g., the first DRX is not configured). In some examples, the wireless device may not receive a control command (e.g., DCI format 2_9, DCI format 2_10, and the like) indicating activation of the first DRX of the cell (e.g., the first DRX is not activated).

A PUSCH transmission indicated/associated with two indicated TCI states (e.g., if an SRS resource set indicator field of a DCI format 1_1/1_2 scheduling/activating the PUSCH transmission is set/equal to '10' or '11', or if the wireless device is configured/indicated/provided, for the Type 1 configured uplink grant, with a higher layer parameter *applyIndicatedTCIState* set to 'both') may not be impacted by the first DRX configuration or the second DRX configuration, for example, if the wireless device is configured/provided/indicated, by a base station, with a higher layer parameter *multipanelScheme* set to 'SDMscheme'. The wireless device may transmit the PUSCH transmission based on the two indicated TCI states (or both/each of the two indicated TCI states). The wireless device may transmit, during the non-active time/duration/period of the first DRX configuration or the non-active time/duration/period of the second DRX configuration, the PUSCH transmission based on the two indicated TCI states (or both/each of the two indicated TCI states).

In some examples, the PUSCH transmission may be without a corresponding PDCCH.

The PUSCH transmission may be, for example, for a Type 1 configured uplink grant.

The PUSCH transmission may be, for example, for a Type 2 configured uplink grant. A DCI may activate the Type 2 configured uplink grant. A starting/initial/first PUSCH transmission of the Type 2 configured uplink grant may be with a corresponding PDCCH (e.g., the DCI activating the Type 2 configured uplink grant). The subsequent PUSCH transmissions of the Type 2 configured uplink grant (e.g., the second PUSCH transmission, the PUSCH transmission that occurs after the starting/initial/first PUSCH transmission) may be without the corresponding PDCCH.

In some examples, the PUSCH transmission may not be a retransmission.

The PUSCH transmission may not be impacted by the first DRX configuration or the second DRX configuration, for example, if a base station transmits/configures/provides/indicates, to a wireless device, a higher layer parameter *multipanelScheme* set to 'SDMscheme', and indicates two TCI states to/for a PUSCH transmission (e.g., if an SRS resource set indicator field of a DCI format 1_1/1_2 scheduling/activating the PUSCH transmission is set/equal to '10' or '11', or if the base station configures/indicate/provides, for the Type 1 configured uplink grant, a higher layer parameter *applyIndicatedTCIState* set to 'both'). The base station may receive, from the wireless device, the PUSCH transmission based on the two indicated TCI states (or both/each of the two indicated TCI states). The base station may receive, from the wireless device and during the non-active time/duration/period of the first DRX configuration or the non-active time/duration/period of the second DRX configuration, the PUSCH transmission based on the two indicated TCI states (or both/each of the two indicated TCI states).

The wireless device may not transmit the uplink transmission (e.g., Uplink transmission 2 and Uplink transmission 3 in FIG. 22). The wireless device may not transmit, during the non-active time of the DRX of the cell, the uplink transmission.

Not transmitting the uplink transmission may comprise, for example, ignoring the uplink transmission. The wireless device may ignore the uplink transmission by not transmitting the uplink transmission.

Not receiving the uplink transmission by the base station may comprise, for example, not monitoring the uplink transmission. The base station may not monitor the uplink transmission.

Not transmitting the uplink transmission may comprise, for example, discarding the uplink transmission. The wireless device may discard the uplink transmission by not transmitting the uplink transmission.

Not transmitting the uplink transmission may comprise, for example, cancelling the uplink transmission. The wireless device may cancel the uplink transmission by not transmitting the uplink transmission.

The wireless device may not transmit, during the non-active time of the DRX of the cell, the uplink transmission, for example, based on (e.g., in response to) the one or more configuration parameters comprising the multi-panel scheme parameter (e.g., *multipanelScheme*) set to the SDM scheme (e.g., 'SDMscheme'). The multi-panel scheme parameter (e.g., *multipanelScheme*) may not be set to an SFN scheme (e.g., 'SFNscheme').

The wireless device may not use/apply, during the non-active time of the DRX, at least one TCI state of the at least two TCI states to/for the uplink transmission, for example, based on (e.g., in response to) the one or more configuration parameters comprising the multi-panel scheme parameter (e.g., *multipanelScheme*) set to the SDM scheme (e.g., 'SDMscheme').

In some examples, the DRX of the cell may the first DRX of the cell. The wireless device may not transmit, during the non-active time/duration/period of the first DRX, the uplink transmission (e.g., Uplink transmission 2 and Uplink transmission 3 in FIG. 22). The wireless device may not use/apply, during the non-active time of the first DRX, at least one TCI state of the at least two TCI states to/for the uplink transmission (e.g., Uplink transmission 2 and Uplink transmission 3 in FIG. 22). In some examples, the uplink transmission may overlap in time with the active time/duration/period of the second DRX (e.g., that is configured and activated). In some examples, the one or more configuration parameters may not comprise one or more second DRX configuration parameters of a second DRX of the cell (e.g., the second DRX is not configured). In some examples, the wireless device may not receive a control command (e.g., DCI format 2_9, DCI format 2_10, and the like) indicating activation of the second DRX of the cell (e.g., the second DRX is not activated).

In some examples, the DRX of the cell may the second DRX of the cell. The wireless device may not transmit, during the non-active time/duration/period of the second DRX, the uplink transmission. The wireless device may not use/apply, during the non-active time of the second DRX, at least one TCI state of the at least two TCI states to/for the uplink transmission. In some examples, the uplink transmission may overlap in time with the active time/duration/period of the first DRX (e.g., that is configured and activated). In some examples, the one or more configuration parameters may not comprise one or more first DRX configuration parameters of a first DRX of the cell (e.g., the first DRX is not configured). In some examples, the wireless device may not receive a control command (e.g., DCI format 2_9, DCI format 2_10, and the like) indicating activation of the first DRX of the cell (e.g., the first DRX is not activated).

The wireless device may not transmit, during the non-active time/duration/period of the first DRX and the non-active time/duration/period of the second DRX, the uplink transmission.

A wireless device configured and activated with the first DRX configuration or the second DRX configuration may not expect to transmit, during a non-active time/period/duration of the first DRX configuration or the second DRX configuration, the PUSCH transmission, respectively, for example, if the wireless device is configured/provided/indicated, by a base station, with a higher layer parameter *multipanelScheme* set to 'SDMscheme', for a PUSCH transmission indicated/associated with two indicated TCI states (e.g., if an SRS resource set indicator field of a DCI format 1_1/1_2 scheduling/activating the PUSCH transmission is set/equal to '10' or '11', or if the wireless device is configured/indicated/provided, for the Type 1 configured uplink grant, with a higher layer parameter *applyIndicatedTCIState* set to 'both'). The wireless device may not transmit, during the non-active time/duration/period of the first DRX configuration, the PUSCH transmission. The wireless device may not transmit, during the non-active time/duration/period of the second DRX configuration, the PUSCH transmission.

In some examples, the PUSCH transmission may be without a corresponding PDCCH.

The PUSCH transmission may be, for example, for a Type 1 configured uplink grant.

The PUSCH transmission may be, for example, for a Type 2 configured uplink grant. A DCI may activate the Type 2 configured uplink grant. A starting/initial/first PUSCH transmission of the Type 2 configured uplink grant may be with a corresponding PDCCH (e.g., the DCI activating the Type 2 configured uplink grant). The subsequent PUSCH transmissions of the Type 2 configured uplink grant (e.g., the second PUSCH transmission, the PUSCH transmission that occurs after the starting/initial/first PUSCH transmission) may be without the corresponding PDCCH.

In some examples, the PUSCH transmission may not be a retransmission.

A wireless device may not transmit the uplink signal, for example, if the wireless device would (or is supposed/configured/indicated/scheduled to) apply two indicated TCI states to an uplink transmission (e.g., a PUSCH transmission, a PUCCH transmission via a PUCCH resource, a PUSCH transmission corresponding to a Type 1 configured grant, a scheduled/activated PUSCH transmission, and the like) (e.g., when an SRS resource set indicator field of a DCI format 1_1/1_2 scheduling/activating the PUSCH transmission is set/equal to '10' or '11', or when the wireless device is configured/indicated/provided, for the Type 1 configured uplink grant or the PUCCH resource, with a higher layer parameter *applyIndicatedTCIState* set to 'both'), and if the wireless device is configured/provided/indicated, by a base station, with a higher layer parameter *multipanelScheme* set to 'SDMscheme':

- during a non-active time/period/duration of the first DRX configuration if the wireless device is configured and activated with the first DRX configuration, or
- during a non-active time/period/duration of the second DRX configuration if the wireless device is configured and activated with the second DRX configuration.

A base station may not receive, from the wireless device, the uplink signal, for example, if the base station transmits/configures/provides/indicates, to a wireless device, a higher layer parameter *multipanelScheme* set to 'SDMscheme', and indicates two TCI states to/for a PUSCH transmission (e.g., if an SRS resource set indicator field of a DCI format 1_1/1_2 scheduling/activating the PUSCH transmission is set/equal to '10' or '11', or if the base station configures/indicate/provides, for the Type 1 configured uplink grant, a higher layer parameter *applyIndicatedTCIState* set to 'both'):

- during a non-active time/period/duration of the first DRX configuration if the base station configures and activates the first DRX configuration, or
- during a non-active time/period/duration of the second DRX configuration if the base station configures and activates the second DRX configuration

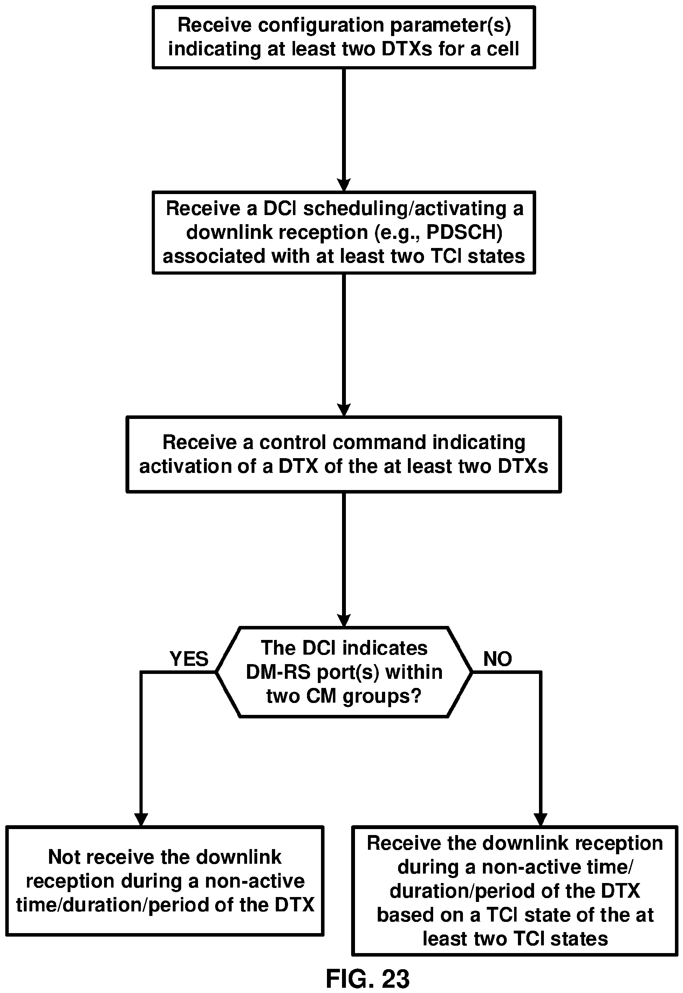

FIG. 23 shows an example for energy saving.

A wireless device may receive, e.g., from a base station, one or more messages (e.g., RRC messages, RRC reconfiguration messages). The base station may transmit the one or more messages. The one or more messages may comprise one or more configuration parameters of a cell.

The one or more configuration parameters may indicate at least two DTXs (or at least two DTX configurations) for/of the cell. The at least two DTXs of the cell may comprise a first DTX of the cell and a second DTX of the cell.

The wireless device may receive a control command (e.g., MAC-CE, DCI, downlink control command, downlink message, activation command, and the like) indicating at least two TCI states (e.g., at least two joint TCI states, at least two downlink TCI states) for the cell (or for a downlink BWP of the cell). The at least two TCI states may comprise a first TCI state and a second TCI state. The base station may transmit the control command.

The wireless device may receive a control command (e.g., DCI, downlink control command, downlink message) scheduling or activating a downlink reception (e.g., PDSCH reception). The base station may transmit the control command.

In some examples, the control command may schedule the downlink reception.

In some examples, the control command may activate the downlink reception of an SPS configuration. The downlink reception may be, for example, an SPS PDSCH reception. The control command may indicate activation of the SPS configuration.

The downlink reception may be associated with the at least two TCI states. The control command may indicate to apply the at least two TCI states to the downlink reception. The control command may indicate application of the at least two TCI states to the downlink reception. The downlink reception may be associated with the at least two TCI states based on one or more criteria discussed in FIG. 17 (e.g., if the wireless device is not configured with a higher layer parameter *tciSelection-PresentInDCI,* or if the control command indicates a value (e.g., '10') for a codepoint of a TCI selection field in the control command, or if the wireless device is configured with an apply-indicated-TCI-state parameter (e.g., *applyIndicatedTCIState*) set to 'both').

In some examples, the downlink reception may overlap in time with an active time/duration/period of the first DTX of the cell and an active time/duration/period of the second DTX of the cell. The downlink reception may not overlap in time with a non-active time/duration/period of the first DTX of the cell and a non-active time/duration/period of the second DTX of the cell.

In some examples, the downlink reception may be in/within an active time/duration/period of the first DTX of the cell and an active time/duration/period of the second DTX of the cell. The downlink reception may not be in/within a non-active time/duration/period of the first DTX of the cell and a non-active time/duration/period of the second DTX of the cell.

The wireless device may receive, based on the at least two TCI states, the downlink reception, for example, based on the downlink reception overlapping in time with the active time/duration/period of the first DTX and the active time/duration/period of the second DTX. The wireless device may receive, based on the at least two TCI states, the downlink reception, for example, based on the downlink reception not overlapping in time with the non-active time/duration/period of the first DTX and the non-active time/duration/period of the second DTX.

The base station may transmit, based on the at least two TCI states, the downlink reception, for example, based on the downlink reception overlapping in time with the active time/duration/period of the first DTX and the active time/duration/period of the second DTX. The base station may transmit, based on the at least two TCI states, the downlink reception, for example, based on the downlink reception not overlapping in time with the non-active time/duration/period of the first DTX and the non-active time/duration/period of the second DTX.

In some examples, the downlink reception may not overlap in time with an active time/duration/period of the first DTX of the cell and an active time/duration/period of the second DTX of the cell. The downlink reception may overlap in time with a non-active time/duration/period of the first DTX of the cell and a non-active time/duration/period of the second DTX of the cell.

In some examples, the downlink reception may not be in/within an active time/duration/period of the first DTX of the cell and an active time/duration/period of the second DTX of the cell. The downlink reception may be in/within a non-active time/duration/period of the first DTX of the cell and a non-active time/duration/period of the second DTX of the cell.

The wireless device may not receive (or may discard or may ignore or may cancel) the downlink reception, for example, based on the downlink reception not overlapping in time with the active time/duration/period of the first DTX and the active time/duration/period of the second DTX. The wireless device may not receive (or may discard or may ignore or may cancel) the downlink reception, for example, based on the downlink reception overlapping in time with the non-active time/duration/period of the first DTX and the non-active time/duration/period of the second DTX.

The base station may not transmit (or may discard or may ignore or may cancel) the downlink reception, for example, based on the downlink reception not overlapping in time with the active time/duration/period of the first DTX and the active time/duration/period of the second DTX. The base station may not transmit (or may discard or may ignore or may cancel) the downlink reception, for example, based on the downlink reception overlapping in time with the non-active time/duration/period of the first DTX and the non-active time/duration/period of the second DTX.

In some examples, the downlink reception may overlap in time with an active time/duration/period of the first DTX of the cell. The downlink reception may not overlap in time with an active time/duration/period of the second DTX of the cell. The downlink reception may not overlap in time with a non-active time/duration/period of the first DTX of the cell. The downlink reception may overlap in time with a non-active time/duration/period of the second DTX of the cell.

In some examples, the downlink reception may be in/within an active time/duration/period of the first DTX of the cell. The downlink reception may not be in/within an active time/duration/period of the second DTX of the cell. The downlink reception may not be in/within a non-active time/duration/period of the first DTX of the cell. The downlink reception may be in/with a non-active time/duration/period of the second DTX of the cell.

The wireless device may receive, based on the first TCI state of the at least two TCI states, the downlink reception, for example, based on (e.g., in response to) the downlink reception overlapping in time with the active time/duration/period of the first DTX and not overlapping in time with the active time/duration/period of the second DTX. The wireless device may not receive, based on the second TCI state of the at least two TCI states, the downlink reception, for example, based on (e.g., in response to) the downlink reception overlapping in time with the active time/duration/period of the first DTX and not overlapping in time with the active time/duration/period of the second DTX.

The base station may transmit, based on the first TCI state of the at least two TCI states, the downlink reception, for example, based on (e.g., in response to) the downlink reception overlapping in time with the active time/duration/period of the first DTX and not overlapping in time with the active time/duration/period of the second DTX. The base station may not transmit, based on the second TCI state of the at least two TCI states, the downlink reception, for example, based on (e.g., in response to) the downlink reception overlapping in time with the active time/duration/period of the first DTX and not overlapping in time with the active time/duration/period of the second DTX.

The wireless device may receive, based on the first TCI state of the at least two TCI states, the downlink reception, for example, based on (e.g., in response to) the downlink reception not overlapping in time with the non-active time/duration/period of the first DTX and overlapping in time with the non-active time/duration/period of the second DTX. The wireless device may not receive, based on the second TCI state of the at least two TCI states, the downlink reception, for example, based on (e.g., in response to) the downlink reception not overlapping in time with the non-active time/-duration/period of the first DTX and overlapping in time with the non-active time/duration/period of the second DTX.

The base station may transmit, based on the first TCI state of the at least two TCI states, the downlink reception, for example, based on (e.g., in response to) the downlink reception not overlapping in time with the non-active time/-duration/period of the first DTX and overlapping in time with the non-active time/duration/period of the second DTX. The base station may not transmit, based on the second TCI state of the at least two TCI states, the downlink reception, for example, based on (e.g., in response to) the downlink reception not overlapping in time with the non-active time/-duration/period of the first DTX and overlapping in time with the non-active time/duration/period of the second DTX.

In an example, the downlink reception may overlap in time with an active time/duration/period of the second DTX of the cell. The downlink reception may not overlap in time with an active time/duration/period of the first DTX of the cell. The downlink reception may not overlap in time with a non-active time/duration/period of the second DTX of the cell. The downlink reception may overlap in time with a non-active time/duration/period of the first DTX of the cell.

In some examples, the downlink reception may be in/within an active time/duration/period of the second DTX of the cell. The downlink reception may not be in/within an active time/duration/period of the first DTX of the cell. The downlink reception may not be in/within a non-active time/duration/period of the second DTX of the cell. The downlink reception may be in/with a non-active time/duration/period of the first DTX of the cell.

The wireless device may receive, based on the second TCI state of the at least two TCI states, the downlink reception, for example, based on (e.g., in response to) the downlink reception overlapping in time with the active time/duration/period of the second DTX and not overlapping in time with the active time/duration/period of the first DTX. The wireless device may not receive, based on the first TCI state of the at least two TCI states, the downlink reception, for example, based on (e.g., in response to) the downlink reception overlapping in time with the active time/duration/period of the second DTX and not overlapping in time with the active time/duration/period of the first DTX.

The base station may transmit, based on the second TCI state of the at least two TCI states, the downlink reception, for example, based on (e.g., in response to) the downlink reception overlapping in time with the active time/duration/period of the second DTX and not overlapping in time with the active time/duration/period of the first DTX. The base station may not transmit, based on the first TCI state of the at least two TCI states, the downlink reception, for example, based on (e.g., in response to) the downlink reception overlapping in time with the active time/duration/period of the second DTX and not overlapping in time with the active time/duration/period of the first DTX.

The wireless device may receive, based on the second TCI state of the at least two TCI states, the downlink reception, for example, based on (e.g., in response to) the downlink reception not overlapping in time with the non-active time/duration/period of the second DTX and overlapping in time with the non-active time/duration/period of the first DTX. The wireless device may not receive, based on the first TCI state of the at least two TCI states, the downlink reception, for example, based on (e.g., in response to) the downlink reception not overlapping in time with the non-active time/-duration/period of the second DTX and overlapping in time with the non-active time/duration/period of the first DTX.

The base station may transmit, based on the second TCI state of the at least two TCI states, the downlink reception, for example, based on (e.g., in response to) the downlink reception not overlapping in time with the non-active time/duration/period of the second DTX and overlapping in time with the non-active time/duration/period of the first DTX. The base station may not transmit, based on the first TCI state of the at least two TCI states, the downlink reception, for example, based on (e.g., in response to) the downlink reception not overlapping in time with the non-active time/-duration/period of the second DTX and overlapping in time with the non-active time/duration/period of the first DTX.

In an example, based on whether an antenna ports field in the control command scheduling/activating the downlink reception indicates DM-RS port(s) within two CDM groups, the wireless device may determine to receive, during a non-active time/duration/period of a DTX of the at least two DTXs of the cell, the downlink reception. The wireless device may not receive (or may determine not to receive) the downlink reception during the non-active time/duration/period of the DTX, for example, based on the antenna ports field in the control command indicating DM-RS port(s) within two CDM groups (e.g., FIG. 22). The wireless device may receive (or may determine to receive) the downlink reception during the non-active time/duration/period of the DTX, for example, based on the antenna ports field in the control command not indicating DM-RS port(s) within two CDM groups. The wireless device may receive (or may determine to receive) the downlink reception during the non-active time/duration/period of the DTX, for example, based on the antenna ports field in the control command indicating DM-RS port(s) within one CDM group.

In some examples, based on whether an antenna ports field in the control command scheduling/activating the downlink reception indicates DM-RS port(s) within two CDM groups, the wireless device may determine to receive, during a non-active time/duration/period of a DTX of the at least two DTXs of the cell, the downlink reception based on (or using) a TCI state (or one TCI state, or a single TCI state) among the at least two TCI states or not to receive the downlink reception.

The wireless device may not receive (or may determine not to receive) the downlink reception during the non-active time/duration/period of the DTX, for example, based on the antenna ports field in the control command indicating DM-RS port(s) within two CDM groups (e.g., FIG. 22). The wireless device may receive (or may determine to receive) the downlink reception during the non-active time/duration/period of the DTX and using a TCI state of the at least two TCI states, for example, based on the antenna ports field in the control command not indicating DM-RS port(s) within two CDM groups (e.g., FIG. 20). The wireless device may receive (or may determine to receive) the downlink reception during the non-active time/duration/period of the DTX and using a TCI state of the at least two TCI states, for example, based on the antenna ports field in the control command indicating DM-RS port(s) within one CDM group.

In some examples, based on whether an antenna ports field in the control command scheduling/activating the downlink reception indicates DM-RS port(s) within two CDM groups, the wireless device may determine to receive, during a non-active time/duration/period of a DTX of the at least two DTXs of the cell, the downlink reception based on (or using) a TCI state (or one TCI state, or a single TCI state) among the at least two TCI states or based on (or using) the at least two TCI states.

The wireless device may receive (or may determine to receive) the downlink reception during the non-active time/duration/period of the DTX and using the at least two TCI states, for example, based on the antenna ports field in the control command indicating DM-RS port(s) within two CDM groups (e.g., FIG. 21). The wireless device may receive (or may determine to receive) the downlink reception during the non-active time/duration/period of the DTX and using a TCI state of the at least two TCI states, for example, based on the antenna ports field in the control command not indicating DM-RS port(s) within two CDM groups (e.g., FIG. 20). The wireless device may receive (or may determine to receive) the downlink reception during the non-active time/duration/period of the DTX and using a TCI state of the at least two TCI states, for example, based on the antenna ports field in the control command indicating DM-RS port(s) within one CDM group.

In some examples, the downlink reception may overlap in time with (or may be in/within) an active time/-period/duration of a different DTX, of the at least two DTXs, from the DTX.

In some examples, the TCI state may be the first TCI state of the at least two TCI states. The DTX may be the second DTX of the at least two DTXs of the cell. The wireless device may receive, during a non-active time/duration/period of the second DTX, the downlink reception based on the first TCI state. The wireless device may receive, during an active time/duration/period of the first DTX, the downlink reception based on the first TCI state. The wireless device may not receive, during the non-active time/duration/period of the second DTX, the downlink reception based on the second TCI state.

In some examples, the TCI state may be the second TCI state of the at least two TCI states. The DTX may be the first DTX of the at least two DTXs of the cell. The wireless device may receive, during a non-active time/duration/period of the first DTX, the downlink reception based on the second TCI state. The wireless device may receive, during an active time/duration/period of the second DTX, the downlink reception based on the second TCI state. The wireless device may not receive, during the non-active time/duration/period of the first DTX, the downlink reception based on the first TCI state.

In some examples, the wireless device may receive, during a non-active time/duration/period of the second DTX, the downlink reception based on the at least two TCI states. The wireless device may receive, during an active time/duration/period of the first DTX, the downlink reception based on the at least two TCI states.

In some examples, the wireless device may receive, during a non-active time/duration/period of the first DTX, the downlink reception based on the at least two TCI states. The wireless device may receive, during an active time/-duration/period of the second DTX, the downlink reception based on the at least two TCI states.

In some examples, based on whether an antenna ports field in the control command scheduling/activating the downlink reception indicates DM-RS port(s) within two CDM groups, the base station may determine to transmit, during a non-active time/duration/period of a DTX of the at least two DTXs of the cell, the downlink reception. The base station may not transmit (or may determine not to transmit) the downlink reception during the non-active time/duration/period of the DTX, for example, based on the antenna ports field in the control command indicating DM-RS port(s) within two CDM groups (e.g., FIG. 22). The base station may transmit (or may determine to transmit) the downlink reception during the non-active time/duration/period of the DTX, for example, based on the antenna ports field in the control command not indicating DM-RS port(s) within two CDM groups. The base station may transmit (or may determine to transmit) the downlink reception during the non-active time/duration/period of the DTX, for example, based on the antenna ports field in the control command indicating DM-RS port(s) within one CDM group.

In some examples, based on whether an antenna ports field in the control command scheduling/activating the downlink reception indicates DM-RS port(s) within two CDM groups, the base station may determine to transmit, during a non-active time/duration/period of a DTX of the at least two DTXs of the cell, the downlink reception based on (or using) a TCI state (or one TCI state, or a single TCI state) among the at least two TCI states or not to transmit the downlink reception.

The base station may not transmit (or may determine not to transmit) the downlink reception during the non-active time/duration/period of the DTX, for example, based on the antenna ports field in the control command indicating DM-RS port(s) within two CDM groups (e.g., FIG. 22). The base station may transmit (or may determine to transmit) the downlink reception during the non-active time/duration/period of the DTX and using a TCI state of the at least two TCI states, for example, based on the antenna ports field in the control command not indicating DM-RS port(s) within two CDM groups (e.g., FIG. 20). The base station may transmit (or may determine to transmit) the downlink reception during the non-active time/duration/period of the DTX and using a TCI state of the at least two TCI states, for example, based on the antenna ports field in the control command indicating DM-RS port(s) within one CDM group.

In some examples, based on whether an antenna ports field in the control command scheduling/activating the downlink reception indicates DM-RS port(s) within two CDM groups, the base station may determine to transmit, during a non-active time/duration/period of a DTX of the at least two DTXs of the cell, the downlink reception based on (or using) a TCI state (or one TCI state, or a single TCI state) among the at least two TCI states or based on (or using) the at least two TCI states.

The base station may transmit (or may determine to transmit) the downlink reception during the non-active time/duration/period of the DTX and using the at least two TCI states, for example, based on the antenna ports field in the control command indicating DM-RS port(s) within two CDM groups (e.g., FIG. 21). The base station may transmit (or may determine to transmit) the downlink reception during the non-active time/duration/period of the DTX and using a TCI state of the at least two TCI states, for example, based on the antenna ports field in the control command not indicating DM-RS port(s) within two CDM groups (e.g., FIG. 20). The base station may transmit (or may determine to transmit) the downlink reception during the non-active time/duration/period of the DTX and using a TCI state of the at least two TCI states, for example, based on the antenna ports field in the control command indicating DM-RS port(s) within one CDM group.

In some examples, the downlink reception may overlap in time with (or may be in/within) an active time/-period/duration of a different DTX, of the at least two DTXs, from the DTX.

In some examples, the TCI state may be the first TCI state of the at least two TCI states. The DTX may be the second DTX of the at least two DTXs of the cell. The base station may transmit, during a non-active time/duration/period of the second DTX, the downlink reception based on the first TCI state. The base station may transmit, during an active time/duration/period of the first DTX, the downlink reception based on the first TCI state. The base station may not transmit, during the non-active time/duration/period of the second DTX, the downlink reception based on the second TCI state.

In some examples, the TCI state may be the second TCI state of the at least two TCI states. The DTX may be the first DTX of the at least two DTXs of the cell. The base station may transmit, during a non-active time/duration/period of the first DTX, the downlink reception based on the second TCI state. The base station may transmit, during an active time/duration/period of the second DTX, the downlink reception based on the second TCI state. The base station may not transmit, during the non-active time/duration/period of the first DTX, the downlink reception based on the first TCI state.

In some examples, the base station may transmit, during a non-active time/duration/period of the second DTX, the downlink reception based on the at least two TCI states. The base station may transmit, during an active time/-duration/period of the first DTX, the downlink reception based on the at least two TCI states.

In some examples, the base station may transmit, during a non-active time/duration/period of the first DTX, the downlink reception based on the at least two TCI states. The base station may transmit, during an active time/duration/period of the second DTX, the downlink reception based on the at least two TCI states.

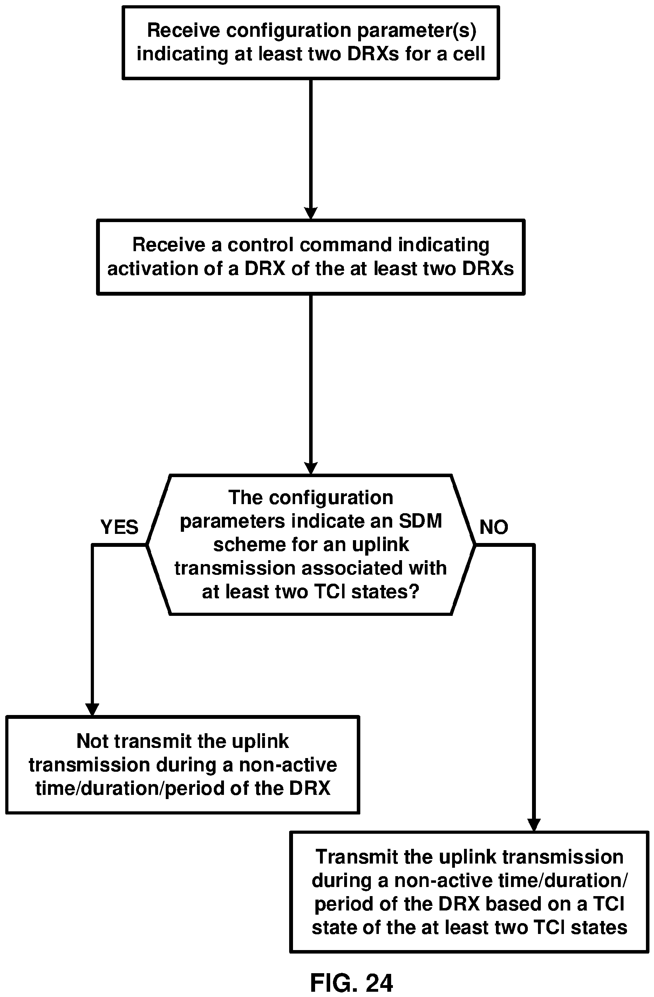

FIG. 24 shows an example for energy saving.

A wireless device may receive, e.g., from a base station, one or more messages (e.g., RRC messages, RRC reconfiguration messages). The base station may transmit the one or more messages. The one or more messages may comprise one or more configuration parameters of a cell.

The one or more configuration parameters may indicate at least two DRXs (or at least two DRX configurations) for/of the cell. The at least two DRXs of the cell may comprise a first DRX of the cell and a second DRX of the cell.

The wireless device may receive a control command (e.g., MAC-CE, DCI, downlink control command, downlink message, activation command, and the like) indicating at least two TCI states (e.g., at least two joint TCI states, at least two downlink TCI states) for the cell (or for a downlink BWP of the cell). The at least two TCI states may comprise a first TCI state and a second TCI state. The base station may transmit the control command.

The wireless device may receive a control command (e.g., DCI, downlink control command, downlink message) scheduling/activating/triggering an uplink transmission (e.g., PUSCH transmission, PUCCH transmission, dynamically scheduled PUSCH transmission, PUSCH transmission of a Type 2 configured uplink grant, PUCCH transmission with HARQ-ACK, and the like) via an uplink resource. The base station may transmit the control command.

In some examples, the control command may schedule the uplink transmission.

In some examples, the control command may activate the uplink transmission of a Type 2 configured uplink grant. The uplink transmission may be, for example, an uplink transmission of the Type 2 configured uplink grant. The control command may indicate activation of the Type 2 configured uplink grant.

In some examples, the one or more configuration parameters may indicate/configure/schedule an uplink transmission (e.g., PUSCH transmission of a Type 1 configured uplink grant, PUCCH transmission with SR or PUCCH transmission with CSI report) via an uplink resource.

The uplink transmission may be associated/indicated with the at least two TCI states.

In some examples, the control command may indicate to apply the at least two TCI states to the uplink transmission. The control command may indicate application of the at least two TCI states to the uplink transmission. The uplink transmission may be associated/indicated with the at least two TCI states based on one or more criteria discussed in FIG. 17 (e.g., if the control command indicates a value (e.g., '10' or '11') for a codepoint of an SRS resource set indicator field in the control command)

The uplink transmission may be associated/indicated with the at least two TCI states based on one or more criteria discussed in e.g., 17 (e.g., if an apply-indicated-TCI-state parameter (e.g., *applyIndicatedTCIState*) of the Type 1 configured uplink grant or the uplink resource is set to 'both').

In some examples, the uplink transmission may overlap in time with an active time/duration/period of the first DRX of the cell and an active time/duration/period of the second DRX of the cell. The uplink transmission may not overlap in time with a non-active time/duration/period of the first DRX of the cell and a non-active time/duration/period of the second DRX of the cell.

In some examples, the uplink transmission may be in/within an active time/duration/period of the first DRX of the cell and an active time/duration/period of the second DRX of the cell. The uplink transmission may not be in/within a non-active time/duration/period of the first DRX of the cell and a non-active time/duration/period of the second DRX of the cell.

The wireless device may transmit, based on the at least two TCI states, the uplink transmission, for example, based on (e.g., in response to) the uplink transmission overlapping in time with the active time/duration/period of the first DRX and the active time/duration/period of the second DRX. The wireless device may transmit, based on the at least two TCI states, the uplink transmission, for example, based on (e.g., in response to) the uplink transmission not overlapping in time with the non-active time/duration/period of the first DRX and the non-active time/duration/period of the second DRX.

The base station may receive, based on the at least two TCI states, the uplink transmission, for example, based on (e.g., in response to) the uplink transmission overlapping in time with the active time/duration/period of the first DRX and the active time/duration/period of the second DRX. The base station may receive, based on the at least two TCI states, the uplink transmission, for example, based on (e.g., in response to) the uplink transmission not overlapping in time with the non-active time/duration/period of the first DRX and the non-active time/duration/period of the second DRX.

In an example, the uplink transmission may not overlap in time with an active time/duration/period of the first DRX of the cell and an active time/duration/period of the second DRX of the cell. The uplink transmission may overlap in time with a non-active time/duration/period of the first DRX of the cell and a non-active time/duration/period of the second DRX of the cell.

In some examples, the uplink transmission may not be in/within an active time/duration/period of the first DRX of the cell and an active time/duration/period of the second DRX of the cell. The uplink transmission may be in/within a non-active time/duration/period of the first DRX of the cell and a non-active time/duration/period of the second DRX of the cell.

The wireless device may not transmit (or may discard or may ignore or may cancel) the uplink transmission, for example, based on (e.g., in response to) the uplink transmission not overlapping in time with the active time/duration/period of the first DRX and the active time/duration/period of the second DRX. The wireless device may not transmit (or may discard or may ignore or may cancel) the uplink transmission, for example, based on (e.g., in response to) the uplink transmission overlapping in time with the non-active time/duration/period of the first DRX and the non-active time/-duration/period of the second DRX.

The base station may not receive (or may discard or may ignore or may cancel) the uplink transmission, for example, based on (e.g., in response to) the uplink transmission not overlapping in time with the active time/duration/period of the first DRX and the active time/duration/period of the second DRX. The base station may not receive (or may discard or may ignore or may cancel) the uplink transmission, for example, based on (e.g., in response to) the uplink transmission overlapping in time with the non-active time/duration/period of the first DRX and the non-active time/-duration/period of the second DRX

In an example, the uplink transmission may overlap in time with an active time/duration/period of the first DRX of the cell. The uplink transmission may not overlap in time with an active time/duration/period of the second DRX of the cell. The uplink transmission may not overlap in time with a non-active time/duration/period of the first DRX of the cell. The uplink transmission may overlap in time with a non-active time/duration/period of the second DRX of the cell.

In some examples, the uplink transmission may be in/within an active time/duration/period of the first DRX of the cell. The uplink transmission may not be in/within an active time/duration/period of the second DRX of the cell. The uplink transmission may not be in/within a non-active time/duration/period of the first DRX of the cell. The uplink transmission may be in/with a non-active time/duration/period of the second DRX of the cell.

The wireless device may transmit, based on the first TCI state of the at least two TCI states, the uplink transmission, for example, based on (e.g., in response to) the uplink transmission overlapping in time with the active time/duration/period of the first DRX and not overlapping in time with the active time/duration/period of the second DRX. The wireless device may not transmit, based on the second TCI state of the at least two TCI states, the uplink transmission, for example, based on (e.g., in response to) the uplink transmission overlapping in time with the active time/duration/period of the first DRX and not overlapping in time with the active time/duration/period of the second DRX.

The base station may receive, based on the first TCI state of the at least two TCI states, the uplink transmission, for example, based on (e.g., in response to) the uplink transmission overlapping in time with the active time/duration/period of the first DRX and not overlapping in time with the active time/duration/period of the second DRX. The base station may not receive, based on the second TCI state of the at least two TCI states, the uplink transmission, for example, based on (e.g., in response to) the uplink transmission overlapping in time with the active time/duration/period of the first DRX and not overlapping in time with the active time/duration/period of the second DRX.

The wireless device may transmit, based on the first TCI state of the at least two TCI states, the uplink transmission, for example, based on (e.g., in response to) the uplink transmission not overlapping in time with the non-active time/duration/period of the first DRX and overlapping in time with the non-active time/duration/period of the second DRX. The wireless device may not transmit, based on the second TCI state of the at least two TCI states, the uplink transmission, for example, based on (e.g., in response to) the uplink transmission not overlapping in time with the non-active time/duration/period of the first DRX and overlapping in time with the non-active time/duration/period of the second DRX.

The base station may receive, based on the first TCI state of the at least two TCI states, the uplink transmission, for example, based on (e.g., in response to) the uplink transmission not overlapping in time with the non-active time/-duration/period of the first DRX and overlapping in time with the non-active time/duration/period of the second DRX. The base station may not receive, based on the second TCI state of the at least two TCI states, the uplink transmission, for example, based on (e.g., in response to) the uplink transmission not overlapping in time with the non-active time/-duration/period of the first DRX and overlapping in time with the non-active time/duration/period of the second DRX.

In an example, the uplink transmission may overlap in time with an active time/duration/period of the second DRX of the cell. The uplink transmission may not overlap in time with an active time/duration/period of the first DRX of the cell.

The uplink transmission may not overlap in time with a non-active time/duration/period of the second DRX of the cell. The uplink transmission may overlap in time with a non-active time/duration/period of the first DRX of the cell.

In some examples, the uplink transmission may be in/within an active time/duration/period of the second DRX of the cell. The uplink transmission may not be in/within an active time/duration/period of the first DRX of the cell. The uplink transmission may not be in/within a non-active time/duration/period of the second DRX of the cell. The uplink transmission may be in/with a non-active time/duration/period of the first DRX of the cell.

The wireless device may transmit, based on the second TCI state of the at least two TCI states, the uplink transmission, for example, based on (e.g., in response to) the uplink transmission overlapping in time with the active time/duration/period of the second DRX and not overlapping in time with the active time/duration/period of the first DRX. The wireless device may not transmit, based on the first TCI state of the at least two TCI states, the uplink transmission, for example, based on (e.g., in response to) the uplink transmission overlapping in time with the active time/duration/period of the second DRX and not overlapping in time with the active time/duration/period of the first DRX.

The base station may receive, based on the second TCI state of the at least two TCI states, the uplink transmission, for example, based on (e.g., in response to) the uplink transmission overlapping in time with the active time/duration/period of the second DRX and not overlapping in time with the active time/duration/period of the first DRX. The base station may not receive, based on the first TCI state of the at least two TCI states, the uplink transmission, for example, based on (e.g., in response to) the uplink transmission overlapping in time with the active time/duration/period of the second DRX and not overlapping in time with the active time/duration/period of the first DRX.

The wireless device may transmit, based on the second TCI state of the at least two TCI states, the uplink transmission, for example, based on (e.g., in response to) the uplink transmission not overlapping in time with the non-active time/duration/period of the second DRX and overlapping in time with the non-active time/duration/period of the first DRX. The wireless device may not transmit, based on the first TCI state of the at least two TCI states, the uplink transmission, for example, based on (e.g., in response to) the uplink transmission not overlapping in time with the non-active time/duration/period of the second DRX and overlapping in time with the non-active time/duration/period of the first DRX.

The base station may receive, based on the second TCI state of the at least two TCI states, the uplink transmission, for example, based on (e.g., in response to) the uplink transmission not overlapping in time with the non-active time/duration/period of the second DRX and overlapping in time with the non-active time/duration/period of the first DRX. The base station may not receive, based on the first TCI state of the at least two TCI states, the uplink transmission, for example, based on (e.g., in response to) the uplink transmission not overlapping in time with the non-active time/duration/period of the second DRX and overlapping in time with the non-active time/duration/period of the first DRX.

In an example, based on whether the one or more configuration parameters comprise a multi-panel scheme parameter (e.g., *multipanelScheme*) set to an SDM scheme (e.g., 'SDMScheme'), the wireless device may determine to transmit, during a non-active time/duration/period of a DRX of the at least two DRXs of the cell, the uplink transmission. The wireless device may not transmit (or may determine not to transmit) the uplink transmission during the non-active time/duration/period of the DRX, for example, based on the one or more configuration parameters comprising the multi-panel scheme parameter set to the SDM scheme (e.g., FIG. 22). The wireless device may transmit (or may determine to transmit) the uplink transmission during the non-active time/duration/period of the DRX, for example, based on the one or more configuration parameters not comprising a multi-panel scheme parameter set to an SDM scheme. The wireless device may transmit (or may determine to transmit) the uplink transmission during the non-active time/duration/period of the DRX, for example, based on the one or more configuration parameters not comprising a multi-panel scheme parameter. The wireless device may transmit (or may determine to transmit) the uplink transmission during the non-active time/duration/period of the DRX, for example, based on the one or more configuration parameters comprising a multi-panel scheme parameter set to an SFN scheme (e.g., 'SFNScheme').

In some examples, based on whether the one or more configuration parameters comprise a multi-panel scheme parameter (e.g., *multipanelScheme*) set to an SDM scheme (e.g., 'SDMScheme'), the wireless device may determine to transmit, during a non-active time/duration/period of a DRX of the at least two DRXs of the cell, the uplink transmission based on (or using) a TCI state (or one TCI state, or a single TCI state) among the at least two TCI states or not to transmit the uplink transmission.

The wireless device may not transmit (or may determine not to transmit) the uplink transmission during the non-active time/duration/period of the DRX, for example, based on the one or more configuration parameters comprising the multi-panel scheme parameter set to the SDM scheme (e.g., FIG. 22). The wireless device may transmit (or may determine to transmit) the uplink transmission during the non-active time/duration/period of the DRX and using a TCI state of the at least two TCI states, for example, based on the one or more configuration parameters not comprising a multi-panel scheme parameter set to an SDM scheme (e.g., FIG. 20). The wireless device may transmit (or may determine to transmit) the uplink transmission during the non-active time/duration/period of the DRX and using a TCI state of the at least two TCI states, for example, based on the one or more configuration parameters not comprising a multi-panel scheme parameter.

The wireless device may transmit (or may determine to transmit) the uplink transmission during the non-active time/duration/period of the DRX and using a TCI state of the at least two TCI states, for example, based on the one or more configuration parameters comprising a multi-panel scheme parameter set to an SFN scheme.

In some examples, based on whether the one or more configuration parameters comprise a multi-panel scheme parameter (e.g., *multipanelScheme*) set to an SDM scheme (e.g., 'SDMScheme'), the wireless device may determine to transmit, during a non-active time/duration/period of a DRX of the at least two DRXs of the cell, the uplink transmission based on (or using) a TCI state (or one TCI state, or a single TCI state) among the at least two TCI states or based on (or using) the at least two TCI states.

The wireless device may transmit (or may determine to transmit) the uplink transmission during the non-active time/duration/period of the DRX and using the at least two TCI states, for example, based on the one or more configuration parameters comprising the multi-panel scheme parameter set to the SDM scheme (e.g., FIG. 21). The wireless device may transmit (or may determine to transmit) the uplink transmission during the non-active time/duration/period of the DRX and using a TCI state of the at least two TCI states, for example, based on the one or more configuration parameters not comprising a multi-panel scheme parameter set to an SDM scheme (e.g., FIG. 20). The wireless device may transmit (or may determine to transmit) the uplink transmission during the non-active time/duration/period of the DRX and using a TCI state of the at least two TCI states, for example, based on the one or more configuration parameters not comprising a multi-panel scheme parameter. The wireless device may transmit (or may determine to transmit) the uplink transmission during the non-active time/duration/period of the DRX and using a TCI state of the at least two TCI states, for example, based on the one or more configuration parameters comprising a multi-panel scheme parameter set to an SFN scheme.

In some examples, the uplink transmission may overlap in time with (or may be in/within) an active time/period/duration of a different DRX, of the at least two DRXs, from the DRX.

In some examples, the TCI state may be the first TCI state of the at least two TCI states. The DRX may be the second DRX of the at least two DRXs of the cell. The wireless device may transmit, during a non-active time/duration/period of the second DRX, the uplink transmission based on the first TCI state. The wireless device may transmit, during an active time/duration/period of the first DRX, the uplink transmission based on the first TCI state. The wireless device may not transmit, during the non-active time/duration/period of the second DRX, the uplink transmission based on the second TCI state.

In some examples, the TCI state may be the second TCI state of the at least two TCI states. The DRX may be the first DRX of the at least two DRXs of the cell. The wireless device may transmit, during a non-active time/duration/period of the first DRX, the uplink transmission based on the second TCI state. The wireless device may transmit, during an active time/duration/period of the second DRX, the uplink transmission based on the second TCI state. The wireless device may not transmit, during the non-active time/duration/period of the first DRX, the uplink transmission based on the first TCI state.

In some examples, the wireless device may transmit, during a non-active time/duration/period of the second DRX, the uplink transmission based on the at least two TCI states. The wireless device may transmit, during an active time/duration/period of the first DRX, the uplink transmission based on the at least two TCI states.

In some examples, the wireless device may transmit, during a non-active time/duration/period of the first DRX, the uplink transmission based on the at least two TCI states. The wireless device may transmit, during an active time/duration/period of the second DRX, the uplink transmission based on the at least two TCI states.

In some examples, based on whether the one or more configuration parameters comprise a multi-panel scheme parameter (e.g., *multipanelScheme*) set to an SDM scheme (e.g., 'SDMScheme'), the base station may determine to receive, during a non-active time/duration/period of a DRX of the at least two DRXs of the cell, the uplink transmission from the wireless device. The base station may not receive (or may determine not to receive) the uplink transmission during the non-active time/duration/period of the DRX, for example, based on the one or more configuration parameters comprising the multi-panel scheme parameter set to the SDM scheme (e.g., FIG. 22). The base station may receive (or may determine to receive) the uplink transmission during the non-active time/duration/period of the DRX, for example, based on the one or more configuration parameters not comprising a multi-panel scheme parameter set to an SDM scheme. The base station may receive (or may determine to receive) the uplink transmission during the non-active time/duration/period of the DRX, for example, based on the one or more configuration parameters not comprising a multi-panel scheme parameter. The base station may receive (or may determine to receive) the uplink transmission during the non-active time/duration/period of the DRX, for example, based on the one or more configuration parameters comprising a multi-panel scheme parameter set to an SFN scheme (e.g., 'SFNScheme').

In some examples, based on whether the one or more configuration parameters comprise a multi-panel scheme parameter (e.g., *multipanelScheme*) set to an SDM scheme (e.g., 'SDMScheme'), the base station may determine to receive, during a non-active time/duration/period of a DRX of the at least two DRXs of the cell, the uplink transmission based on (or using) a TCI state (or one TCI state, or a single TCI state) among the at least two TCI states or not to receive the uplink transmission from the wireless device.

The base station may not receive (or may determine not to receive) the uplink transmission during the non-active time/duration/period of the DRX, for example, based on the one or more configuration parameters comprising the multi-panel scheme parameter set to the SDM scheme (e.g., FIG. 22). The base station may receive (or may determine to receive) the uplink transmission during the non-active time/duration/period of the DRX and using a TCI state of the at least two TCI states, for example, based on the one or more configuration parameters not comprising a multi-panel scheme parameter set to an SDM scheme (e.g., FIG. 20). The base station may receive (or may determine to receive) the uplink transmission during the non-active time/duration/period of the DRX and using a TCI state of the at least two TCI states, for example, based on the one or more configuration parameters not comprising a multi-panel scheme parameter. The base station may receive (or may determine to receive) the uplink transmission during the non-active time/duration/period of the DRX and using a TCI state of the at least two TCI states, for example, based on the one or more configuration parameters comprising a multi-panel scheme parameter set to an SFN scheme.

In some examples, based on whether the one or more configuration parameters comprise a multi-panel scheme parameter (e.g., *multipanelScheme*) set to an SDM scheme (e.g., 'SDMScheme'), the base station may determine to receive, from the wireless device and during a non-active time/duration/period of a DRX of the at least two DRXs of the cell, the uplink transmission based on (or using) a TCI state (or one TCI state, or a single TCI state) among the at least two TCI states or based on (or using) the at least two TCI states.

The base station may receive (or may determine to receive) the uplink transmission during the non-active time/duration/period of the DRX and using the at least two TCI states, for example, based on the one or more configuration parameters comprising the multi-panel scheme parameter set to the SDM scheme (e.g., FIG. 21). The base station may receive (or may determine to receive) the uplink transmission during the non-active time/duration/period of the DRX and using a TCI state of the at least two TCI states, for example, based on the one or more configuration parameters not comprising a multi-panel scheme parameter set to an SDM scheme (e.g., FIG. 20). The base station may receive (or may determine to receive) the uplink transmission during the non-active time/duration/period of the DRX and using a TCI state of the at least two TCI states, for example, based on the one or more configuration parameters not comprising a multi-panel scheme parameter. The base station may receive (or may determine to receive) the uplink transmission during the non-active time/duration/period of the DRX and using a TCI state of the at least two TCI states, for example, based on the one or more configuration parameters comprising a multi-panel scheme parameter set to an SFN scheme.

In some examples, the uplink transmission may overlap in time with (or may be in/within) an active time/-period/duration of a different DRX, of the at least two DRXs, from the DRX.

In some examples, the TCI state may be the first TCI state of the at least two TCI states. The DRX may be the second DRX of the at least two DRXs of the cell. The base station may receive, from the wireless device and during a non-active time/duration/period of the second DRX, the uplink transmission based on the first TCI state. The base station may receive, from the wireless device and during an active time/duration/period of the first DRX, the uplink transmission based on the first TCI state. The base station may not receive, from the wireless device and during the non-active time/-duration/period of the second DRX, the uplink transmission based on the second TCI state.

In some examples, the TCI state may be the second TCI state of the at least two TCI states. The DRX may be the first DRX of the at least two DRXs of the cell. The base station may receive, from the wireless device and during a non-active time/duration/period of the first DRX, the uplink transmission based on the second TCI state. The base station may receive, from the wireless device and during an active time/duration/period of the second DRX, the uplink transmission based on the second TCI state. The base station may not receive, from the wireless device and during the non-active time/duration/period of the first DRX, the uplink transmission based on the first TCI state.

In some examples, the base station may receive, from the wireless device and during a non-active time/-duration/period of the second DRX, the uplink transmission based on the at least two TCI states. The base station may receive, from the wireless device and during an active time/duration/period of the first DRX, the uplink transmission based on the at least two TCI states.

In some examples, the base station may receive, from the wireless device and during a non-active time/-duration/period of the first DRX, the uplink transmission based on the at least two TCI states. The base station may receive, from the wireless device and during an active time/duration/period of the second DRX, the uplink transmission based on the at least two TCI states

In an example, the wireless device may transmit the uplink transmission, for example, based on the first TCI state of the at least two TCI states.

The wireless device may transmit the uplink transmission based on the first TCI state of the at least two TCI states, for example, based on (e.g., in response to) the control command (e.g., Second control command at time T2 in FIG. 17) comprising the SRS resource set indicator field with a value (e.g., '00'). The control command may indicate the value (e.g., '00') for a codepoint of the SRS resource set indicator field.

The uplink transmission may be associated with the first TCI state, for example, based on the SRS resource set indicator field being with the value (e.g., '00')

The wireless device may transmit the uplink transmission based on the first TCI state of the at least two TCI states, for example, based on (e.g., in response to) the apply-indicated-TCI-state parameter of the Type 1 configured uplink grant being set to 'first' indicating to apply the first TCI state of the at least two TCI states to/for uplink transmissions of the Type 1 configured uplink grant.

The uplink transmission may be associated with the first TCI state, for example, based on the apply-indicated-TCI-state parameter of the Type 1 configured uplink grant being set to 'first'.

The wireless device may transmit, via the uplink resource, the uplink transmission based on the first TCI state of the at least two TCI states, for example, based on (e.g., in response to) the apply-indicated-TCI-state parameter of the uplink resource being set to 'first' indicating to apply the first TCI state of the at least two TCI states to/for uplink transmissions via the uplink resource.

The uplink transmission may be associated with the first TCI state, for example, based on the apply-indicated-TCI-state parameter of the uplink resource of the uplink transmission being set to 'first'.

The wireless device may transmit the uplink transmission based on the first TCI state of the at least two TCI states, for example, based on (e.g., in response to) the control command (e.g., Second control command at time T2 in FIG. 17) being a DCI format 0_0 (e.g., fallback DCI).

The uplink transmission may be associated with the first TCI state, for example, based on the control command (e.g., Second control command at time T2 in FIG. 17) being a DCI format 0_0.

In some examples, the one or more configuration parameters may comprise the one or more first DRX configuration parameters of the first DRX of the cell (e.g., the first DRX is configured). In some examples, the control command (e.g., Third control command in FIG. 17, DCI format 2_9, DCI format 2_10, and the like) may indicate activation of the first DRX (e.g., the first DRX is activated).

The wireless device may transmit the uplink transmission based on the first TCI state, for example, during an active time/duration/period of the first DRX (e.g., During First DRX active time in FIG. 22). The wireless device may transmit the uplink transmission based on the first TCI state, for example, based on (e.g., in response to) the uplink transmission overlapping in time with the active time/duration/period of the first DRX. The wireless device may transmit the uplink transmission based on the first TCI state of the at least two TCI states, for example, based on (e.g., in response to) the uplink transmission being in the active time/duration/period of the first DRX.

In some examples, the uplink transmission may overlap in at least one symbol with the active time/duration/period of the first DRX. In some examples, each symbol of the uplink transmission may overlap in time with the active time/duration/period of the first DRX.

In some examples, at least one symbol of the uplink transmission may be in the active time/duration/period of the first DRX. In some examples, each symbol of the uplink transmission may be in the active time/duration/period of the first DRX.

The wireless device may receive the control command scheduling/activation the uplink transmission, for example, during the active time/duration/period of the first DRX. The wireless device may transmit the uplink transmission based on the first TCI state, for example, based on receiving the control command scheduling/activation the uplink transmission during the active time/duration/period of the first DRX.

The one or more configuration parameters may not comprise one or more first DRX configuration parameters of a first DRX of the cell (e.g., the first DRX is not configured). A wireless device may transmit the uplink transmission based on the first TCI state of the at least two TCI states, for example, if the one or more configuration parameters do not comprise one or more first DRX configuration parameters of a first DRX of the cell (e.g., the first DRX is not configured). The wireless device may transmit the uplink transmission based on the first TCI state, for example, based on the one or more configuration parameters not comprising one or more first DRX configuration parameters of a first DRX of the cell.

In some examples, the one or more configuration parameters may comprise the one or more first DRX configuration parameters of the first DRX of the cell. The first DRX may not be activated by the wireless device and/or the base station. The wireless device may not receive a control command (e.g., Third control command in FIG. 17, DCI format 2_9, DCI format 2_10, and the like) indicating activation of the first DRX (e.g., the first DRX is not activated). A wireless device may transmit the uplink transmission based on the first TCI state of the at least two TCI states, for example, if the first DRX of the cell is not activated. The wireless device may transmit the uplink transmission based on the first TCI state, for example, based on the first DRX not being activated. The wireless device may transmit the uplink transmission based on the first TCI state, for example, based on not receiving a control command (e.g., Third control command in FIG. 17, DCI format 2_9, DCI format 2_10, and the like) indicating activation of the first DRX.

In an example, the wireless device may not transmit the uplink transmission indicated/associated with the first TCI state.

Not transmitting the uplink transmission may comprise, for example, ignoring the uplink transmission. The wireless device may ignore the uplink transmission by not transmitting the uplink transmission.

Not receiving, by the base station, the uplink transmission may comprise, for example, not monitoring for the uplink transmission. The base station may not monitor uplink channels for the uplink transmission.

Not transmitting the uplink transmission may comprise, for example, discarding the uplink transmission. The wireless device may discard the uplink transmission by not transmitting the uplink transmission.

Not transmitting the uplink transmission may comprise, for example, cancelling the uplink transmission. The wireless device may cancel the uplink transmission by not transmitting the uplink transmission.

The wireless device may not transmit the uplink transmission associated/indicated with the first TCI state, for example, during the non-active time/duration/period of the first DRX (e.g., First DRX non-active time in FIG. 22). The wireless device may not transmit the uplink transmission associated/indicated with the first TCI state, for example, based on (e.g., in response to) the uplink transmission overlapping in time with the non-active time/duration/period of the first DRX. The wireless device may not transmit the uplink transmission associated/indicated with the first TCI state, for example, based on (e.g., in response to) the uplink transmission being in the non-active time/duration/period of the first DRX.

In some examples, the uplink transmission may overlap in at least one symbol with the non-active time/-duration/period of the first DRX. In some examples, each symbol of the uplink transmission may overlap in time with the non-active time/duration/period of the first DRX.

In some examples, at least one symbol of the uplink transmission may be in the non-active time/duration/period of the first DRX. In some examples, each symbol of the uplink transmission may be in the non-active time/duration/period of the first DRX.

In an example, the wireless device may transmit the uplink transmission, for example, based on the second TCI state of the at least two TCI states.

The wireless device may transmit the uplink transmission based on the second TCI state of the at least two TCI states, for example, based on (e.g., in response to) the control command (e.g., Second control command at time T2 in FIG. 17) comprising the SRS resource set indicator field with a value (e.g., '01'). The control command may indicate the value (e.g., '01') for a codepoint of the SRS resource set indicator field.

The uplink transmission may be associated with the second TCI state, for example, based on the SRS resource set indicator field being with the value (e.g., '01')

The wireless device may transmit the uplink transmission based on the second TCI state of the at least two TCI states, for example, based on (e.g., in response to) the apply-indicated-TCI-state parameter of the Type 1 configured uplink grant being set to 'second' indicating to apply the second TCI state of the at least two TCI states to/for uplink transmissions of the Type 1 configured uplink grant.

The uplink transmission may be associated with the second TCI state, for example, based on the apply-indicated-TCI-state parameter of the Type 1 configured uplink grant being set to 'second'.

The wireless device may transmit, via the uplink resource, the uplink transmission based on the second TCI state of the at least two TCI states, for example, based on (e.g., in response to) the apply-indicated-TCI-state parameter of the uplink resource being set to 'second' indicating to apply the second TCI state of the at least two TCI states to/for uplink transmissions via the uplink resource.

The uplink transmission may be associated with the second TCI state, for example, based on the apply-indicated-TCI-state parameter of the uplink resource of the uplink transmission being set to 'second'.

In some examples, the one or more configuration parameters may comprise the one or more second DRX configuration parameters of the second DRX of the cell (e.g., the second DRX is configured). In some examples, the control command (e.g., Third control command in FIG. 17, DCI format 2_9, DCI format 2_10, and the like) may indicate activation of the second DRX (e.g., the second DRX is activated).

The wireless device may transmit the uplink transmission based on the second TCI state, for example, during an active time/duration/period of the second DRX. The wireless device may transmit the uplink transmission based on the second TCI state, for example, based on (e.g., in response to) the uplink transmission overlapping in time with the active time/duration/period of the second DRX. The wireless device may transmit the uplink transmission based on the second TCI state of the at least two TCI states, for example, based on (e.g., in response to) the uplink transmission being in the active time/duration/period of the second DRX.

In some examples, the uplink transmission may overlap in at least one symbol with the active time/duration/period of the second DRX. In some examples, each symbol of the uplink transmission may overlap in time with the active time/duration/period of the second DRX.

In some examples, at least one symbol of the uplink transmission may be in the active time/duration/period of the second DRX. In some examples, each symbol of the uplink transmission may be in the active time/duration/period of the second DRX.

The wireless device may receive the control command scheduling/activation the uplink transmission, for example, during the active time/duration/period of the second DRX. The wireless device may transmit the uplink transmission based on the second TCI state, for example, based on receiving the control command scheduling/activation the uplink transmission during the active time/duration/period of the second DRX.

The one or more configuration parameters may not comprise one or more second DRX configuration parameters of a second DRX of the cell (e.g., the second DRX is not configured). A wireless device may transmit the uplink transmission based on the second TCI state of the at least two TCI states, for example, if the one or more configuration parameters do not comprise one or more second DRX configuration parameters of a second DRX of the cell (e.g., the second DRX is not configured). The wireless device may transmit the uplink transmission based on the second TCI state, for example, based on the one or more configuration parameters not comprising one or more second DRX configuration parameters of a second DRX of the cell.

In some examples, the one or more configuration parameters may comprise the one or more second DRX configuration parameters of the second DRX of the cell. The second DRX may not be activated by the wireless device and/or the base station. The wireless device may not receive a control command (e.g., Third control command in FIG. 17, DCI format 2_9, DCI format 2_10, and the like) indicating activation of the second DRX (e.g., the second DRX is not activated). A wireless device may transmit the uplink transmission based on the second TCI state of the at least two TCI states, for example, if the second DRX of the cell is not activated. The wireless device may transmit the uplink transmission based on the second TCI state, for example, based on (e.g., in response to) the second DRX not being activated. The wireless device may transmit the uplink transmission based on the second TCI state, for example, based on (e.g., in response to) not receiving a control command (e.g., Third control command in FIG. 17, DCI format 2_9, DCI format 2_10, and the like) indicating activation of the second DRX.

In an example, the wireless device may not transmit the uplink transmission indicated/associated with the second TCI state.

Not transmitting the uplink transmission may comprise, for example, ignoring the uplink transmission. The wireless device may ignore the uplink transmission by not transmitting the uplink transmission.

Not receiving, by the base station, the uplink transmission may comprise, for example, not monitoring for the uplink transmission. The base station may not monitor uplink channels for the uplink transmission.

Not transmitting the uplink transmission may comprise, for example, discarding the uplink transmission. The wireless device may discard the uplink transmission by not transmitting the uplink transmission.

Not transmitting the uplink transmission may comprise, for example, cancelling the uplink transmission. The wireless device may cancel the uplink transmission by not transmitting the uplink transmission.

The wireless device may not transmit the uplink transmission associated/indicated with the second TCI state, for example, during the non-active time/duration/period of the second DRX. The wireless device may not transmit the uplink transmission associated/indicated with the second TCI state, for example, based on (e.g., in response to) the uplink transmission overlapping in time with the non-active time/duration/period of the second DRX. The wireless device may not transmit the uplink transmission associated/indicated with the second TCI state, for example, based on the uplink transmission being in the non-active time/duration/period of the second DRX.

In some examples, the uplink transmission may overlap in at least one symbol with the non-active time/-duration/period of the second DRX. In some examples, each symbol of the uplink transmission may overlap in time with the non-active time/duration/period of the second DRX.

In some examples, at least one symbol of the uplink transmission may be in the non-active time/duration/period of the second DRX. In some examples, each symbol of the uplink transmission may be in the non-active time/duration/period of the second DRX.

A wireless device configured and activated with the first DRX configuration may not transmit an uplink transmission (e.g., a scheduled/activated PUSCH transmission, a PUSCH transmission corresponding to a Type 1 configured grant, a PUSCH transmission, a PUCCH transmission via a PUCCH resource) associated/indicated with the first indicated TCI state (e.g., if an SRS resource set indicator field of a DCI format 1_1/1_2 scheduling/activating the PUSCH transmission is set/equal to '00', or if the wireless device is configured/indicated/provided, for the Type 1 configured uplink grant or the PUCCH resource, with a higher layer parameter *applyIndicatedTCIState* set to 'first', or if the uplink transmission is scheduled/activated by a DCI format 0_0), during a non-active time/period/duration/time of the first DRX configuration, for example, if the wireless device is configured/provided/indicated, by the base station, with a higher layer parameter *dl-OrJointTCI-StateList* or with a higher layer parameter *TCI-UL-State*, and the wireless device is having two indicated TCI states (or two indicated uplink TCI states) comprising a first indicated TCI state and a second indicated TCI state.

A wireless device configured and activated with the second DRX configuration may not transmit an uplink transmission (e.g., a scheduled/activated PUSCH transmission, a PUSCH transmission corresponding to a Type 1 configured grant, a PUSCH transmission, a PUCCH transmission via a PUCCH resource) associated/indicated with the second indicated TCI state (e.g., if an SRS resource set indicator field of a DCI format 1_1/1_2 scheduling/activating the PUSCH transmission is set/equal to '01', or if the wireless device is configured/indicated/provided, for the Type 1 configured uplink grant or the PUCCH resource, with a higher layer parameter *applyIndicatedTCIState* set to 'second'), during a non-active time/period/duration/time of the second DRX configuration, for example, if the wireless device is configured/provided/indicated, by the base station, with a higher layer parameter *dl-OrJointTCI-StateList* or with a higher layer parameter *TCI-UL-State*, and the wireless device is having two indicated TCI states (or two indicated uplink TCI states) comprising a first indicated TCI state and a second indicated TCI state.

A base station may not receive, from the wireless device configured and activated with the first DRX configuration, an uplink transmission (e.g., a scheduled/activated PUSCH transmission, a PUSCH transmission corresponding to a Type 1 configured grant, a PUSCH transmission, a PUCCH transmission via a PUCCH resource) associated/indicated with the first indicated TCI state (e.g., if an SRS resource set indicator field of a DCI format 1_1/1_2 scheduling/activating the PUSCH transmission is set/equal to '00', or if the wireless device is configured/indicated/provided, for the Type 1 configured uplink grant or the PUCCH resource, with a higher layer parameter *applyIndicatedTCIState* set to 'first', or if the uplink transmission is scheduled/activated by a DCI format 0_0), during a non-active time/period/duration/time of the first DRX configuration, for example, if the base station transmits, to the wireless device, RRC message(s) comprising a higher layer parameter *dl-OrJointTCI-StateList* or a higher layer parameter *TCI-UL-State*, and transmits a control command (e.g., MAC-CE, DCI) indicating two TCI states (or two uplink TCI states) comprising a first indicated TCI state and a second indicated TCI state.

A base station may not receive, from the wireless device configured and activated with the second DRX configuration, an uplink transmission (e.g., a scheduled/activated PUSCH transmission, a PUSCH transmission corresponding to a Type 1 configured grant, a PUSCH transmission, a PUCCH transmission via a PUCCH resource) associated/indicated with the second indicated TCI state (e.g., if an SRS resource set indicator field of a DCI format 1_1/1_2 scheduling/activating the PUSCH transmission is set/equal to '01', or if the wireless device is configured/indicated/provided, for the Type 1 configured uplink grant or the PUCCH resource, with a higher layer parameter *applyIndicatedTCIState* set to 'second'), during a non-active time/period/duration/time of the second DRX configuration, for example, if the base station transmits, to the wireless device, RRC message(s) comprising a higher layer parameter *dl-OrJointTCI-StateList* or a higher layer parameter *TCI-UL-State*, and transmits a control command (e.g., MAC-CE, DCI) indicating two TCI states (or two uplink TCI states) comprising a first indicated TCI state and a second indicated TCI state.

The first TCI state of the two TCI states or the first joint/downlink TCI state of the two joint/downlink TCI states may correspond to a first CDM group, of the two CDM groups, of a first antenna port indicated by an antenna port indication table, and the second TCI state of the two TCI states or the second joint/downlink TCI state of the two joint/downlink TCI states may correspond to a second CDM group, of the two CDM groups, of a second antenna port indicated by an antenna port indication table, for example, if a wireless device is not indicated with (or does not receive from a base station) a DCI that comprises a '*Time domain resource assignment*' field indicating an entry which contains/comprises a higher layer parameter *repetitionNumber* in a higher layer parameter *PDSCH-TimeDomainResourceAllocation,* and not configured/indicated/provided with a higher layer parameter *sfnSchemePdsch*, and indicated with DM-RS port(s) within two CDM groups in/by '*Antenna Port(s)*' field in the DCI scheduling/activating a PDSCH reception, for example, as shown at step 2504 of FIG. 25, and indicated with (1) two TCI states in a codepoint of '*Transmission Configuration Indication*' field in the DCI if the wireless device is not configured/indicated/provided with a higher layer parameter *dl-OrJointTCI-StateList,* or (2) two joint/downlink TCI states in a codepoint of '*TCI selection*' field if the wireless device is configured/indicated/provided with a higher layer parameter *dl-OrJointTCI-StateList* and with a higher layer parameter *tciSelection-PresentInDCI.*

The '*Antenna Port(s)*' field may indicate a row, in the antenna port indication table, that comprises/indicates the two CDM groups and the DMRS port(s). The wireless device may determine the first antenna port based on first DMRS port(s) of the DMRS port(s) (e.g., Antenna port(s) = 1000 + first DMRS port(s)). The wireless device may determine the second antenna port based on second DMRS port(s) of the DMRS port(s) (e.g., Antenna port(s) = 1000 + second DMRS port(s)). As shown at step 2508 of FIG. 25, the wireless device may receive the PDSCH reception using the first (joint/downlink) TCI state and the first antenna port. The wireless device may receive a first portion (e.g., first layer(s)) of the PDSCH reception using the first (joint/downlink) TCI state and the first antenna port. The wireless device may receive the PDSCH reception using the second (joint/downlink) TCI state and the second antenna port. The wireless device may receive a second portion (e.g., second layer(s)) of the PDSCH reception using the second (joint/downlink) TCI state and the second antenna port. As shown at step 2506 of FIG. 25, the wireless device may receive a first PT-RS port which is associated to/with the lowest indexed DM-RS port among the first DMRS port(s) corresponding to the first TCI state or the first joint/downlink TCI state and receive a second PT-RS port which is associated to/with the lowest indexed DM-RS port among the second DMRS port(s) corresponding to the second TCI state or the second joint/downlink TCI state, for example, if the wireless device is configured/indicated/provided with a higher layer parameter *maxNrofPorts* equal to a value (e.g., *n2*).

The first TCI state of the two TCI states or the first joint/downlink TCI state of the two joint/downlink TCI states may correspond to a first CDM group, of the two CDM groups, of the first antenna port indicated by an antenna port indication table, and the second TCI state of the two TCI states or the second joint/downlink TCI states may correspond to a second CDM group, of the two CDM groups, of the second antenna port indicated by an antenna port indication table, for example, if a wireless device receives, from a base station, RRC message(s) that do not comprise/configure/indicate/provide a higher layer parameter *sfnSchemePdsch*, and if the wireless device receives DCI with a '*Time domain resource assignment*' field indicating an entry which does not contain/comprise a higher layer parameter *repetitionNumber* in a higher layer parameter *PDSCH-TimeDomainResourceAllocation,* and with an '*Antenna Port(s)*' field indicating DM-RS port(s) within two CDM groups, and if the DCI indicates two TCI states in a codepoint of '*Transmission Configuration Indication*' field in the DCI if the RRC message(s) do not comprise/configure/indicate/provide a higher layer parameter *dl-OrJointTCI-StateList*, or indicates two joint/downlink TCI states in a codepoint of '*TCI selection*' field if the RRC message(s) comprise/configure/indicate/provide a higher layer parameter *dl-OrJointTCI-StateList* and a higher layer parameter *tciSelection-PresentInDCI.*

The '*Antenna Port(s)*' field may indicate a row, in the antenna port indication table, that comprises/indicates two CDM groups and the DMRS port(s). The wireless device may determine the first antenna port based on first DMRS port(s) of the DMRS port(s) (e.g., Antenna port(s) = 1000 + first DMRS port(s)). The wireless device may determine the second antenna port based on second DMRS port(s) of the DMRS port(s) (e.g., Antenna port(s) = 1000 + second DMRS port(s)). The wireless device may receive the PDSCH reception scheduled/activated by the DCI using the first (joint/downlink) TCI state and the first antenna port. As shown at step 2508 of FIG. 25, the wireless device may receive a first portion (e.g., first layer(s)) of the PDSCH reception scheduled/activated by the DCI using the first (joint/downlink) TCI state and the first antenna port. The wireless device may receive the PDSCH reception scheduled/activated by the DCI using the second (joint/downlink) TCI state and the second antenna port. The wireless device may receive a second portion (e.g., second layer(s)) of the PDSCH reception scheduled/activated by the DCI using the second (joint/downlink) TCI state and the second antenna port. As shown at step 2506 of FIG. 25, the wireless device may receive a first PT-RS port which is associated to/with the lowest indexed DM-RS port among the first DMRS port(s) corresponding to the first TCI state or the first joint/downlink TCI state and receive a second PT-RS port which is associated to/with the lowest indexed DM-RS port among the second DMRS port(s) corresponding to the second TCI state or the second joint/downlink TCI state, for example, if the wireless device is configured/indicated/provided with a higher layer parameter *maxNrofPorts* equal to a value (e.g., n2).

The first joint/downlink TCI state of the two joint/downlink TCI states may correspond to a first CDM group, of the two CDM groups, of a first antenna port indicated by an antenna port indication table, and the second joint/downlink TCI state of the two joint/downlink TCI states may correspond to a second CDM group, of the two CDM groups, of a second antenna port indicated by an antenna port indication table, for example, if a wireless device is not indicated with (or does not receive from a base station) a DCI that comprises a '*Time domain resource assignment*' field indicating an entry which contains/comprises a higher layer parameter *repetitionNumber* in a higher layer parameter *PDSCH-TimeDomainResourceAllocation,* and is not configured/indicated/provided with a higher layer parameter *sfnSchemePdsch*, and is indicated with DM-RS port(s) within two CDM groups in/by '*Antenna Port(s)*' field in the DCI scheduling/activating a PDSCH reception, for example, as shown at step 2504 of FIG. 25, and is configured/indicated/provided with a higher layer parameter *dl-OrJointTCI-StateList* and is not configured/indicated/provided with a higher layer parameter *tciSelection-PresentInDCI.*

The '*Antenna Port(s)*' field may indicate a row, in the antenna port indication table, that comprises/indicates the two CDM groups and the DMRS port(s). The wireless device may determine the first antenna port based on first DMRS port(s) of the DMRS port(s) (e.g., Antenna port(s) = 1000 + first DMRS port(s)). The wireless device may determine the second antenna port based on second DMRS port(s) of the DMRS port(s) (e.g., Antenna port(s) = 1000 + second DMRS port(s)). As shown at step 2508 of FIG. 25, the wireless device may receive the PDSCH reception using the first joint/downlink TCI state and the first antenna port. The wireless device may receive a first portion (e.g., first layer(s)) of the PDSCH reception using the first joint/downlink TCI state and the first antenna port. The wireless device may receive the PDSCH reception using the second joint/downlink TCI state and the second antenna port. The wireless device may receive a second portion (e.g., second layer(s)) of the PDSCH reception using the second joint/downlink TCI state and the second antenna port. As shown at step 2506 of FIG. 25, the wireless device may receive a first PT-RS port which is associated to/with the lowest indexed DM-RS port among the first DMRS port(s) corresponding to the first TCI state or the first joint/downlink TCI state and receive a second PT-RS port which is associated to/with the lowest indexed DM-RS port among the second DMRS port(s) corresponding to the second TCI state or the second joint/downlink TCI state, for example, if the wireless device is configured/indicated/provided with a higher layer parameter *maxNrofPorts* equal to a value (e.g., *n2).*

The first joint/downlink TCI state of the two joint/downlink TCI states may correspond to a first CDM group, of the two CDM groups, of a first antenna port indicated by an antenna port indication table, and the second joint/downlink TCI state of the two joint/downlink TCI states may correspond to a second CDM group, of the two CDM groups, of a second antenna port indicated by an antenna port indication table, for example, if a wireless device receives, from a base station, RRC message(s) that not comprise/configure/indicate/provide a higher layer parameter *sfnSchemePdsch*, and not comprise/configure/indicate/provide a higher layer parameter *tciSelection-PresentInDCI,* and comprise/configure/indicate/provide a higher layer parameter *dl-OrJointTCI-StateList*, and if the wireless device receives DCI with a '*Time domain resource assignment*' field indicating an entry which does not contain/comprise a higher layer parameter *repetitionNumber* in a higher layer parameter *PDSCH-TimeDomainResourceAllocation,* and the DCI with an '*Antenna Port(s)*' field indicating DM-RS port(s) within two CDM groups.

The '*Antenna Port(s)*' field may indicate a row, in the antenna port indication table, that comprises/indicates the two CDM groups and the DMRS port(s). The wireless device may determine the first antenna port based on first DMRS port(s) of the DMRS port(s) (e.g., Antenna port(s) = 1000 + first DMRS port(s)). The wireless device may determine the second antenna port based on second DMRS port(s) of the DMRS port(s) (e.g., Antenna port(s) = 1000 + second DMRS port(s)). As shown at step 2508 of FIG. 25, the wireless device may receive the PDSCH reception using the first joint/downlink TCI state and the first antenna port. The wireless device may receive a first portion (e.g., first layer(s)) of the PDSCH reception using the first joint/downlink TCI state and the first antenna port. The wireless device may receive the PDSCH reception using the second joint/downlink TCI state and the second antenna port. The wireless device may receive a second portion (e.g., second layer(s)) of the PDSCH reception using the second joint/downlink TCI state and the second antenna port. As shown at step 2506 of FIG. 25, the wireless device may receive a first PT-RS port which is associated to/with the lowest indexed DM-RS port among the first DMRS port(s) corresponding to the first TCI state or the first joint/downlink TCI state and receive a second PT-RS port which is associated to/with the lowest indexed DM-RS port among the second DMRS port(s) corresponding to the second TCI state or the second joint/downlink TCI state, for example, if the wireless device is configured/indicated/provided with a higher layer parameter *maxNrofPorts* equal to a value (e.g., *n2).*

The first TCI state of the two TCI states or the first joint/downlink TCI state of the two joint/downlink TCI states may correspond to a first CDM group, of the two CDM groups, of a first antenna port indicated by an antenna port indication table, and the second TCI state of the two TCI states or the second joint/downlink TCI state of the two joint/downlink TCI states may correspond to a second CDM group, of the two CDM groups, of a second antenna port indicated by an antenna port indication table, for example, if a base station does not transmit, to a wireless device, RRC message(s) comprising/configuring/indicating/providing a higher layer parameter *sfnSchemePdsch*, and if the base station transmits, to the wireless device, DCI that does not comprise a '*Time domain resource assignment*' field indicating an entry which contains/comprises a higher layer parameter *repetitionNumber* in a higher layer parameter *PDSCH-TimeDomainResourceAllocation*, and comprises an '*Antenna Port(s)*' field that indicates DM-RS port(s) within two CDM groups, wherein the DCI schedules/activates a PDSCH reception, for example, as shown at step 2504 of FIG. 25, and if the base station indicates two TCI states in a codepoint of '*Transmission Configuration Indication*' field in the DCI if the base station does not transmit, to the wireless device, RRC message(s) comprising/configuring/indicating/providing a higher layer parameter *dl-OrJointTCI-StateList*, or two joint/downlink TCI states in a codepoint of '*TCI selection*' field if the base station transmits, to the wireless device, RRC message(s) comprising/configuring/indicating/providing a higher layer parameter *dl-OrJointTCI-StateList* and a higher layer parameter *tciSelection-PresentInDCI.*

The '*Antenna Port(s)*' field may indicate a row, in the antenna port indication table, that comprises/indicates the two CDM groups and the DMRS port(s). The base station may determine the first antenna port based on first DMRS port(s) of the DMRS port(s) (e.g., Antenna port(s) = 1000 + first DMRS port(s)). The base station may determine the second antenna port based on second DMRS port(s) of the DMRS port(s) (e.g., Antenna port(s) = 1000 + second DMRS port(s)). As shown at step 2508 of FIG. 25, the base station may transmit the PDSCH reception using the first (joint/downlink) TCI state and the first antenna port. The base station may transmit a first portion (e.g., first layer(s)) of the PDSCH reception using the first (joint/downlink) TCI state and the first antenna port. The base station may transmit the PDSCH reception using the second (joint/downlink) TCI state and the second antenna port. The base station may transmit a second portion (e.g., second layer(s)) of the PDSCH reception using the second (joint/downlink) TCI state and the second antenna port. As shown at step 2506 of FIG. 25, the base station may transmit a first PT-RS port which is associated to/with the lowest indexed DM-RS port among the first DMRS port(s) corresponding to the first TCI state or the first joint/downlink TCI state and transmit a second PT-RS port which is associated to/with the lowest indexed DM-RS port among the second DMRS port(s) corresponding to the second TCI state or the second joint/downlink TCI state, for example, if the RRC message(s) comprise a higher layer parameter *maxNrofPorts* equal to a value (e.g., *n2).*

The first joint/downlink TCI state of the two joint/downlink TCI states may correspond to a first CDM group, of the two CDM groups, of a first antenna port indicated by an antenna port indication table, and the second joint/downlink TCI state of the two joint/downlink TCI states may correspond to a second CDM group, of the two CDM groups, of a second antenna port indicated by an antenna port indication table, for example, if a base station transmits, to a wireless device, RRC message(s) not comprising/configuring/indicating/providing a higher layer parameter *sfnSchemePdsch*, and comprising/configuring/indicating/providing a higher layer parameter *dl-OrJointTCI-StateList*, and not comprising/configuring/indicating/providing a higher layer parameter *tciSelection-PresentInDCI,* and if the base station transmits, to the wireless device, DCI that does not comprise a '*Time domain resource assignment*' field indicating an entry which contains/comprises a higher layer parameter *repetitionNumber* in a higher layer parameter *PDSCH-TimeDom$\alpha$inResourceAlloc$\alpha$tion*, and comprises an '*Antenna Port(s)*' field that indicates DM-RS port(s) within two CDM groups, wherein the DCI schedules/activates a PDSCH reception, for example, as shown at step 2504 of FIG. 25.

The '*Antenna Port(s)*' field may indicate a row, in the antenna port indication table, that comprises/indicates the two CDM groups and the DMRS port(s). The base station may determine the first antenna port based on first DMRS port(s) of the DMRS port(s) (e.g., Antenna port(s) = 1000 + first DMRS port(s)). The base station may determine the second antenna port based on second DMRS port(s) of the DMRS port(s) (e.g., Antenna port(s) = 1000 + second DMRS port(s)). As shown at step 2508 of FIG. 25, the base station may transmit the PDSCH reception using the first joint/downlink TCI state and the first antenna port. The base station may transmit a first portion (e.g., first layer(s)) of the PDSCH reception using the first joint/downlink TCI state and the first antenna port. The base station may transmit the PDSCH reception using the second joint/downlink TCI state and the second antenna port. The base station may transmit a second portion (e.g., second layer(s)) of the PDSCH reception using the second joint/downlink TCI state and the second antenna port. As shown at step 2506 of FIG. 25, the base station may transmit a first PT-RS port which is associated to/with the lowest indexed DM-RS port among the first DMRS port(s) corresponding to the first TCI state or the first joint/downlink TCI state and transmit a second PT-RS port which is associated to/with the lowest indexed DM-RS port among the second DMRS port(s) corresponding to the second TCI state or the second joint/downlink TCI state, for example, if the RRC message(s) comprise a higher layer parameter *maxNrofPorts* equal to a value (e.g., *n2*).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: receiving, by a wireless device, downlink control information (DCI), wherein the DCI comprises an antenna port field indicating demodulation reference signal (DM-RS) ports within two code division multiplexing (CDM) groups.

Clause 2. The method of clause 1, further comprising: determining to apply two transmission configuration indication (TCI) states to a physical downlink shared channel (PDSCH) based on: an absence of a TCI selection field in the DCI; or a value, of a TCI selection field in the DCI, indicating to apply two TCI states.

Clause 3. The method of clause 1 or clause 2, further comprising: receiving, based on the determining to apply two TCI states to the PDSCH: a first phase-tracking reference signal (PT-RS) via a PT-RS port associated with a lowest indexed DM-RS port, among one or more first DM-RS ports, of the DM-RS ports, corresponding to a first TCI state of the two TCI states; and a second PT-RS via a PT-RS port associated with a lowest indexed DM-RS port, among one or more second DM-RS ports, of the DM-RS ports, corresponding to a second TCI state of the two TCI states.

Clause 4. The method of any one of clauses 1 to 3, further comprising: receiving one or more configuration parameters, wherein the one or more configuration parameters comprise a downlink-or-joint TCI state list parameter indicating a list of TCI states for both uplink transmission and downlink reception.

Clause 5. The method of any one of clauses 1 to 4, wherein the one or more configuration parameters comprise a maximum number of ports parameters that is set to a value.

Clause 6. The method of any one of clauses 1 to 5, further comprising: receiving second DCI, wherein the second DCI comprises an antenna port field indicating second DM-RS ports within second two CDM groups; determining to apply second two TCI states to a second PDSCH based on: a value, of a TCI selection field in the second DCI, indicating to apply second two TCI states; and receiving, based on the determining to apply second two TCI states to the second PDSCH: a third PT-RS via a PT-RS port associated with a lowest indexed DM-RS port, among one or more first DM-RS ports, of the second DM-RS ports, corresponding to a first TCI state of the second two TCI states; and a fourth PT-RS via a PT-RS port associated with a lowest indexed DM-RS port, among one or more second DM-RS ports, of the second DM-RS ports, corresponding to a second TCI state of the second two TCI states.

Clause 7. The method of any one of clauses 1 to 6, further comprising: receiving one or more second configuration parameters that do not comprise a TCI state list parameter indicating a list of TCI states for both uplink transmission and downlink reception.

Clause 8. A method comprising: receiving downlink control information (DCI), wherein the DCI comprises an antenna port field indicating demodulation reference signal (DM-RS) ports within two code division multiplexing (CDM) groups.

Clause 9. The method of clause 8, further comprising: determining to apply two transmission configuration indication (TCI) states to a physical downlink shared channel (PDSCH) based on: an absence of a TCI selection field in the DCI; or a value, of a TCI selection field in the DCI, indicating to apply two TCI states.

Clause 10. The method of clause 8 or clause 9, further comprising: receiving, based on the determining to apply two TCI states: a first downlink signal using a first TCI state, of the two TCI states, that corresponds to a first CDM group, of the two CDM groups, and one or more first DM-RS ports of the DM-RS ports, and a second downlink signal using a second TCI state, of the two TCI states, that corresponds to a second CDM group, of the two CDM groups, and one or more second DM-RS ports of the DM-RS ports.

Clause 11. The method of any one of clauses 8 to 10, wherein the DCI further comprises a TCI field that is different from the TCI selection field.

Clause 12. The method of any one of clauses 8 to 11, further comprising: receiving one or more configuration parameters, wherein the one or more configuration parameters comprise a downlink-or-joint TCI state list parameter indicating a list of TCI states for both uplink transmission and downlink reception.

Clause 13. The method of any one of clauses 8 to 12, wherein the receiving the first downlink signal using the first TCI state and the second downlink signal using the second TCI state is based on the one or more configuration parameters comprising the TCI state list parameter.

Clause 14. The method of any one of clauses 8 to 13, wherein the list of TCI states comprises the two TCI states.

Clause 15. The method of any one of clauses 8 to 14, wherein the TCI selection field in the DCI comprises the value indicating to apply the two TCI states to the PDSCH.

Clause 16. The method of any one of clauses 8 to 15, wherein the receiving the first downlink signal using the first TCI state and the second downlink signal using the second TCI state is further based on the one or more configuration parameters not comprising a TCI selection parameter that indicates a presence of a TCI selection field in a DCI format.

Clause 17. The method of any one of clauses 8 to 16, further comprising: determining, based on the one or more first DM-RS ports, a first antenna port; and determining, based on the one or more second DM-RS ports, a second antenna port.

Clause 18. A method comprising: sending, by a base station, downlink control information (DCI), wherein the DCI comprises an antenna port field indicating demodulation reference signal (DM-RS) ports within two code division multiplexing (CDM) groups.

Clause 19. The method of clause 18, wherein the DCI indicates to apply two transmission configuration indication (TCI) states to a physical downlink shared channel (PDSCH) based on: an absence of a TCI selection field in the DCI; or a value, of a TCI selection field in the DCI, indicating to apply two TCI states.

Clause 20. The method of clause 18 or clause 19, further comprising: sending, based on the DCI indicating to apply two TCI states: a first phase-tracking reference signal (PT-RS) via a PT-RS port associated with a lowest indexed DM-RS port, among one or more first DM-RS ports, of the DM-RS ports, corresponding to a first TCI state of the two TCI states; and a second PT-RS via a PT-RS port associated with a lowest indexed DM-RS port, among one or more second DM-RS ports, of the DM-RS ports, corresponding to a second TCI state of the two TCI states.

Clause 21. The method of any one of clauses 18-20, wherein the DCI further comprises a TCI field that is different from the TCI selection field.

Clause 22. The method of any one of clauses 18-21, further comprising sending one or more configuration parameters, wherein the one or more configuration parameters comprise a downlink-or-joint TCI state list parameter indicating a list of TCI states for both uplink transmission and downlink reception.

Clause 23. The method of any one of clauses 18-22, wherein the sending the first PT-RS and the sending the second PT-RS are based on the one or more configuration parameters comprising the TCI state list parameter.

Clause 24. The method of clause 1, or any one of clauses 18-23, wherein the list of TCI states comprises the two TCI states.

Clause 25. The method of clause 1, or any one of clauses 18-24, wherein the TCI selection field in the DCI comprises the value indicating to apply the two TCI states to the PDSCH.

Clause 26. The method of clause 1, or any one of clauses 18-25, wherein the sending the first PT-RS and the sending the second PT-RS are based on the one or more configuration parameters not comprising a TCI selection parameter that indicates a presence of a TCI selection field in a DCI format.

Clause 27. A computing device comprising: one or more processors; and memory storing instructions that, when executed by the one or more processors, cause the computing device to perform the method of any one of clauses 1 to 26.

Clause 28. A system comprising: a base station configured to perform the method of any one of clauses 18 to 26; and a wireless device configured to receive the one or more configuration parameters.

Clause 29. A computer-readable medium storing instructions that, when executed, cause performance of the method of any one of clauses 1 to 26.

Clause 30. A method comprising: receiving, by a wireless device, a first downlink control information (DCI) indicating two transmission configuration indication (TCI) states for both uplink transmissions and downlink receptions via a cell.

Clause 31. The method of clause 30, further comprising: receiving a second DCI scheduling or activating a physical downlink shared channel (PDSCH) reception, wherein the second DCI comprises an antenna port field indicating demodulation reference signal (DM-RS) ports within two code division multiplexing (CDM) groups.

Clause 32. The method of clause 30 or clause 31, further comprising: based on a TCI selection field in the second DCI indicating to apply the two TCI states to the PDSCH reception or the second DCI not comprising a TCI selection field, receiving: a first phase-tracking reference signal (PT-RS) port associated with a lowest indexed DM-RS port among one or more first DM-RS ports, of the DM-RS ports, corresponding to a first TCI state of the two TCI states; and a second PT-RS port associated with a lowest indexed DM-RS port among one or more second DM-RS ports, of the DM-RS ports, corresponding to a second TCI state of the two TCI states.

Clause 33. The method of any one of clauses 30-32, wherein the second DCI does not comprise a time domain resource assignment field indicating an entry, in a PDSCH time domain resource allocation table, that comprises a repetition number parameter.

Clause 34. The method of any one of clauses 30-33, further comprising: receiving one or more messages comprising one or more configuration parameters.

Clause 35. The method of any one of clauses 30-34, wherein the one or more configuration parameters do not comprise a single-frequency-network (SFN) scheme parameter for PDSCH (e.g., *sfnSchemePDSCH*).

Clause 36. The method of any one of clauses 30-35, wherein the one or more configuration parameters comprise a TCI state parameter (e.g., *dl-OrJointTCI-StateList*) indicating a list of TCI states for both uplink transmissions and downlink receptions via the cell.

Clause 37. The method of any one of clauses 30-36, wherein the receiving the first PT-RS and the second PT-RS is further based on the one or more messages comprising the TCI state parameter.

Clause 38. The method of any one of clauses 30-37, wherein the list of TCI states comprise the two TCI states.

Clause 39. The method of any one of clauses 30-38, wherein the second DCI comprises the TCI selection field with a value indicating to apply the two TCI states to the PDSCH reception.

Clause 40. The method of any one of clauses 30-39, wherein the one or more messages do not comprise the TCI selection parameter that indicates the presence of a TCI selection field in a DCI format, wherein the second DCI is with the DCI format.

Clause 41. The method of any one of clauses 30-40, wherein the receiving the first PT-RS and the second PT-RS is further based on the one or more messages not comprising the TCI selection parameter.

Clause 42. The method of any one of clauses 30-41, wherein the one or more configuration parameters comprise a maximum number of ports parameter that is set to a value (e.g., *n2*).

Clause 43. The method of any one of clauses 30-42, further comprising: receiving a third DCI scheduling or activating a second PDSCH reception, wherein the third DCI comprises an antenna port field indicating second DM-RS ports within second two CDM groups; and based on a TCI field in the third DCI indicating to apply second two TCI states to the second PDSCH reception, receiving the second PDSCH reception using: a third PT-RS port associated with a lowest indexed DM-RS port among one or more first DM-RS ports, of the second DM-RS ports, corresponding to a first TCI state of the second two TCI states; and a fourth PT-RS port associated with a lowest indexed DM-RS port among one or more second DM-RS ports, of the second DM-RS ports, corresponding to a second TCI state of the second two TCI states.

Clause 44. The method of any one of clauses 30-43, further comprising receiving one or more second messages that do not comprise a TCI state parameter indicating a list of TCI states for both uplink transmissions and downlink receptions via the cell (e.g., *dl-OrJointTCI-StateList*).

Clause 45. The method of any one of clauses 30-44, wherein a TCI field is different from the TCI selection field.

Clause 46. A method comprising: receiving, by a wireless device, one or more messages comprising a downlink-or-joint transmission configuration indication (TCI) state list parameter indicating a list of TCI states for both uplink transmissions and downlink receptions.

Clause 47. The method of clause 46, further comprising: receiving a downlink control information (DCI) scheduling or activating a physical downlink shared channel (PDSCH) reception, wherein the DCI comprises an antenna port field indicating demodulation reference signal (DM-RS) ports within two code division multiplexing (CDM) groups.

Clause 48. The method of clause 46 or clause 47, further comprising: based on a TCI selection field in the DCI indicating to apply the two TCI states to the PDSCH reception or the DCI not comprising a TCI selection field, receiving: a first phase-tracking reference signal (PT-RS) port associated with a lowest indexed DM-RS port among one or more first DM-RS ports, of the DM-RS ports, corresponding to a first TCI state of the two TCI states; and a second PT-RS port associated with a lowest indexed DM-RS port among one or more second DM-RS ports, of the DM-RS ports, corresponding to a second TCI state of the two TCI states.

Clause 49. A method comprising: receiving, by a wireless device, a first downlink control information (DCI) indicating two transmission configuration indication (TCI) states for both uplink transmissions and downlink receptions via a cell.

Clause 50. The method of clause 49, further comprising: receiving a second DCI scheduling or activating a physical downlink shared channel (PDSCH) reception, wherein the second DCI comprises an antenna port field indicating demodulation reference signal (DM-RS) ports within two code division multiplexing (CDM) groups.

Clause 51. The method of clause 49 or clause 50, further comprising: based on a TCI selection field in the second DCI indicating to apply the two TCI states to the PDSCH reception or the second DCI not comprising a TCI selection field, receiving the PDSCH reception using: a first TCI state, of the two TCI states, that corresponds to a first CDM group of the two CDM groups and one or more first DM-RS ports of the DM-RS ports, and a second TCI state, of the two TCI states, that corresponds to a second CDM group of the two CDM groups and one or more second DM-RS ports of the DM-RS ports.

Clause 52. The method of any one of clauses 49-51, wherein the antenna port field may indicate a row, in an antenna port indication table, that indicates the two CDM groups and the DMRS ports comprising the one or more first DMRS ports and the one or more second DMRS ports.

Clause 53. The method of any one of clauses 49-52, further comprising determining: a first antenna port based on the one or more first DMRS ports; and a second antenna port based on the one or more second DMRS ports.

Clause 54. The method of any one of clauses 49-53, wherein the first TCI state corresponds to the first CDM group of the first antenna port; and the second TCI state corresponds to the second CDM group of the second antenna port.

Clause 55. The method of any one of clauses 49-54, wherein the receiving the PDCH reception comprises receiving the PDSCH reception using: the first TCI state and the first antenna port; and the second TCI state and the second antenna port.

Clause 56. The method of any one of clauses 49-55, wherein the receiving the PDCH reception comprises receiving: one or more first layers of the PDSCH reception using the first TCI state and the first antenna port; and one or more second layers of the PDSCH reception using the second TCI state and the second antenna port.

Clause 57. The method of any one of clauses 49-56, wherein the second DCI does not comprise a time domain resource assignment field indicating an entry, in a PDSCH time domain resource allocation table, that comprises a repetition number parameter.

Clause 58. The method of any one of clauses 49-57, further comprising: receiving one or more messages comprising one or more configuration parameters, wherein the one or more configuration parameters do not comprise a single-frequency-network (SFN) scheme parameter for PDSCH (e.g., *sfnSchemePDSCH*).

Clause 59. The method of any one of clauses 49-58, wherein the one or more configuration parameters comprise a TCI state parameter (e.g., *dl-OrJointTCI-StateList*) indicating a list of TCI states for both uplink transmissions and downlink receptions via the cell.

Clause 60. The method of any one of clauses 49-59, wherein the receiving the PDSCH reception using the first TCI state and the second TCI state is further based on the one or more messages comprising the TCI state parameter.

Clause 61. The method of any one of clauses 49-60, wherein the list of TCI states comprise the two TCI states.

Clause 62. The method of any one of clauses 49-61, wherein the second DCI comprises the TCI selection field with a value indicating to apply the two TCI states to the PDSCH reception.

Clause 63. The method of any one of clauses 49-62, wherein the one or more messages do not comprise the TCI selection parameter that indicates the presence of a TCI selection field in a DCI format, wherein the second DCI is with the DCI format.

Clause 64. The method of any one of clauses 49-63, wherein the receiving the PDSCH reception using the first TCI state and the second TCI state is further based on the one or more messages not comprising the TCI selection parameter.

Clause 65. The method of any one of clauses 49-64, further comprising: receiving a third DCI scheduling or activating a second PDSCH reception, wherein the third DCI comprises an antenna port field indicating second DM-RS ports within second two CDM groups; and based on a TCI field in the third DCI indicating to apply second two TCI states to the second PDSCH reception, receiving the second PDSCH reception using: a first TCI state, of the second two TCI states, that corresponds to a first CDM group of the second two CDM groups and one or more first DM-RS ports of the second DM-RS ports, and a second TCI state, of the second two TCI states, that corresponds to a second CDM group of the second two CDM groups and one or more second DM-RS ports of the second DM-RS ports.

Clause 66. The method of any one of clauses 49-65, further comprising: receiving one or more second messages that do not comprise a TCI state parameter indicating a list of TCI states for both uplink transmissions and downlink receptions via the cell (e.g., *dl-OrJointTCI-StateList*).

Clause 67. The method of any one of clauses 49-66, wherein a TCI field is different from the TCI selection field.

Clause 68. A method comprising: receiving, by a wireless device, one or more messages comprising a downlink-or-joint transmission configuration indication (TCI) state list parameter indicating a list of TCI states for both uplink transmissions and downlink receptions via a cell.

Clause 69. The method of clause 68, further comprising: receiving a downlink control information (DCI) scheduling or activating a physical downlink shared channel (PDSCH) reception, wherein the DCI comprises an antenna port field indicating demodulation reference signal (DM-RS) ports within two code division multiplexing (CDM) groups.

Clause 70. The method of clause 68 or clause 69, further comprising: based on a TCI selection field in the DCI indicating to apply two TCI states to the PDSCH reception or the second DCI not comprising a TCI selection field, receiving the PDSCH reception using: a first TCI state, of the two TCI states, that corresponds to a first CDM group of the two CDM groups and one or more first DM-RS ports of the DM-RS ports, and a second TCI state, of the two TCI states, that corresponds to a second CDM group of the two CDM groups and one or more second DM-RS ports of the DM-RS ports.

Clause 71. A method comprising: receiving, by a wireless device, one or more messages comprising one or more configuration parameters, wherein the one or more configuration parameters comprise: a multiple panel scheme parameter set to a spatial domain multiplexing (SDM) scheme for physical uplink shared channel (PUSCH) transmissions; and two cell discontinuous reception (DRX) configurations comprising a first DRX configuration and a second DRX configuration.

Clause 72. The method of clause 71, further comprising: receiving a downlink control information (DCI) indicating two transmission configuration indication (TCI) states for uplink transmissions.

Clause 73. The method of clause 71 or clause 72, further comprising: transmitting, during active times of both the first DRX configuration and the second DRX configuration, a first physical uplink shared channel (PUSCH) transmission using the two TCI states.

Clause 74. The method of any one or clauses 71-73, further comprising: based on the multiple panel scheme parameter being set to the SDM scheme, skipping, during in an active time of the first DRX configuration and a non-active time of the second DRX configuration, a second PUSCH transmission.

A computing device may perform a method comprising multiple operations. A wireless device may receive downlink control information (DCI). The DCI may comprise an antenna port field indicating demodulation reference signal (DM-RS) ports within two code division multiplexing (CDM) groups. The wireless device may determine to apply two transmission configuration indication (TCI) states to a physical downlink shared channel (PDSCH) based on: an absence of a TCI selection field in the DCI; or a value, of a TCI selection field in the DCI, indicating to apply two TCI states. The wireless device may receive, based on the determining to apply two TCI states to the PDSCH: a first phase-tracking reference signal (PT-RS) via a PT-RS port associated with a lowest indexed DM-RS port, among one or more first DM-RS ports, of the DM-RS ports, corresponding to a first TCI state of the two TCI states; and a second PT-RS via a PT-RS port associated with a lowest indexed DM-RS port, among one or more second DM-RS ports, of the DM-RS ports, corresponding to a second TCI state of the two TCI states. The wireless device may receive one or more configuration parameters. The one or more configuration parameters may comprise a downlink-or-joint TCI state list parameter indicating a list of TCI states for both uplink transmission and downlink reception. The one or more configuration parameters may comprise a maximum number of ports parameters that is set to a value. The wireless device may further receive second DCI, wherein the second DCI comprises an antenna port field indicating second DM-RS ports within second two CDM groups. The wireless device may further determine to apply second two TCI states to a second PDSCH based on: a value, of a TCI selection field in the second DCI, indicating to apply second two TCI state, The wireless device may further receive, based on the determining to apply second two TCI states to the second PDSCH: a third PT-RS via a PT-RS port associated with a lowest indexed DM-RS port, among one or more first DM-RS ports, of the second DM-RS ports, corresponding to a first TCI state of the second two TCI states; and a fourth PT-RS via a PT-RS port associated with a lowest indexed DM-RS port, among one or more second DM-RS ports, of the second DM-RS ports, corresponding to a second TCI state of the second two TCI states. The receiving one or more second configuration parameters that do not comprise a TCI state list parameter indicating a list of TCI states for both uplink transmission and downlink reception. A computing device may comprise one or more processors and memory storing instructions that, when executed by the one or more processors, may cause the computing device to perform any one or more of the operations described herein. A system may comprise the wireless device configured to perform any one or more of the operations described herein, and a base station configured to send the one or more configuration parameters. A computer-readable medium may store instructions that, when executed, cause performance of any one or more of the operations described

A computing device may perform a method comprising multiple operations. A wireless device may receive downlink control information (DCI). The DCI may comprise an antenna port field indicating demodulation reference signal (DM-RS) ports within two code division multiplexing (CDM) groups. The wireless device may determine to apply two transmission configuration indication (TCI) states to a physical downlink shared channel (PDSCH) based on: an absence of a TCI selection field in the DCI; or a value, of a TCI selection field in the DCI, indicating to apply two TCI states. The wireless device may receive, based on the determining to apply two TCI states: a first downlink signal using a first TCI state, of the two TCI states, that corresponds to a first CDM group, of the two CDM groups, and one or more first DM-RS ports of the DM-RS ports, and a second downlink signal using a second TCI state, of the two TCI states, that corresponds to a second CDM group, of the two CDM groups, and one or more second DM-RS ports of the DM-RS ports. The wireless device may The DCI further may comprise a TCI field that is different from the TCI selection field. The wireless device may further receive one or more configuration parameters. The one or more configuration parameters may comprise a downlink-or-joint TCI state list parameter indicating a list of TCI states for both uplink transmission and downlink reception. The receiving the first downlink signal using the first TCI state and the second downlink signal using the second TCI state may be based on the one or more configuration parameters comprising the TCI state list parameter. The list of TCI states may comprise the two TCI states. The TCI selection field in the DCI may comprise the value indicating to apply the two TCI states to the PDSCH. The receiving the first downlink signal using the first TCI state and the second downlink signal using the second TCI state may be further based on the one or more configuration parameters not comprising a TCI selection parameter that indicates a presence of a TCI selection field in a DCI format. The wireless device may further determine, based on the one or more first DM-RS ports, a first antenna port; and determine, based on the one or more second DM-RS ports, a second antenna port. A computing device may comprise one or more processors and memory storing instructions that, when executed by the one or more processors, may cause the computing device to perform any one or more of the operations described herein. A system may comprise the wireless device configured to perform any one or more of the operations described herein, and a base station configured to send the one or more configuration parameters. A computer-readable medium may store instructions that, when executed, cause performance of any one or more of the operations described herein.

A computing device may perform a method comprising multiple operations. A base station may send downlink control information (DCI). The DCI may comprise an antenna port field indicating demodulation reference signal (DM-RS) ports within two code division multiplexing (CDM) groups. The DCI may indicate to apply two transmission configuration indication (TCI) states to a physical downlink shared channel (PDSCH) based on: an absence of a TCI selection field in the DCI; or a value, of a TCI selection field in the DCI, indicating to apply two TCI states. The base station may send, based on the DCI indicating to apply two TCI states: a first phase-tracking reference signal (PT-RS) via a PT-RS port associated with a lowest indexed DM-RS port, among one or more first DM-RS ports, of the DM-RS ports, corresponding to a first TCI state of the two TCI states; and a second PT-RS via a PT-RS port associated with a lowest indexed DM-RS port, among one or more second DM-RS ports, of the DM-RS ports, corresponding to a second TCI state of the two TCI states. The DCI may further comprise a TCI field that is different from the TCI selection field. The wireless device may further send one or more configuration parameters. The one or more configuration parameters may comprise a downlink-or-joint TCI state list parameter indicating a list of TCI states for both uplink transmission and downlink reception. The sending the first PT-RS and the sending the second PT-RS may be based on the one or more configuration parameters comprising the TCI state list parameter. The list of TCI states may comprise the two TCI states. The TCI selection field in the DCI may comprise the value indicating to apply the two TCI states to the PDSCH. The sending the first PT-RS and the sending the second PT-RS may be based on the one or more configuration parameters not comprising a TCI selection parameter that indicates a presence of a TCI selection field in a DCI format. A computing device may comprise one or more processors and memory storing instructions that, when executed by the one or more processors, may cause the computing device to perform any one or more of the operations described herein. A system may comprise the base station configured to perform any one or more of the operations described herein, and a wireless device configured to receive the one or more configuration parameters. A computer-readable medium may store instructions that, when executed, cause performance of any one or more of the operations described herein.

A computing device may perform a method comprising multiple operations. A wireless device may receive a first downlink control information (DCI) indicating two transmission configuration indication (TCI) states for both uplink transmissions and downlink receptions via a cell. The wireless device may receive a second DCI scheduling or activating a physical downlink shared channel (PDSCH) reception. The second DCI may comprise an antenna port field indicating demodulation reference signal (DM-RS) ports within two code division multiplexing (CDM) groups. The wireless device may, based on a TCI selection field in the second DCI indicating to apply the two TCI states to the PDSCH reception or the second DCI not comprising a TCI selection field, receive: a first phase-tracking reference signal (PT-RS) port associated with a lowest indexed DM-RS port among one or more first DM-RS ports, of the DM-RS ports, corresponding to a first TCI state of the two TCI states; and a second PT-RS port associated with a lowest indexed DM-RS port among one or more second DM-RS ports, of the DM-RS ports, corresponding to a second TCI state of the two TCI states. The second DCI may not comprise a time domain resource assignment field indicating an entry, in a PDSCH time domain resource allocation table, that comprises a repetition number parameter. The wireless device may further receive one or more messages comprising one or more configuration parameters. The one or more configuration parameters may not comprise a single-frequency-network (SFN) scheme parameter for PDSCH (e.g., *sfnSchemePDSCH*). The one or more configuration parameters may comprise a TCI state parameter (e.g., *dl-OrJointTCI-StateList*) indicating a list of TCI states for both uplink transmissions and downlink receptions via the cell. The receiving the first PT-RS and the second PT-RS may be further based on the one or more messages comprising the TCI state parameter. The list of TCI states may comprise the two TCI states. The second DCI may comprise the TCI selection field with a value indicating to apply the two TCI states to the PDSCH reception. The one or more messages may not comprise the TCI selection parameter that indicates the presence of a TCI selection field in a DCI format. The second DCI may be with the DCI format. The receiving the first PT-RS and the second PT-RS may be further based on the one or more messages not comprising the TCI selection parameter. The one or more configuration parameters may comprise a maximum number of ports parameter that is set to a value (e.g., *n2)*. The wireless device may further receive a third DCI scheduling or activating a second PDSCH reception. The third DCI may comprise an antenna port field indicating second DM-RS ports within second two CDM groups. The wireless device may, based on a TCI field in the third DCI indicating to apply second two TCI states to the second PDSCH reception, receive the second PDSCH reception using: a third PT-RS port associated with a lowest indexed DM-RS port among one or more first DM-RS ports, of the second DM-RS ports, corresponding to a first TCI state of the second two TCI states; and a fourth PT-RS port associated with a lowest indexed DM-RS port among one or more second DM-RS ports, of the second DM-RS ports, corresponding to a second TCI state of the second two TCI states. The wireless device may further receive one or more second messages that do not comprise a TCI state parameter indicating a list of TCI states for both uplink transmissions and downlink receptions via the cell (e.g., *dl-OrJointTCI-StateList*). A TCI field may be different from the TCI selection field. A computing device may comprise one or more processors and memory storing instructions that, when executed by the one or more processors, may cause the computing device to perform any one or more of the operations described herein. A system may comprise the wireless device configured to perform any one or more of the operations described herein, and a base station configured to send the one or more configuration parameters. A computer-readable medium may store instructions that, when executed, cause performance of any one or more of the operations described herein.

A computing device may perform a method comprising multiple operations. A wireless device may receive one or more messages comprising a downlink-or-joint transmission configuration indication (TCI) state list parameter indicating a list of TCI states for both uplink transmissions and downlink receptions. The wireless device may receive a downlink control information (DCI) scheduling or activating a physical downlink shared channel (PDSCH) reception. The DCI may comprise an antenna port field indicating demodulation reference signal (DM-RS) ports within two code division multiplexing (CDM) groups. The wireless device may, based on a TCI selection field in the DCI indicating to apply the two TCI states to the PDSCH reception or the DCI not comprising a TCI selection field, receive: a first phase-tracking reference signal (PT-RS) port associated with a lowest indexed DM-RS port among one or more first DM-RS ports, of the DM-RS ports, corresponding to a first TCI state of the two TCI states; and a second PT-RS port associated with a lowest indexed DM-RS port among one or more second DM-RS ports, of the DM-RS ports, corresponding to a second TCI state of the two TCI states. A computing device may comprise one or more processors and memory storing instructions that, when executed by the one or more processors, may cause the computing device to perform any one or more of the operations described herein. A system may comprise the wireless device configured to perform any one or more of the operations described herein, and a base station configured to send the one or more configuration parameters. A computer-readable medium may store instructions that, when executed, cause performance of any one or more of the operations described herein.

A computing device may perform a method comprising multiple operations. A wireless device may receive a first downlink control information (DCI) indicating two transmission configuration indication (TCI) states for both uplink transmissions and downlink receptions via a cell. The wireless device may receive a second DCI scheduling or activating a physical downlink shared channel (PDSCH) reception. The second DCI may comprise an antenna port field indicating demodulation reference signal (DM-RS) ports within two code division multiplexing (CDM) groups. The wireless device may, based on a TCI selection field in the second DCI indicating to apply the two TCI states to the PDSCH reception or the second DCI not comprising a TCI selection field, receive the PDSCH reception using: a first TCI state, of the two TCI states, that corresponds to a first CDM group of the two CDM groups and one or more first DM-RS ports of the DM-RS ports, and a second TCI state, of the two TCI states, that corresponds to a second CDM group of the two CDM groups and one or more second DM-RS ports of the DM-RS ports. The antenna port field may indicate a row, in an antenna port indication table, that indicates the two CDM groups and the DMRS ports comprising the one or more first DMRS ports and the one or more second DMRS ports. The wireless device may further determine: a first antenna port based on the one or more first DMRS ports; and a second antenna port based on the one or more second DMRS ports. The first TCI state may correspond to the first CDM group of the first antenna port. The second TCI state may correspond to the second CDM group of the second antenna port. The receiving the PDCH reception may comprise receiving the PDSCH reception using: the first TCI state and the first antenna port; and the second TCI state and the second antenna port. The receiving the PDCH reception may comprise receiving: one or more first layers of the PDSCH reception using the first TCI state and the first antenna port; and one or more second layers of the PDSCH reception using the second TCI state and the second antenna port. The second DCI may not comprise a time domain resource assignment field indicating an entry, in a PDSCH time domain resource allocation table, that comprises a repetition number parameter. The wireless device may further receive one or more messages comprising one or more configuration parameters. The one or more configuration parameters may not comprise a single-frequency-network (SFN) scheme parameter for PDSCH (e.g., *sfnSchemePDSCH*). The one or more configuration parameters may comprise a TCI state parameter (e.g., *dl-OrJointTCI-StateList*) indicating a list of TCI states for both uplink transmissions and downlink receptions via the cell. The receiving the PDSCH reception using the first TCI state and the second TCI state may be further based on the one or more messages comprising the TCI state parameter. The list of TCI states may comprise the two TCI states. The second DCI may comprise the TCI selection field with a value indicating to apply the two TCI states to the PDSCH reception. The one or more messages may not comprise the TCI selection parameter that indicates the presence of a TCI selection field in a DCI format. The second DCI may be with the DCI format. The receiving the PDSCH reception using the first TCI state and the second TCI state may be further based on the one or more messages not comprising the TCI selection parameter. The wireless device may further receive a third DCI scheduling or activating a second PDSCH reception. The third DCI may comprise an antenna port field indicating second DM-RS ports within second two CDM groups. The wireless device may, based on a TCI field in the third DCI indicating to apply second two TCI states to the second PDSCH reception, receive the second PDSCH reception using: a first TCI state, of the second two TCI states, that corresponds to a first CDM group of the second two CDM groups and one or more first DM-RS ports of the second DM-RS ports, and a second TCI state, of the second two TCI states, that corresponds to a second CDM group of the second two CDM groups and one or more second DM-RS ports of the second DM-RS ports. The wireless device may further receive one or more second messages that do not comprise a TCI state parameter indicating a list of TCI states for both uplink transmissions and downlink receptions via the cell (e.g., *dl-OrJointTCI-StateList*). A TCI field may be different from the TCI selection field. A computing device may comprise one or more processors and memory storing instructions that, when executed by the one or more processors, may cause the computing device to perform any one or more of the operations described herein. A system may comprise the wireless device configured to perform any one or more of the operations described herein, and a base station configured to send the one or more configuration parameters. A computer-readable medium may store instructions that, when executed, cause performance of any one or more of the operations described herein.

A computing device may perform a method comprising multiple operations. A wireless device may receive one or more messages comprising a downlink-or-joint transmission configuration indication (TCI) state list parameter indicating a list of TCI states for both uplink transmissions and downlink receptions via a cell. The wireless device may receive a downlink control information (DCI) scheduling or activating a physical downlink shared channel (PDSCH) reception. The DCI may comprise an antenna port field indicating demodulation reference signal (DM-RS) ports within two code division multiplexing (CDM) groups. The wireless device may, based on a TCI selection field in the DCI indicating to apply two TCI states to the PDSCH reception or the second DCI not comprising a TCI selection field, receive the PDSCH reception using: a first TCI state, of the two TCI states, that corresponds to a first CDM group of the two CDM groups and one or more first DM-RS ports of the DM-RS ports, and a second TCI state, of the two TCI states, that corresponds to a second CDM group of the two CDM groups and one or more second DM-RS ports of the DM-RS ports. A computing device may comprise one or more processors and memory storing instructions that, when executed by the one or more processors, may cause the computing device to perform any one or more of the operations described herein. A system may comprise the wireless device configured to perform any one or more of the operations described herein, and a base station configured to send the one or more configuration parameters. A computer-readable medium may store instructions that, when executed, cause performance of any one or more of the operations described herein.

A computing device may perform a method comprising multiple operations. A wireless device may receive one or more messages comprising one or more configuration parameters. The one or more configuration parameters may comprise: a multiple panel scheme parameter set to a spatial domain multiplexing (SDM) scheme for physical uplink shared channel (PUSCH) transmissions; and two cell discontinuous reception (DRX) configurations comprising a first DRX configuration and a second DRX configuration. The wireless device may receive a downlink control information (DCI) indicating two transmission configuration indication (TCI) states for uplink transmissions. The wireless device may transmit, during active times of both the first DRX configuration and the second DRX configuration, a first physical uplink shared channel (PUSCH) transmission using the two TCI states. The wireless device may, based on the multiple panel scheme parameter being set to the SDM scheme, skip, during in an active time of the first DRX configuration and a non-active time of the second DRX configuration, a second PUSCH transmission. A computing device may comprise one or more processors and memory storing instructions that, when executed by the one or more processors, may cause the computing device to perform any one or more of the operations described herein. A system may comprise the wireless device configured to perform any one or more of the operations described herein, and a base station configured to send the one or more configuration parameters. A computer-readable medium may store instructions that, when executed, cause performance of any one or more of the operations described herein.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, 6G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1.  A method comprising:

     receiving, by a wireless device, downlink control information (DCI), wherein the DCI comprises an antenna port field indicating demodulation reference signal (DM-RS) ports within two code division multiplexing (CDM) groups; determining to apply two transmission configuration indication (TCI) states to a physical downlink shared channel (PDSCH) based on:

          an absence of a TCI selection field in the DCI; or
          a value, of a TCI selection field in the DCI, indicating to apply two TCI states; and receiving, based on the determining to apply two TCI states to the PDSCH:

               a first phase-tracking reference signal (PT-RS) via a PT-RS port associated with a lowest indexed DM-RS port, among one or more first DM-RS ports, of the DM-RS ports, corresponding to a first TCI state of the two TCI states; and
               a second PT-RS via a PT-RS port associated with a lowest indexed DM-RS port, among one or more second DM-RS ports, of the DM-RS ports, corresponding to a second TCI state of the two TCI states.

2. The method of claim 1, further comprising:

    receiving one or more configuration parameters, wherein the one or more configuration parameters comprise a downlink-or-joint TCI state list parameter indicating a list of TCI states for both uplink transmission and downlink reception; and
    wherein the receiving the first PT-RS and the receiving the second PT-RS are based on the one or more configuration parameters not comprising a TCI selection parameter that indicates a presence of a TCI selection field in a DCI format.

3. The method of claim 1 or claim 2, wherein the one or more configuration parameters that do not comprise the TCI selection parameter are radio resource control parameters.

4. The method of any one of claims 1 to 3, wherein the one or more configuration parameters comprise a maximum number of ports parameters that is set to a value.

5. The method of any one of claims 1 to 4, wherein the maximum number of ports parameters is set to a value of two.

6. The method of any one of claims 1 to 5, further comprising:

    receiving second DCI, wherein the second DCI comprises an antenna port field indicating second DM-RS ports within second two CDM groups;
    determining to apply second two TCI states to a second PDSCH based on:
    a value, of a TCI selection field in the second DCI, indicating to apply second two TCI states; and
    receiving, based on the determining to apply second two TCI states to the second PDSCH:

        a third PT-RS via a PT-RS port associated with a lowest indexed DM-RS port, among one or more first DM-RS ports, of the second DM-RS ports, corresponding to a first TCI state of the second two TCI states; and
        a fourth PT-RS via a PT-RS port associated with a lowest indexed DM-RS port, among one or more second DM-RS ports, of the second DM-RS ports, corresponding to a second TCI state of the second two TCI states.

7. The method of any one of claims 1 to 6, further comprising receiving one or more second configuration parameters that do not comprise a TCI state list parameter indicating a list of TCI states for both uplink transmission and downlink reception.

8. A method comprising:
sending, by a base station, downlink control information (DCI), wherein the DCI comprises an antenna port field indicating demodulation reference signal (DM-RS) ports within two code division multiplexing (CDM) groups, wherein the DCI indicates to apply two transmission configuration indication (TCI) states to a physical downlink shared channel (PDSCH) based on:

    an absence of a TCI selection field in the DCI; or
    a value, of a TCI selection field in the DCI, indicating to apply two TCI states; and sending, based on the DCI indicating to apply two TCI states:

        a first phase-tracking reference signal (PT-RS) via a PT-RS port associated with a lowest indexed DM-RS port, among one or more first DM-RS ports, of the DM-RS ports, corresponding to a first TCI state of the two TCI states; and
        a second PT-RS via a PT-RS port associated with a lowest indexed DM-RS port, among one or more second DM-RS ports, of the DM-RS ports, corresponding to a second TCI state of the two TCI states.

9. The method of claim 8, wherein the DCI further comprises a TCI field that is different from the TCI selection field.

10. The method of claim 8 or claim 9, further comprising:

    sending one or more configuration parameters, wherein the one or more configuration parameters comprise a downlink-or-joint TCI state list parameter indicating a list of TCI states for both uplink transmission and downlink reception; and
    wherein the sending the first PT-RS and the sending the second PT-RS are based on the one or more configuration parameters comprising the TCI state list parameter.

11. The method of any one of claims 8 to 10, wherein the list of TCI states comprises the two TCI states.

12. The method of any one of claims 8 to 11, wherein the TCI selection field in the DCI comprises the value indicating to apply the two TCI states to the PDSCH.

13. A computing device comprising:

one or more processors; and
memory storing instructions that, when executed by the one or more processors, cause the computing device to perform: the method of any one of claims 1 to 7; or the method of any one of claims 8 to 12.

14. A system comprising:

a wireless device configured to perform the method of any one of claims 1 to 7; and
a base station configured to send the one or more configuration parameters.

15. A computer-readable medium storing instructions that, when executed, cause performance of: the method of any one of claims 1 to 7; or the method of any one of claims 8 to 12.

**FIG. 1A**

**FIG. 1B**

EP 4 535 708 A1

**FIG. 2A**

**FIG. 2B**

**IP Packets**

**FIG. 3**

**FIG. 4A**

**FIG. 4B**

**FIG. 5A**

Downlink

**FIG. 5B**

Uplink

FIG. 6

FIG. 7

FIG. 8

FIG. 9

Component Carrier

Intraband,
contiguous
1002

Freq. Band
A

Freq. Band
B

Intraband,
non-contiguous
1004

Freq. Band
A

Freq. Band
B

Interband
1006

Freq. Band
A

Freq. Band
B

**FIG. 10A**

PUCCH Group
1010

PUCCH Group
1050

Downlink
Component
Carriers

PCell
1011

SCell
1012

SCell
1013

PSCell
1051

SCell
1052

SCell
1053

UCI
1031

UCI
1032

UCI
1033

UCI
1071

UCI
1072

UCI
1073

Uplink
Component
Carriers

PCell
1021

SCell
1022

SCell
1023

PSCell
1061

SCell
1062

SCell
1063

**FIG. 10B**

**FIG. 11A**

**FIG. 11B**

FIG. 12A

FIG. 12B

FIG. 13A

FIG. 13B

FIG. 13C

EP 4 535 708 A1

EP 4 535 708 A1

**FIG. 14A**

**FIG. 14B**

FIG. 15A

Base Station 1504

Peripheral(s) 1516
Memory 1514
GPS Chipset 1517

TX Processing System 1510
Processing System 1508
RX Processing System 1512

Air Interface 1506

TX Processing System 1520
Processing System 1518
RX Processing System 1522

Wireless Device 1502

Peripheral(s) 1526
Memory 1524
GPS Chipset 1527

FIG. 15B

**FIG. 16A**

**FIG. 16B**

**FIG. 16D**

**FIG. 16C**

EP 4 535 708 A1

FIG. 17

| R | Serving Cell ID | BWP ID | Oct 1 |

| R | TCI state $ID_{0,1}$ | Oct 2 |

| R | TCI state $ID_{0,2}$ | Oct 3 |

...

| R | TCI state $ID_{N,1}$ | Oct M-1 |

| R | TCI state $ID_{N,2}$ | Oct M |

**FIG. 18**

EP 4 535 708 A1

| Block 1 | Block 2 | Block 3 | ... | Block N-1 | Block N |

| DTX 1 | DRX 1 | DTX 2 | DRX 2 | | DTX 1 | DTX 2 | | DTX 1 | DRX 1 | DRX 2 | | DTX 1 | DRX 1 | DTX 2 |

**FIG. 19A**

EP 4 535 708 A1

| Block 1 | Block 2 | Block 3 | ... | Block N-1 | Block N |

| DTX 1 | DRX 1 | 0 | | DTX 2 | DRX 2 | 1 | | DTX 1 | 0 | | DRX 2 | 1 |

**FIG. 19B**

TRP 1 TRP 2

Downlink/Uplink
reception/
transmission 1

First DTX/DRX active time

Downlink/Uplink
reception/
transmission 2

Downlink/Uplink
reception/
transmission 3

First DTX/DRX non-active time

Downlink/Uplink
reception/
transmission 4

First DTX/DRX active time

FIG. 20

EP 4 535 708 A1

TRP 1 TRP 2

Downlink/Uplink
reception/
transmission 1

Downlink/Uplink
reception/
transmission 2

Downlink/Uplink
reception/
transmission 3

Downlink/Uplink
reception/
transmission 4

First DTX/DRX active time

First DTX/DRX non-active time

First DTX/DRX active time

FIG. 21

EP 4 535 708 A1

TRP 1  TRP 2

((•))  ((•))

| Downlink/Uplink reception/ transmission 1 | | Downlink/Uplink reception/ transmission 2 | Downlink/Uplink reception/ transmission 3 | | Downlink/Uplink reception/ transmission 4 |

First DTX/DRX active time

First DTX/DRX non-active time

First DTX/DRX active time

FIG. 22

EP 4 535 708 A1

Receive configuration parameter(s) indicating at least two DTXs for a cell

↓

Receive a DCI scheduling/activating a downlink reception (e.g., PDSCH) associated with at least two TCI states

↓

Receive a control command indicating activation of a DTX of the at least two DTXs

↓

YES ← The DCI indicates DM-RS port(s) within two CM groups? → NO

Not receive the downlink reception during a non-active time/duration/period of the DTX

Receive the downlink reception during a non-active time/duration/period of the DTX based on a TCI state of the at least two TCI states

**FIG. 23**

Receive configuration parameter(s) indicating at least two DRXs for a cell

Receive a control command indicating activation of a DRX of the at least two DRXs

The configuration parameters indicate an SDM scheme for an uplink transmission associated with at least two TCI states?

YES

NO

Not transmit the uplink transmission during a non-active time/duration/period of the DRX

Transmit the uplink transmission during a non-active time/duration/ period of the DRX based on a TCI state of the at least two TCI states

FIG. 24

receive one or more configuration parameters, wherein the one or more configuration parameters comprise a downlink-or-joint transmission configuration indication (TCI) state list parameter indicating a list of TCI states for both uplink transmission and downlink reception ⟋2502

receiving downlink control information (DCI), wherein the DCI comprises an antenna port field indicating demodulation reference signal (DM-RS) ports within two code division multiplexing (CDM) groups ⟋2504

determining to apply two TCI states to a physical downlink shared channel (PDSCH) based on: an absence of a TCI selection field in the DCI; or a value, of a TCI selection field in the DCI, indicating to apply two TCI states; and receiving, based on the determining to apply two TCI states to the PDSCH: a first phase-tracking reference signal (PT-RS) via a PT-RS port associated with a lowest indexed DM-RS port, among one or more first DM-RS ports, of the DM-RS ports, corresponding to a first TCI state of the two TCI states; and a second PT-RS via a PT-RS port associated with a lowest indexed DM-RS port, among one or more second DM-RS ports, of the DM-RS ports, corresponding to a second TCI state of the two TCI states ⟋2506

determining to apply two TCI states to a physical downlink shared channel (PDSCH) based on: an absence of a TCI selection field in the DCI; or a value, of a TCI selection field in the DCI, indicating to apply two TCI states; and receiving, based on the determining to apply two TCI states: a first downlink signal using a first TCI state, of the two TCI states, that corresponds to a first CDM group, of the two CDM groups, and one or more first DM-RS ports of the DM-RS ports, and a second downlink signal using a second TCI state, of the two TCI states, that corresponds to a second CDM group, of the two CDM groups, and one or more second DM-RS ports of the DM-RS ports ⟋2508

FIG. 25

Europäisches
Patentamt

European
Patent Office

Office européen
des brevets

# EUROPEAN SEARCH REPORT

Application Number

EP 24 20 4501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/129661 A1 (COMCAST CABLE COMM LLC [US]) 6 July 2023 (2023-07-06)<br>* paragraph [0772] *<br>* paragraph [0004] *<br>* paragraph [0778] *<br>* paragraph [0140] *<br>* paragraph [0239] - paragraph [0240] *<br>----- | 1-15 | INV.<br>H04L5/00 |
| X | "3rd Generation Partnership Project; Technical Specification Group Radio Access Network; NR; Physical layer procedures for data (Release 18)",<br>3GPP DRAFT; DRAFT38214-I00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE<br>,<br>26 September 2023 (2023-09-26), XP052532474,<br>Retrieved from the Internet:<br>URL:https://ftp.3gpp.org/tsg_ran/WG1_RL1/DRAFT/Draft_versions/Draft38214-i00.zip Draft38214-i00.docx<br>[retrieved on 2023-09-26]<br>* page 14 *<br>* page 47 *<br>* page 61 *<br>----- | 1-15 | |
| X | US 2022/224482 A1 (KIM KYUSEOK [KR] ET AL) 14 July 2022 (2022-07-14)<br>* paragraph [0155] - paragraph [0160] *<br>* paragraph [0216] - paragraph [0219] *<br>* paragraph [0327] - paragraph [0331] *<br>* claims 1-15 *<br>----- | 1-15 | |

TECHNICAL FIELDS SEARCHED (IPC)

H04L

The present search report has been drawn up for all claims

| Place of search | Date of completion of the search | Examiner |
|---|---|---|
| The Hague | 23 January 2025 | Reilly, Declan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 4501

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2025

| Patent document cited in search report | Publication date | Patent family member(s) | | Publication date |
|---|---|---|---|---|
| WO 2023129661 A1 | 06-07-2023 | CA | 3185845 A1 | 29-06-2023 |
| | | EP | 4457941 A1 | 06-11-2024 |
| | | US | 2023209538 A1 | 29-06-2023 |
| | | WO | 2023129661 A1 | 06-07-2023 |
| US 2022224482 A1 | 14-07-2022 | KR | 20220039745 A | 29-03-2022 |
| | | US | 2022224482 A1 | 14-07-2022 |
| | | US | 2023074690 A1 | 09-03-2023 |
| | | WO | 2021066630 A1 | 08-04-2021 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63542099